# EUROPEAN PATENT APPLICATION

(11) **EP 4 516 465 A1**
(43) Date of publication of application: **05.03.2025**
(21) Application number: 22940248.2
(22) Date of filing: 28.04.2022
(51) Int. Cl.: B25J 13/08

(54) **CONTROL DEVICE, CONTROL SYSTEM, ROBOT SYSTEM, CONTROL METHOD, AND COMPUTER PROGRAM**

(71) Applicant: Nikon Corporation, Tokyo 140-8601 (JP)
(72) Inventor: KOYANAGI, Daisuke, Tokyo 140-8601 (JP); YOKOTA, Shoya, Tokyo 140-8601 (JP)
(74) Representative: Arnold & Siedsma
(86) International application number: PCT/JP2022/019364
(87) International publication number: WO 2023/209974

(57) **Abstract**

A control apparatus is a control apparatus that generates a control signal for controlling a robot arm to which a process apparatus that performs a process on an object, a first imaging apparatus that outputs first image data, and a second imaging apparatus that outputs second image data are mounted. The control apparatus: generates first information indicating a position and a pose of the object by using the first image data generated by the first imaging apparatus imaging the object; generates second information indicating a position and a pose of the object by using three-dimensional position data, which is generated from the second image data generated by the second imaging apparatus imaging the object and which indicates a three-dimensional position of each of a plurality of points of the object, and three-dimensional model data of the object having a position and a pose that are determined based on the first information; and generates the control signal based on the second information.

## Description

### Technical Field

The present invention relates to a control apparatus, a control system, a robot system, a control method, and a computer program that are configured to generate a control signal for controlling a robot arm, for example.

### Background Art

A Patent Literature 1 discloses one example of a control apparatus that calculates at least one of a position and a pose of an object, which is a target for a process performed by a robot, and controls the robot based on at least one of the calculated position and pose. This control apparatus is required to accurately calculate at least one of the position and the pose of the object.

### Citation List

### Patent Literature

Patent Literature 1: US2013/0230235A1

### Summary of Invention

A first aspect provides a control apparatus that generates a control signal for controlling a robot arm to which a process apparatus that performs a process on an object, a first imaging apparatus that outputs first image data, and a second imaging apparatus that outputs second image data are mounted, wherein the robot arm is controlled by the control signal to move the process apparatus and the first and imaging apparatuses, the control apparatus includes: a calculation unit that is configured to generate the control signal; and an output unit that is configured to output the control signal generated by the calculation unit, the calculation unit is configured to: generate first information indicating a position and a pose of the object by using the first image data generated by the first imaging apparatus imaging the object; generate second information indicating a position and a pose of the object by using three-dimensional position data, which is generated from the second image data generated by the second imaging apparatus imaging the object and which indicates a three-dimensional position of each of a plurality of points of the object, and three-dimensional model data of the object having a position and a pose that are determined based on the first information; and generate the control signal based on the second information.

A second aspect provides a control apparatus that generates a control signal for controlling a robot arm to which a process apparatus that performs a process on an object, a first imaging apparatus that outputs first image data, and a second imaging apparatus that outputs second image data are mounted, wherein the robot arm is controlled by the control signal to move the process apparatus and the first and imaging apparatuses, the control apparatus includes: a calculation unit that is configured to generate the control signal; and an output unit that is configured to output the control signal generated by the calculation unit, the calculation unit is configured to: calculate a change amount of a position and a pose of the object between a first and second times based on two first image data, which are respectively generated by the first imaging apparatus imaging the object at the first and second times that are different from each other, and three-dimensional position data, which is generated from the second image data generated by the second imaging apparatus imaging the object at a third time and which indicates a three-dimensional position of each of a plurality of points of the object; and generate the control signal based on the change amount.

A third aspect provides a control apparatus that generates a control signal for controlling a robot arm to which a process apparatus that performs a process on at least one of a first object and a second object, a first imaging apparatus that outputs first image data, and a second imaging apparatus that outputs second image data are mounted, at least one of a position and a pose of the second object being different from that of the first object, wherein the robot arm is controlled by the control signal to move the process apparatus and the first and imaging apparatuses, the control apparatus includes: a calculation unit that is configured to generate the control signal; and an output unit that is configured to output the control signal generated by the calculation unit, the calculation unit is configured to: determine, based on the first image data that is generated by the first imaging apparatus imaging the first and second objects, whether to select the first or second object as a target object on which the process apparatus performs the process; generate second information indicating a position and a pose of the target object by using three-dimensional position data, which is generated from the second image data generated by the second imaging apparatus imaging the first and second objects and which indicates a three-dimensional position of each of a plurality of points of the target object, and three-dimensional model data of the target object having a position and a pose that are determined based on first information, which is generated by using the first image data and which indicates a position and a pose of the target object, in a case where the first or second object is selected as the target object as a result of the determination; and generate the control signal based on the second information.

A fourth aspect provides a control system including: the control apparatus provided by any one of the first aspect to the third aspect; the first imaging apparatus; and the second imaging apparatus.

A fifth aspect provides a robot system including: the control apparatus provided by any one of the first aspect to the third aspect; the first imaging apparatus; the second imaging apparatus; and the robot arm.

A sixth aspect provides a control method that generates a control signal for controlling a robot arm to which a process apparatus that performs a process on an object, a first imaging apparatus that outputs first image data, and a second imaging apparatus that outputs second image data are mounted, wherein the control method includes: generating first information indicating a position and a pose of the object by using the first image data generated by the first imaging apparatus imaging the object; generating second information indicating a position and a pose of the object by using three-dimensional position data, which is generated from the second image data generated by the second imaging apparatus imaging the object and which indicates a three-dimensional position of each of a plurality of points of the object, and three-dimensional model data of the object having a position and a pose that are determined based on the first information; and generating the control signal based on the second information, the robot arm is controlled by the control signal to move the process apparatus and the first and imaging apparatuses based on the generated control signal in order to allow the process apparatus to perform the process on the object.

A seventh aspect provides a control method that generates a control signal for controlling a robot arm to which a process apparatus that performs a process on an object, a first imaging apparatus that outputs first image data, and a second imaging apparatus that outputs second image data are mounted, wherein the control method includes: calculating a change amount of a position and a pose of the object between a first and second times based on two first image data, which are respectively generated by the first imaging apparatus imaging the object at the first and second times that are different from each other, and three-dimensional position data, which is generated from the second image data generated by the second imaging apparatus imaging the object at a third time and which indicates a three-dimensional position of each of a plurality of points of the object; and generating the control signal based on the change amount, the robot arm is controlled by the control signal to move the process apparatus and the first and imaging apparatuses based on the generated control signal in order to allow the process apparatus to perform the process on the object.

An eighth aspect provides a control method that generates a control signal for controlling a robot arm to which a process apparatus that performs a process on at least one of a first object and a second object, a first imaging apparatus that outputs first image data, and a second imaging apparatus that outputs second image data are mounted, at least one of a position and a pose of the second object being different from that of the first object, wherein the control method includes: determining, based on the first image data that is generated by the first imaging apparatus imaging the first and second objects, whether to select the first or second object as a target object on which the process apparatus performs the process; generating second information indicating a position and a pose of the target object by using three-dimensional position data, which is generated from the second image data generated by the second imaging apparatus imaging the first and second objects and which indicates a three-dimensional position of each of a plurality of points of the target object, and three-dimensional model data of the target object having a position and a pose that are determined based on first information, which is generated by using the first image data and which indicates a position and a pose of the target object, in a case where the first or second object is selected as the target object as a result of the determination; and generating the control signal based on the second information, the robot arm is controlled by the control signal to move the process apparatus and the first and imaging apparatuses based on the generated control signal in order to allow the process apparatus to perform the process on the object.

A ninth aspect provides a computer program by which the control method provided by any one of the sixth aspect to the eighth aspect is performed.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] FIG. 3 is a block diagram that illustrates a configuration of a control apparatus in the present example embodiment.
[FIG. 4] FIG. 4 is a flowchart that illustrates a flow of a robot control processing.
[FIG. 5] Each of FIG. 5A to FIG. 5D is a side view that illustrates a positional relationship between the robot and a workpiece at a certain time in a period during which a hold process for holding the workpiece placed on a placing apparatus that moves on a support surface is performed.
[FIG. 6] Each of FIG. 6A to FIG. 6D is a side view that illustrates a positional relationship between the robot and the workpiece at a certain time in a period during which a release process for placing the workpiece placed on the placing apparatus that moves on the support surface is performed.
[FIG. 7] Each of FIG. 7A to FIG. 7B is a side view that illustrates a positional relationship between the robot and the workpiece at a certain time in a period during which the hold process for holding the workpiece placed on the placing apparatus that is stationary on the support surface is performed, and each of FIG. 7C to FIG. 7E is a side view that illustrates a positional relationship between the robot and the workpiece at a certain time in a period during which the release process for placing the workpiece on the placing apparatus that is stationary on the support surface is performed..
[FIG. 8] Each of FIG. 8A to FIG. 8E is a side view that illustrates a positional relationship between the robot and the workpiece at a certain time in a period during which the hold process for holding a plurality of workpieces, which are placed on the placing apparatus, one by one in sequence and the release process for placing the plurality of workpieces on the placing apparatus one by one in sequence are performed.
[FIG. 9] Each of FIG. 9A to FIG. 9E is a side view that illustrates the positional relationship between the robot and the workpiece at a certain time in the period during which the hold process for holding the plurality of workpieces, which are placed on the placing apparatus, one by one in sequence and the release process for placing the plurality of workpieces on the placing apparatus one by one in sequence are performed.
[FIG. 10] FIG. 10 is a block diagram that illustrates a logical processing block for calculating a position and a pose of an object by performing a matching processing and a tracking processing.
[FIG. 11] FIG. 11 schematically illustrates a 2D matching processing.
[FIG. 12] FIG. 12 is a timing chart that illustrates a relationship between a timing at which an imaging apparatus generates image data and a timing at which a 2D matching unit performs the 2D matching processing.
[FIG. 13] FIG. 13 schematically illustrates a 3D matching processing.
[FIG. 14] FIG. 14 illustrates an initial position and an initial pose of a three-dimensional model.
[FIG. 15] FIG. 15 is a timing chart that illustrates a relationship between the timing at which the imaging apparatus generates the image data and a timing at which a 3D matching unit performs the 3D matching processing.
[FIG. 16] FIG. 16 schematically illustrates 3D matching target data that is a part of the three-dimensional position information.
[FIG. 17] FIG. 17 schematically illustrates the tracking processing.
[FIG. 18] FIG. 18 is a timing chart that illustrates a relationship between the timing at which the imaging apparatus generates the image data and a timing at which a tracking unit performs the tracking processing.
[FIG. 19] FIG. 19 is a timing chart that illustrates a relationship between the timing at which the 2D matching unit performs the 2D matching processing, the timing at which the 3D matching unit performs the 3D matching processing, and the timing at which the tracking unit performs the tracking processing.
[FIG. 20] FIG. 20 is a block diagram that illustrates a configuration of a control apparatus in a first modified example.
[FIG. 21] FIG. 21 is a flowchart that illustrates a flow of a robot control processing in the first modified example.
[FIG. 22] FIG. 22 is a plan view that illustrates two objects detected by the 2D matching processing.
[FIG. 23] FIG. 23A illustrates the imaging apparatus that rotationally moves, and FIG. 23B illustrates the imaging apparatus that linearly moves.
[FIG. 24] FIG. 24A illustrates a robot arm that moves an end effector toward a first object, and FIG. 24B illustrates the robot arm that moves the end effector toward a second object.
[FIG. 25] FIG. 25 is a perspective view that illustrates the imaging apparatus that captures an image of an object from a first position and the imaging apparatus that captures the image of the object from a second position that is different from the first position.
[FIG. 26] FIG. 26 is a block diagram that illustrates a configuration of a control apparatus in a second modified example.
[FIG. 27] FIG. 27 schematically illustrates a planar surface removal processing.
[FIG. 28] FIG. 28 is a block diagram that illustrates a configuration of an imaging unit.
[FIG. 29] FIG. 29 schematically illustrates a High-Dynamic-Range rendering processing.
[FIG. 30] FIG. 30 schematically illustrates a de-noise processing.
[FIG. 31] FIG. 31 is a block diagram that illustrates a configuration of a robot system in a third modified example.

### Example Embodiments

Next, with reference to drawings, an example embodiment of a control apparatus, a control system , a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

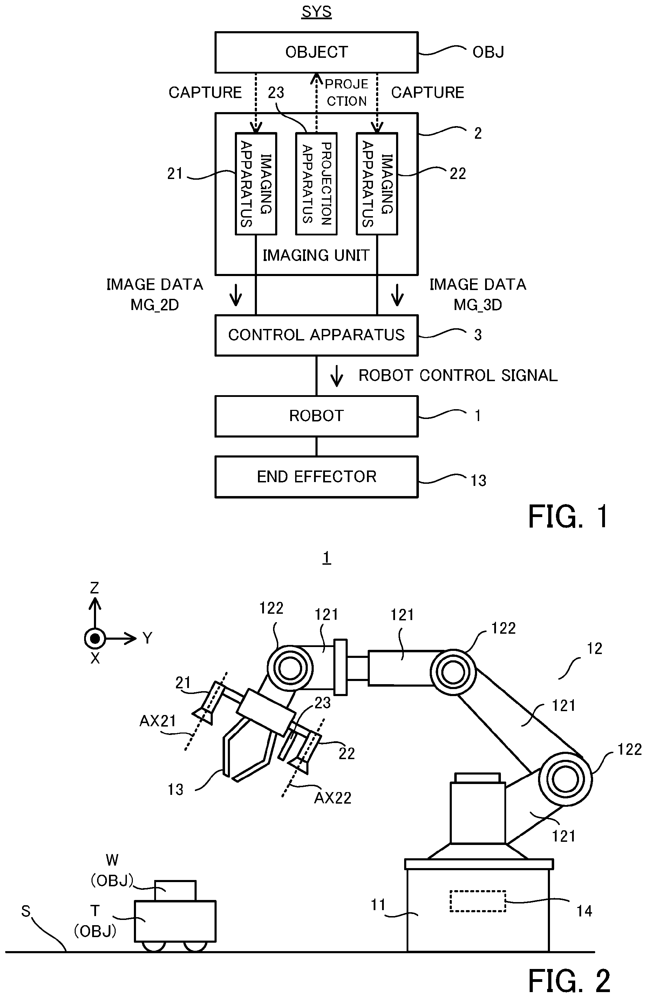

Firstly, with reference to FIG.1 , an entire configuration of the robot system SYS will be described. FIG. 1 is a block diagram that illustrates the entire configuration of the robot system SYS.

As illustrated in FIG. 1, the robot system SYS includes: a robot 1; an imaging unit 2, a control apparatus 3, and an end effector 13.

The robot 1 is an apparatus that is configured to perform a predetermined process on an object OBJ. One example of the robot 1 is illustrated in FIG. 2. FIG. 2 is a side view that illustrates an exterior appearance of the robot 1. As illustrated in FIG. 2, the robot 1 includes: a base 11; a robotic arm 12, and a robot control apparatus 14, for example.

The base 11 is a member that is a foundation of the robot 1. The base 11 is placed on a support surface S, such as a floor. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). Incidentally, FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 13 is attached to the robot arm 12. Namely, the end effector 13 is attached to the robot 1. In an example illustrated in FIG. 2, the end effector 13 is attached to an end of the robot arm 12. The end effector 13 is movable by a movement of the robot arm 12. Namely, the robot arm 12 moves the end effector 13. Namely, the robot 1 moves the end effector 13.

The end effector 13 is an apparatus that performs a predetermined process on the object OBJ. The end effector 13 may be referred to as a process apparatus because it performs the predetermined process on the object OBJ.

For example, the end effector 13 may perform a hold process (in other words, a hold operation) for holding the object OBJ as one example of the predetermined process.. In this case, the end effector 13 may be considered to perform the hold process on the object OBJ that should be held by the end effector 13. The end effector 13 that is configured to perform the holding process may be referred to as a holding apparatus.

For example, the end effector 13 may perform a release process (in other words, a release operation) for releasing (in other words, letting off) the held object OBJ as one example of the predetermined process. In this case, the end effector 13 may be considered to perform the release process on the object OBJ held by the end effector 13. In a case where the end effector 13 is referred to as the holding apparatus, the holding apparatus may perform the release process on the object OBJ held by the holding apparatus. The end effector 13 that is configured to perform the release process may be referred to as a release apparatus.

The release process may include a release process for releasing (namely, letting off) a first object OBJ so that the first object OBJ held by the end effector 13 is placed on a second object OBJ. In this case, the end effector 13 may be considered to perform the release process on the first object OBJ held by the end effector 13. Namely, the end effector 13 may be considered to perform the release process on the first object OBJ that should be released by the end effector 13. Furthermore, the end effector 13 may be considered perform the release process on the second object OBJ on which the first object OBJ that should be released by the end effector 13 is placed.

A hand gripper is one example of the end effector 13 that is configured to perform the hold process and the release process. The hand gripper is an end effector 13 that is configured to hold the object OBJ by physically clamping the object OBJ using a plurality of (for example, two, three, or four) finger members or claw members. At least one of a vacuum gripper that is configured to hold the object OBJ by vacuum-sucking the object OBJ is another example of the end effector 13 that is configured to perform the hold process and the release process. FIG. 2 illustrates an example in which the end effector 13 is the hand gripper.

The robot 1 may perform a placing process (in other words, a placing operation) for placing the object OBJ at a desired position by using the end effector 13 that is configured to perform the hold process and the release process. For example, the robot 1 may hold the first object OBJ by using the end effector 13, and then perform the placing process for placing the first object OBJ held by the end effector 13 at a desired position of the second object OBJ that is different from the first object OBJ.

The robot 1 may perform an embedding process (in other words, an embedding operation) for embedding the first object OBJ into the second object OBJ that is different from the first object OBJ by using the end effector 13 that is configured to perform the hold process and the release process. For example, the robot 1 may hold the first object OBJ by using the end effector 13, and then perform the embedding process for embedding the first object OBJ held by the end effector 13 into the second object OBJ that is different from the first object OBJ.

The object OBJ on which the end effector 13 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example.

The object OBJ on which the end effector 13 performs the predetermined processing may include a placing apparatus T on which the workpiece W is placed, as illustrated in FIG. 2. A pallet is one example of the placing apparatus T. The placing apparatus T may be placed on the support surface S. The placing apparatus T may be fixed to the support surface S. Alternatively, the placing apparatus T may be movable relative to the support surface S. As one example, the placing apparatus T may be configured to be self-propelled on the support surface S. Note that FIG. 2 illustrates an example in which the placing apparatus T is configured to be self-propelled on the support surface S. In this case, the placing apparatus T may be referred to as an Automatic Guided Vehicle (AGV). In a case where the placing apparatus T is movable relative to the support surface S, the workpiece W placed on the placing apparatus T also moves relative to the support surface S due to a movement of the placing apparatus T. Therefore, the movable placing apparatus T may serve as a movement apparatus that moves the workpiece W. Incidentally, a conveyor belt may be used as the placing apparatus T.

However, the object OBJ may not include the placing apparatus T. In a case where the placing apparatus T is configured to self-propulsion on the support surface S, a self-propelled apparatus configured to be self-propelled on the support surface S and the pallet may be separated units. In this case, the pallet may be mounted on the self-propelled apparatus. An apparatus including both of the self-propelled apparatus and the pallet may be referred to as the placing apparatus T. Alternatively, the object OBJ may not include at least one of the self-propelled apparatus and the pallet. The self-propelled apparatus may be referred to as an automated guided vehicle.

Incidentally, the placing apparatus T may be configured to fly over the support surface S. In this case, the placing apparatus T may be referred to as an unmanned aerial vehicle. A flying apparatus that is configured to fly over the support surface S and the pallet may be separated units. The pallet may be mounted on the flying apparatus. An apparatus including the flying apparatus and the pallet may be referred to as the placing apparatus T. The flying apparatus may be referred to as an unmanned aerial vehicle. Incidentally, the workpiece W may not be placed on the placing apparatus T. For example, the workpiece W may be placed on the support surface S.

In a case where the object OBJ includes the workpiece W and the placing apparatus T, the above-described hold process may include a process for holding the workpiece W on the stationary or moving placing apparatus T. The above-described hold process may include a process for holding the workpiece W placed on the support surface S. The above-described release process may include a process for releasing the workpiece W held by the end effector 13 in order to place the workpiece W held by the end effector 13 at a desired position on the stationary or moving placing apparatus T. The above-described release process may include a process for releasing the workpiece W held by the end effector 13 in order to place the workpiece W held by the end effector 13 at a desired position on the support surface S. The above-described release process may include a process for releasing a first workpiece W held by the end effector 13 in order to embed the first workpiece W held by the end effector 13 into a second workpiece W placed on the stationary or moving placing apparatus T. The above-described release process may include a process for releasing the first workpiece W held by the end effector 13 in order to embed the first workpiece W held by the end effector 13 into the second workpiece W placed on the support surface S.

The robot control apparatus 14 controls an operation of the robot 1.

Specifically, the robot control apparatus 14 may control an operation of the robot arm 12. For example, the robot control apparatus 14 may control the operation of the robot arm 12 so that the desired link 121 rotates around an axis defined by the desired joint 122. For example, the robot control apparatus 14 may control the operation of the robot arm 12 so that the end effector 13 attached to the robot arm 12 is positioned at a desired position. For example, the robot control apparatus 14 may control the operation of the robot arm 12 so that the end effector 13 attached to the robot arm 12 moves to a desired position.

The robot control apparatus 14 may control an operation of the end effector 13 attached to the robot 1, in addition to or instead of controlling the operation of the robot 1. For example, the robot control apparatus 14 may control the operation of the end effector 13 so that the end effector 13 holds the object OBJ at a desired timing. Namely, the robot control apparatus 14 may control the operation of the end effector 13 so that the end effector 13 performs the hold process at the desired timing. For example, the robot control apparatus 14 may control the operation of the end effector 13 so that the end effector 13 releases the held object OBJ at a desired timing. Namely, the robot control apparatus 14 may control the operation of the end effector 13 so that the end effector 13 performs the release process at the desired timing. In a case where the end effector 13 is the hand gripper, the robot control apparatus 14 may control a timing at which the hand gripper opens and closes. In a case where the end effector 13 is the vacuum gripper, the robot control apparatus 14 may control a timing at which a vacuum apparatus of the vacuum gripper is turned on and turned off.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an automated guided vehicle and an unmanned aerial vehicle in addition to the robot 1. For example, the robot 1 may be mounted on at least one of the automatic guided vehicle and the unmanned aerial vehicle.

Again in FIG. 1, the imaging unit 2 images the object OBJ. In order to image the object OBJ, the imaging unit 2 includes an imaging apparatus 21, an imaging apparatus 22, and a projection apparatus 23. Incidentally, the imaging unit 2 may be referred to as an imaging part.

The imaging apparatus 21 is a camera that is configured to images the object OBJ. The imaging apparatus 21 generates image data IMG_2D by imaging the object OBJ. The image data IMG_2D generated by the imaging apparatus 21 is output from the imaging apparatus 21 to the control apparatus 3. In the present example embodiment, the imaging apparatus 21 is a monocular camera. Specifically, the imaging apparatus 21 is configured to image the object OBJ by using the monocular camera (in other words, an imaging element). Note that the imaging apparatus 21 is not limited to the monocular camera. The imaging apparatus 21 may be a stereo camera that is configured to image the object OBJ by using two monocular cameras, or may include three or more monocular cameras. Note that the imaging apparatus 21 may be at least one of a light field camera, a plenoptic camera, and a multispectral camera.

The imaging apparatus 22 is a camera that is configured to image the object OBJ, as with the imaging apparatus 21. In the present example embodiment, the imaging apparatus 22 is a stereo camera. Specifically, the imaging apparatus 22 is the stereo camera that is configured to image the object OBJ by using two monocular cameras (in other words, two imaging elements). The imaging apparatus 22 generates image data IMG_3D by imaging the the object OBJ. Specifically, since the imaging apparatus 22 is the stereo camera, the imaging apparatus 22 generates the image data IMG_3D that includes two image data generated by the two monocular cameras, respectively. The image data IMG_3D generated by the imaging apparatus 22 is output from the imaging apparatus 22 to the control apparatus 3. Note that the imaging apparatus 22 is not limited to the stereo camera. The imaging apparatus 22 may be a monocular camera or may include three or more monocular cameras. Note that the imaging apparatus 22 may be at least one of a light field camera, a plenoptic camera, and a multispectral camera.

The projection apparatus 23 is an apparatus that is configured to irradiate the object OBJ with projection light. Especially, the projection apparatus 23 is an apparatus that is configured to project a desired projection pattern on the object OBJ by irradiating the object OBJ with the projection light. The desired projection pattern may include a random pattern, for example. The random pattern may be a projection pattern having different patterns in unit irradiation areas, respectively. The random pattern may include a random dot pattern. The desired projection pattern may include a one-dimensional or two-dimensional grid pattern, The desired projection pattern may include another projection pattern. The imaging apparatus 22 images the object OBJ on which the projection pattern is projected. In this case, the object OBJ on which the projection pattern is projected is included in the image indicated by the image data IMG_3D. On the other hand, the imaging apparatus 21 may not image the object OBJ on which the projection pattern is projected. The imaging apparatus 21 may image the object OBJ on which the projection pattern is not projected. In this case, the object OBJ on which the projection pattern is projected may not be included in the image indicated by the image data IMG_2D. The object OBJ on which the projection pattern is not projected may be included in the image indicated by the image data IMG_2D. Incidentally, the projection light for projecting the desired projection pattern on the object OBJ may be referred to as pattern light or structure light. In this case, the projection light may include the pattern light or may include the structure light.

Note that the projection apparatus 23 may be considered to illuminate the object OBJ with the projection light by irradiating the object OBJ with the projection light. In this case, the projection apparatus 23 may serve as an illumination apparatus that illuminates the object OBJ. In a case where the projection apparatus 23 serves as the illumination apparatus, the projection light may be referred to as illumination light. In a case where the projection apparatus 23 serves as the illumination apparatus, the projection light may not be the light capable of projecting the desired projection pattern on the object OBJ.

The imaging unit 2 is mounted on the robot arm 12, as with the end effector 13. Namely, the imaging apparatuses 21 and 22 and the projection apparatus 23 are attached to the robot arm 12. For example, as illustrated in FIG. 2, the imaging apparatuses 21 and 22 and the projection apparatus 23 may be attached to an end of the robot arm 12, as with the end effector 13. In this case, the imaging apparatuses 21 and 22 and the projection apparatus 23 are movable by the movement of the robot arm 12. Namely, the robot arm 12 moves the imaging apparatuses 21 and 22 and the projection apparatus 23.

However, the imaging unit 2 may not be mounted on the robot arm 12. The imaging unit 2 may be mounted at any position that allows the imaging unit 2 to irradiate the object OBJ with the projection light and to image the object OBJ. Note that at least one of the imaging apparatus 21, the imaging apparatus 22, and the projection apparatus 23 may be mounted on the robot arm 12, and at least other one of the imaging apparatus 21, the imaging apparatus 22, and the projection apparatus 23 may be mounted at a position that is different from the robot arm 12. In a case where at least one of the imaging apparatus 21 and the imaging apparatus 22 is mounted at the position that is different form the robot arm 12, at least one of the imaging apparatus 21 and the imaging apparatus 22 may be mounted on a structural object, such as a pillar, that is positioned so that the object OBJ can be imaged. Moreover, in a case where the projection apparatus 23 is mounted at the position that is different from the robot arm 12, the projection apparatus 23 may be mounted on a structural object, such as a pillar, that is positioned so that the object OBJ can be illuminated with the projection light.

The imaging apparatuses 21 and 22 may image the object OBJ in synchronization with each other. For example, the imaging apparatuses 21 and 22 may image the object OBJ simultaneously. Namely, the imaging apparatuses 21 and 22 may image the object OBJ so that a 2D imaging time at which the imaging apparatus 21 images the object OBJ and a 3D imaging time at which the imaging apparatus 22 images the object OBJ are the same time. The imaging apparatuses 21 and 22 may image the object OBJ so that the 2D imaging time at which the imaging apparatus 21 images the object OBJ to generate the image data IMG_2D and the 3D imaging time at which the imaging apparatus 22 images the object OBJ to generate the image data IMG_3D are the same time.

The imaging apparatuses 21 and 22 may image the object OBJ under the control of the control apparatus 3. In this case, a time (in other words, a timing) at which each of the imaging apparatuses 21 and 22 images the object OBJ may be controlled by the control apparatus 3. For example, the control apparatus 3 may control the imaging apparatuses 21 and 22 so that the imaging apparatuses 21 and 22 image the object OBJ in synchronization with each other. For example, the control apparatus 3 may control the imaging apparatuses 21 and 22 so that the imaging apparatuses 21 and 22 image the object OBJ simultaneously. Namely, the control apparatus 3 may control the imaging apparatuses 21 and 22 so that the 2D imaging time are the same as the 3D imaging time are the same time.

Here, a state in which "the 2D imaging time and the 3D imaging time are the same time" may include a state in which "the 2D imaging time and the 3D imaging time are exactly the same time literally". The state in which "the 2D imaging time and the 3D imaging time are the same time" may include a state in which "the 2D imaging time and the 3D imaging time are not exactly the same time, but the 2D imaging time and the 3D imaging time are allowed to be considered to be substantially the same time because a difference in time between the 2D imaging time and the 3D imaging time is smaller than an allowable upper limit value". Here, the allowable upper limit value may be an allowable upper limit value based on a control error of the robot arm 12. For example, there is a possibility that the difference in time between the 2D imaging time and the 3D imaging time causes an error in a calculated result of at least one of a position and a pose of the object OBJ described below (namely, decreases an accuracy of at least one of the calculated position and pose of the object OBJ). In this case, there is a possibility that the error in the calculated result of at least one of the position and the pose of the object OBJ causes the control error of the robot arm 12. There is a possibility that the control error of the robot arm 12 results in a movement error of the end effector 13, and the end effector 13 cannot appropriately perform the predetermined process on the object OBJ. Note that the allowable upper limit value may be considered to be equivalent to an allowable upper limit value of the movement error of the end effector 13 by the robot arm 12. Moreover, for example, even in a case where a synchronization error in the imaging processing of the imaging apparatuses 21 and 22 causes the difference in time between the 2D imaging time and the 3D imaging time, the 2D imaging time and the 3D imaging time may be considered to be substantially the same time. Incidentally, the synchronization error in the imaging processing of the imaging apparatuses 21 and 22 may be a synchronization control error in the imaging processing of the imaging apparatuses 21 and 22 by the control apparatus 3.

However, the imaging apparatuses 21 and 22 may not image the object OBJ simultaneously. Namely, the imaging apparatuses 21 and 22 may image the object OBJ so that the 2D imaging time at which the imaging apparatus 21 images the object OBJ and the 3D imaging time at which the imaging apparatus 22 images the object OBJ are different times. Incidentally, a state in which "the 2D imaging time and the 3D imaging time are the different times" may include a state in which "the 2D imaging time and the 3D imaging time are not allowed to be considered to be substantially the same time because the difference in time between the 2D imaging time and the 3D imaging time is larger than the allowable upper limit value".

In the present example embodiment, in a case where the imaging apparatuses 21 and 22 image the object OBJ in a period during which the object OBJ and each of the imaging apparatuses 21 and 22 are being relatively displaced, the imaging apparatuses 21 and 22 may image the object OBJ so that the 2D imaging time and the 3D imaging time are the same time. Namely, in a case where the imaging apparatuses 21 and 22 image the object OBJ in the period during which the object OBJ and each of the imaging apparatuses 21 and 22 are being relatively displaced, the control apparatus 3 may control the imaging apparatuses 21 and 22 so that the 2D imaging time and the 3D imaging time are the same time. A reason for this will be described in describing an effect of the robot system SYS later. Incidentally, a state in which the object OBJ and each of the imaging apparatuses 21 and 22 are being relatively displaced may mean a state in which a relative positional relationship between the object OBJ and each of the imaging apparatuses 21 and 22 is changing. The state in which the object OBJ and each of the imaging apparatuses 21 and 22 are being relatively displaced may mean a state in which the object OBJ and each of the imaging apparatuses 21 and 22 are relatively moved.

On the other hand, in a case where the imaging apparatuses 21 and 22 image the object OBJ in a period during which the object OBJ and each of the imaging apparatuses 21 and 22 are not being relatively displaced, the imaging apparatuses 21 and 22 may not image the object OBJ so that the 2D imaging time and the 3D imaging time are the same time. Namely, the control apparatus 3 may not control the imaging apparatuses 21 and 22 so that the 2D imaging time and the 3D imaging time are the same time. For example, the imaging apparatuses 21 and 22 may image the object OBJ so that the 2D imaging time and the 3D imaging time are the different times. Namely, the control apparatus 3 may control the imaging apparatuses 21 and 22 so that the 2D imaging time and the 3D imaging time are the different times. Incidentally, a state in which the object OBJ and each of the imaging apparatuses 21 and 22 are not being relatively displaced may include a state in which a relative positional relationship between the object OBJ and each of the imaging apparatuses 21 and 22 is not changing. The state in which the object OBJ and each of the imaging apparatuses 21 and 22 are not being relatively displaced may include a state in which the object OBJ and each of the imaging apparatuses 21 and 22 are not relatively moved. The state in which the object OBJ and each of the imaging apparatuses 21 and 22 are not being relatively displaced may include a state in which the object OBJ and each of the imaging apparatuses 21 and 22 are stationary. Incidentally, in a case where the imaging apparatuses 21 and 22 image the object OBJ in the period during which the object OBJ and each of the imaging apparatuses 21 and 22 are not being relatively displaced, the imaging apparatuses 21 and 22 may image the object OBJ so that the 2D imaging time and the 3D imaging time are the same time. Namely, the control apparatus 3 may control the imaging apparatuses 21 and 22 so that the 2D imaging time and the 3D imaging time are the same time.

The control apparatus 3 performs a robot control processing. The robot control processing includes a processing for generating a robot control signal for controlling the robot 1. Specifically, the control apparatus 3 generates the robot control signal based on the image data IMG_2D and IMG_3D output from the imaging unit 2. In the present example embodiment, the control apparatus 3 calculates at least one of a position and a pose of the object OBJ in a global coordinate system of the robot system SYS based on the image data IMG_2D and IMG_3D, and generates the robot control signal based on at least on one of the calculated position and pose of the object OBJ. The global coordinate system is a coordinate system that is a basis for the robot system SYS. The global coordinate system may be a coordinate system that is a basis for the robot 1. Incidentally, in a case where the global coordinate system is the coordinate system that is the basis for the robot 1, the global coordinate system may be referred to as a robot coordinate system.

The control apparatus 3 may perform an end effector processing, in addition to performing the robot control processing. The end effector control processing may include a processing for generating an end effector control signal for controlling the end effector 13. Specifically, the control apparatus 3 may generate the end effector control signal based on at least one of the calculated position and pose of the object OBJ. The end effector processing may be included or may not be included in the robot control processing. Namely, the end effector control signal generated by the control apparatus 3 may be included or may not be included in the robot control signal.

In the below-described description, for convenience of description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of a signal for controlling the robot 1 and a signal for controlling the end effector 13.

Note that the robot control signal may be referred to simply as a control signal.

Note that the control apparatus 3 may calculate at least one of the position and the pose of the object OBJ in a coordinate system (for example, in a 2D imaging coordinate system, a 3D imaging coordinate system, or a common coordinate system described below) that is different from the global coordinate system of the robot system SYS based on the image data IMG_2D and IMG_3D, and generate the robot control signal based on at least one of the calculated position and pose of the object OBJ.

Thus, the control apparatus 3 and the imaging unit 2 are used to control the robot 1. For this reason, a system including the control apparatus 3 and the imaging unit 2 may be referred to as a robot control system or a control system.

The robot control signal generated by the control apparatus 3 is output to the robot control apparatus 14 of the robot 1. The robot control apparatus 14 controls the operation of the robot 1 based on the robot control signal generated by the control apparatus 3. Therefore, the robot control signal may include a signal for controlling the operation of the robot 1.

The robot control signal may include a signal for controlling the robot arm 12. Namely, the robot arm 12 may be controlled by the robot control signal. In this case, the robot control apparatus 14 may control the operation of the robot arm 12 based on the robot control signal. For example, the robot control apparatus 14 may control the operation of the robot arm 12 by controlling a driving of the actuator built in the joint 122 based on the robot control signal.

As described above, the robot arm 12 moves the end effector 13. In this case, the robot control signal may include a signal for controlling the robot arm 12 so that the end effector 13 is positioned at a desired position. The robot control signal may include a signal for controlling the robot arm 12 so that the end effector 13 moves to the desired position. The robot control signal may include a signal for controlling the robot arm 12 so that a positional relationship between the end effector 13 and the object OBJ is a desired positional relationship. In this case, the robot control apparatus 14 may control the robot arm 12 based on the robot control signal so that the end effector 13 is positioned at the desired position. The robot control apparatus 14 may control the robot arm 12 based on the robot control signal so that the end effector 13 moves to the desired position. The robot control apparatus 14 may control the robot arm 12 based on the robot control signal so that the positional relationship between the end effector 13 and the object OBJ is the desired positional relationship.

As one example, in a case where the end effector 13 performs the hold process for holding the object OBJ, the robot control signal may include a signal for controlling the robot arm 12 so that the end effector 13 moves toward (namely, approaches) a hold position at which the end effector 13 can hold the object OBJ. Namely, the robot control signal may include a signal for controlling the robot arm 12 so that the end effector 13 is positioned at the hold position. In this case, the robot control apparatus 14 may control the robot arm 12 based on the robot control signal so that the end effector 13 moves toward (namely, approaches) the hold position. Namely, the robot control signal may control the robot arm 12 so that the end effector 13 is positioned at the hold position.

As another example, in a case where the end effector 13 performs the hold process for releasing the held object OBJ, the robot control signal may include a signal for controlling the robot arm 12 so that the end effector 13 moves toward (namely, approaches) a release position at which the end effector 13 should release the held object OBJ. Namely, the robot control signal may include a signal for controlling the robot arm 12 so that the end effector 13 is positioned at the release position. In this case, the robot control apparatus 14 may control the robot arm 12 based on the robot control signal so that the end effector 13 moves toward (namely, approaches) the release position. Namely, the robot control signal may control the robot arm 12 so that the end effector 13 is positioned at the release position.

As described above, the robot control signal may include the signal for controlling the end effector 13 (namely, the end effector control signal) in addition to or instead of the signal for controlling the robot arm 12. Namely, the end effector 13 may be controlled by the robot control signal. In this case, the robot control apparatus 14 may control the operation of the end effector 13 based on the robot control signal. For example, the robot control apparatus 14 may control the operation of the end effector 13 by controlling a driving of an actuator that moves the hand gripper constituting the end effector 13 based on the robot control signal. For example, the robot control apparatus 14 may control the operation of the end effector 13 by controlling a driving of the vacuum apparatus of the vacuum gripper constituting the end effector 13 based on the robot control signal.

As one example, in a case where the end effector 13 performs the hold process for holding the object OBJ, the robot control signal may include a signal for controlling the end effector 13 so that the end effector 13 positioned at the above-described hold position holds the object OBJ. In this case, the robot control apparatus 14 may control the end effector 13 based on the robot control signal so that the end effector 13 positioned at the hold position holds the object OBJ.

As another example, in a case where the end effector 13 performs the release process for releasing the held object OBJ, the robot control signal may include a signal for controlling the end effector 13 so that the end effector 13 positioned at the above-described release position releases the held object OBJ. The signal may include a signal. In this case, the robot control apparatus 14 may control the end effector 1 based on the robot control signal 3 so that the end effector 13 positioned at the above-described release position releases the held object OBJ.

The robot control signal may include a signal that is usable as it is by the robot control apparatus 14 to control the operation of the robot 1. The robot control signal may include a signal that is usable as it is as a robot driving signal that is used by the robot control apparatus 14 to control the operation of the robot 1. In this case, the robot control apparatus 14 may use the robot control signal as it is to control the operation of the robot 1. Specifically, for example, the control apparatus 3 may generate a driving signal of the actuator built in the joint 122 of the robot arm 12 as the robot control signal, and the robot control apparatus 14 may use the robot control signal generated by the control apparatus 3 as it is to control the actuator built in the joint 122 of the robot arm 12. The robot control signal may include a signal that is usable as it is by the robot control apparatus 14 to control the operation of the end effector 13. The robot control signal may include a signal that is usable as it is as an end effector driving signal that is used by the robot control apparatus 14 to control the operation of the end effector 13. In this case, for example, the control apparatus 3 may generate a driving signal (the end effector driving signal) of the actuator that moves the hand gripper constituting the end effector 13 as the robot control signal, and the robot control apparatus 14 may use the robot control signal generated by the control apparatus 3 as it is to control the actuator of the end effector 13. For example, the control apparatus 3 may generate a driving signal (the end effector driving signal) of the vacuum apparatus of the vacuum gripper constituting the end effector 13 as the robot control signal, and the robot control apparatus 14 may use the robot control signal generated by the control apparatus 3 as it is to control the vacuum apparatus of the end effector 13.

Incidentally, in a case where the robot control signal includes the signal that is usable as it is by the robot control apparatus 14 to control the operation of the robot 1 and the signal that is usable as it is by the robot control apparatus 14 to control the operation of the end effector 13 as described above, the robot 1 may not include the robot control apparatus 14.

Alternatively, the robot control signal may include a signal that is usable by the robot control apparatus 14 to generate the robot driving signal for controlling the operation of the robot 1. In this case, the robot control apparatus 14 may generate the robot driving signal for controlling the operation of the robot 1 based on the robot control signal, and control the operation of the robot 1 based on the generated robot driving signal. For example, the robot control apparatus 14 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 14 to generate the end effector driving signal for controlling the operation of the end effector 13. In this case, the robot control apparatus 14 may generate the end effector driving signal for controlling the operation of the end effector 13 based on the end effector control signal, and control the operation of the end effector based on the generated end effector driving signal. For example, the robot control apparatus 14 may generate the driving signal of the actuator or the vacuum apparatus of the end effector 13 based on the robot control signal, and control the actuator or the vacuum apparatus of the end effector 13 based on the generated signal.

Note that the signal that is usable by the robot control apparatus 14 to generate the robot driving signal may be a signal indicating the position of the object OBJ in the global coordinate system. In this case, for example, the robot control apparatus 14 may generate the driving signal of the actuator built in the joint 122 of the robot arm 12 based on the robot control signal so that the end effector 13 approaches the object OBJ whose position in the global coordinate system indicated by the robot control signal (namely, the positional relationship between the robot 1 (the end effector) and the object OBJ is the desired positional relationship), and control the operation of the robot arm 12 based on the generated driving signal. Moreover, the signal that is usable by the robot control apparatus 14 to generate the robot driving signal 1 may be a signal indicating the desired positional relationship between the robot 1 and the object OBJ in the global coordinate system. In this case, for example, the robot control apparatus 14 may generate the driving signal of the actuator built in the joint 122 of the robot arm 12 based on the robot control signal so that the positional relationship between the robot 1 (the end effector 13) and the object OBJ is the desired positional relationship indicated by the robot control signal, and control the operation of the robot arm 12 based on the generated driving signal. Moreover, the signal that is usable by the robot control apparatus 14 to generate the robot driving signal may include a signal indicating the desired position of the end effector 13 in the global coordinate system. In this case, for example, the robot control apparatus 14 may generate the driving signal of the actuator built in the joint 122 of the robot arm 12 based on the robot control signal so that the end effector 13 is positioned at the desired position indicated by the robot control signal (namely, the positional relationship between the robot 1 (the end effector) and the object OBJ is the desired positional relationship), and control the operation of the robot arm 12 based on the generated driving signal. As one example, the robot control apparatus 14 may generate the driving signal of the actuator built in the joint 122 of the robot arm 12 based on the robot control signal so that the end effector 13 moves to a position at which the end effector 13 can hold the object OBJ positioned at the position indicated by the robot control signal, and control the operation of the robot arm 12 based on the generated driving signal. As another example, the robot control apparatus 14 may generate the driving signal of the actuator built in the joint 122 of the robot arm 12 based on the robot control signal so that the end effector 13, which has held the object OBJ positioned at the position indicated by the robot control signal, moves away from a position at which the object OBJ was placed, and control the operation of the robot arm 12 based on the generated driving signal. Moreover, the signal that is usable by the robot control apparatus 14 to generate the robot driving signal may include a signal indicating a desired position of an end part of the robot arm 12 in the global coordinate system, or may include a signal indicating a desired position of the imaging unit 2 in the global coordinate system. Note that the coordinate system used as a basis in the robot control signal may be a coordinate system (for example, the 2D imaging coordinate system, the 3D imaging coordinate system, or the common coordinate system described below) other than the global coordinate system.

### (1-2) Configuration of Control Apparatus 3

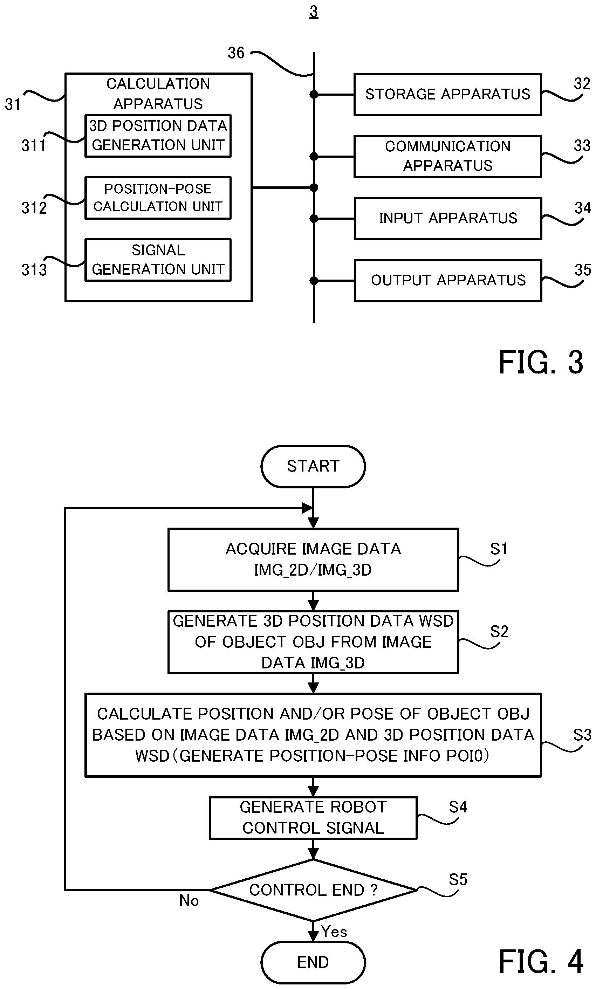

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a calculation apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The calculation apparatus 31, the storage apparatus 32, the communication apparatus 33, the input apparatus 34, and the output apparatus 35 may be connected through a data bus 36.

The calculation apparatus 31 may include at least one of a CPU (Central Processing Unit), a GPU (Graphic Processing Unit), and a FPGA (Field Programmable Gate Array), for example. The calculation apparatus 31 reads a computer program. For example, the calculation apparatus 31 may read the computer program recorded in the storage apparatus 32. For example, the calculation apparatus 31 may read the computer program recorded in a non-transitory computer-readable recording medium by using a non-illustrated recording medium reading apparatus of the control apparatus 3. The calculation apparatus 31 may acquire (namely, download or read) the computer program from a non-illustrated apparatus external to the control apparatus 3 through the communication apparatus 33 (alternatively, other communication apparatus). The calculation apparatus 31 executes the read computer program. As a result, a logical functional block for performing a processing that should be performed by the control apparatus 3 (for example, the above-described robot control processing) is implemented in the calculation apparatus 31. Namely, the calculation apparatus 31 is configured to serve as a controller for implementing the logical functional block for performing the processing that should be performed by the control apparatus 3.

An arithmetic model that is buildable by machine learning may be implemented in the calculation apparatus 31 by the calculation apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the calculation apparatus 31. Moreover, the arithmetic model implemented in the calculation apparatus 31 may be updated by online machine learning on the calculation apparatus 31. Alternatively, the calculation apparatus 31 may perform the robot control processing by using the arithmetic model implemented in an apparatus external to the calculation apparatus 31 (namely, an apparatus external to the control apparatus 3), in addition to or instead of the arithmetic model implemented in the calculation apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the calculation apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 3 by means of the control apparatus 3 (namely, a computer) executing the computer program, may be realized by a hardware such as a predetermined gate array (a FPGA, an ASIC) of the control apparatus 3, or may be realized in a form in which the logical process block and a partial hardware module that realizes a partial element of the hardware are combined.

FIG. 3 illustrates an example of a logical functional block implemented in the calculation apparatus 31 to perform the robot control processing. As illustrated in FIG. 3, a three-dimensional position data generation unit 311, a position-pose calculation unit 312, and a signal generation unit 313 are implemented in the calculation apparatus 31. Note that a processing performed by each of the three-dimensional position data generation unit 311, the position-pose calculation unit 312, and the signal generation unit 313 will be described in detail later with reference to FIG. 4 and so on, and a description thereof is omitted here.

The storage apparatus 32 is configured to store desired data. For example, the storage apparatus 32 may temporarily store the computer program that is executed by the calculation apparatus 31. The storage apparatus 32 may temporarily store data temporarily used by the calculation apparatus 31 in a case where the calculation apparatus 31 executes the computer program. The storage apparatus 32 may store data stored for a long term by the control apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with each of the robot 1 and the imaging unit 2 through a no-illustrated communication network. Alternatively, the communication apparatus 33 may be configured to communicate with other apparatus that is different from the robot 1 and the imaging unit 2, in addition to or instead of at least one of the robot 1 and the imaging unit 2, through a non-illustrated communication network. In the present example embodiment, the communication apparatus 33 may receive (namely, acquire) the image data IMG_2D and IMG_3D from the imaging unit 2. Furthermore, the communication apparatus 33 may transmit (namely, output) the robot control signal to the robot 1. Incidentally, the communication apparatus 33 that output the robot control signal to the robot 1 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Incidentally, information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Incidentally, the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, the robot control processing performed by the control apparatus 3 will be described.

### (2-1) Flow of Robot Control Processing

Firstly, with reference to FIG. 4, a flow of the robot control processing will be described. FIG. 4 is a flowchart that illustrates the flow of the robot control processing.

As illustrated in FIG. 4, the control apparatus 3 acquires the image data IMG_2D from the imaging apparatus 21 by using the communication apparatus 33 (a step S1). Specifically, the imaging apparatus 21 images the object OBJ at a predetermined 2D imaging rate. For example, the imaging apparatus 21 may image the object OBJ at the 2D imaging rate, at which the object OBJ is imaged tens of times to hundreds of times (as one example, 500 times) per second. As a result, the imaging apparatus 21 generates the image data IMG_2D in a cycle based on the predetermined 2D imaging rate. For example, the imaging apparatus 21 may generate tens to hundreds of (as one example, 500) image data IMG_2D per second. The control apparatus 3 acquires the image data IMG_2D each time the imaging apparatus 21 generates the image data IMG_2D. Namely, the control apparatus 3 may acquire tens to hundreds of (as one example, 500) image data IMG_2D per second.

The imaging apparatus 21 may image another object that is different from the object OBJ, in addition to the object OBJ on which the robot 1 performs the predetermined process. For example, in a case where both of the object OBJ and another object are included in an imaging range (a field of view) of the imaging apparatus 21, the imaging apparatus 21 may image both of the object OBJ and another object. As a result, the imaging apparatus 21 may generate the image data IMG_2D indicating image in which both of the object OBJ and another object are included.

The control apparatus 3 further acquires the image data IMG_3D from the imaging apparatus 22 by using the communication apparatus 33 (the step S1). Specifically, the imaging apparatus 22 images the object OBJ at a predetermined 3D imaging rate. The 3D imaging rate is the same as the 2D imaging rate. However, the 3D imaging rate may be different from the 2D imaging rate. For example, the imaging apparatus 22 may image the object OBJ at the 3D imaging rate, at which the object OBJ is imaged tens of times to hundreds of times (as one example, 500 times) per second. As a result, the imaging apparatus 22 generates the image data IMG_3D in a cycle based on the predetermined 3D imaging rate. For example, the imaging apparatus 22 may generate tens to hundreds of (as one example, 500) image data IMG_3D per second. The control apparatus 3 acquires the image data IMG_3D each time the imaging apparatus 22 generates the image data IMG_3D. Namely, the control apparatus 3 may acquire tens to hundreds of (as one example, 500) image data IMG_3D per second.

The imaging apparatus 22 may image another object that is different from the object OBJ, in addition to the object OBJ on which the robot 1 performs the predetermined process. For example, in a case where both of the object OBJ and another object are included in an imaging range (a field of view) of the imaging apparatus 22, the imaging apparatus 22 may image both of the object OBJ and another object. As a result, the imaging apparatus 22 may generate the image data IMG_3D indicating image in which both of the object OBJ and another object are included.

Each time the control apparatus 3 acquires the image data IMG_3D, the three-dimensional position data generation unit 311 generates three-dimensional position data WSD based on the acquired image data IMG_3D (a step S2). Furthermore, the three-dimensional position data generation unit 311 outputs the generated three-dimensional position data WSD to the position-pose calculation unit 312.

The three-dimensional position data WSD is data indicating a three-dimensional position of the object OBJ included in the image data IMG_3D. For example, the three-dimensional position data WSD may be data indicating the three-dimensional position of at least a part of a surface of the object OBJ. Especially, the three-dimensional position data WSD is data indicating the three-dimensional position of each of a plurality of points of the object OBJ. For example, the three-dimensional position data WSD may be data indicating the three-dimensional position of each of the plurality of points on the surface of the object OBJ. For example, the three-dimensional position data WSD may be data indicating the three-dimensional position of each of the plurality of points that correspond to a plurality of parts of the surface of the object OBJ, respectively.

Specifically, as described above, the image indicated by the image data IMG_3D includes the object OBJ on which the projection pattern is projected. In this case, the projection pattern in the image indicated by the image data IMG_3D reflects the three-dimensional shape of at least a part of the surface of the object OBJ on which the projection pattern is projected. A shape of the projection pattern in the image indicated by the image data IMG_3D reflects the three-dimensional shape of at least a part of the surface of the object OBJ on which the projection pattern is projected. Therefore, the three-dimensional position data generation unit 311 can calculate the three-dimensional shape of at least a part of the surface of the object OBJ based on the projection pattern included in the image indicated by the image data IMG_3D. The three-dimensional shape of at least part of the surface of object OBJ substantially indicates the three-dimensional position of each of the plurality of points of the object OBJ. This is because each of the plurality of points of the object OBJ is included in the surface of the object OBJ. Therefore, a processing for calculating the three-dimensional shape of at least part of the surface of the object OBJ may be considered to be substantially equivalent to a processing for calculating the three-dimensional position of each of the plurality of points of the object OBJ. Therefore, the three-dimensional position data generation unit 311 can generate three-dimensional position data WSD based on the image data IMG_3D.

Incidentally, considering that each of the plurality of points of the object OBJ is included in the surface of the object OBJ, the three-dimensional position data WSD indicating the three-dimensional position of each of the plurality of points of the object OBJ may be considered to be substantially equivalent to three-dimensional shape data indicating the three-dimensional shape of at least a part of the object OBJ (especially, the three-dimensional shape of at least a part of the surface of the object OBJ).

In order to generate the three-dimensional position data WSD, the three-dimensional position data generation unit 311 may calculate parallax by performing a matching for each part (for example, each pixel) between the images indicated by the two image data included in the image data IMG_3D, respectively. Specifically, in this matching, the three-dimensional position data generation unit 311 may calculate the parallax by performing the matching for each part of the projection pattern included in the images indicated by the two image data, respectively (namely, each part between the projection patterns included in the images, respectively). The three-dimensional position data generation unit 311 may calculate the three-dimensional position of each of the plurality of points of the object OBJ by using a well-known method based on a principle of triangulation using the calculated parallax. As a result, the three-dimensional position data WSD indicating the three-dimensional position of each of the plurality of points of the object OBJ is generated. In this case, a calculation accuracy of the parallax is higher in a case where the matching for each part between images in which the projection pattern is included (namely, for each part between the projection patterns) is performed, compared to a case where the matching for each part between images in which the projection pattern is not included is performed. Therefore, an accuracy of the generated three-dimensional position data WSD (namely, a calculation accuracy of the three-dimensional position of each of the plurality of points of the object OBJ) is higher.

The three-dimensional position data WSD may be any data as long as it can indicate the three-dimensional position of each of the plurality of points of the object OBJ. Namely, the three-dimensional position data WSD may be any data that directly or indirectly indicates the three-dimensional position of each of the plurality of points of the object OBJ. For example, the three-dimensional position data WSD may include coordinate information indicating the three-dimensional position of each of the plurality of points of the object OBJ. For example, the three-dimensional position data WSD may include information indicating the three-dimensional shape of at least a part of the object OBJ.

Since the control apparatus 3 acquires the plurality of image data IMG_3D in sequence as described above, the three-dimensional position data generation unit 311 also generates the plurality of three-dimensional position data WSD from the plurality of image data IMG_3D, respectively, in sequence. In this case, the three-dimensional position data WSD generated from the image data IMG_3D at one time may indicate the three-dimensional position of each of a plurality of first points of the object OBJ. The three-dimensional position data WSD generated from the image data IMG_3D at another times different from the one time may indicate the three-dimensional position of each of a plurality of second points of the object OBJ. The plurality of first points of the object OBJ may be the same as the plurality of second points of the object OBJ. Alternatively, at least one of the plurality of first points of the object OBJ may be different from at least one of the plurality of second points of the object OBJ.

Depth image data is one example of the three-dimensional position data WSD. The depth image data is an image data in which not only brightness information but also depth information is associated with each pixel of a depth image indicated by the depth image data. The depth information is information that indicates a distance between each part of the object OBJ included in each pixel and the imaging apparatus 22 (namely, a depth). Note that the depth image data may be image data in which the brightness information of each pixel indicates the depth of each part of the object OBJ (namely, the distance between each part of the object OBJ and the imaging apparatus 22). The three-dimensional position data generation unit 311 may calculate the distance between the imaging apparatus 22 and each part of the object OBJ included in the image indicated by the image data IMG_3D based on the projection pattern included in the image indicated by the image data IMG_3D, and associates, as the depth information, the calculated distance to each pixel of the image indicated by the image data IMG_3D to generate the depth image.

Point cloud date is another example of the three-dimensional position data WSD. The point cloud data is data indicating a set of points, each of which corresponds to each part of the object included in the image indicated by the image data IMG_3D, in a three-dimensional space. The three-dimensional position data generation unit 311 may generate the point cloud data based on the depth image data and a camera parameter of the imaging apparatus 22.

The three-dimensional position data WSD may be data indicating the three-dimensional position of the object OBJ in the 3D imaging coordinate system described below, because it is generated based on the image data IMG_3D as described above.

As described above, in a case where not only the object OBJ on which the robot 1 performs the predetermined process but also another object that is different from the object OBJ is included in the imaging range (the field of view) of the imaging apparatus 22, the image data IMG_3D indicates the image in which both of the object OBJ and another object are included. In this case, the three-dimensional position data WSD may be data indicating not only the three-dimensional position of the object OBJ included in the image data IMG_3D but also a three-dimensional position of another object included in the image data IMG_3D. Even in this case, the three-dimensional position data WSD may be considered to be the data indicating the three-dimensional position of each of the plurality of points of the object OBJ as long as the three-dimensional position data WSD includes the data indicating the three-dimensional position of the object OBJ. This is because the fact remains that the three-dimensional position data WSD includes the data indicating the three-dimensional position of the object OBJ even in a case where the three-dimensional position data WSD includes the data indicating the three-dimensional position of another object.

Then, the position-pose calculation unit 312 calculates at least one of the position and the pose of the object OBJ based on the image data IMG_2D acquired at the step S1 and the three-dimensional position data WSD generated at the step S2 (a step S3). As a result, the position-pose calculation unit 312 generates position-pose information POI0 indicating at least one of the position and the pose of the object OBJ (the step S3).

At the step S3, the position-pose calculation unit 312 calculates at least one of the position and the pose of the object OBJ in the global coordinate system. Namely, the position-pose calculation unit 312 generates the position-pose information POI0 indicating at least one of the position and the pose of the object OBJ in the global coordinate system. The global coordinate system is the coordinate system that is the basis for the robot system SYS. Specifically, the global coordinate system is a coordinate system that is used to control the robot 1. For example, the robot control apparatus 14 may control the robot arm 12 so that the end effector 13 is positioned at a desired position in the global coordinate system. The global coordinate system is a coordinate system that is defined by an X-axis(GL), a Y-axis(GL) and a Z-axis(GL) that are orthogonal to one another. The X-axis(GL) may be an axis along a horizontal plane. The Y-axis(GL) may be an axis along the horizontal plane. The Z-axis(GL) may be an axis orthogonal to the horizontal plane. The Z-axis(GL) may be an axis extending along a gravity direction. Note that an X-axis, a Y-axis, and a Z-axis illustrated in FIG. 2 may be the X-axis(GL), the Y-axis(GL), and the Z-axis(GL), respectively. Note that an origin of the global coordinate system may not be an origin of the X-axis(GL), the Y-axis(GL), and the Z-axis(GL) illustrated in FIG. 2. For example, the origin of the global coordinate system may set to any position of the base 11 in FIG. 2. For example, the origin of the global coordinate system may set to any position of the support surface S. For example, the origin of the global coordinate system may set to any position of a contact surface of the base 11 relative to the support surface S (for example, a center or a center of gravity of the contact surface).

The position-pose calculation unit 312 may calculate, as the position of the object OBJ in the global coordinate system, at least one of a position Tx(GL) of the object OBJ in the X-axis direction(GL) parallel to the X-axis(GL), a position Ty(GL) of the object OBJ in the Y-axis direction(GL) parallel to the Y-axis(GL), a position Tz(GL) of the object OBJ in the Z-axis direction(GL) parallel to the Z-axis(GL). The position-pose calculation unit 312 may calculate, as the pose of the object OBJ in the global coordinate system, a rotational amount Rx(GL) of the object OBJ around the X-axis(GL), a rotational amount Ry(GL) of the object OBJ around the Y-axis(GL), and a rotational amount Rz(GL) of the object OBJ around the Z-axis(GL). This is because the rotational amount Rx(GL) of the object OBJ around the X-axis(GL), the rotational amount Ry(GL) of the object OBJ around the Y-axis(GL), and the rotational amount Rz(GL) of the object OBJ around the Z-axis(GL) are equivalent to a parameter representing the pose of the object OBJ around the X-axis(GL), a parameter representing the pose of the object OBJ around the Y-axis(GL), and a parameter representing the pose of the object OBJ around the Z-axis(GL), respectively. Therefore, in the below-described description, the rotational amount Rx(GL) of the object OBJ around the X-axis(GL), the rotational amount Ry(GL) of the object OBJ around the Y-axis(GL), and the rotational amount Rz(GL) of the object OBJ around the Z-axis(GL) are referred to as the pose RX(GL) of the object OBJ around the X-axis(GL), the pose RY(GL) of the object OBJ around the Y-axis(GL), and the pose Rz(GL) of the object OBJ around the Z-axis(GL), respectively.

Incidentally, the pose Rx(GL) of the object OBJ around the X-axis(GL), the pose Ry(GL) of the object OBJ around the Y-axis(GL), and the pose Rz(GL) of the object OBJ around the Z-axis(GL) may be considered to represent a position of the object OBJ in a rotational direction around the X-axis(GL), a position of the object OBJ in a rotational direction around the Y-axis(GL), and a position of the object OBJ in a rotational direction around the Z-axis(GL), respectively. Namely, each of the pose Rx(GL) of the object OBJ around the X-axis(GL), the pose Ry(GL) of the object OBJ around the Y-axis(GL), and the pose Rz(GL) of the object OBJ around the Z-axis(GL) may be regarded as a parameter representing the position of the object OBJ.

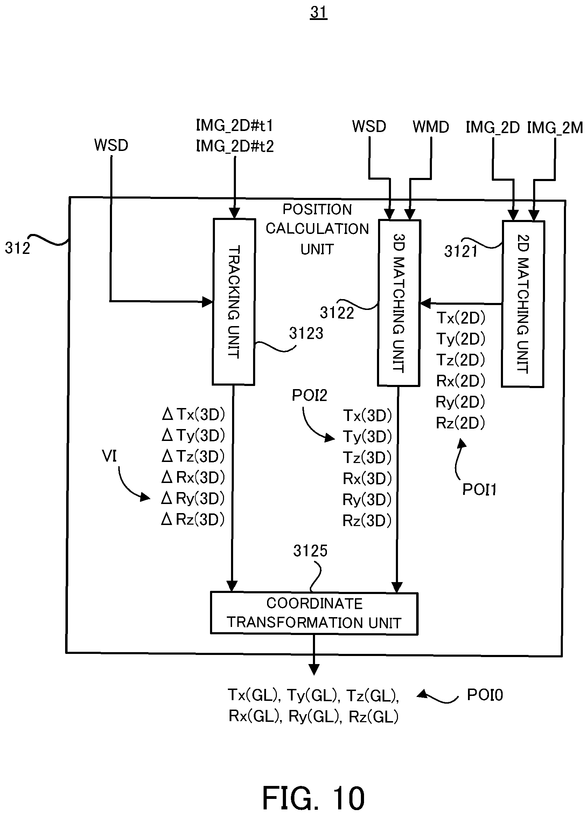

Thus, the position-pose calculation unit 312 may calculates at least one of the position Tx(GL), the position Ty(GL), the position Tz(GL), the pose Rx(GL), the pose Ry(GL), and the pose Rz(GL), as at least one of the position and the pose of the object OBJ in the global coordinate system, at the step S3 in FIG. 4. Incidentally, the processing for calculating at least one of the position and the pose of the object OBJ in the global coordinate system (namely, the processing for generating the position-pose information POI0) will be described in detail later with reference to FIG. 10 and so on, and a description thereof is omitted here.

Then, the signal generation unit 313 generates the robot control signal based on the position-pose information POI0 generated at the step S3 (a step S4). For example, the signal generation unit 313 may generate the robot control signal so that the robot 1 performs the predetermined process on the object OBJ. For example, the signal generation unit 313 may generate the robot control signal so that the positional relationship between the robot 1 (the end effector 13) and the object OBJ is the desired positional relationship. For example, the signal generation unit 313 may generate the robot control signal for controlling the operation of the robot arm 12 so that the positional relationship between the robot 1 (the end effector 13) and the object OBJ is the desired positional relationship. For example, the signal generation unit 313 may generate the robot control signal so that the end effector 13 performs the predetermined process on the object OBJ at a timing at which the positional relationship between the robot 1 and the object OBJ is the desired positional relationship. For example, the signal generation unit 313 may generate the robot control signal for controlling the operation of the end effector 13 so that the end effector 13 performs the predetermined process on the object OBJ at the timing at which the positional relationship between the robot 1 and the object OBJ is the desired positional relationship. Incidentally, as already described above, the robot control signal for controlling the operation of the end effector 13 may be referred to as the end effector control signal.

Note that the signal generation unit 313 may generate the robot control signal based on a feedback control using the position-pose information POI0 generated at the step S3. Note that the signal generation unit 313 may generate the robot control signal based on a P (proportional) control using the position-pose information POI0. Note that the signal generation unit 313 may generate the robot control signal based on a PI (Proportional - Integral) control using the position-pose information POI0. Note that the signal generation unit 313 may generate the robot control signal based on a PID (Proportional - Integral - Differential) control using the position-pose information POI0.

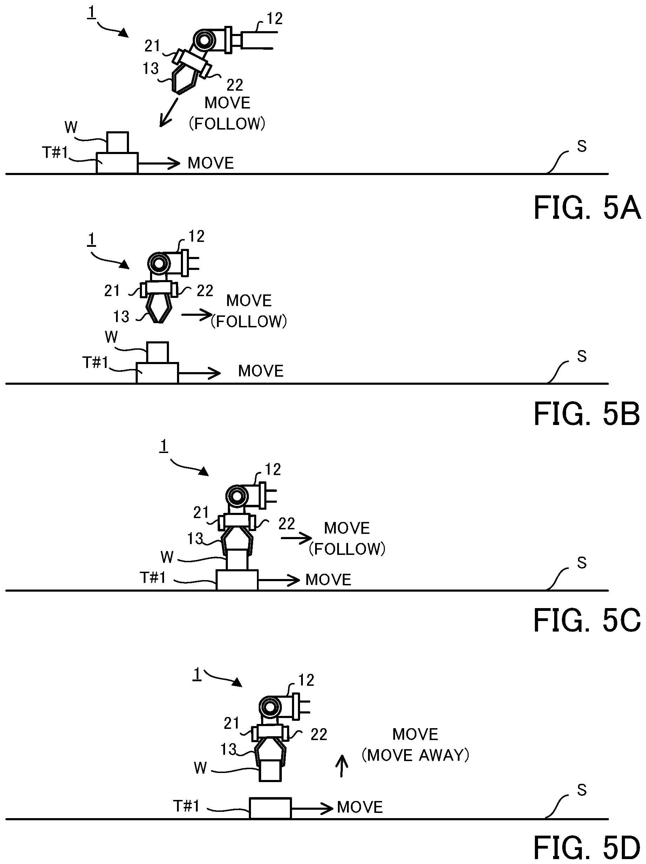

As one example, each of FIG. 5A to FIG. 5D is a side view that illustrates the positional relationship between the robot 1 and the workpiece W at a certain timing in a period during which the hold process for holding the workpiece W (namely, another example of the object OBJ) placed on the placing apparatus T#1 (namely, one example of the object OBJ) such as the Automatic Guided Vehicle (AGV) moving on the support surface S is performed. In this case, the control apparatus 3 may generate the position-pose information POI0 indicating at least one of the position and the pose of the workpiece W that is a target for the hold process, and generate the robot control signal by using the generated position-pose information POI0. For example, as illustrated in FIG. 5A, the signal generation unit 313 may generate the robot control signal for controlling the operation of the robot arm 12 so that the end effector 13 moves toward a space directly above the moving workpiece W. As illustrated in FIG. 5B, the signal generation unit 313 may generate the robot control signal for controlling the operation of the robot arm 12 so that the end effector 13, which is positioned directly above the moving workpiece W, remains directly above the workpiece W and approaches the workpiece W until it can hold the workpiece W. As illustrated in FIG. 5C, the signal generation unit 313 may generate the robot control signal for controlling the operations of the robot arm 12 and the end effector 13 so that the end effector 13, which is positioned at a position at which it can hold the moving workpiece W, holds the workpiece W while following the moving workpiece W. As illustrated in FIG. 5D, the signal generation unit 313 may generate the robot control signal for controlling the operations of the robot arm 12 and end effector 13 so that the end effector 13, which has held the workpiece W, moves away from the moving placing apparatus T#1 while holding the workpiece W.

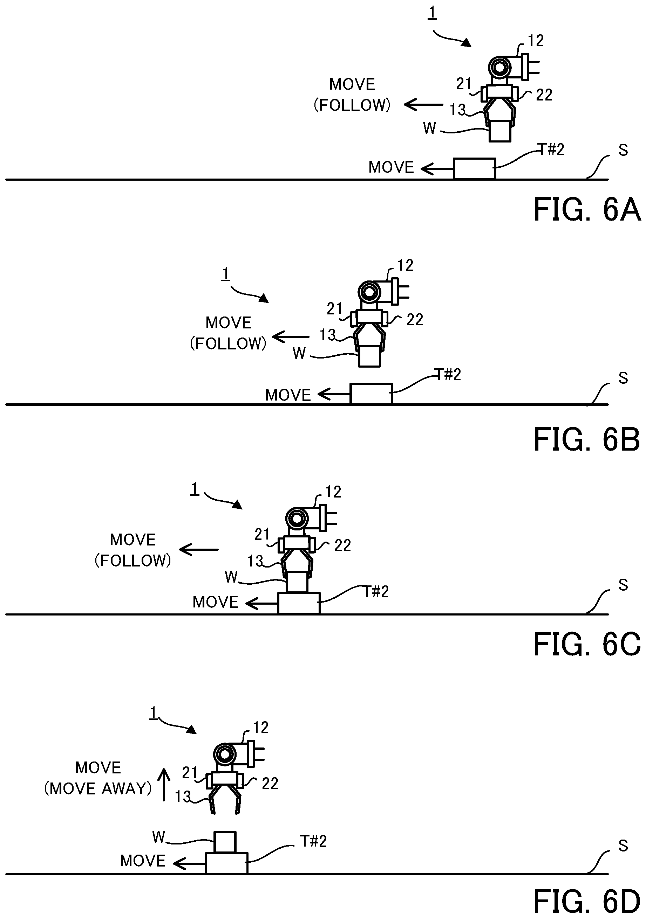

In a case where the robot 1 holds the workpiece W placed on the placing apparatus T#1 using the end effector 13, the robot 1 may perform the release process for releasing the held workpiece W so that the held workpiece W is placed on a placing apparatus T#2 that is different from the placing apparatus T#1. Namely, the robot 1 may perform the placing process (alternatively, the embedding process) for placing the workpiece W on the placing apparatus T#2 by continuously performing the hold process and the release process. In this case, the control apparatus 3 may generate the position-pose information POI0 indicating at least one of the position and the pose of the placing apparatus T#2 that is a target for the release process, and generate the robot control signal by using the generated position-pose information POI0. For example, each of FIG. 6A to FIG. 6D is a side view that illustrates the positional relationship between the robot 1 and the workpiece W at a certain timing in a period during which the release process for placing the workpiece W on the placing apparatus T#2 moving on the support surface S is performed. In this case, as illustrated in FIG. 6A, the signal generation unit 313 may generate the robot control signal for controlling the operation of the robot arm 12 so that the end effector 13 holding the workpiece W moves toward a space directly above the moving placing apparatus T#2 while holding the workpiece W. As illustrated in FIG. 6B, the signal generation unit 313 may generate the robot control signal for controlling the operation of the robot arm 12 so that the end effector 13, which is positioned directly above the moving placing apparatus T#2 and is holding the workpiece W, approaches the placing apparatus T#2 until the workpiece W can be placed on the placing apparatus T#2 while positioning directly above the placing apparatus T and holding the workpiece W. As illustrated in FIG. 6C, the signal generation unit 313 may generate the robot control signal for controlling the operations of the robot arm 12 and the end effector 13 so that the end effector 13, which is positioned at a position at which it can place the workpiece W on the placing apparatus T#2, places the workpiece W on the placing apparatus T#2 (namely, releases the held workpiece W) while following the moving placing apparatus T#2. As illustrated in FIG. 6D, the signal generation unit 313 may generate the robot control signal for controlling the operation of the robot arm 12 so that the end effector 13, which has finished placing the workpiece W on the placing apparatus T#2, moves away from the placing apparatus T#2.

In a case where the release process is performed (especially, in a case where the release process is performed to perform the placing process or the embedding process), the control apparatus 3 may further generate the position-pose information POI0 indicating at least one of the position and the pose of workpiece W, which is a second target for the release process, in addition to the position-pose information POI0 indicating at least one of the position and the pose of the placing apparatus T#2, which is the first target for the release process. Namely, the control apparatus 3 may generate the position-pose information POI0 indicating at least one of the position and the pose of workpiece W held by the end effector 13 after the end effector 13 holds the workpiece W, in addition to generating the position-pose information POI0 indicating at least one of the position and the pose of the workpiece W that is not yet held by the end effector 13 before the end effector 13 holds the workpiece W.

In a case where the release process is performed, the control apparatus 3 may generate the robot control signal by using the position-pose information POI0 indicating at least one of the position and the pose of the workpiece W held by the end effector 13, in addition to the position-pose information POI0 related to the placing apparatus T#2, the end effector 13 releases the held workpiece W by the release process. Namely, the control apparatus 3 may generate the robot control signal by using the position-pose information POI0 indicating at least one of the position and the pose of the workpiece W held by the end effector 13 in at least a part of a period during which the end effector 13 is holding the workpiece W. For example, the signal generation unit 313 may generate the robot control signal for controlling the robot arm 12 so as to move the workpiece W held by the end effector 13 to a desired position (for example, a position at which the workpiece W should be released). In this case, the robot 1 can appropriately move the workpiece W held by the end effector 13 to the desired position, compared to a case where the position-pose information POI0 related to the workpiece W is not used. This is because the position of the workpiece W held by the end effector 13 is information known to the control apparatus 3. Moreover, for example, the signal generation unit 313 may generate the robot control signal for controlling the end effector 13 so as to change the pose of the workpiece W held by the end effector 13 to a desired pose. In this case, the robot 1 can place or embed the workpiece W in the desired pose at / into the placing apparatus T, compared to a case where the position-pose information POI0 related to the workpiece W is not used. This is because at least one of the position and the pose of the workpiece W held by the end effector 13 is information known to the control apparatus 3. If the pose of the workpiece W is not the desired pose, there is a possibility that the workpiece W collides with the placing apparatus T. In the present example embodiment, however, since the robot 1 is controllable so that the pose of the workpiece W is the desired pose, there is no or low possibility that the workpiece W collides with the placing apparatus T. Incidentally, not only in a case where the release process is performed, but in any situation where the end effector 13 is holding the workpiece W, the control apparatus 3 may generate the robot control signal by using the position-pose information POI0 indicating at least one of the position and the pose of the workpiece W held by the end effector 13.

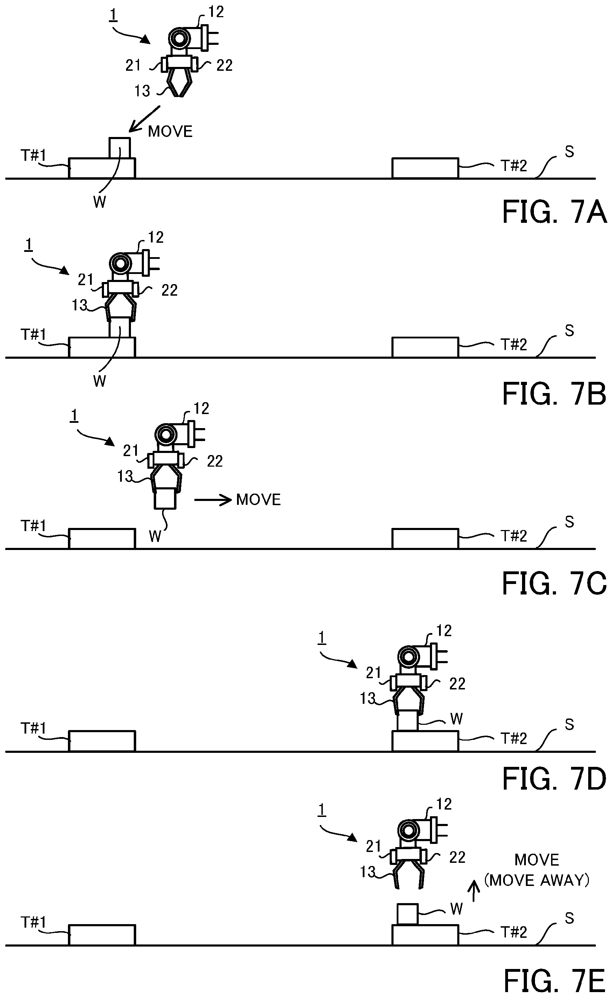

At least one of the placing apparatus T#1 illustrated in FIG. 5A to FIG. 5D and the placing apparatus T#2 illustrated in FIG. 6A to FIG. 6D may not move on the support surface S. For example, each of FIG. 7A to FIG. 7B is a side view that illustrates the positional relationship between the robot 1 and the workpiece W at a certain timing in a period during which the hold process for holding the workpiece W placed on the placing apparatus T#1 that is stationary on the support surface S is performed. In this case, as illustrated in FIG. 7A, the signal generation unit 313 may generate the robot control signal for controlling the operation of the robot arm 12 so that the end effector 13 approaches the workpiece W until it can hold the stationary workpiece W. As illustrated in FIG. 7B, the signal generation unit 313 may generate the robot control signal for controlling the operations of the robot arm 12 and the end effector 13 so that the end effector 13, which is positioned at a position at which it can hold the stationary workpiece W, holds the workpiece W. Furthermore, each of FIG. 7C to FIG. 7E is a side view that illustrates the positional relationship between the robot 1 and the workpiece W at a certain timing in a period during which the release process for placing the workpiece W on the placing apparatus T#2 that is stationary on the support surface S is performed. In this case, as illustrated in FIG. 7C, the signal generation unit 313 may generate the robot control signal for controlling the operation of the robot arm 12 so that the end effector 13 holding the workpiece W approaches the placing apparatus T#2 until the workpiece W can be placed on the stationary placing apparatus T#2 while holding the workpiece W. As illustrated in FIG. 7D, the signal generation unit 313 may generate the robot control signal for controlling the operations of the robot arm 12 and the end effector 13 so that the end effector 13, which is positioned at a position at which it can place the workpiece W on the placing apparatus T#2, places the workpiece W on the stationary placing apparatus T#2 (namely, releases the held workpiece W). As illustrated in FIG. 7E, the signal generation unit 313 may generate the robot control signal for controlling the operation of the robot arm 12 so that the end effector 13, which has finished placing the workpiece W on the placing apparatus T#2, moves away from the placing apparatus T#2.

A plurality of workpieces W may be placed on the placing apparatus T#1. For example, the plurality of workpieces W may be placed on the placing apparatus T#1 so that the plurality of workpieces W are arranged on the placing apparatus T#1 in accordance with a certain manner. For example, the plurality of workpieces W may be placed on the placing apparatus T#1 so that the plurality of workpieces W are randomly stacked on the placing apparatus T#1. In this case, the robot 1 may perform the hold process for selectively holding one desired workpiece W of the plurality of workpieces W placed on the placing apparatus T#1. Especially, the robot 1 may perform the hold process for holding the plurality of workpieces W placed on the placing apparatus T#1 one by one in sequence.

Furthermore, the robot 1 may perform the release process or placing the plurality of workpieces W on the placing apparatus T#2. Namely, the robot 1 may perform the placing process for placing the plurality of workpieces W, which are placed on the placing apparatus T#1, on the placing apparatus T#2 (alternatively, on another placing apparatuses) one by one in sequence, by performing the hold process and the release process. In this case, the robot 1 may perform the release process for placing the plurality of workpieces W on the placing apparatus T#2 one by one in sequence so that the plurality of workpieces W are arranged on the placing apparatus T#2 in accordance with a certain manner. The robot 1 may perform the release process for placing the plurality of workpieces W on the placing apparatus T#2 one by one in sequence so that the plurality of workpieces W are randomly stacked on the placing apparatus T#2.

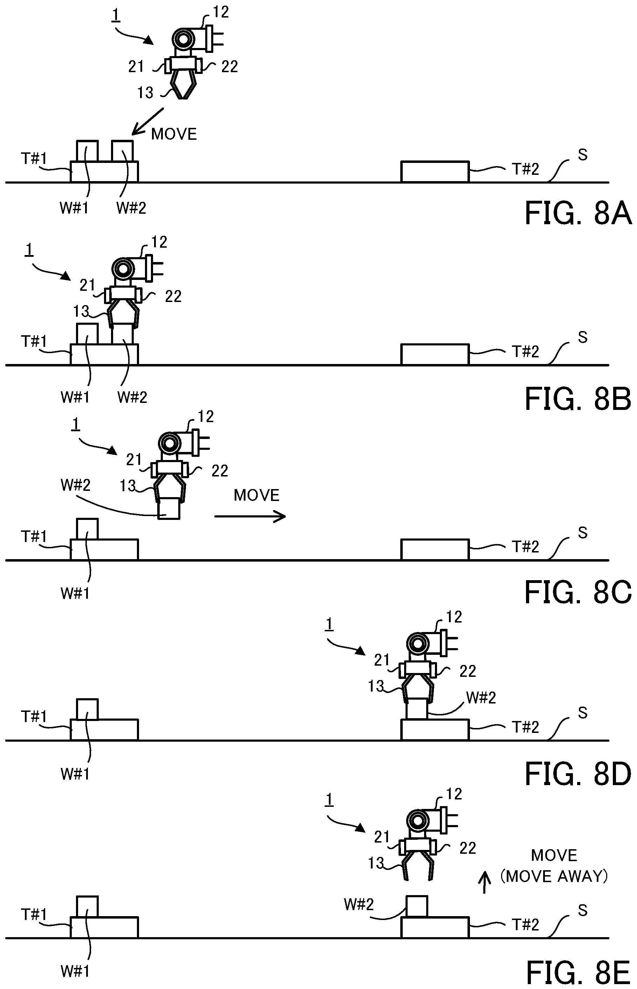

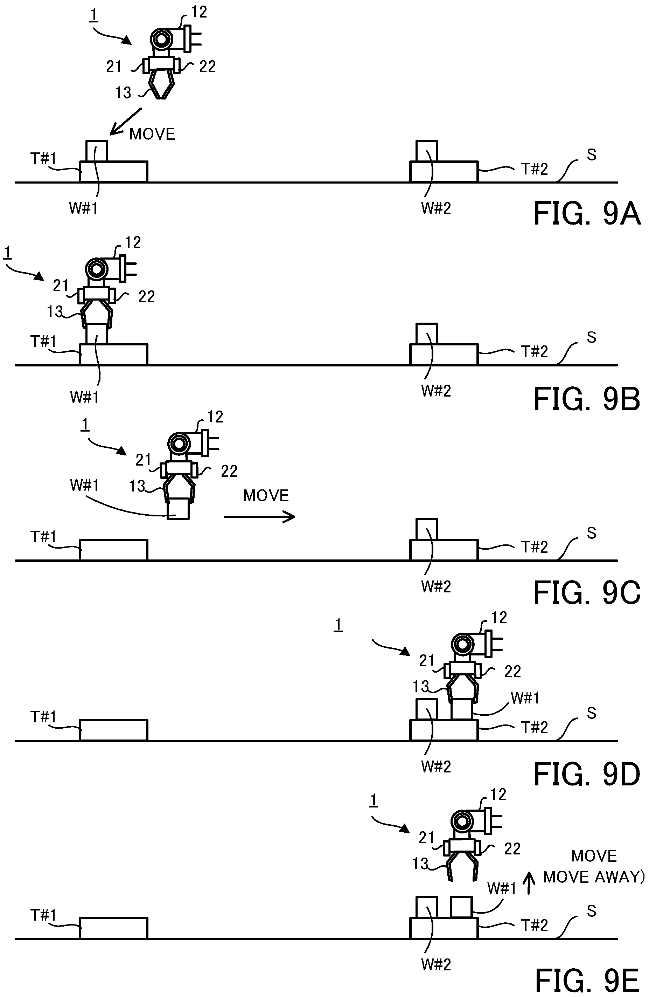

As an example, each of FIG. 8A to FIG. 8E and FIG. 9A to FIG. 9E is a side view that illustrates the positional relationship between the robot 1 and the workpiece W at a certain timing in a period during which the hold process for holding two workpieces W#1 and W#2 placed on the placing apparatus T#1 one by one in sequence and the release process for placing the two workpieces W#1 and W#2 on the placing apparatus T#2 one by one in sequence is performed. In this case, as illustrated in FIG. 8A, the signal generation unit 313 may generate the robot control signal for controlling the operation of the robot arm 12 so that the end effector 13 approaches either one of the workpieces W#1 and W#2 (the workpiece W#2 in an example illustrated in FIG. 8A) until it can hold the workpiece W#2. Then, as illustrated in FIG. 8B, the signal generation unit 313 may generate the robot control signal for controlling the operations of the robot arm 12 and the end effector 13 so that the end effector 13, which is positioned at a position at which it can hold the workpiece W#2, holds the workpiece W#2. Then, as illustrated in FIG. 8C, the signal generation unit 313 may generate the robot control signal for controlling the operation of the robot arm 12 so that the end effector 13 holding the workpiece W#2 approaches the placing apparatus T#2 until the workpiece W#2 can be placed on the placing apparatus T#2 while holding the workpiece W#2. Then, as illustrated in FIG. 8D, the signal generation unit 313 may generate the robot control signal for controlling the operations of the robot arm 12 and the end effector 13 so that the end effector 13, which is positioned at a position at which it can place the workpiece W#2 on the placing apparatus T#2, places the workpiece W#2 on the placing apparatus T#2 (namely, releases the held workpiece W#2). Then, as illustrated in FIG. 8E, the signal generation unit 313 may generate the robot control signal for controlling the operation of the robot arm 12 so that the end effector 13, which has finished placing the workpiece W#2 on the placing apparatus T#2, moves away from the placing apparatus T#2. Then, as illustrated in FIG. 9A, the signal generation unit 313 may generate the robot control signal for controlling the operation of the robot arm 12 so that the end effector 13 approaches the other one of the workpieces W#1 and W#2 (the workpiece W#1 in an example illustrated in FIG. 9A) until it can hold the workpiece W#1. Then, as illustrated in FIG. 9B, the signal generation unit 313 may generate the robot control signal for controlling the operations of the robot arm 12 and the end effector 13 so that the end effector 13, which is positioned at a position at which it can hold the workpiece W#1, holds the workpiece W#1. Then, as illustrated in FIG. 9C, the signal generation unit 313 may generate the robot control signal for controlling the operation of the robot arm 12 so that the end effector 13 holding the workpiece W#1 approaches the placing apparatus T#2 until the workpiece W#1 can be placed on the placing apparatus T#2 while holding the workpiece W#1. Then, as illustrated in FIG. 9D, the signal generation unit 313 may generate the robot control signal for controlling the operations of the robot arm 12 and the end effector 13 so that the end effector 13, which is positioned at a position at which it can place the workpiece W#1 on the placing apparatus T#2, places the workpiece W#1 on the placing apparatus T#2 (namely, releases the held workpiece W#1). Then, as illustrated in FIG. 9E, the signal generation unit 313 may generate the robot control signal for controlling the operation of the robot arm 12 so that the end effector 13, which has finished placing the workpiece W#1 on the placing apparatus T#2, moves away from the placing apparatus T#2.

The robot 1 may perform the hold process for holding the plurality of workpieces W placed on the placing apparatus T#1, which moves on the support surface S, one by one in sequence. Alternatively, the robot 1 may perform the hold process for holding the plurality of workpieces W placed on the placing apparatus T#1, which is stationary on the support surface S, one by one in sequence. The robot 1 may perform the release process for placing the plurality of workpieces W on the placing apparatus T#2, which moves on the support surface S, one by one in sequence. The robot 1 may perform the release process for placing the plurality of workpieces W on the placing apparatus T#2, which is stationary on the support surface S, one by one in sequence.

Again in FIG. 4, the signal generation unit 313 outputs the robot control signal generated at the step S4 to the robot 1 (especially, the robot control apparatus 14) by using the communication apparatus 33. As a result, the robot control apparatus 14 controls the operation of the robot 1 (for example, the operation of at least one of the robot arm 12 and the end effector 13) based on the robot control signal.

Thereafter, the control apparatus 3 repeats a series of processing from the step S1 to the step S4 until it is determined that the robot control processing is ended (a step S5). Namely, the control apparatus 3 continues to acquire the image data IMG_2D and IMG_3D from the imaging apparatuses 21 and 22, respectively, even in a period during which the operation of at least one of the robot arm 12 and the end effector 13 is controlled based on the robot control signal.

In this case, since the operation of at least one of the robot arm 12 and the end effector 13 is controlled based on the robot control signal as described above, each of the imaging apparatuses 21 and 22 may image the object OBJ during a relative movement between the object OBJ and the imaging apparatuses 21 and 22. For example, each of the imaging apparatuses 21 and 22 may image the object OBJ in a period during which the object OBJ is stationary while the imaging apparatuses 21 and 22 are moving. For example, each of the imaging apparatuses 21 and 22 may image the object OBJ in a period during which the object OBJ is moving while the imaging apparatuses 21 and 22 are stationary. For example, each of the imaging apparatuses 21 and 22 may image the object OBJ in a period during which the object OBJ is moving while the imaging apparatuses 21 and 22 are moving. Namely, the control apparatus 3 may continue to perform the robot control processing illustrated in FIG. 4 during the relative movement between the object OBJ and the imaging apparatuses 21 and 22 (namely, in a period during which at least one of the imaging apparatuses 21 and 22 and the object OBJ is moving). As a result, the control apparatus 3 can newly calculate (namely, update) the position-pose information POI indicating at least one of the position and the pose of the object OBJ based on the newly acquired image data IMG_2D and IMG_3D even in the period during which the operation of the robot 1 is controlled based on the robot control signal.

However, each of the imaging apparatuses 21 and 22 may image the object OBJ in a period during which the object OBJ is stationary and the imaging apparatuses 21 and 22 are stationary. The control apparatus 3 may perform the robot control processing illustrated in FIG. 4 in a period during which the imaging apparatuses 21 and 22 and the object OBJ are stationary.

Note that the position-pose calculation unit 312 may not calculate at least one of the position and the position of the object OBJ in the global coordinate system at the step S3. Namely, the position-pose calculation unit 312 may not generate the position-pose information POI0 indicating at least one of the position and the position of the object OBJ in the global coordinate system. For example, the position-pose calculation unit 312 may calculate at least one of the position and the pose of the object OBJ in a coordinate system that is different from the global coordinate system (for example, in the 2D imaging coordinate system, in the 3D imaging coordinate system, or in the common coordinate system described below) at the step S3. Namely, the position-pose calculation unit 312 may generate the position-pose information POI0 indicating at least one of the position and the pose of the object OBJ in a coordinate system that is different from the global coordinate system (for example, in the 2D imaging coordinate system, in the 3D imaging coordinate system, or in the common coordinate system described below). In this case, the signal generation unit 313 may generate the robot control signal at the step S4 by using the position-pose information POI indicating at least one of the position and the pose of the object OBJ in the coordinate system different from the global coordinate system calculated at the step S3.

### (2-2) Detail of Processing for Calculating at least one of Position and Pose of Object OBJ (namely, Processing for Generating Position-Pose Information POI)

Next, a detail of the processing for calculating at least one of the position and the pose of the object OBJ (namely, the processing for generating the position-pose information POI0) at the step S3 in FIG. 4 will be described. Incidentally, in the below-described description, a detail of the processing for calculating both of the position and the pose of the object OBJ (namely, for generating the position-pose information POI0 indicating both of the position and the pose of the object OBJ) will be described as one example. However, the position-pose calculation unit 312 may calculate at least one of the position and the pose of the object OBJ by performing the same operation as the processing for calculating both of the position and the pose of the object OBJ.

In the present example embodiment, the position-pose calculation unit 312 calculates the position and the pose of the object OBJ by performing a matching processing using the image data IMG_2D and the three-dimensional position data WSD and a tracking processing using the image data IMG_2D and the three-dimensional position data WSD. In the below-described description, with reference to FIG. 10, the processing for calculating the position and the pose of the object OBJ by performing the matching processing and the tracking processing will be described. FIG. 10 is a block diagram that illustrates the logical processing block for calculating the position and the pose of the object OBJ by performing the matching processing and the tracking processing.

As illustrated in FIG. 10, the position-pose calculation unit 312 includes a 2D matching unit 3121, a 3D matching unit 3122, a tracking unit 3123, and a coordinate transformation unit 3125. The 2D matching unit 3121 performs a 2D matching processing that is one example of the matching processing. The 3D matching unit 3122 performs a 3D matching processing that is one example of the matching processing. The tracking unit 3123 performs the tracking processing. The coordinate transformation unit 3125 performs a position-pose calculation processing for calculating the position and the pose of the object OBJ in the global coordinate system based on results of the matching processing and the tracking processing. Therefore, in the below-described description, the 2D matching processing, the 3D matching processing, the tracking processing, and the position calculation processing will be described in sequence.

### (2-2-1) 2D Matching processing performed by 2D Matching Unit 3121

The 2D matching unit 3121 calculates the position and the pose of the object OBJ in the 2D imaging coordinate system by performing the 2D matching processing. Namely, the 2D matching unit 3121 generates position-pose information POI1 indicating the position and the pose of the object OBJ in the 2D imaging coordinate system by performing the 2D matching processing. The 2D imaging coordinate system is a coordinate system of the imaging apparatus 21. For example, the 2D imaging coordinate system is a coordinate system whose basis is the imaging apparatus 21. Incidentally, since the 2D imaging coordinate system is the coordinate system of the imaging apparatus 21, the position-pose information POI1 may be considered to indicate the position and the pose of the object OBJ relative to the imaging apparatus 21. The position-pose information POI1 may be considered to indicate the position and the pose of the object OBJ viewed from the imaging apparatus 21.

The 2D imaging coordinate system is a coordinate system that is defined by an X-axis(2D), a Y-axis(2D), and a Z-axis(2D) that are orthogonal to one another. At least one of the X-axis(2D), the Y-axis(2D), and the Z-axis(2D) may be an axis that is along an optical axis AX21 (see FIG. 2) of an optical system (especially, a terminal optical element such as an objective lens) of the imaging apparatus 21. Incidentally, the optical axis AX21 may be regarded as an optical axis of the imaging apparatus 21. In the below-described description, an example in which the Z-axis(2D) is the axis along the optical axis of the optical system of the imaging apparatus 21 will be described.

The 2D matching unit 3121 performs, as the 2D matching processing, the matching processing using the image data IMG_2D. The matching processing using the image data IMG_2D is a matching processing using the image data IMG_2D and two-dimensional model data IMG_2M.

The two-dimensional model data IMG_2M is data indicating a two-dimensional model WM2 of the object OBJ. The two-dimensional model data IMG_2M is data indicating the two-dimensional model WM2 having a standard two-dimensional shape of the object OBJ. In the present example embodiment, the two-dimensional model data IMG_2M is image data indicating a two-dimensional image that is a standard for the object OBJ. More specifically, the two-dimensional model data IMG_2M is image data indicating the two-dimensional image including the two-dimensional model WM2 of the object OBJ. The two-dimensional model data IMG_2M is image data indicating the two-dimensional image including the two-dimensional model WM2 having the standard two-dimensional shape of the object OBJ.

The two-dimensional model data IMG_2M may be the two-dimensional image data indicating two-dimensional models WM2 of the plurality of objects OBJ that are generated respectively by virtually projecting a three-dimensional model WM3 of the object OBJ from a plurality of different directions on virtual planes that are orthogonal to the plurality of different directions, respectively, for example. The three-dimensional model WM3 of the object OBJ is a three-dimensional model having a standard three-dimensional shape of the object OBJ. A CAD (Computer Aided Design) model of the object OBJ is one example of the three-dimensional model WM3 of the object OBJ. A three-dimensional model whose shape is the same as a three-dimensional shape of the object OBJ, which is acquired by measuring the actual object OBJ in advance, is another example of the three-dimensional model WM3 of the object OBJ. The three-dimensional model WM3 may be generated in advance by the three-dimensional position data generation unit 311 based on the image data IMG_3D that is generated by the imaging apparatus 22 imaging the object OBJ on which the projection pattern from the projection apparatus 23 is projected. Alternatively, the three-dimensional model WM3 may be generated in advance by using a well-known three-dimensional shape measurement apparatus that is different from the robot system SYS. Incidentally, the actual object OBJ whose shape is measured in advance may be a standard or good object OBJ.

The two-dimensional model data IMG_2M may be image data indicating a two-dimensional image generated by imaging the actual object OBJ in advance. In this case, the two-dimensional model data IMG_2M may be image data indicating a plurality of two-dimensional images that are generated by imaging the actual object OBJ from a plurality of different imaging directions, respectively. In this case, the image data IMG_2D generated by the imaging apparatus 21 imaging the object OBJ may be used as the two-dimensional model data IMG_2M. Alternatively, image data generated by any apparatus, which is different from the robot system SYS, imaging the object OBJ may be used as the two-dimensional model data IMG_2M. The object OBJ included in the two-dimensional image indicated by the image data IMG_2D, which is the two-dimensional model data IMG_2M, may be referred to as the two-dimensional model WM2 of the object OBJ. Incidentally, the actual object OBJ that is imaged in advance may be a standard or good object OBJ.

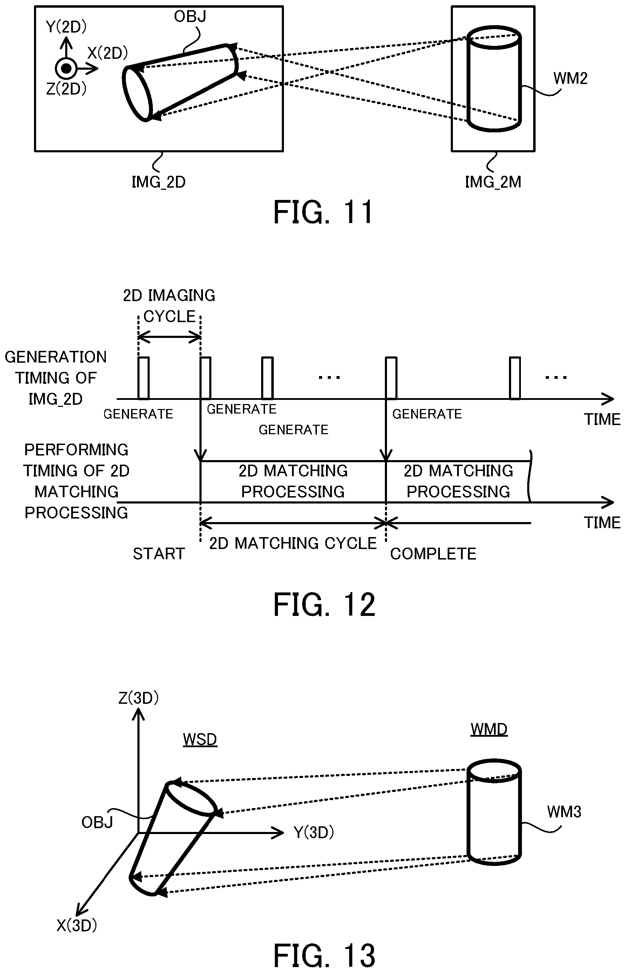

As illustrated in FIG. 11, the 2D matching unit 3121 may perform the matching processing, which uses the two-dimensional image indicated by the two-dimensional model data IMG_2M as a template image, on the image indicated by the image data IMG_2D. Specifically, the 2D matching unit 3121 may perform, as the matching processing, an object detection processing for detecting the object OBJ indicated by the template image in the image indicated by the image data IMG_2D. In other words, the 2D matching unit 3121 may perform, as the matching processing, the object detection processing for detecting the object OBJ in the image indicated by the image data IMG_2D by detecting a similar image part that is similar to the template image in the image indicated by the image data IMG_2D. Note that the 2D matching processing (in this case, the object detection processing) itself may be the same as an existing matching processing. For example, the 2D matching unit 3121 may perform the 2D matching processing by using a well-known method such as a SIFT (Scale-Invariant Feature Transform) or a SURF (Speed-Upped Robust Feature).

The 2D matching unit 3121 may perform at least one of a change from one template image to another template image, whose projection direction or imaging direction is different, and a translation, a scaling and / or a rotation of the two-dimensional model WM2 of the object OBJ included in the template image so that a feature part (for example, at least one of a feature point and an edge) in the entire two-dimensional model WM2 of the object OBJ included in the template image is closer to (typically, matches) a feature part in the entire object OBJ included in the image indicated by the image data IMG_2D. Namely, the 2D matching unit 3121 may change a positional relationship between a coordinate system of the two-dimensional model data IMG_2M (for example, a coordinate system of the CAD model) and the 2D imaging coordinate system of the imaging apparatus 21 that images the object OBJ (namely, that generates the image data IMG_2D) so that the feature part in the entire two-dimensional model WM2 of the object OBJ included in the template is closer to (typically, matches) the feature part in the entire object OBJ included in the image indicated by the image data IMG_2D. As a result, the 2D matching unit 3121 can determine the positional relationship between the coordinate system of the two-dimensional model data IMG_2M and the 2D imaging coordinate system. Then, the 2D matching unit 3121 may calculate the position and the pose of the object OBJ in the 2D imaging coordinate system from the position and the pose of the object OBJ in the coordinate system of the two-dimensional model data IMG_2M based on the positional relationship between the coordinate system of the two-dimensional model data IMG_2M and the 2D imaging coordinate system.

In making the feature part in the entire two-dimensional model WM2 of the object OBJ included in the template image be closer to the feature part in the entire object OBJ included in the image indicated by the image data IMG_2D, the 2D matching unit 3121 may calculates a matching similarity that is a degree of similarity between the template image (namely, the two-dimensional model WM2 of the object OBJ) and the image indicated by the image data IMG_2D (especially, an image part to which the object OBJ of the template image is aligned). The 2D matching unit 3121 may perform at least one of the change from one template image to another template image, whose projection direction or imaging direction is different, and the translation, the scaling and / or the rotation of the two-dimensional model WM2 of the object OBJ included in the template image so that the matching similarly is maximum. As a result, the image part of the image indicated by the image data IMG_2D to which the two-dimensional model WM2 of the object OBJ of the template image is aligned under a situation where the matching similarity is maximum is detected as a similar image part that is similar to the template image in the image indicated by the image data IMG_2D. Namely, the object OBJ indicated by the similar image part is detected. Note that the matching similarity may be considered to be equivalent to a degree of correlation that indicates a correlation between the template image and the image indicated by the image data IMG_2D. Incidentally, it can be said that the degree of correlation is an index that indicates a correlation between the two-dimensional model WM2 of the object OBJ in the template image and the object OBJ in the image indicated by the image data IMG_2D. Note that the matching similarity may be referred to as a matching score.

Note that the 2D matching unit 3121 may change the positional relationship between the coordinate system of the two-dimensional model data IMG_2M (for example, the coordinate system of the CAD model) and the 2D imaging coordinate system of the imaging apparatus 21 that images the object OBJ so that the feature part in a part of the two-dimensional model WM2 of the object OBJ included in the template image is closer to (typically, matches) the feature part in a part of the object OBJ included in the image indicated by the image data IMG_2D. Even in this case, the 2D matching unit 3121 may calculate the matching similarity.

A situation in which the object OBJ is so large that a part of the object OBJ is out of the imaging range (the field of view) of the imaging apparatus 21 when the object OBJ is closer to the imaging apparatus 21 is one example of a situation in which the 2D matching processing is performed so that the feature part in a part of the two-dimensional model WM2 is closer to the feature part in a part of the object OBJ included in the image indicated by the image data IMG_2D. Specifically, in a case where the object OBJ is large, a ratio of a part of the object OBJ positioned within the imaging range (the field of view) of the imaging apparatus 21 relative to the entire object OBJ is smaller as a distance between the object OBJ and the imaging apparatus 21 is shorter (namely, the object OBJ is closer to the imaging apparatus 21). Namely, a ratio of a part of the object OBJ that is actually included in the image indicated by the image data IMG_2D relative to the entire object OBJ is smaller. If the 2D matching processing is performed by using the entire two-dimensional model WM2 under this situation, there is a higher possibility that the 2D matching processing fails. Note that a state in which "the 2D matching processing fails" here may mean a state in which the object OBJ indicated by the template image cannot be detected in the image indicated by the image data IMG_2D, even though the object OBJ is included in the image indicated by the image data IMG_2D. Specifically, there is a higher possibility that the 2D matching processing fails as the ratio of a part of the object OBJ that is actually included in the image indicated by the image data IMG_2D is smaller. This is because the 2D matching processing is performed by using the entire two-dimensional model WM2 of the object OBJ, even though only a part of the object OBJ is included in the image indicated by the image data IMG_2D. Therefore, in this case, the 2D matching unit 3121 may perform the 2D matching processing by using a part of the two-dimensional model WM2 corresponding to a part of the object OBJ that is included in the imaging range (the field of view) of the imaging apparatus 21. As a result, even in a case where the object is large, the 2D matching unit 3121 can detect the object OBJ indicated by the template image in the image indicated by the image data IMG_2D.

In a case where the 2D matching processing is performed by using a part of the two-dimensional model WM2, a part of the two-dimensional model WM2 of the object OBJ included in each of the template images, whose projection directions or imaging directions are different from each other, may be designated (in other words, selected) in advance as a part of the two-dimensional model WM2 that is used for the 2D matching processing. For example, in a case where the object OBJ is so large that a part of the object OBJ is out of the imaging range (the field of view) of the imaging apparatus 21 when the object OBJ is closer to the imaging apparatus 21, a part of the two-dimensional model WM2 corresponding to a part of the object OBJ that is expected to be included in the imaging range (the field of view) of the imaging apparatus 21 may be designated in advance as a part of the two-dimensional model WM2 that is used for the 2D matching processing.

Alternatively, a part of the two-dimensional model WM2 that is used for the 2D matching processing may be designated (in other words, selected) while the 2D matching processing is performed. Namely, one range of the two-dimensional model WM2 that is used for the 2D matching processing may be changed while the 2D matching processing is performed. For example, considering that the ratio of a part of the object OBJ positioned within the imaging range (the field of view) of the imaging apparatus 21 relative to the entire object OBJ is smaller as the distance between the object OBJ and the imaging apparatus 21 is shorter, the range of a part of the two-dimensional model WM2 that is used for the 2D matching processing may be changed based on the distance between the object OBJ and the imaging apparatus 21. For example, a part of the two-dimensional model WM2 that is used for the 2D matching processing may be designated so that the range of a part of the two-dimensional model WM2 that is used for the 2D matching processing is smaller (in other words, narrower) as the distance between the object OBJ and the imaging apparatus 21 is shorter.

A single part of the two-dimensional model WM2 may be designated as a part of the two-dimensional model WM2 that is used for the 2D matching processing. Alternatively, a plurality of parts of the two-dimensional model WM2 may be designated as a part of the two-dimensional model WM2 that is used for the 2D matching processing. For example, a plurality of parts of the two-dimensional model WM2, each of which is usable as a feature part of the two-dimensional model WM2, may be designated as a part of the two-dimensional model WM2 that is used for the 2D matching processing. In this case, an improvement of an accuracy of the 2D matching processing is expected, compared to a case where a single part of the two-dimensional model WM2 is designated as a part of the two-dimensional model WM2 that is used for the 2D matching processing. Namely, there is a higher possibility that the object OBJ indicated by the template image can be detected in the image indicated by the image data IMG_2D.

A part of the two-dimensional model WM2 that is used for the 2D matching processing may be designated by a user of the robot system SYS. For example, the user may designate a part of the two-dimensional model WM2 displayed on a non-illustrated display. For example, the user may estimate a part of the object OBJ that is expected to be included in the imaging range (the field of view) of the imaging apparatus 21, and designate a part of the two-dimensional model WM2 corresponding to the estimated part of the object OBJ. Alternatively, a part of the two-dimensional model WM2 that is used for the 2D matching processing may be automatically designated by the control apparatus 3. For example, the control apparatus 3 may estimate a part of the object OBJ that is expected to be included in the imaging range (the field of view) of the imaging apparatus 21, and designate a part of the two-dimensional model WM2 corresponding to the estimated part of the object OBJ. In this case, the control apparatus 3 may estimate a part of the object OBJ that is expected to be included in the imaging range (the field of view) of the imaging apparatus 21 based on information related to at least one of a direction of the relative movement between the object OBJ and the imaging apparatus 21 (alternatively, a direction in which the robot 1 approaches the object OBJ), the distance between the object OBJ and the imaging apparatus 21 (alternatively, a distance between the robot 1 and the object OBJ), and the imaging range (the field of view) of the imaging apparatus 21, for example.

Depending on the image indicated by the image data IMG_2D, there is a possibility that a plurality of objects OBJ, each of which is indicated by the template image, are included in the image. In this case, the 2D matching unit 3121 may perform a processing for making the feature part of the two-dimensional model WM2 of the object OBJ in the template image be closer to the feature part of the object OBJ in the image indicated by the image data IMG_2D, in sequence for the plurality of objects OBJ that are included in the image indicated by the image data IMG_2D. Then, the 2D matching unit 3121 may select, as a target for a subsequent processing, one object OBJ whose matching similarity is maximum among the plurality of objects OBJ that are included in the image indicated by the image data IMG_2D. Alternatively, the 2D matching unit 3121 may select, as the target for the subsequent processing, one object OBJ whose matching similarity is higher than a matching determination threshold value among the plurality of objects OBJ that are included in the image indicated by the image data IMG_2D.

Incidentally, the matching determination threshold value may be set to an appropriate value that allows a state in which the object OBJ detected by the 2D matching processing is the same as the object OBJ on which the end effector 13 should perform the predetermined process to be appropriately distinguished from a state in which the object OBJ detected by the 2D matching processing is different from the object OBJ on which the end effector 13 should perform the predetermined process based on the matching similarity, as described in a below-described first modified example. Namely, the matching determination threshold value may be set to an appropriate value that allows a state in which the object OBJ detected by the 2D matching processing is the same as the object OBJ included in the template image to be appropriately distinguished from a state in which the object OBJ detected by the 2D matching processing is different from the object OBJ included in the template image based on the matching similarity, as described in a below-described first modified example.

Incidentally, a method of calculating the position and the pose of the object OBJ is not limited to the matching processing using the image data IMG_2D described above. The 2D matching unit 3121 may calculate the position and the pose of the object OBJ by using any other well-known method of calculating the position and the pose of the object OBJ using the image data IMG_2D. The method of calculating the position and the pose of the object OBJ may be a well-known method of calculating the position and the pose of the object OBJ based on the image data IMG_2D without using the two-dimensional model data IMG_2M, or may be a well-known method of calculating the position and the pose of the object OBJ by using the image data IMG_2D and data that is different from the two-dimensional model data IMG_2M. For example, the method of calculating the position and the pose of the object OBJ may be a method of calculating the position and the pose of the object OBJ based on the image data IMG_2D by a machine learning or a deep learning. In this case, a prediction model, which outputs the position and the pose of the object OBJ when the image data IMG_2D is input thereto, may be built in advance by the machine learning or the deep learning, and the position and the pose of the object OBJ may be calculated by inputting the image data IMG_2D to this prediction model. This prediction model may be stored in the 2D matching unit 3121. Note that the 2D matching unit 3121 may read out this prediction model stored in the storage apparatus 32.

The 2D matching unit 3121 may calculate, as the position of the object OBJ in the 2D imaging coordinate system, at least one of a position Tx(2D) of the object OBJ in a X-axis direction(2D) that is parallel to the X-axis(2D), a position Ty(2D) of the object OBJ in a Y-axis direction(2D) that is parallel to the Y-axis(2D), and a position Tz(2D) of the object OBJ in a Z-axis direction(2D) that is parallel to the Z-axis(2D). The 2D matching unit 3121 may calculate, as the pose of the object OBJ in the 2D imaging coordinate system, at least one of a rotational amount Rx(2D) of the object OBJ around the X-axis(2D), a rotational amount Ry(2D) of the object OBJ around the Y-axis(2D), and a rotational amount Rz(2D) of the object OBJ around the Z-axis(2D).

Incidentally, in the below-described description, the rotational amount Rx(2D) of the object OBJ around the X-axis(2D), the rotational amount Ry(2D) of the object OBJ around the Y-axis(2D), and the rotational amount Rz(2D) of the object OBJ around the Z-axis(2D) are referred to the pose RX(2D) of the object OBJ around the X-axis(2D), the pose RY(2D) of the object OBJ around the Y-axis(2D), and the pose Rz(2D) of the object OBJ around the Z-axis(2D), respectively, as with the above-described rotational amounts RX, RY, and RZ, for the purpose of consistency of terms.

Moreover, the pose Rx(2D) of the object OBJ around the X-axis(2D), the pose Ry(2D) of the object OBJ around the Y-axis(2D), and the pose Rz(2D) of the object OBJ around the Z-axis(2D) may be considered to indicate a position of the object OBJ in a rotational direction around the X-axis(2D), a position of the object OBJ in a rotational direction around the Y-axis(2D), and a position of the object OBJ in a rotational direction around the Z-axis(2D), respectively. Namely, each of the pose Rx(2D) of the object OBJ around the X-axis(2D), the pose Ry(2D) of the object OBJ around the Y-axis(2D), and the pose Rz(2D) of the object OBJ around the Z-axis(2D) may be regarded a parameter representing the position of the object OBJ.

Each time the position-pose information POI1 is generated, the 2D matching unit 3121 outputs the generated position-pose information POI1 to the 3D matching unit 3122. As one example, the 2D matching unit 3121 may calculate all of 6DOF (Degree Of Freedom) positions and poses (namely, the position Tx(2D), the position Ty(2D), the position Tz(2D), the pose Rx(2D), the pose Ry(2D), and the pose Rz(2D)), and output the position-pose information POI1 indicating the calculated 6DOF positions and poses to the 3D matching unit 3122. As another example, the 2D matching unit 3121 may calculate the 6DOF positions and poses, and output the position-pose information POI1 indicating a part of the calculated 6DOF positions and poses (namely, a part of the position Tx(2D), the position Ty(2D), the position Tz(2D), the pose Rx(2D), the pose Ry(2D), and the pose Rz(2D)) to the 3D matching unit 3122. As another example, the 2D matching unit 3121 may calculate a part of the 6DOF positions and poses, and output the position-pose information POI1 indicating a part of the 6DOF positions and poses calculated to the 3D matching unit 3122.

Incidentally, in the below described description, for convenience of description, an example in which the 2D matching unit 3121 calculates the position Tx(2D), the position Ty(2D), the position Tz(2D), the pose Rx(2D), the pose Ry(2D), and the pose Rx(2D) as the position and the pose of the object OBJ will be described, as illustrated in FIG. 10. Namely, in the below described description, for convenience of description, an example in which the 2D matching unit 3121 generates the position-pose information POI1 indicating the position Tx(2D), the position Ty(2D), the position Tz(2D), the pose Rx(2D), the pose Ry(2D), and the pose Rx(2D) and outputs it to the 3D matching unit 3122 will be described, as illustrated in FIG. 10.

The 2D matching unit 3121 may calculate the position and the pose of the object OBJ in a predetermined 2D matching cycle. Namely, the 2D matching unit 3121 may calculate the position and the pose of the object OBJ each time a period corresponding to the 2D matching cycle elapses. Conversely, it may be considered that the period corresponding to the 2D matching cycle is required for the 2D matching unit 3121 to complete the 2D matching processing after starting it. In this case, the 2D matching unit 3121 may output the position-pose information POI1 indicating the position and the pose of the object OBJ to the 3D matching unit 3122 in the predetermined 2D matching cycle.

As illustrated in FIG. 12, the 2D matching cycle may be longer than a 2D imaging cycle corresponding to the 2D imaging rate at which the imaging apparatus 21 images the object OBJ. For example, the 2D matching cycle may be a cycle that allows the 2D matching unit 3121 to perform the 2D matching processing dozen times to several dozen times (as one example, 15 times to 30 times) per second. In this case, the imaging apparatus 21 generates new image data IMG_2D before the 2D matching unit 3121 completes the 2D matching processing after starting it. In this case, the 2D matching unit 3121 may not start a new 2D matching processing using the image data IMG_2D newly generated by the imaging apparatus 21 even when the imaging apparatus 21 generates the new image data IMG_2D until the 2D matching unit 3121 completes the 2D matching processing that has already been started. The 2D matching unit 3121 may start a new 2D matching processing using the image data IMG_2D, which is latest at that time, after completing the 2D matching processing that has already been started. Incidentally, the 2D matching unit 3121 may start a new 2D matching processing using the image data IMG_2D newly generated by the imaging apparatus 21 when the imaging apparatus 21 generates the new image data IMG_2D, even in a case where the 2D matching unit 3121 has not completed the 2D matching processing that has already been started. Note that a timing at which the image data IMG_2D is generated illustrated in FIG. 12 may be regarded as a timing at which the imaging apparatus 21 images the object OBJ to generate the image data IMG_2D.

However, the 2D matching cycle may not be longer than the 2D imaging cycle. For example, the 2D matching cycle may be shorter than the 2D imaging cycle. For example, the 2D matching cycle may be the same as the 2D imaging cycle.

### (2-2-2) 3D Matching processing performed by 3D Matching Unit 3122

The 3D matching unit 3122 calculates the position and the pose of the object OBJ in the 3D imaging coordinate system by performing the 3D matching processing. Namely, the 3D matching unit 3122 generates position-pose information POI2 indicating the position and the pose of the object OBJ in the 3D imaging coordinate system by performing the 3D matching processing. The 3D imaging coordinate system is a coordinate system of the imaging apparatus 22. For example, the 3D imaging coordinate system is a coordinate system whose basis is the imaging apparatus 22. Incidentally, since the 3D imaging coordinate system is the coordinate system whose basis is the imaging apparatus 22, the position-pose information POI2 may be considered to indicate the position and the pose of the object OBJ relative to the imaging apparatus 22. The position-pose information POI2 may be considered to indicate the position and the pose of the object OBJ viewed from the imaging apparatus 22.

The 3D imaging coordinate system is a coordinate system that is defined by an X-axis(3D), a Y-axis(3D), and a Z-axis(3D) that are orthogonal to one another. At least one of the X-axis(3D), the Y-axis(3D), and the Z-axis(3D) may be an axis that is along an optical axis AX22 (see FIG. 2) of an optical system (especially, a terminal optical element such as an objective lens) of the imaging apparatus 22. Incidentally, the optical axis AX22 may be regarded as an optical axis of the imaging apparatus 22. Here, in a case where the imaging apparatus 22 is the stereo camera including the two monocular cameras as described above, the optical axis AX22 may be the optical axis of the optical system of either one of the two monocular cameras. Namely, the optical axis AX22 may be the optical axis of either one of the two monocular cameras. In the below-described description, an example in which the Z-axis(3D) is the axis along the optical axis of the optical system of the imaging apparatus 22 will be described.

The 3D matching unit 3122 performs, as the 3D matching processing, the matching processing using the three-dimensional position data WSD. Namely, the 3D matching unit 3122 performs the 3D matching processing including the matching processing using the three-dimensional position data WSD. The matching processing using the three-dimensional position data WSD is a matching processing using three-dimensional position data WSD and three-dimensional model data WMD.

The three-dimensional model data WMD is data indicating a three-dimensional model WM3 of the object OBJ. Namely, the three-dimensional model data WMD is data indicating the three-dimensional model WM3 having a standard three-dimensional shape of the object OBJ. The three-dimensional model WM3 may be a CAD model of the object OBJ that is one example of the three-dimensional model WM3 of the object OBJ. The three-dimensional model WM3 may be a three-dimensional model having a shape that is the same as the three-dimensional shape of the object OBJ acquired by measuring the three-dimensional shape of the actual object OBJ in advance. In this case, the three-dimensional model WM3 may be generated in advance by the three-dimensional position data generation unit 311 based on the image data IMG_3D that is generated by the imaging apparatus 22 imaging the object OBJ on which the projection pattern from the projection apparatus 23 is projected. Alternatively, the three-dimensional model WM3 may be generated in advance by a shape measurement using a well-known three-dimensional shape measurement apparatus that is different from the robot system SYS. In this case, the three-dimensional model data WMD may be the depth image data indicating the three-dimensional model WM3 of the object OBJ. The three-dimensional model data WMD may be the point cloud data indicating the three-dimensional model WM3 of the object OBJ. Incidentally, the actual object OBJ that is imaged or measured in advance to generate the three-dimensional model data WMD may be a standard or good object OBJ.

As illustrated in FIG. 13, the 3D matching unit 3122 may perform the matching processing, which uses the three-dimensional model WMD indicated by the three-dimensional model data WMD as a template model, on the three-dimensional position data WSD. Note that the matching processing using the three-dimensional position data WSD itself may be the same as an existing matching processing. For example, the 3D matching unit 3122 may perform the matching processing using the three-dimensional position data WSD by using a well-known method that is at least one of a RANSAC (Random Sample Consensus), a SIFT (Scale-Invariant Feature Transform), a ICP (Iterative Closest Point), and a DSO (Direct Sparse Odometry) may be used, for example. Therefore, a detailed description of the matching processing using the three-dimensional position data WSD is omitted, however, an overview thereof will be described below.

For example, the 3D matching unit 3122 may translate, scale and / or rotate the three-dimensional model WM3 indicated by the three-dimensional model data WMD in the 3D imaging coordinate system so that the feature part in the entire three-dimensional model WM3 indicated by the three-dimensional model data WMD is closer to (typically, matches) the feature part in the entire object OBJ whose three-dimensional position is indicated by the three-dimensional position data WSD. Namely, the 3D matching unit 3122 may change a positional relationship between a coordinate system of the three-dimensional model data WMD (for example, a coordinate system of the CAD model) and the 3D imaging coordinate system so that the feature part in the entire three-dimensional model WM3 indicated by the three-dimensional model data WMD is closer to (typically, matches) the feature part in the entire object OBJ whose three-dimensional position is indicated by the three-dimensional position data WSD. As a result, the 3D matching unit 3122 can determine the positional relationship between the coordinate system of the three-dimensional model data WMD and the 3D imaging coordinate system. Then, the 3D matching unit 3122 may calculate the position and the pose of the object OBJ in the 3D imaging coordinate system from the position and the pose of the object OBJ in the coordinate system of the three-dimensional model data WMD based on the positional relationship between the coordinate system of the three-dimensional model data WMD and the 3D imaging coordinate system. Incidentally, the coordinate system of the three-dimensional model data WMD may be referred to as a coordinate system of the three-dimensional model WM3 indicated by the three-dimensional model data WMD.

Note that the 3D matching unit 3122 may change the positional relationship between the coordinate system of the three-dimensional model data WMD (for example, the coordinate system of the CAD model) and the 3D imaging coordinate system of the imaging apparatus 22 that images the object OBJ so that the feature part in a part of the three-dimensional model WM3 indicated by the three-dimensional model data WMD is closer to (typically, matches) the feature part in a part of the object OBJ whose three-dimensional position is indicated by the three-dimensional position data WSD.

A situation in which the object OBJ is so large that a part of the object OBJ is out of the imaging range (the field of view) of the imaging apparatus 22 when the object OBJ is closer to the imaging apparatus 22 is one example of a situation in which the 3D matching processing is performed so that the feature part in a part of the three-dimensional model WM3 is closer to the feature part in a part of the object OBJ whose three-dimensional position is indicated by the three-dimensional position data WSD. Specifically, in a case where the object OBJ is large, a ratio of a part of the object OBJ positioned within the imaging range (the field of view) of the imaging apparatus 22 relative to the entire object OBJ is smaller as a distance between the object OBJ and the imaging apparatus 22 is shorter (namely, the object OBJ is closer to the imaging apparatus 22). Namely, a ratio of a part of the object OBJ that is actually included in the image indicated by the image data IMG_3D relative to the entire object OBJ is smaller. Therefore, a ratio of a part of the object OBJ whose three-dimensional position is indicated by the three-dimensional position data WSD, which is generated from the image data IMG_3D, relative to the entire object OBJ is smaller. If the 3D matching processing is performed by using the entire three-dimensional model WM3 under this situation, there is a higher possibility that the 3D matching processing fails. Note that a state in which "the 3D matching processing fails" here may mean a state in which the object OBJ indicated by the three-dimensional model WM3 cannot be detected from the three-dimensional position data WSD, even though the three-dimensional position data of the object OBJ is included in the three-dimensional position data WSD. Specifically, there is a higher possibility that the 3D matching processing fails as the ratio of a part of the object OBJ that is actually included in the image indicated by the image data IMG_3D is smaller (namely, the ratio of a part of the object OBJ whose three-dimensional position is indicated by the three-dimensional position data WSD, which is generated from the image data IMG_3D, is smaller). This is because the 3D matching processing is performed by using the entire three-dimensional model WM3 of the object OBJ, even though only a part of the object OBJ is included in the image indicated by the image data IMG_3D. Therefore, in this case, the 3D matching unit 3122 may perform the 3D matching processing by using a part of the three-dimensional model WM3 corresponding to a part of the object OBJ that is included in the imaging range (the field of view) of the imaging apparatus 22. As a result, even in a case where the object is large, the 3D matching unit 3122 can detect the object OBJ indicated by the three-dimensional model WM3 from the three-dimensional position data WSD.

In a case where the 3D matching processing is performed by using a part of the three-dimensional model WM3, a part of the three-dimensional model WM3 of the object OBJ may be designated (in other words, selected) in advance as a part of the three-dimensional model WM3 that is used for the 3D matching processing. For example, in a case where the object OBJ is so large that a part of the object OBJ is out of the imaging range (the field of view) of the imaging apparatus 22 when the object OBJ is closer to the imaging apparatus 22, a part of the three-dimensional model WM3 corresponding to a part of the object OBJ that is expected to be included in the imaging range (the field of view) of the imaging apparatus 22 may be designated in advance as a part of the three-dimensional model WM3 that is used for the 3D matching processing.

Alternatively, a part of the three-dimensional model WM3 that is used for the 3D matching processing may be designated (in other words, selected) while the 3D matching processing is performed. Namely, one range of the three-dimensional model WM3 that is used for the 3D matching processing may be changed while the 3D matching processing is performed. For example, considering that the ratio of a part of the object OBJ positioned within the imaging range (the field of view) of the imaging apparatus 22 relative to the entire object OBJ is smaller as the distance between the object OBJ and the imaging apparatus 22 is shorter, the range of a part of the three-dimensional model WM3 that is used for the 3D matching processing may be changed based on the distance between the object OBJ and the imaging apparatus 22. For example, a part of the three-dimensional model WM3 that is used for the 3D matching processing may be designated so that the range of a part of the three-dimensional model WM3 that is used for the 3D matching processing is smaller (in other words, narrower) as the distance between the object OBJ and the imaging apparatus 22 is shorter.

A single part of the three-dimensional model WM3 may be designated as a part of the three-dimensional model WM3 that is used for the 3D matching processing. Alternatively, a plurality of parts of the three-dimensional model WM3 may be designated as a part of the three-dimensional model WM3 that is used for the 3D matching processing. For example, a plurality of parts of the three-dimensional model WM3, each of which is usable as a feature part of the three-dimensional model WM3, may be designated as a part of the three-dimensional model WM3 that is used for the 3D matching processing. In this case, an improvement of an accuracy of the 3D matching processing is expected, compared to a case where a single part of the three-dimensional model WM3 is designated as a part of the three-dimensional model WM3 that is used for the 3D matching processing. Namely, there is a higher possibility that the object OBJ whose three-dimensional position is indicated by the three-dimensional position data WSD, which is generated from the image data IMG_3D, can be detected.

A part of the three-dimensional model WM3 that is used for the 3D matching processing may be designated by the user of the robot system SYS. For example, the user may designate a part of the three-dimensional model WM3 displayed on the non-illustrated display. For example, the user may estimate a part of the object OBJ that is expected to be included in the imaging range (the field of view) of the imaging apparatus 22, and designate a part of the three-dimensional model WM3 corresponding to the estimated part of the object OBJ. Alternatively, a part of the three-dimensional model WM3 that is used for the 3D matching processing may be automatically designated by the control apparatus 3. For example, the control apparatus 3 may estimate a part of the object OBJ that is expected to be included in the imaging range (the field of view) of the imaging apparatus 22 (a part of the object OBJ whose three-dimensional position is indicated by the three-dimensional position data WSD that is expected to be generated from the image data IMG_3D), and designate a part of the three-dimensional model WM3 corresponding to the estimated part of the object OBJ. In this case, the control apparatus 3 may estimate a part of the object OBJ that is expected to be included in the imaging range (the field of view) of the imaging apparatus 22 based on information related to at least one of a direction of the relative movement between the object OBJ and the imaging apparatus 22 (alternatively, the direction in which the robot 1 approaches the object OBJ), the distance between the object OBJ and the imaging apparatus 22 (alternatively, the distance between the robot 1 and the object OBJ), and the imaging range (the field of view) of the imaging apparatus 22, for example.

Especially in the present example embodiment, the 3D matching unit 3122 determines at least one of an initial position and an initial pose of the three-dimensional model WM3 before starting the processing for making the feature part of the three-dimensional model WM3 indicated by the three-dimensional model data WMD be closer to the feature part of the object OBJ indicated by the three-dimensional position data WSD (namely, the matching processing using the three-dimensional position data WSD). Accordingly, the 3D matching unit 3122 performs, as at least a part of the 3D matching processing, a position-pose determination processing for determining at least one of the initial position and the initial pose of the three-dimensional model WM3 before starting the matching processing using the three-dimensional position data WSD. Therefore, in the present example embodiment, the 3D matching processing performed by the 3D matching unit 3122 may include the position-pose determination processing for determining at least one of the initial position and the initial pose of the three-dimensional model WM3, and the matching processing using the three-dimensional position data WSD.

However, the 3D matching processing may include the matching processing using the three-dimensional position data WSD, but may not include the position-pose determination processing. In this case, the 3D matching unit 3122 may perform the position-pose determination processing as a processing that is different from the 3D matching processing. Alternatively, a processing block or an apparatus that is different from the 3D matching unit 3122 may perform the position-pose determination processing.

Especially in the present example embodiment, as described above, the 3D matching processing includes the processing for making the feature part of the three-dimensional model WM3 indicated by the three-dimensional model data WMD be closer to the feature part of the object OBJ indicated by the three-dimensional position data WSD in the 3D imaging coordinate system (namely, the matching processing using the three-dimensional position data WSD). Therefore, the 3D matching unit 3122 may determine the initial position and the initial pose of the three-dimensional model WM3 in the 3D imaging coordinate system. Then, the 3D matching unit 3122 places the three-dimensional model WM3 at the determined initial position with the determined initial pose in the 3D imaging coordinate system. Then, the 3D matching unit 3122 starts the processing for making the feature part of the three-dimensional model WM3, which has been placed at the determined initial position with the initial pose be closer to the feature part of the object OBJ indicated by the three-dimensional position data WSD in the 3D imaging coordinate system. Namely, the 3D matching unit 3122 starts the matching processing using the three-dimensional position data WSD and the three-dimensional model WM3 at the initial position with the initial pose.

As described above, it can be said that the 3D matching processing includes the processing for changing positional relationship between the coordinate system of the three-dimensional model data WMD (for example, the coordinate system of the CAD model) and the 3D imaging coordinate system so that the feature part of the three-dimensional model WM3 indicated by the three-dimensional model data WMD is closer to the feature part of the object OBJ whose three-dimensional position is indicated by the three-dimensional position data WSD. In this case, an operation for determining the initial position and the initial pose of the three-dimensional model WM3 in the 3D imaging coordinate system may be considered to be substantially equivalent to an operation for determining an initial state of the positional relationship between the coordinate system of the three-dimensional model data WMD and the 3D imaging coordinate system. In this case, the 3D matching unit 3122 may align the coordinate system of the three-dimensional model data WMD with the 3D imaging coordinate system so that the positional relationship between the coordinate system of the three-dimensional model data WMD and the 3D imaging coordinate system is the determined initial state. Then, the 3D matching unit 3122 may start the processing for making the feature part of the three-dimensional model WM3 be closer to the feature part of the object OBJ indicated by the three-dimensional position data WSD.

Incidentally, in the present example embodiment, the 3D matching unit 3122 determines both of the initial position and the initial pose of the three-dimensional model WM3 in the 3D imaging coordinate system, because the example in which the position-pose calculation unit 312 calculates both of the position and the pose of the object OBJ at the step S3 in FIG.4 is described as described above. However, in a case where either one of the position and the pose of the object OBJ is calculated at the step S3 in FIG. 4, the 3D matching unit 3122 may determine either one of the initial position and the initial pose of the three-dimensional model WM3 in the 3D imaging coordinate system. Alternatively, even in a case where either one of the position and the pose of the object OBJ is calculated at the step S3 in FIG. 4, the 3D matching unit 3122 may determine both of the initial position and the initial pose of the three-dimensional model WM3 in the 3D imaging coordinate system.

In order to determine the initial position and the initial pose of the three-dimensional model WM3, the 3D matching unit 3122 may use the position-pose information POI1 output from the 2D matching unit 3121 to the 3D matching unit 3122. Namely, the 3D matching unit 3122 may determine the initial position and the initial pose of the three-dimensional model WM3 based on the position-pose information POI1.

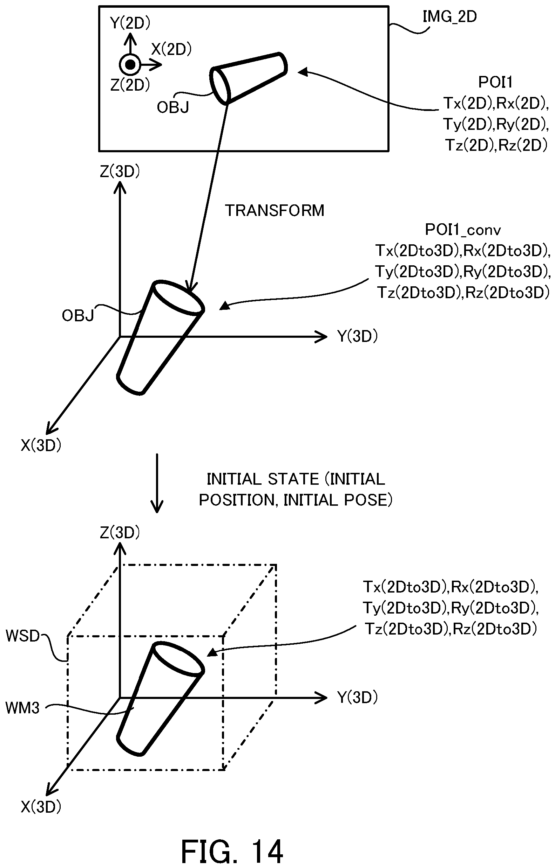

Specifically, as illustrated in FIG. 14, the 3D matching unit 3122 firstly transforms the position-pose information POI1 indicating the position and the pose of the object OBJ in the 2D imaging coordinate system into position-pose information POI1_conv indicating the position and the pose of the object OBJ in the 3D imaging coordinate system. The position-pose information POI1_conv may indicate a position Tx(2Dto3D), which is calculated by the transformation, of the object OBJ in the X-axis direction (3D) parallel to the X-axis (3D) of the 3D imaging coordinate system. The position-pose information POI1_conv may indicate the position Ty(2Dto3D), which is calculated by the transformation, of the object OBJ in the Y-axis direction (3D) parallel to the Y-axis (3D) of the 3D imaging coordinate system. The position-pose information POI1_conv may indicate the position Tz(2Dto3D), which is calculated by the transformation, of the object OBJ in the Z-axis direction (3D) parallel to the Z-axis (3D) of the 3D imaging coordinate system. The position-pose information POI1_conv may indicate a rotational amount Rx(2Dto3D), which is calculated by the transformation, of the object OBJ around the X-axis (3D) of the 3D imaging coordinate system The position-pose information POI1_conv may indicate a rotational amount Ry(2Dto3D, which is calculated by the transformation, of the object OBJ around the Y-axis (3D) of the 3D imaging coordinate system. The position and the pose information POI1_conv may indicate a rotational amount Rz(2Dto3D), which is calculated by the transformation, of the object OBJ around the Z-axis (3D) of the 3D imaging coordinate system.

Incidentally, in the below-described description, the rotational amount Rx(2Dto3D) of the object OBJ around the X-axis(3D), the rotational amount Ry(2Dto3D) of the object OBJ around the Y-axis(3D), and the rotational amount Rz(2Dto3D) of the object OBJ around the Z-axis(3D) are referred to a pose RX(2Dto3D) of the object OBJ in the rotational direction around the X-axis(3D), a pose RY(2Dto3D) of the object OBJ in the rotational direction around the Y-axis(3D), and a pose Rz(2Dto3D) of the object OBJ in the rotational direction around the Z-axis(3D), respectively, for the purpose of consistency of terms.

Moreover, the pose Rx(2Dto3D) of the object OBJ around the X-axis(2Dto3D), the pose Ry(2Dto3D) of the object OBJ around the Y-axis(2Dto3D), and the pose Rz(2Dto3D) of the object OBJ around the Z-axis(2Dto3D) may be considered to indicate a position of the object OBJ in a rotational direction around the X-axis(2Dto3D), a position of the object OBJ in a rotational direction around the Y-axis(2Dto3D), and a position of the object OBJ in a rotational direction around the Z-axis(2Dto3D), respectively. Namely, each of the pose Rx(2Dto3D) of the object OBJ around the X-axis(2Dto3D), the pose Ry(2Dto3D) of the object OBJ around the Y-axis(2Dto3D), and the pose Rz(2Dto3D) of the object OBJ around the Z-axis(2Dto3D) may be regarded a parameter representing the position of the object OBJ.

In order to transform the position-pose information POI1 to the position-pose information POI1_conv, the 3D matching unit 3122 may use coordinate system information indicating a positional relationship between the 2D imaging coordinate system and the 3D imaging coordinate system. The coordinate system information may be stored in advance in the storage apparatus 32, for example. The coordinate system information may include a transformation matrix (typically a rigid body transformation matrix) for transforming a position in either one of the 2D imaging coordinate system and the 3D imaging coordinate system to a position in the other one of the 2D imaging coordinate system and the 3D imaging coordinate system. The transformation matrix may be calculated by a mathematical method from an extrinsic parameter that indicates a positional relationship between the imaging apparatus 21 and the imaging apparatus 22. As one example, the transformation matrix may be calculated by a mathematical method that solves a PnP (Perspective n Point) problem based on the extrinsic parameter that indicates the positional relationship between the imaging apparatus 21 and the imaging apparatus 22. In this case, the control apparatus 3 may transform the position-pose information POI1, which indicates the position and the pose of the object OBJ in the 2D imaging coordinate system, to the position-pose information POI1_conv, which indicates the position and the pose of the object OBJ in the 3D imaging coordinate system, based on the coordinate system information (especially, the transformation matrix).

Then, as illustrated in FIG. 14, the 3D matching unit 3122 may set the position indicated by the position-pose information POI1_conv to the initial position of the three-dimensional model WM3. Moreover, the 3D matching unit 3122 may set the pose indicated by the position-pose information POI1_conv to the initial pose of the three-dimensional model WM3. For example, the 3D matching unit 3122 may set the position Tx(2Dto3D) indicated by the position pose information POI1_conv to the initial position of the three-dimensional model WM3 in the X-axis direction (3D). For example, the 3D matching unit 3122 may set the position Ty(2Dto3D) indicated by the position-pose information POI1_conv to the initial position of the three-dimensional model WM3 in the Y-axis direction (3D). For example, the 3D matching unit 3122 may set the position Tz(2Dto3D) indicated by the position-pose information POI1_conv to the initial position of the three-dimensional model WM3 in the Z-axis direction (3D). For example, the 3D matching unit 3122 may set the pose Rx(2Dto3D) indicated by the position pose information POI1_conv to the initial pose of the three-dimensional model WM3 around the X-axis (3D). For example, the 3D matching unit 3122 may set the pose Ry(2Dto3D) indicated by the position pose information POI1_conv to the initial pose of the three-dimensional model WM3 around the Y-axis (3D). For example, the 3D matching unit 3122 may set the pose Rz(2Dto3D) indicated by the position pose information POI1_conv to the initial pose of the three-dimensional model WM3 around the Z-axis (3D).

Then, as illustrated in FIG. 14, the 3D matching unit 3122 places the three-dimensional model WM3 at the determined initial position with the determined initial pose in the 3D imaging coordinate system. For example, the 3D matching unit 3122 may place the three-dimensional model WM3 so that the position of the three-dimensional model WM3 in the X-axis direction (3D) is the position Tx(2Dto3D) in the 3D imaging coordinate system. For example, the 3D matching unit 3122 may place the three-dimensional model WM3 so that the position of the three-dimensional model WM3 in the Y-axis direction (3D) is the position Ty(2Dto3D) in the 3D imaging coordinate system. For example, the 3D matching unit 3122 may place the three-dimensional model WM3 so that the position of the three-dimensional model WM3 in the Z-axis direction (3D) is the position Tz(2Dto3D) in the 3D imaging coordinate system. For example, the 3D matching unit 3122 may place the three-dimensional model WM3 so that the pose of the three-dimensional model WM3 around the X-axis (3D) is the pose Rx(2Dto3D) in the 3D imaging coordinate system. For example, the 3D matching unit 3122 may place the three-dimensional model WM3 so that the pose of the three-dimensional model WM3 around the Y-axis (3D) is the pose Ry(2Dto3D) in the 3D imaging coordinate system. For example, the 3D matching unit 3122 may place the three-dimensional model WM3 so that the pose of the three-dimensional model WM3 around the Z-axis (3D) is the pose Rz(2Dto3D) in the 3D imaging coordinate system.

The 3D matching unit 3122 may place the three-dimensional model WM3 at the determined initial position with the determined initial pose in the 3D imaging coordinate system in a procedure described below. Specifically, the 3D matching unit 3122 may firstly place (set) the three-dimensional model WM3 in the coordinate system of the three-dimensional model WM3 (in the coordinate system of the three-dimensional model data WSD). In this case, the 3D matching unit 3122 may place the three-dimensional model WM3 in the coordinate system of the three-dimensional model WM3 so that a center of gravity of the three-dimensional model WM3 is positioned at an origin in the coordinate system of the three-dimensional model WM3. Then, the 3D matching unit 3122 aligns the coordinate system of the three-dimensional model WM3 with the 3D imaging coordinate system. For example, the 3D matching unit 3122 may align the coordinate system of the three-dimensional model WM3 with the 3D imaging coordinate system so that the origin of the coordinate system of the three-dimensional model WM3 coincides with the origin of the 3D imaging coordinate system. For example, the 3D matching unit 3122 may align the coordinate system of the three-dimensional model WM3 with the 3D imaging coordinate system so that an X-axis of the coordinate system of the three-dimensional model WM3 coincides with the X-axis (3D) of the 3D imaging coordinate system. For example, the 3D matching unit 3122 may align the coordinate system of the three-dimensional model WM3 with the 3D imaging coordinate system so that a Y-axis of the coordinate system of the three-dimensional model WM3 coincides with the Y-axis (3D) of the 3D imaging coordinate system. For example, the 3D matching unit 3122 may align the coordinate system of the three-dimensional model WM3 with the 3D imaging coordinate system so that a Z-axis of the coordinate system of the three-dimensional model WM3 coincides with the Z-axis (3D) of the 3D imaging coordinate system. For example, the 3D matching unit 3122 may align the coordinate system of the three-dimensional model WM3 with the 3D imaging coordinate system so that a scaling of coordinates in the coordinate system of the three-dimensional model WM3 is equal to a scaling of coordinates in the 3D imaging coordinate system. Then, the 3D matching unit 3122 may place the three-dimensional model WM3 at the determined initial position with the determined initial pose in the coordinate system of the three-dimensional model WM3 in which the three-dimensional model WM3 has been placed. Here, since the alignment between the coordinate system of the three-dimensional model WM3 and the 3D imaging coordinate system has already been completed, placing the three-dimensional model WM3 in the coordinate system of the three-dimensional model WM3 is equivalent to placing the three-dimensional model WM3 in the 3D imaging coordinate system. As a result, the 3D matching unit 3122 can place the three-dimensional model WM3 at the determined initial position with the determined initial pose in the 3D imaging coordinate system.

The 3D matching unit 3122 may place the three-dimensional model WM3 at the determined initial position with the determined initial pose in the 3D imaging coordinate system by using a transformation matrix (typically, a rigid transformation matrix) for transforming a position in either one coordinate system of the 3D imaging coordinate system and the coordinate system of the three-dimensional model WM3 to a position in the other one coordinate system of the 3D imaging coordinate system and the coordinate system of the three-dimensional model WM3, in addition to or instead of aligning the coordinate system of the three-dimensional model WM3 with the 3D imaging coordinate system. Specifically, after placing the three-dimensional model WM3 in the coordinate system of the three-dimensional model WM3, the 3D matching unit 3122 may transform, based on the transformation matrix, the position and the pose of the three-dimensional model WM3 placed in the coordinate system of the three-dimensional model WM3 (namely, the position and the pose in the coordinate system of the three-dimensional model WM3) to the position and the pose of the three-dimensional model WM3 in the 3D imaging coordinate system. Then, the 3D matching unit 3122 may place the three-dimensional model WM3 at the determined initial position with the determined initial pose in the 3D imaging coordinate system.

Alternatively, the 3D matching unit 3122 may determine the initial position and the initial pose of the three-dimensional model WM3 in the 2D imaging coordinate system, in addition to or instead of determining the initial position and the initial pose of the three-dimensional model WM3 in the 3D imaging coordinate system. In this case, the 3D matching unit 3122 may set the position and the pose indicated by the position-pose information POI1 to the initial position and the initial pose of the three-dimensional model WM3 in the 2D imaging coordinate system, respectively, without transforming the position-pose information POI1 to the position-pose information POI1_conv. Then, the 3D matching unit 3122 may align the coordinate system of the three-dimensional model WM3 with the 2D imaging coordinate system, in addition to or instead of aligning the coordinate system of the three-dimensional model WM3 with the 3D imaging coordinate system. Specifically, the 3D matching unit 3122 may align the coordinate system of the three-dimensional model WM3 with the 2D imaging coordinate system after placing the three-dimensional model WM3 in the coordinate system of the three-dimensional model WM3. For example, the 3D matching unit 3122 may align the coordinate system of the three-dimensional model WM3 with the 2D imaging coordinate system so that the origin of the coordinate system of the three-dimensional model WM3 coincides with the origin of the 2D imaging coordinate system. For example, the 3D matching unit 3122 may align the coordinate system of the three-dimensional model WM3 with the 2D imaging coordinate system so that the X-axis of the coordinate system of the three-dimensional model WM3 coincides with the X-axis (2D) of the 2D imaging coordinate system. For example, the 3D matching unit 3122 may align the coordinate system of the three-dimensional model WM3 with the 2D imaging coordinate system so that the Y-axis of the coordinate system of the three-dimensional model WM3 coincides with the Y-axis (2D) of the 2D imaging coordinate system. For example, the 3D matching unit 3122 may align the coordinate system of the three-dimensional model WM3 with the 3D imaging coordinate system so that the Z-axis of the coordinate system of the three-dimensional model WM3 coincides with the Z-axis (2D) of the 2D imaging coordinate system. For example, the 3D matching unit 3122 may align the coordinate system of the three-dimensional model WM3 with the 2D imaging coordinate system so that a scaling of coordinates in the coordinate system of the three-dimensional model WM3 is equal to a scaling of coordinates in the 2D imaging coordinate system. Then, the 3D matching unit 3122 may place the three-dimensional model WM3 at the determined initial position with the determined initial pose in the coordinate system of the three-dimensional model WM3 in which the three-dimensional model WM3 has been placed. Here, since the alignment between the coordinate system of the three-dimensional model WM3 and the 2D imaging coordinate system has already been completed, placing the three-dimensional model WM3 in the coordinate system of the three-dimensional model WM3 is equivalent to placing the three-dimensional model WM3 in the 2D imaging coordinate system. As a result, the 3D matching unit 3122 can place the three-dimensional model WM3 at the determined initial position with the determined initial pose in the 2D imaging coordinate system. Then, the 3D matching unit 3122 may transform the position and the pose of the three-dimensional model WM3 in the 2D imaging coordinate system to the position and the pose of the three-dimensional model WM3 in the 3D imaging coordinate system, respectively, by using a transformation matrix (typically, a rigid transformation matrix) for transforming a position in either one coordinate system of the 2D imaging coordinate system and the 3D imaging coordinate system to a position in the other one coordinate system of the 2D imaging coordinate system and the 3D imaging coordinate system. The position and the pose of the three-dimensional model WM3 in the 3D imaging coordinate system acquired by the transformation correspond to the initial position and the initial pose of the three-dimensional model WM3 in the 3D imaging coordinate system, respectively. As a result, the 3D matching unit 3122 can place the three-dimensional model WM3 at the determined initial position with the determined initial pose in the 3D imaging coordinate system.

Then, the 3D matching unit 3122 starts the processing for making the feature part of the three-dimensional model WM3 be closer to the feature part of the object OBJ indicated by the three-dimensional position data WSD. As a result, the 3D matching unit 3122 can calculate the position and the pose of the object OBJ. Namely, the 3D matching unit 3122 can generate the position-pose information POI2.

Incidentally, a method of calculating the position and the pose of the object OBJ is not limited to the matching processing using the three-dimensional position data WSD described above. The 3D matching unit 3122 may calculate the position and the pose of the object OBJ by using any other well-known method of calculating the position and the pose of the object OBJ using the three-dimensional position data WSD. The method of calculating the position and the pose of the object OBJ may be a well-known method of calculating the position and the pose of the object OBJ based on the three-dimensional position data WSD without using the three-dimensional model data WMD, or may be a well-known method of calculating the position and the pose of the object OBJ by using the three-dimensional position data WSD and data that is different from the three-dimensional model data WMD. For example, the method of calculating the position and the pose of the object OBJ may be a method of calculating the position and the pose of the object OBJ based on the three-dimensional position data WSD by a machine learning or a deep learning. In this case, a prediction model, which outputs the position and the pose of the object OBJ when the three-dimensional position data WSD is input thereto, may be built in advance by the machine learning or the deep learning, and the position and the pose of the object OBJ may be calculated by inputting the three-dimensional position data WSD to this prediction model. This prediction model may be stored in the 3D matching unit 3122. Note that the 3D matching unit 3122 may read out this prediction model stored in the storage apparatus 32.

The 3D matching unit 3122 performs the 3D matching processing by using the above-described point cloud data as the three-dimensional position data WSD. As a result, the calculation accuracy of the position and the pose of the object OBJ is higher, compared to a case where the depth image data is used as the three-dimensional position data WSD. In this case, the 3D matching unit 3122 uses the point cloud data indicating the standard three-dimensional shape of the object OBJ (for example, the point cloud data indicating the CAD model) as the three-dimensional model data WMD. However, the 3D matching unit 3122 may perform the 3D matching processing by using the above-described depth image data as the three-dimensional position data WSD. In this case, the 3D matching unit 3122 may use the depth image data indicating the standard three-dimensional shape of the object OBJ (for example, the depth image data indicating the CAD model) as the three-dimensional model data WMD.

The 3D matching unit 3122 may calculate, as the position of the object OBJ in the 3D imaging coordinate system, at least one of a position Tx(3D) of the object OBJ in a X-axis direction(3D) that is parallel to the X-axis(3D), a position Ty(3D) of the object OBJ in a Y-axis direction(3D) that is parallel to the Y-axis(3D), and a position Tz(3D) of the object OBJ in a Z-axis direction(3D) that is parallel to the Z-axis(3D). The 3D matching unit 3122 may calculate, as the pose of the object OBJ in the 3D imaging coordinate system, at least one of a rotational amount Rx(3D) of the object OBJ around the X-axis(3D), a rotational amount Ry(3D) of the object OBJ around the Y-axis(3D), and a rotational amount Rz(3D) of the object OBJ around the Z-axis(3D).

Incidentally, in the below-described description, the rotational amount Rx(3D) of the object OBJ around the X-axis(3D), the rotational amount Ry(3D) of the object OBJ around the Y-axis(3D), and the rotational amount Rz(3D) of the object OBJ around the Z-axis(3D) are referred to the pose RX(3D) of the object OBJ around the X-axis(3D), the pose RY(3D) of the object OBJ around the Y-axis(3D), and the pose Rz(3D) of the object OBJ around the Z-axis(3D), respectively, as with the above-described rotational amounts RX, RY, and RZ, for the purpose of consistency of terms.

Moreover, the pose Rx(3D) of the object OBJ around the X-axis(3D), the pose Ry(3D) of the object OBJ around the Y-axis(3D), and the pose Rz(3D) of the object OBJ around the Z-axis(3D) may be considered to indicate a position of the object OBJ in a rotational direction around the X-axis(3D), a position of the object OBJ in a rotational direction around the Y-axis(3D), and a position of the object OBJ in a rotational direction around the Z-axis(3D), respectively. Namely, each of the pose Rx(3D) of the object OBJ around the X-axis(3D), the pose Ry(3D) of the object OBJ around the Y-axis(3D), and the pose Rz(3D) of the object OBJ around the Z-axis(3D) may be regarded a parameter representing the position of the object OBJ.

Each time the position-pose information POI2 is generated, the 3D matching unit 3122 outputs the generated position-pose information POI2 to the coordinate transformation unit 3125. As one example, the 3D matching unit 3122 may calculate all of 6DOF positions and poses (namely, the position Tx(3D), the position Ty(3D), the position Tz(3D), the pose Rx(3D), the pose Ry(3D), and the pose Rz(3D)), and output the position-pose information POI1 indicating the calculated 6DOF positions and poses to the coordinate transformation unit 3125. As another example, the 3D matching unit 3122 may calculate the 6DOF positions and poses, and output the position-pose information POI2 indicating a part of the calculated 6DOF positions and poses (namely, a part of the position Tx(3D), the position Ty(3D), the position Tz(3D), the pose Rx(3D), the pose Ry(3D), and the pose Rz(3D)) to the coordinate transformation unit 3125. As another example, the 3D matching unit 3122 may calculate a part of the 6DOF positions and poses, and output the position-pose information POI2 indicating a part of the 6DOF positions and poses calculated to the coordinate transformation unit 3125.

The 3D matching unit 3122 may calculate the position and the pose of the object OBJ in a predetermined 3D matching cycle. Namely, the 3D matching unit 3122 may calculate the position and the pose of the object OBJ each time a period corresponding to the 3D matching cycle elapses. Conversely, it may be considered that the period corresponding to the 3D matching cycle is required for the 3D matching unit 3122 to complete the 3D matching processing after starting it. In this case, the 3D matching unit 3122 may output the position-pose information POI2 indicating the position and the pose of the object OBJ to the coordinate transformation unit 3125 in the predetermined 3D matching cycle.

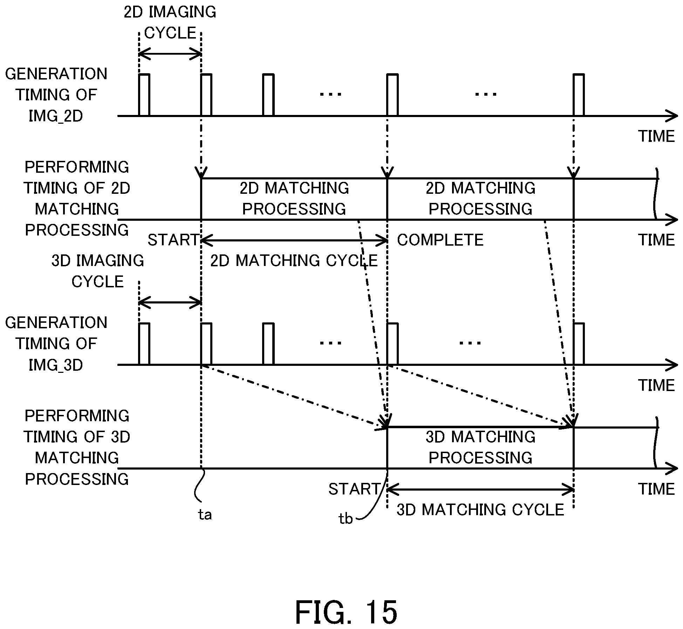

As illustrated in FIG. 15, the 3D matching cycle may be longer than a 3D imaging cycle corresponding to the 3D imaging rate at which the imaging apparatus 22 images the object OBJ. For example, the 3D matching cycle may be a cycle that allows the 3D matching unit 3122 to perform the 3D matching processing several times to several dozen times (as one example, 1 time to 30 times) per second. In this case, the imaging apparatus 22 generates new image data IMG_3D before the 3D matching unit 3122 completes the 3D matching processing after starting it. In this case, the 3D matching unit 3122 may not start a new 3D matching processing using the image data IMG_3D newly generated by the imaging apparatus 22 even when the imaging apparatus 22 generates the new image data IMG_3D until the 3D matching unit 3122 completes the 3D matching processing that has already been started. The 3D matching unit 3122 may start a new 3D matching processing using the image data IMG_3D, which is latest at that time, after completing the 3D matching processing that has already been started. Incidentally, the 3D matching unit 3122 may start a new 3D matching processing using the image data IMG_3D newly generated by the imaging apparatus 22 when the imaging apparatus 22 generates the new image data IMG_3D, even in a case where the 3D matching unit 3122 has not completed the 3D matching processing that has already been started. Note that a timing at which the image data IMG_3D is generated illustrated in FIG. 15 may be regarded as a timing at which the imaging apparatus 22 images the object OBJ to generate the image data IMG_3D. However, the 3D matching cycle may not be longer than the 3D imaging cycle. For example, the 3D matching cycle may be shorter than the 3D imaging cycle. For example, the 3D matching cycle may be the same as the 3D imaging cycle.

Furthermore, in the present example embodiment, the 3D matching unit 3122 performs the 3D matching processing by using a result of the 2D matching processing performed by the 2D matching unit 3121 (namely, the position-pose information POI1), as described above. Therefore, in a case where the image data IMG_2D and IMG_3D are generated by the imaging apparatuses 21 and 22 imaging the object OBJ at a certain time ta, respectively, the control apparatus 3 may perform the 2D matching processing using the image data IMG_2D generated at the time ta and the 3D matching processing using the three-dimensional position data WSD that is generated from the image data IMG_3D generated at the time ta at different timings. Specifically, the 2D matching unit 3121 starts the 2D matching processing using the image data IMG_2D generated at the time ta. On the other hand, the 3D matching unit 3122 may not start the 3D matching processing using the three-dimensional position data WSD that is generated from the image data IMG_3D generated at the time ta, until the 2D matching processing using the image data IMG_2D generated at the time ta is completed. This is because the 3D matching unit 3122 determines the initial position and the initial pose of the three-dimensional model WM3 by using the result of the 2D matching processing as described above. After the 2D matching processing using the image data IMG_2D generated at the time ta is completed, the 3D matching unit 3122 may start the 3D matching processing by using the result of this 2D matching processing (namely, the position-pose information POI1 indicating the position and the pose of the object OBJ in the 2D imaging coordinate system at the time ta) and the three-dimensional position data WSD that is generated from the image data IMG_3D generated at the time ta. As a result, the 3D matching unit 3122 may generate position-pose information POI2 indicating the position and the pose of the object OBJ in the 3D imaging coordinate system at the time ta.

Thus, in the present example embodiment, after the 2D matching unit 3121 generates the position-pose information POI1 indicating the position and the pose of the object OBJ in the 2D imaging coordinate system at a certain time (for example, the time ta), the 3D matching unit 3122 generates the position-pose information POI2 indicating the position and the pose of the object OBJ at the same time (for example, the time ta). Therefore, in the present example embodiment, the 3D matching unit 3122 may generate the position-pose information POI2 indicating the position and the pose of the object OBJ in the 3D imaging coordinate system at the time ta at a timing at which a period corresponding to a sum of the 2D matching cycle and the 3D matching cycle elapses after the imaging apparatuses 21 and 22 image the object OBJ at the time ta.

However, the 2D matching unit 3121 may perform the 2D matching processing using the image data IMG_2D generated at one time while the 3D matching unit 3122 may perform the 3D matching processing using the three-dimensional position data WSD that is generated from the image data IMG_3D generated at another time different from the one time. The 3D matching processing may be performed by the 3D matching unit 3122. For example, in a case where the 2D matching unit 3121 performs the 2D matching processing using the image data IMG_2D generated at the time ta, the 3D matching unit 3122 may perform the 3D matching processing using the three-dimensional position data WSD that is generated from the image data IMG_3D generated in a period during which the 2D matching processing is performed. For example, in a case where the 2D matching unit 3121 performs the 2D matching processing using the image data IMG_2D generated at the time ta, the 3D matching unit 3122 may perform the 3D matching processing using the three-dimensional position data WSD that is generated from the image data IMG_3D generated at a time at which a remaining time until the 2D matching processing is completed is shorter than a predetermined time.

The 3D matching cycle may be the same as the 2D matching cycle. Specifically, a length of the 3D matching cycle may be the same as a length of the 2D matching cycle. Namely, a period required for the 3D matching unit 3122 to complete the 3D matching processing after starting it may be the same as a period required for the 2D matching unit 3121 to complete the 2D matching processing after starting it. However, the 3D matching cycle may not be the same as the 2D matching cycle. For example, the length of the 3D matching cycle may be longer than the length of the 2D matching cycle. For example, the length of the 3D matching cycle may be shorter than the length of the 2D matching cycle.

Here, a data size of the three-dimensional position data WSD and the three-dimensional model data WMD used for the 3D matching processing is usually larger than a data size of the image data IMG_2D and the two-dimensional model data IMG_2M used for the 2D matching processing. Therefore, there is a possibility that the 3D matching cycle, which is the period required for the 3D matching unit 3122 to complete the 3D matching processing, is longer than the 2D matching cycle, which is the period required for the 2D matching unit 3121 to complete the 2D matching processing. Furthermore, in the present example embodiment, there is a possibility that the 3D matching cycle is longer than the 2D matching cycle, because the 3D matching processing includes, in addition to the matching processing using the three-dimensional position data WSD, the position-pose determination processing for determine the initial position and the initial pose of the three-dimensional model WM3. Therefore, the 3D matching unit 3122 may perform a processing for reducing the 3D matching cycle so that the 3D matching cycle is the same as the 2D matching cycle or so that the 3D matching cycle is shorter than the 2D matching cycle.

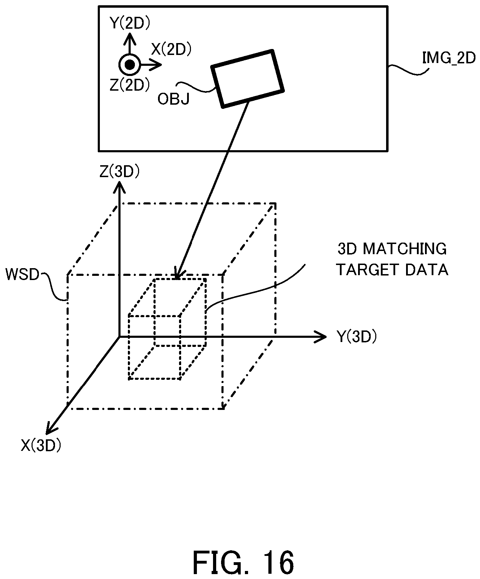

As one example, the 3D matching unit 3122 may select, based on the result of the 2D matching processing (for example, at least one of the position Tx(2D), the position Ty(2D), the position Tz(2D), the pose Rx(2D), the pose Ry(2D), and the pose Rz(2D) described above), a partial data part of the three-dimensional position data WSD data as 3D matching target data on which the 3D matching processing is performed. Specifically, as illustrated in FIG. 16, the 3D matching unit 3122 may estimate, based on the position-pose information POI1, an area in which the object OBJ is estimated to exist in the 3D imaging coordinate system. As one example, the 3D matching unit 3122 may transform the position-pose information POI1 indicating the position and the pose of the object OBJ in the 2D imaging coordinate system to the position-pose information POI1_conv indicating the position and the pose of the object OBJ in the 3D imaging coordinate system. Then, the 3D matching unit 3122 may estimate, based on the position-pose information POI1_conv, the area in which the object OBJ is estimated to exist in the 3D imaging coordinate system. For example, the 3D matching unit 3122 may estimate an area that has a predetermined size and that includes the position indicated by the position-pose information POI1_conv as the area in which the object OBJ is estimated to exist in the 3D imaging coordinate system. For example, the 3D matching unit 3122 may estimate an area that has a predetermined shape and that includes the position indicated by the position-pose information POI1_conv as the area in which the object OBJ is estimated to exist in the 3D imaging coordinate system. Then, the 3D matching unit 3122 may select, as the 3D matching target data, the partial data part of the three-dimensional position data WSD corresponding to the area in which the object OBJ is estimated to exist. Then, the 3D matching unit 3122 may perform 3D matching processing on the 3D matching target data that is part of the three-dimensional position data WSD.

Here, there is a possibility that the three-dimensional position data WSD includes not only a data part related to the object OBJ, but also a data part related to another object different from the object OBJ. This is because there is a possibility that not only the object OBJ but also another object different from the object OBJ are included in the imaging range (the field of view) of the imaging apparatus 22 that generates the image data IMG_3D used to generate the three-dimensional position data WSD. For example, in a case where the three-dimensional position data WSD is generated from the image data IMG_3D generated by the imaging apparatus 22 imaging the object OBJ placed on the support surface S, there is a possibility that the three-dimensional position data WSD includes not only the data part related to the object OBJ but also a data part related to the support surface S. In this case, a processing for selecting the 3D matching target data is equivalent to a processing for selecting the data part related to the object OBJ.

In this case, the 3D matching target data may be typically considered to be equivalent to data that is acquired by removing, from the three-dimensional position data WSD, the data part related to another object different from the object OBJ. In other words, the 3D matching target data may be typically considered to be equivalent to data that is acquired by selectively extracting, from the three-dimensional position data WSD, the data part related to the object OBJ. As a result, a period required to complete the 3D matching processing performed on the 3D matching target data (namely, a part of the three-dimensional position data WSD) is shorter than a period required to complete the 3D matching processing performed on the entire three-dimensional position data WSD. This is because the period required to complete the 3D matching processing depends on the size of the data on which the 3D matching processing is performed. As a result, the 3D matching cycle is shorter than that in a case where the 3D matching processing is performed on the entire three-dimensional position data WSD.

Note that an operation for selecting the 3D matching target data, which is a part of the three-dimensional position data WSD, may be considered to be equivalent to an operation for not selecting (alternatively, removing) the data part other than the 3D matching target data in the three-dimensional position data WSD. Therefore, the 3D matching unit 3122 may generate the 3D matching target data, which is a part of the three-dimensional position data WSD, by removing, based on the result of the 2D matching processing, a partial data part of the three-dimensional position data WSD that correspond to an area in which it is estimated that the object OBJ does not exist (for example, the data part related to another object different from the object OBJ, as described above).

As another example, the 3D matching unit 3122 may select the 3D matching target data based on a user's instruction to designate the partial data part of the three-dimensional position data WSD. Specifically, the control apparatus 3 may display a GUI (Graphical User Interface) that can be operated by the user to designate the partial data part of the three-dimensional position data WSD as the 3D matching target data by using the output apparatus 35 including the display apparatus. For example, the control apparatus 3 may display a plurality of points indicated by the point cloud data that is one example of the three-dimensional position data WSD, and display a GUI that can be operated by the user to designate a point corresponding to the object OBJ among the plurality of points by using the output apparatus 35 including the display apparatus. For example, the control apparatus 3 may display the depth image indicated by the depth image data that is one example of the three-dimensional position data WSD, and display a GUI that can be operated by the user to designate a pixel corresponding to the object OBJ in the depth image by using the output apparatus 35 including the display apparatus. Even in this case, the 3D matching unit 3122 may perform the 3D matching processing on the 3D matching target data that is the partial data part of the three-dimensional position data WSD designated by the user. As a result, the 3D matching cycle is shorter than that in a case where the 3D matching processing is performed on the entire three-dimensional position data WSD.

### (2-2-3) Tracking Processing performed by Tracking Unit 3123

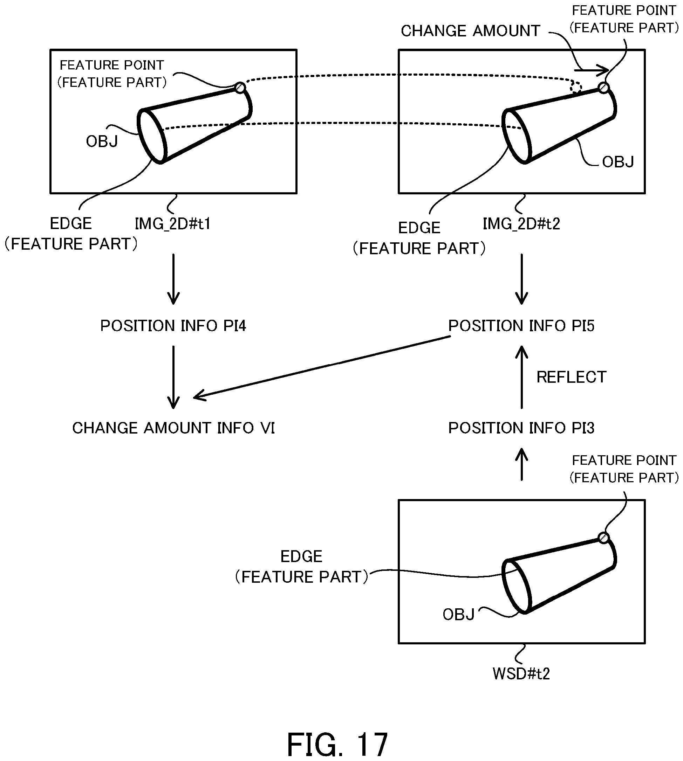

The tracking unit 3123 performs, as the tracking processing, a tracking processing using two image data IMG_2D#t1 and IMG_2D#t2 generated by the imaging apparatus 21 imaging the object OBJ at a first time t1 and a second time t2 that is after the first time t1, respectively. The tracking processing using the two image data IMG_2D#t1 and IMG_2D#t2 is a tracking processing for tracking, in the image data IMG_2D#t2, at least one feature part that is the same as at least one feature part (for example, at least one of the feature point and the edge) of the object OBJ included in the image data IMG_2D#t1, as illustrated in FIG. 17. Note that the tracking processing itself may be the same as an existing tracking processing. For this reason, a detailed description of the tracking processing is omitted, however, an overview thereof will be described below.

The tracking unit 3123 calculates a change amount of the position of at least one feature part between the first time t1 and the second time t2 by performing the tracking processing. Specifically, the tracking unit 3123 generates position information PI4 indicating a position of at least one feature part of the object OBJ at the first time t1 based on the image data IMG_2D#t1 at the first time t1. For example, the tracking unit 3123 may generate the position information PI4 indicating the position of at least one feature part in at least one of the X-axis direction (2D) and the Y-axis direction (2D) in the 2D imaging coordinate system. Furthermore, the tracking unit 3123 generates position information PI5 indicating a position of at least one feature part of the object OBJ at the second time t2 based on the image data IMG_2D#t2 at the second time t2. For example, the tracking unit 3123 may generate the position information PI5 indicating the position of at least one feature part in at least one of the X-axis direction (2D) and the Y-axis direction (2D) in the 2D imaging coordinate system. Incidentally, in the below-described description, for convenience of description, an example in which each of the position information PI4 and PI5 indicates the position of the feature part in each of the X-axis direction (2D) and the Y-axis direction (2D) will be described. Then, the tracking unit 3123 calculates the change amount of at least one of the position and the pose of the object OBJ between the first time t1 and the second time t2 based on the position information PI4 and PI5. As a result, the tracking unit 3123 generates change amount information VI indicating the change amount of at least one of the position and the pose of the object OBJ between the first time t1 and the second time t2.

Incidentally, in the present example embodiment, the example in which the position-pose calculation unit 312 calculates both of the position and the pose of the object OBJ is described as described above. In this case, the tracking unit 3123 may generate the change amount information VI indicating the change amounts of both of the position and the pose of the object OBJ. In the below-described description, for convenience of description, an example in which the tracking unit 3123 generates the change amount information VI indicating the change amounts of both of the position and the pose of the object OBJ will be described.

The tracking unit 3123 may calculate the change amount of the position of the object OBJ in the 2D imaging coordinate system. The tracking unit 3123 may calculate, as the change amount of the position of the object OBJ in the 2D imaging coordinate system, at least one of a change amount ΔTx(2D) of the position Tx(2D) of the object OBJ in the X-axis direction(2D), a change amount ΔTy(2D) of the position Ty(2D) of the object OBJ in the Y-axis direction(2D), and a change amount ΔTz(2D) of the position Tz(2D) of the object OBJ in the Z-axis direction(2D). The tracking unit 3123 may calculate, as the change amount of the pose of the object OBJ in the 2D imaging coordinate system, at least one of a change amount ΔRx(2D) of the pose Rx(2D) of the object OBJ around the X-axis(2D), a change amount ΔRy(2D) of the pose Ry(2D) of the object OBJ around the Y-axis(2D), and a change amount ΔRz(2D) of the pose Rz(2D) of the object OBJ around the Z-axis(2D).

Alternatively, the tracking unit 3123 may calculate the change amount of the position of the object OBJ in the 3D imaging coordinate system. The tracking unit 3123 may calculate, as the change amount of the position of the object OBJ in the 3D imaging coordinate system, at least one of a change amount ΔTx(3D) of the position Tx(3D) of the object OBJ in the X-axis direction(3D), a change amount ΔTy(3D) of the position Ty(3D) of the object OBJ in the Y-axis direction(3D), and a change amount ΔTz(3D) of the position Tz(3D) of the object OBJ in the Z-axis direction(3D). The tracking unit 3123 may calculate, as the change amount of the pose of the object OBJ in the 3D imaging coordinate system, at least one of a change amount ΔRx(3D) of the pose Rx(3D) of the object OBJ around the X-axis(3D), a change amount ΔRy(3D) of the pose Ry(3D) of the object OBJ around the Y-axis(3D), and a change amount ΔRz(3D) of the pose Rz(3D) of the object OBJ around the Z-axis(3D).

Alternatively, the tracking unit 3123 may calculate the change amount of the position of the object OBJ in the global imaging coordinate system. The tracking unit 3123 may calculate, as the change amount of the position of the object OBJ in the global imaging coordinate system, at least one of a change amount ΔTx(GL) of the position Tx(GL) of the object OBJ in the X-axis direction(GL), a change amount ΔTy(GL) of the position Ty(GL) of the object OBJ in the Y-axis direction(GL), and a change amount ΔTz(GL) of the position Tz(GL) of the object OBJ in the Z-axis direction(GL). The tracking unit 3123 may calculate, as the change amount of the pose of the object OBJ in the GL imaging coordinate system, at least one of a change amount ΔRx(GL) of the pose Rx(GL) of the object OBJ around the X-axis(GL), a change amount ΔRy(GL) of the pose Ry(GL) of the object OBJ around the Y-axis(GL), and a change amount ΔRz(GL) of the pose Rz(GL) of the object OBJ around the Z-axis(GL).

Incidentally, there is a possibility that at least one of the position and the pose of the object OBJ in the 2D imaging coordinate system changes when the object OBJ moves in a period from the first time t1 to the second time t2. Furthermore, there is a possibility that at least one of the position and the pose of the object OBJ in the 2D imaging coordinate system changes even when the imaging apparatus 21 that images the object OBJ moves in the period from the first time t1 to the second time t2. Therefore, the change amount of the position of the object OBJ calculated by the tracking unit 3123 may be considered to be equivalent to a change amount of a relative position between the object OBJ and the imaging apparatus 21. Similarly, the change amount of the pose of the object OBJ calculated by the tracking unit 3123 may be considered to be equivalent to a change amount of a relative pose between the object OBJ and the imaging apparatus 21.

Especially in the present example embodiment, the tracking unit 3123 generates the change amount information VI based on not only the two image data IMG_2D#t1 and IMG_2D#t2, but also the three-dimensional position data WSD. Specifically, the tracking unit 3123 generates the change amount information VI based on not only the two image data IMG_2D#t1 and IMG_2D#t2 generated by the imaging apparatus 22 imaging the object OBJ at the first time t1 and the second time t2, respectively, but also the image data IMG_3D generated by the imaging apparatus 22 imaging the object OBJ at a third time t3.

Especially in the present example embodiment, the third time t3 at which the imaging apparatus 22 images the object OBJ for the tracking processing is the same time as the second time t2 at which the imaging apparatus 21 images the object OBJ for the tracking processing. Namely, the tracking unit 3123 generates the change amount information VI based on not only the two image data IMG_2D#t1 and IMG_2D#t2, but also the three-dimensional position data WSD that is generated from the image data IMG_3D generated by the imaging apparatus 22 imaging object OBJ at the third time t3 that is the same as the second time t2.

Here, a state in which "the second time t2 and the third time t3 are the same time" may include a state in which "the second time t2 and the third time t3 are exactly the same time literally". The state in which "the second time t2 and the third time t3 are the same time" may include a state in which "the second time t2 and the third time t3 are not exactly the same time, but the second time t2 and the third time t3 are allowed to be considered to be substantially the same time because a difference in time between the second time t2 and the third time t3 is smaller than an allowable upper limit value". Here, the allowable upper limit value may be an allowable upper limit value based on the control error of the robot arm 12. For example, there is a possibility that the difference in time between the second time t2 and the third time t3 causes an error in the calculated result of at least one of the position and the pose of the object OBJ described below (namely, decreases the accuracy of at least one of the calculated position and pose of the object OBJ). In this case, there is a possibility that the error in the calculated result of at least one of the position and the pose of the object OBJ causes the control error of the robot arm 12. There is a possibility that the control error of the robot arm 12 results in the movement error of the end effector 13, and the end effector 13 cannot appropriately perform the predetermined process on the object OBJ. Incidentally, it can be said that the allowable upper limit value is the allowable upper limit value of the movement error of the end effector 13 by the robot arm 12. Moreover, for example, even in a case where the synchronization error in the imaging processing of the imaging apparatuses 21 and 22 causes the difference in time between the second time t2 and the third time t3, the second time t2 and the third time t3 may be considered to be substantially the same time. Incidentally, the synchronization error in the imaging processing of the imaging apparatuses 21 and 22 may be the synchronization control error in the imaging processing of the imaging apparatuses 21 and 22 by the control apparatus 3.

However, the second time t2 and the third time t3 may be different times. The state in which "the second time t2 and the third time t3 are the different times" may include a state in which "the second time t2 and the third time t3 are not allowed to be considered to be substantially the same time because the difference in time between the second time t2 and the third time t3 is larger than the allowable upper limit value".

In the present example embodiment, in a case where the imaging apparatuses 21 and 22 image the object OBJ in the period during which the object OBJ and each of the imaging apparatuses 21 and 22 are being relatively displaced, the imaging apparatuses 21 and 22 may image the object OBJ so that the second time t2 and the third time t3 are the same time. Namely, in a case where the imaging apparatuses 21 and 22 image the object OBJ in the period during which the object OBJ and each of the imaging apparatuses 21 and 22 are being relatively displaced, the control apparatus 3 may control the imaging apparatuses 21 and 22 so that the second time t2 and the third time t3 are the same time. The reason for this will be described when an effect of the robot system SYS is described.

On the other hand, in a case where the imaging apparatuses 21 and 22 image the object OBJ in a period during which the object OBJ and each of the imaging apparatuses 21 and 22 are not being relatively displaced, the imaging apparatuses 21 and 22 may not image the object OBJ so that the second time t2 and the third time t3 are the same time. Namely, the control apparatus 3 may not control the imaging apparatuses 21 and 22 so that the second time t2 and the third time t3 are the same time. For example, the imaging apparatuses 21 and 22 may image the object OBJ so that the second time t2 and the third time t3 are different times. Namely, the control apparatus 3 may control the imaging apparatuses 21 and 22 so that the second time t2 and the third time t3 are different times. Incidentally, in a case where the imaging apparatuses 21 and 22 image the object OBJ in a period during which the object OBJ and each of the imaging apparatuses 21 and 22 are not being relatively displaced, the imaging apparatuses 21 and 22 may image the object OBJ so that the second time t2 and the third time t3 are the same time. Namely, the control apparatus 3 may control the imaging apparatuses 21 and 22 so that the second time t2 and the third time t3 are the same time.

In order to generate the change amount information VI based on the three-dimensional position data WSD, the tracking unit 3123 firstly generates position information PI3 indicating the position of at least one feature part of the object OBJ based on the three-dimensional position data WSD. Since the three-dimensional position data WSD is generated from the image data IMG_3D generated by the imaging apparatus 22 imaging the object OBJ at the third time t3, the tracking unit 3123 generates the position information PI3 indicating the position of at least one feature part of the object OBJ at the third time t3 based on the three-dimensional position data WSD.

In the present example embodiment, the tracking unit 3123 may calculate the position of at least one feature part of the object OBJ in the Z-axis direction (3D) of the 3D imaging coordinate system. In this case, the tracking unit 3123 may calculate the position of at least one feature part of the object OBJ in the Z-axis direction (3D) of the 3D imaging coordinate system based on the three-dimensional position of each of the plurality of points of the object OBJ in the 3D imaging coordinate system indicated by the three-dimensional position data WSD. As a result, the tracking unit 3123 may generate the position information PI3 indicating the position of at least one feature part of the object OBJ in the Z-axis direction (3D).

Alternatively, the tracking unit 3123 may calculate the position of at least one feature part of the object OBJ in the Z-axis direction (2D) of the 2D imaging coordinate system. In this case, the tracking unit 3123 may transform the three-dimensional position of each of the plurality of points of the object OBJ in the 3D imaging coordinate system indicated by the three-dimensional position data WSD to the three-dimensional position of each of the plurality of points of the object OBJ in the 2D imaging coordinate system by using the above-described coordinate system information (for example, the transformation matrix for transforming the position in either one coordinate system of the 2D imaging coordinate system and the 3D imaging coordinate system to the position in the other one coordinate system of the 2D imaging coordinate system and the 3D imaging coordinate system). Then, the tracking unit 3123 may calculate the position of at least one feature part of the object OBJ in the Z-axis direction (2D) based on the three-dimensional position of each of the plurality of points of the object OBJ in the 2D imaging coordinate system. As a result, the tracking unit 3123 may generate the position information PI3 indicating the position of at least one feature part of the object OBJ in the Z-axis direction (2D).

Then, the tracking unit 3123 generates the change amount information VI based on the position information PI4 and PI5 generated from the two image data IMG_2D#t1 and IMG_2D#t2, respectively, and the position information PI3 generated from the three-dimensional position data WSD. Specifically, the tracking unit 3123 reflects the position information PI3 indicating the position of at least one feature part of the object OBJ at the third time t3 that is the same as (but in some cases different from) the second time t2 to the position information PI5 indicating the position of at least one feature part of the object OBJ at the second time t2. Specifically, the position information PI5 indicates the position of the feature part in each of the X-axis direction (2D) and the Y-axis direction (2D) as described above, and the position information PI3 indicates the position of the feature part in the Z-axis direction (2D) or the Z-axis direction (3D) as described above. In this case, the tracking unit 3123 may add the position of the feature part in the Z-axis direction (2D) or the Z-axis direction (3D) indicated by the position information PI3 to the position information PI5 that does not indicate the position of the feature part in the Z-axis direction (2D). Namely, the tracking unit 3123 reflects the position information PI3 to the position information PI5 so that the position information PI5 becomes information that indicates not only the position of the feature part in each of the X-axis direction (2D) and the Y-axis direction (2D) calculated from the image data IMG_2D, but also the position of the feature part in the Z-axis direction (2D) or the Z-axis direction (3D) calculated from the three-dimensional position data WSD.

In a case where the position information PI3 indicates the position of the feature part in the Z-axis direction (2D), both of the position information PI5 and the position information PI3 indicate the position in the 2D imaging coordinate system. Namely, the coordinate system of the position indicated by the position information PI5 is the same as the coordinate system of the position indicated by the position information PI3. In this case, the tracking unit 3123 may add the position information PI3, which indicates the position of the feature part in the 2D imaging coordinate system, to the position information PI5, which indicates the position of the feature part in the 2D imaging coordinate system, as it is.

On the other hand, in a case where the position information PI3 indicates the position of the feature part in the Z-axis direction (3D), the position information PI3 indicates the position in the 3D imaging coordinate system, but the position information PI5 indicates the position in the 2D imaging coordinate system. Namely, the coordinate system of the position indicated by the position information PI5 is different from the coordinate system of the position indicated by the position information PI3. In this case, the tracking unit 3123 may add the position information PI3 to the position information PI5 after transforming one of the position information PI3 and PI5 so that the coordinate system of the position indicated by the position information PI5 is the same as the coordinate system of the position indicated by the position information PI3. For example, the tracking unit 3123 may transform the position of the feature part in the 2D imaging coordinate system indicated by the position information PI5 to the position of the feature part in the 3D imaging coordinate system by using the above-described coordinate system information (for example, the transformation matrix for transforming the position in either one coordinate system of the 2D imaging coordinate system and the 3D imaging coordinate system to the position in the other one coordinate system of the 2D imaging coordinate system and the 3D imaging coordinate system). The tracking unit 3123 may add the position information PI3, which has been transformed to indicate the position of the feature part in the 3D imaging coordinate system, to the position information PI5 indicating the position of the feature part in the 3D imaging coordinate system.

Then, the tracking unit 3123 generates the change amount information VI based on the position information PI4 and the position information PI5 to which the position information PI3 has been reflected. Namely, the tracking unit 3123 calculates the change amount of at least one of the position and the pose of the object OBJ between the first time t1 and the second time t2 based on the position information PI4 and the position information PI5 to which the position information PI3 has been reflected.

Specifically, the position information PI4 indicates the positions of the feature parts in each of the X-axis direction and the Y-axis direction as described above. On the other hand, the position information PI5 indicates the position of the feature part in each of the X-axis direction, the Y-axis direction, and the Z-axis direction. In this case, a processing for calculating the change amount information VI, which indicates the change amounts of the position and the pose of the object OBJ, may be considered to be substantially equivalent to a processing for solving a PnP (Perspective n Point) problem. Specifically, a general PnP problem is a problem of estimating a position and a pose (specifically, a translation matrix and a rotation matrix) of the imaging apparatus 21 or 22, which image the object OBJ from a relationship between positions (three-dimensional positions) of n feature parts of the object OBJ existing in a three-dimensional space and positions (two-dimensional positions) of the n feature parts of the object OBJ existing in a two-dimensional image. The estimated translation matrix and rotation matrix is usable to transform the position and the pose of the object OBJ existing in the three-dimensional space to the position and the pose of the object OBJ in the two-dimensional image or conversely transforming the position and the pose of the object OBJ in the two-dimensional image to the position and the pose of the object OBJ existing in the three-dimensional space. Therefore, in the present example embodiment, the tracking unit 3123 may set, as the PnP problem, a problem of estimating a translation matrix and a rotation matrix, which is necessary for transforming the position and the pose of the object OBJ at the first time t1 to the position and the pose of the object OBJ at the second time t2 from a relationship between the position information PI4, which indicates the positions (the two-dimensional positions) of the n feature parts of the object OBJ at the first time t1, and the position information PI5, which indicates the positions (the three-dimensional positions) of the n feature parts of the object OBJ at the second time t2. In this case, the tracking unit 3123 may estimate the translation matrix and the rotation matrix by solving the PnP problem. Then, the tracking unit 3123 may calculate the change amount of the position of the object OBJ between the first time t1 and the second time t2 based on the estimated translation matrix. The tracking unit 3123 may calculate the change amount of the pose of the object OBJ between the first time t1 and the second time t2 based on the estimated rotation matrix.

Incidentally, a method of calculating the change amounts of the position and the pose of the object OBJ is not limited to the tracking processing using the two image data IMG_2D#t1 and IMG_2D#t2 (furthermore, the three-dimensional position data WSD, if necessary). The tracking unit 3123 may calculate the change amounts of the position and the pose of the object OBJ by using another well-known method of calculating the change amount of the position of the object OBJ by using the two image data IMG_2D#t1 and IMG_2D#t2 (furthermore, the three-dimensional position data WSD, if necessary). For example, the method of calculating the change amounts of the position and the pose of the object OBJ may be a method of calculating the change amounts of the position and the pose of the object OBJ based on the two image data IMG_2D#t1 and IMG_2D#t2 (furthermore, the three-dimensional position data WSD, if necessary) by the machine learning or the deep learning. In this case, a prediction model, which outputs the change amounts of the position and the pose of the object OBJ when the two image data IMG_2D#t1 and IMG_2D#t2 (furthermore, the three-dimensional position data WSD, if necessary) are input thereto, may be built in advance by the machine learning or the deep learning, and the change amounts of the position and the pose of the object OBJ may be calculated by inputting the two image data IMG_2D#t1 and IMG_2D#t2 (furthermore, the three-dimensional position data WSD, if necessary) to this prediction model. The tracking unit 3123 may include this prediction model.

Each time the change amount information VI is calculated, the tracking unit 3123 outputs the change amount information VI to the coordinate transformation unit 3125. As one example, the tracking unit 3123 may calculate all of the change amounts of the 6DOF positions and poses (namely, the change amount ΔTx(2D), the change amount ΔTy(2D), the change amount ΔTz(2D), the change amount ΔRx(2D), the change amount ΔRy(2D), and the change amount ΔRz(2D), or the change amount ΔTx(3D), the change amount ΔTy(3D), the change amount ΔTz(3D), the change amount ΔRx(3D), the change amount ΔRy(3D), and the change amount ΔRz(3D)), and output the change amount information VI indicating the calculated change amounts of the 6DOF positions and poses to the coordinate transformation unit 3125. As another example, the tracking unit 3123 may calculate a part the change amounts of the 6DOF positions and poses, and output the change amount information indicating a part of the change amounts of the 6DOF positions calculated to the coordinate transformation unit 3125.

The tracking unit 3123 may calculate the change amounts of the position and the pose of the object OBJ in a predetermined tracking cycle. Namely, the tracking unit 3123 may calculate the change amounts of the position and the pose of the object OBJ each time a period corresponding to the tracking cycle elapses. Conversely, it may be considered that the period corresponding to the tracking cycle is required for the tracking unit 3123 to complete the tracking processing after starting it. In this case, the tracking unit 3123 may output the change amount information VI indicting the change amounts of the position and the pose of the object OBJ to the coordinate transformation unit 3125 in the predetermined tracking cycle.

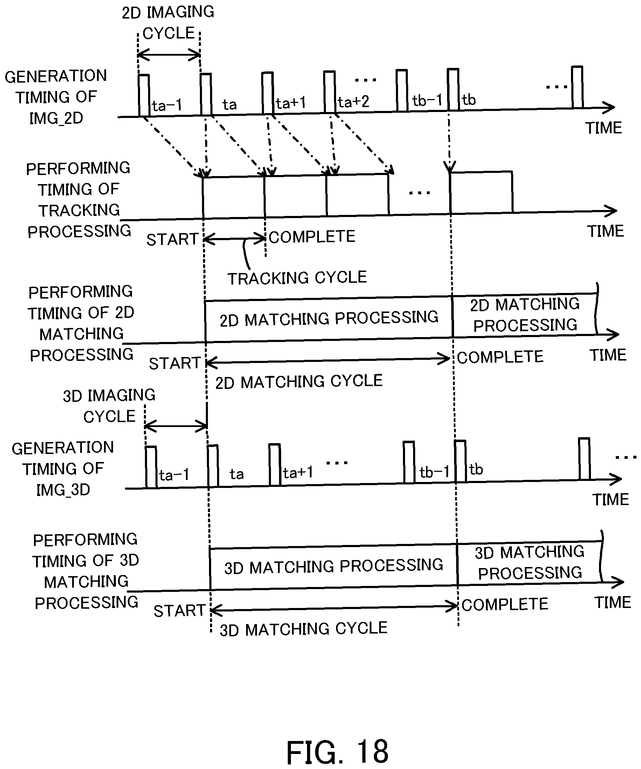

As illustrated in FIG. 18, the tracking cycle may be the same as the 2D imaging cycle corresponding to the 2D imaging rate at which the imaging apparatus 21 images the object OBJ. For example, the tracking cycle may be a cycle that allows the tracking unit 3123 to perform the tracking processing tens of times to hundreds of times (as one example, 500 times) per second. In this case, for example, as illustrated in FIG. 18, the tracking unit 3123 may perform the tracking processing using image data IMG_2D#ta and IMG_2D#ta-1, which are generated at a time ta and a time ta-1 that is before the time ta, and the three-dimensional position data WSD, which is generated by using image data IMG_3D#ta generated at the time ta, at the same time as or after the image data IMG_2D#ta is generated at the time ta. As a result, the change amounts of the position and the pose of the object OBJ between the times ta-1 and ta are calculated. Similarly, for example, as illustrated in FIG. 18, the tracking unit 3123 may perform the tracking processing using image data IMG_2D#ta+1 and IMG_2D#ta, which are generated at a time ta+1 and the time ta that is before the time ta+1, and the three-dimensional position data WSD, which is generated by using image data IMG_3D#ta+1 generated at the time ta+1, at the same time as or after the image data IMG_2D#ta+1 is generated at the time ta+1. As a result, the change amounts of the position and the pose of the object OBJ between the times ta and ta+1 are calculated. Note that a timing at which the image data IMG_2D is generated illustrated in FIG. 18 may be regarded as the timing at which the imaging apparatus 21 images the object OBJ to generate the image data IMG_2D.

Furthermore, as illustrated in FIG. 18, the tracking cycle may be the same as the 3D imaging cycle corresponding to the 3D imaging rate at which the imaging apparatus 22 images the object OBJ. In this case, for example, as illustrated in FIG. 18, the tracking unit 3123 may perform the tracking processing using the three-dimensional position data WSD, which is generated by using the image data IMG_3D#ta generated at the time ta, and the image data IMG_2D#ta and IMG_2D#ta-1, which are generated at the time ta and the time ta-1 that is before the time ta, at the same time as or after the image data IMG_3D#ta is generated at the time ta. As a result, the change amounts of the position and the pose of the object OBJ between the times ta-1 and ta are calculated. Similarly, for example, as illustrated in FIG. 18, the tracking unit 3123 may perform the tracking processing using the three-dimensional position data WSD, which is generated by using the image data IMG_3D#ta+1 generated at the time ta+1, and the image data IMG_2D#ta+1 and IMG_2D#ta, which are generated at the time ta+1 and the time ta that is before the time ta+1, at the same time as or after the image data IMG_3D#ta+1 is generated at the time ta+1. As a result, the change amounts of the position and the pose of the object OBJ between the times ta and ta+1 are calculated. Note that a timing at which the image data IMG_3D is generated illustrated in FIG. 18 may be regarded as the timing at which the imaging apparatus 22 images the object OBJ to generate the image data IMG_3D.

However, the tracking cycle may not be the same as the 2D imaging cycle. For example, the tracking cycle may be shorter than the 2D imaging cycle. For example, the tracking cycle may be longer than the 2D imaging cycle. Similarly, the tracking cycle may not be the same as the 3D imaging cycle. For example, the tracking cycle may be shorter than the 3D imaging cycle. For example, the tracking cycle may be longer than the 3D imaging cycle.

Furthermore, as illustrated in FIG. 18, the tracking cycle is shorter than the 2D matching cycle in which the above-described 2D matching unit 3121 performs the 2D matching processing. Namely, the 2D matching cycle is longer than the tracking cycle. Specifically, in the tracking processing, it is enough for the calculation apparatus 31 to perform a calculation focusing on the data part of the image data IMG_2D and the three-dimensional position data WSD that is related to the feature part of the object OBJ, however, in the matching processing, it is necessary for the calculation apparatus 31 to search for the object OBJ from the entire image data IMG_2D and three-dimensional position data WSD. As a result, a calculation amount required to perform the tracking processing is usually smaller than a calculation amount required to perform the matching processing. Therefore, the tracking cycle is usually shorter than the 2D matching cycle. Therefore, the tracking unit 3123 may perform the tracking processing a plurality of number of times after one 2D matching cycle starts and before the one 2D matching cycle ends. Namely, the tracking unit 3123 may perform the tracking processing a plurality of number of times before the 2D matching unit 3121 completes the 2D matching processing after starting it.

Incidentally, as illustrated in FIG. 18, the 2D matching cycle may be considered to be equivalent to a period from a time at which the object OBJ is imaged by the imaging apparatus 21 to a time at which the position-pose information POI1 is generated based on the image data IMG_2D. Similarly, the tracking cycle may be considered to be equivalent to a period from a time at which the object OBJ is imaged by the imaging apparatus 21 at the second time t2 to a time at which the change amount information VI is generated based on the two image data IMG_2D#t1 and IMG_2D#t2 generated at the first time t1 and the second time t2 and the three-dimensional position data WSD generated by using the image data IMG_3D generated at the second time t2. For example, in the example illustrated in FIG. 18, the tracking cycle may be considered to be equivalent to a period from a time at which the object OBJ is imaged by the imaging apparatus 21 at the time ta, which is one example of the second time t2, to a time at which the change amount information VI is generated based on the two image data IMG_2D generated at the time ta-1 and the time ta, which are examples of the first time t1 and the second time t2, and the three-dimensional position data WSD generated by using the image data IMG_3D#ta generated at the time ta.

Incidentally, the tracking cycle may be considered to be equivalent to a period from a time at which the object OBJ is imaged by the imaging apparatus 21 at the first time t1 to a time at which the change amount information VI is generated based on the two image data IMG_2D#t1 and IMG_2D#t2 generated at the first time t1 and the second time t2 and the three-dimensional position data WSD generated by using the image data IMG_3D generated at the second time t2. For example, in the example illustrated in FIG. 18, the tracking cycle may be considered to be equivalent to a period from a time at which the object OBJ is imaged by the imaging apparatus 21 at the time ta-1, which is one example of the first time t1, to a time at which the change amount information VI is generated based on the two image data IMG_2D generated at the time ta-1 and the time ta, which are examples of the first time t1 and the second time t2, and the three-dimensional position data WSD generated by using the image data IMG_3D#ta generated at the time ta. Even in this case, the tracking cycle may be shorter than the 2D matching cycle.

Moreover, in a case where the tracking cycle is shorter than the 2D matching cycle, as illustrated in FIG. 18, the tracking unit 3123 may perform the tracking processing by using the image data IMG_2D that is different from the image data IMG_2D used for the 2D matching processing. For example, as illustrated in FIG. 18, the 2D matching unit 3121 performs the 2D matching processing by using the image data IMG_2D generated at the time ta, and performs the 2D matching processing by using the image data IMG_2D generated at a time tb after the 2D matching processing using the image data IMG_2D generated at the time ta is completed. In this case, the tracking unit 3123 may perform the tracking processing by using the two image data IMG_2D, which are generated at two times different from the times ta and tb, and the three-dimensional position data WSD, which is generated by using the image data IMG_3D generated at a time different from the times ta and tb. For example, in the example illustrated in FIG. 18, the tracking unit 3123 may calculate the change amounts of the position and the pose of the object OBJ between times ta+1 and ta+2 by performing the tracking processing using two image data IMG_2D, which are generated at the two times ta+1 and ta+2 (alternatively, at any two times in a period between the time ta and the time tb), respectively, and the three-dimensional position data WSD, which is generated by using the image data IMG_3D generated at the time ta+2 (alternatively, at any time in the period between the time ta and the time tb).

However, the tracking unit 3123 may perform the tracking processing by using the image data IMG_2D used for the 2D matching processing. For example, in the example illustrated in FIG. 18, the tracking unit 3123 may calculate the change amounts of the position and the pose of the object OBJ between times ta and ta+1 by performing the tracking processing using two image data IMG_2D, which are generated at the two times ta and ta+1, respectively, and the three-dimensional position data WSD, which is generated by using the image data IMG_3D generated at the time ta+1.

Furthermore, as illustrated in FIG. 18, the tracking cycle is shorter than the 3D matching cycle in which the above-described 3D matching unit 3122 performs the 3D matching processing. Namely, the 3D matching cycle is longer than the tracking cycle. Therefore, the tracking unit 3123 may perform the tracking processing a plurality of number of times after one 3D matching cycle starts and before the one 3D matching cycle ends. Namely, the tracking unit 3123 may perform the tracking processing a plurality of number of times before the 3D matching unit 3122 completes the 3D matching processing after starting it.

Incidentally, as illustrated in FIG. 18, the 3D matching cycle may be considered to be equivalent to a period from a time at which the object OBJ is imaged by the imaging apparatus 22 to a time at which the position-pose information POI2 is generated based on the three-dimensional position data WSD generated by using the image data IMG_3D.

In a case where the tracking cycle is shorter than the 3D matching cycle, as illustrated in FIG. 18, the tracking unit 3123 may perform the tracking processing by using the three-dimensional position data WSD generated by using the image data IMG_3D that is different from the image data IMG_3D used for the 3D matching processing. For example, as illustrated in FIG. 18, the 3D matching unit 3122 performs the 3D matching processing by using the three-dimensional position data WSD generated from the image data IMG_3D generated at the time ta, and performs the 3D matching processing by using the three-dimensional position data WSD generated from the image data IMG_3D generated at the time tb after the 3D matching processing using the three-dimensional position data WSD generated from the image data IMG_3D generated at the time ta is completed. In this case, the tracking unit 3123 may perform the tracking processing by using the three-dimensional position data WSD, which is generated from the image data IMG_3D generated at a time different from the times ta and tb, and the two image data IMG_2D, which are generated at two times different from the times ta and tb. For example, in the example illustrated in FIG. 18, the tracking unit 3123 may calculate the change amounts of the position and the pose of the object OBJ between times ta+1 and ta+2 by performing the tracking processing using the three-dimensional position data WSD, which is generated from the image data IMG_3D generated at the time ta+2 (alternatively, at any time in the period between the time ta and the time tb), and two image data IMG_2D#ta+2 and IMG_2D#ta+1, which are generated at the time ta+2 and the time ta+1 that is before the time ta+2, respectively.

However, the tracking unit 3123 may perform the tracking processing by using the three-dimensional position data WSD generated by using the image data IMG_3D used for the 3D matching processing. For example, in the example illustrated in FIG. 18, the tracking unit 3123 may calculate the change amounts of the position and the pose of the object OBJ between times ta-1 and ta by performing the tracking processing using the three-dimensional position data WSD, which is generated from the image data IMG_3D generated at the time ta, and two image data IMG_2D#ta and IMG_2D#ta-1, which are generated at the time ta and the time ta-1 that is before the time ta, respectively.

However, the tracking cycle may not be shorter than the 2D matching cycle. For example, the tracking cycle may be the same as the 2D matching cycle. For example, the tracking cycle may be longer than the 2D matching cycle. Similarly, the tracking cycle may not be shorter than the 3D matching cycle. For example, the tracking cycle may be the same as the 3D matching cycle. For example, the tracking cycle may be longer than the 3D matching cycle.

Note that the tracking unit 3123 may not calculate the change amounts of the position and the pose of the object OBJ in the 2D imaging coordinate system between the first time t1 and the second time t2. For example, the tracking unit 3123 may calculate the position and the pose of the object OBJ in the 2D imaging coordinate system at each of the first time t1 and the second time t2 by performing the above-described matching processing for each of the two image data IMG_2D#t1 and IMG_2D#t2. Incidentally, since the position and the pose of the object OBJ are calculated at each of different times (for example, the first time t1 and the second time t2), it can be said that the processing performed by the tracking unit 3123 here is the tracking processing. Here, the tracking unit 3123 may perform the matching processing for each of the two image data IMG_2D #t1 and IMG_2D #t2 by using the feature parts that is fewer than the feature parts of the object OBJ used for the matching processing by the 2D matching unit 3121 described above. In this case, the tracking unit 3123 can perform the tracking processing in a shorter cycle than that of the matching processing by the 2D matching unit 3121 because a calculation time required for the matching processing can be reduced.

### (2-2-4) Position Calculation Processing performed by Coordinate Transformation Unit 3125

The coordinate transformation unit 3125 calculates the position of the object OBJ in the global coordinate system based on the result of the 2D matching processing a result of the tracking processing. Namely, the coordinate transformation unit 3125 calculates the position Tx(GL), the position Ty(GL), the position Tz(GL), the pose Rx(GL), the pose Ry(GL), and the pose Rz(GL) as the position of the object OBJ in the global coordinate system. The coordinate transformation unit 3125 generate position-pose information POI0 indicating the position Tx(GL), the position Ty(GL), the position Tz(GL), the pose Rx(GL), the pose Ry(GL), and the pose Rz(GL).

In order to calculate the position of the object OBJ in the global coordinate system, the coordinate transformation unit 3125 corrects the result of the matching processing based on the result of the tracking processing. Specifically, as illustrated in FIG. 10, the coordinate transformation unit 3125 acquires the position-pose information POI2 indicating the position Tx(3D), the position Ty(3D), the position Tz(3D), the pose Rx(3D), the pose Ry(3D), and the pose Rz(3D) from the 3D matching unit 3122 as the result of the matching processing. Furthermore, the coordinate transformation unit 3125 acquires the change amount information VI indicating the change amount ΔTx(2D), the change amount ΔTy(2D), the change amount ΔTz(2D), the change amount ΔRx(2D), the change amount ΔRy(2D), and the change amount ΔRz(2D), the change amount information VI indicating the change amount ΔTx(3D), the change amount ΔTy(3D), the change amount ΔTz(3D), the change amount ΔRx(3D), the change amount ΔRy(3D), and the change amount ΔRz(3D), or the change amount information VI indicating the change amount ΔTx(GL), the change amount ΔTy(GL), the change amount ΔTz(GL), the change amount ΔRx(GL), the change amount ΔRy(GL), and the change amount ΔRz(GL).

In this case, the coordinate transformation unit 3125 firstly makes the coordinate system of the position-pose information POI2 coincide with the coordinate system of the change amount information VI.

For example, in a case where the coordinate transformation unit 3125 acquires the change amount information VI indicating the change amount ΔTx(2D), the change amount ΔTy(2D), the change amount ΔTz(2D), the change amount ΔRx(2D), the change amount ΔRy(2D), and the change amount ΔRz(2D), the coordinate system of the position-pose information POI2 is the 3D imaging coordinate system, while the coordinate system of the change amount information VI is the 2D imaging coordinate system. In this case, the coordinate transformation unit 3125 may make the coordinate system of the position-pose information POI2 coincide with the coordinate system of the change amount information VI by transforming the position-pose information POI2, which indicates the position and the pose of the object OBJ in the 3D imaging coordinate system, to the position-pose information POI2, which indicates the position and the pose of the object OBJ in the 2D imaging coordinate system, by using the above-described coordinate system information (for example, a transformation matrix M(3Dto2D) for transforming the position in the 3D imaging coordinate system to the position in the 2D imaging coordinate system). Alternatively, the coordinate transformation unit 3125 may make the coordinate system of the position-pose information POI2 coincide with the coordinate system of the change amount information VI by transforming the change amount information VI, which indicates the change amounts of the position and the pose of the object OBJ in the 2D imaging coordinate system, to the change amount information VI, which indicates the change amounts of the position and the pose of the object OBJ in the 3D imaging coordinate system, by using the above-described coordinate system information (for example, a transformation matrix M(2Dto3D) for transforming the position in the 2D imaging coordinate system to the position in the 3D imaging coordinate system).

Incidentally, in a case where the above-described coordinate system information (for example, the transformation matrix M(3Dto2D) or the transformation matrix M(2Dto3D)) is used, the imaging apparatuses 21 and 22 may be arranged so that an origin of the 2D imaging coordinate system is as close as possible to an origin of the 3D imaging coordinate system. The imaging apparatuses 21 and 22 may be arranged so that the X-axis(2D) of the 2D imaging coordinate system is as close as possible to the X-axis(3D) of the 3D imaging coordinate system. The imaging apparatuses 21 and 22 may be arranged so that the Y-axis(2D) of the 2D imaging coordinate system is as close as possible to the Y-axis(3D) of the 3D image imaging coordinate system. The imaging apparatuses 21 and 22 may be arranged so that the Z-axis(2D) of the 2D imaging coordinate system is as close as possible to the Z-axis(3D) of the 3D image imaging coordinate system.

Alternatively, the coordinate transformation unit 3125 may make both of the coordinate system of the position-pose information POI2 and the coordinate system of the change amount information VI coincide with the global coordinate system. In this case, the coordinate transformation unit 3125 may transform the position-pose information POI2, which indicates the position and the pose of the object OBJ in the 3D imaging coordinate system, to the position-pose information POI2, which indicates the position and the pose of the object OBJ in the global coordinate system, by using a transformation matrix M(3DtoGL) for transforming the position in the 3D imaging coordinate system to the position in the global coordinate system. Furthermore, the coordinate transformation unit 3125 may transform the change amount information VI, which indicates the change amounts of the position and the pose of the object OBJ in the 2D imaging coordinate system, to the change amount information VI, which indicates the change amounts of the position and the pose of the object OBJ in the global coordinate system, by using the above-described coordinate system information (for example, a transformation matrix M(2DtoGL) for transforming the position in the 2D imaging coordinate system to the position in the global coordinate system).

Incidentally, the transformation matrix M(2DtoGL) may include a product of transformation matrices each of which reflects a change of the position coordinate of the imaging apparatus 21 due to the rotation of the link 121 around the axis defined by each joint 122 of the robot arm 12, for example. Similarly, the transformation matrix M(3DtoGL) may include a product of transformation matrices each of which reflects a change of the position coordinate of the imaging apparatus 22 due to the rotation of the link 121 around the axis defined by each joint 122 of the robot arm 12, for example. The transformation matrix may be a so-called rotation matrix, may be a matrix in which a translation component is included in the rotation matrix, or may be a matrix based on Euler angle. Incidentally, an existing transformation method may be used as the transformation of the coordinate of the robot arm using the transformation matrix itself, and therefore, a detailed description thereof is omitted.

For example, in a case where the coordinate transformation unit 3125 acquires the change amount information VI indicating the change amount ΔTx(3D), the change amount ΔTy(3D), the change amount ΔTz(3D), the change amount ΔRx(3D), the change amount ΔRy(3D), and the change amount ΔRz(3D), both of the coordinate system of the position-pose information POI2 and the coordinate system of the change amount information VI are the 3D imaging coordinate system. Namely, the coordinate system of the position-pose information POI2 and the coordinate system of the change amount information VI coincide with each other. In this case, the coordinate transformation unit 3125 may not perform a processing for making the coordinate system of the position-pose information POI2 coincide with the coordinate system of the change amount information VI.

Alternatively, in a case where the coordinate transformation unit 3125 acquires the change amount information VI indicating the change amount ΔTx(3D), the change amount ΔTy(3D), the change amount ΔTz(3D), the change amount ΔRx(3D), the change amount ΔRy(3D), and the change amount ΔRz(3D), the coordinate transformation unit 3125 may make both of the coordinate system of the position-pose information POI2 and the coordinate system of the change amount information VI coincide with the global coordinate system. In this case, the coordinate transformation unit 3125 may transform the position-pose information POI2, which indicates the position and the pose of the object OBJ in the 3D imaging coordinate system, to the position-pose information POI2, which indicates the position and the pose of the object OBJ in the global coordinate system, by using the transformation matrix M(3DtoGL). Furthermore, the coordinate transformation unit 3125 may transform the change amount information VI, which indicates the change amounts of the position and the pose of the object OBJ in the 3D imaging coordinate system, to the change amount information VI, which indicates the change amounts of the position and the pose of the object OBJ in the global coordinate system, by using the transformation matrix M(3DtoGL).

On the other hand, in a case where the coordinate transformation unit 3125 acquires the change amount information VI indicating the change amount ΔTx(GL), the change amount ΔTy(GL), the change amount ΔTz(GL), the change amount ΔRx(GL), the change amount ΔRy(GL), and the change amount ΔRz(GL), the coordinate system of the position-pose information POI2 is the 3D imaging coordinate system, while the coordinate system of the change amount information VI is the global coordinate system. In this case, the coordinate transformation unit 3125 may make the coordinate system of the position-pose information POI2 coincide with the coordinate system of the change amount information VI by transforming the position-pose information POI2, which indicates the position and the pose of the object OBJ in the 3D imaging coordinate system, to the position-pose information POI2, which indicates the position and the pose of the object OBJ in the global coordinate system, by using the transformation matrix M(3DtoGL). Furthermore, the coordinate transformation unit 3125 may transform the change amount information VI, which indicates the change amounts of the position and the pose of the object OBJ in the 3D imaging coordinate system, to the change amount information VI, which indicates the change amounts of the position and the pose of the object OBJ in the global coordinate system, by using the transformation matrix M(3DtoGL). However, the coordinate transformation unit 3125 may make the coordinate system of the position-pose information POI2 coincide with the coordinate system of the change amount information VI by transforming the change amount information VI, which indicates the change amounts of the position and the pose of the object OBJ in the global coordinate system, to the change amount information VI, which indicates the change amounts of the position and the pose of the object OBJ in the 3D imaging coordinate system, by using a transformation matrix M(GLto3D) for transforming the position in the global coordinate system to the position in the 3D imaging coordinate system).

After making the coordinate system of the position-pose information POI2 coincide with the coordinate system of the change amount information VI, the coordinate transformation unit 3125 corrects the position-pose information POI2 that is the result of the matching processing based on the change amount information VI that is the result of the tracking processing.

For example, in a case where both of the coordinate system of the position-pose information POI2 and the coordinate system of the change amount information VI are the 3D imaging coordinate system, the coordinate transformation unit 3125 may calculate a position Tx'(3D) of the object OBJ in the X-axis direction(3D) of the 3D imaging coordinate system by correcting the position Tx(3D) based on the change amount ΔTx(3D). The coordinate transformation unit 3125 may calculate a position Ty'(3D) of the object OBJ in the Y-axis direction(3D) of the 3D imaging coordinate system by correcting the position Ty(3D) based on the change amount ΔTy(3D). The coordinate transformation unit 3125 may calculate a position Tz'(3D) of the object OBJ in the Z-axis direction(3D) of the 3D imaging coordinate system by correcting the position Tz(3D) based on the change amount ΔTz(3D). The coordinate transformation unit 3125 may calculate a pose Rx'(3D) of the object OBJ around the X-axis(3D) of the 3D imaging coordinate system by correcting the pose Rx(3D) based on the change amount ΔRx(3D). The coordinate transformation unit 3125 may calculate a pose Ry'(3D) of the object OBJ around the Y-axis(3D) of the 3D imaging coordinate system by correcting the pose Ry(3D) based on the change amount ΔRy(3D). The coordinate transformation unit 3125 may calculate a pose Rz'(3D) of the object OBJ around the Z-axis(3D) of the 3D imaging coordinate system by correcting the pose Rz(3D) based on the change amount ΔRz(3D). In this case, the corrected position-pose information POI2 is position-pose information POI2' indicating the position Tx'(3D), the position Ty'(3D), the position Tz'(3D), the pose Rx'(3D), the pose Ry'(3D), and the pose Rz'(3D).

For example, in a case where both of the coordinate system of the position-pose information POI2 and the coordinate system of the change amount information VI are the 2D imaging coordinate system, the coordinate transformation unit 3125 may calculate a position Tx'(2D) of the object OBJ in the X-axis direction(2D) of the 2D imaging coordinate system by correcting the position Tx(2D) based on the change amount ΔTx(2D). The coordinate transformation unit 3125 may calculate a position Ty'(2D) of the object OBJ in the Y-axis direction(2D) of the 2D imaging coordinate system by correcting the position Ty(2D) based on the change amount ΔTy(2D). The coordinate transformation unit 3125 may calculate a position Tz'(2D) of the object OBJ in the Z-axis direction(2D) of the 2D imaging coordinate system by correcting the position Tz(2D) based on the change amount ΔTz(2D). The coordinate transformation unit 3125 may calculate a pose Rx'(2D) of the object OBJ around the X-axis(2D) of the 2D imaging coordinate system by correcting the pose Rx(2D) based on the change amount ΔRx(2D). The coordinate transformation unit 3125 may calculate a pose Ry'(2D) of the object OBJ around the Y-axis(2D) of the 2D imaging coordinate system by correcting the pose Ry(2D) based on the change amount ΔRy(2D). The coordinate transformation unit 3125 may calculate a pose Rz'(2D) of the object OBJ around the Z-axis(2D) of the 2D imaging coordinate system by correcting the pose Rz(2D) based on the change amount ΔRz(2D). In this case, the corrected position-pose information POI2 is position-pose information POI2' indicating the position Tx'(2D), the position Ty'(2D), the position Tz'(2D), the pose Rx'(2D), the pose Ry'(2D), and the pose Rz'(2D).

For example, in a case where both of the coordinate system of the position-pose information POI2 and the coordinate system of the change amount information VI are the global coordinate system, the coordinate transformation unit 3125 may calculate a position Tx'(GL) of the object OBJ in the X-axis direction(GL) of the global coordinate system by correcting the position Tx(GL) based on the change amount ΔTx(GL). The coordinate transformation unit 3125 may calculate a position Ty'(GL) of the object OBJ in the Y-axis direction(GL) of the global coordinate system by correcting the position Ty(GL) based on the change amount ΔTy(GL). The coordinate transformation unit 3125 may calculate a position Tz'(GL) of the object OBJ in the Z-axis direction(GL) of the global coordinate system by correcting the position Tz(GL) based on the change amount ΔTz(GL). The coordinate transformation unit 3125 may calculate a pose Rx'(GL) of the object OBJ around the X-axis(GL) of the global coordinate system by correcting the pose Rx(GL) based on the change amount ΔRx(GL). The coordinate transformation unit 3125 may calculate a pose Ry'(GL) of the object OBJ around the Y-axis(GL) of the global coordinate system by correcting the pose Ry(GL) based on the change amount ΔRy(GL). The coordinate transformation unit 3125 may calculate a pose Rz'(GL) of the object OBJ around the Z-axis(GL) of the global coordinate system by correcting the pose Rz(GL) based on the change amount ΔRz(GL). In this case, the corrected position-pose information POI2 is position-pose information POI2' indicating the position Tx'(GL), the position Ty'(GL), the position Tz'(GL), the pose Rx'(GL), the pose Ry'(GL), and the pose Rz'(GL).

Incidentally, in the below-described description, a processing performed by the coordinate transformation unit 3125 in a case where both of the coordinate system of the position-pose information POI2 and the coordinate system of the change amount information VI are the 3D imaging coordinate system will be described in order to omit a redundant description. However, even in a case where both of the coordinate system of the position-pose information POI2 and the coordinate system of the change amount information VI are the 2D imaging coordinate system, the coordinate transformation unit 3125 may perform an operation that is the same as the below-described operation. Specifically, a below-described description related to the operation of the coordinate transformation unit 3125 may be used as a description related to the operation of the coordinate transformation unit 3125 in a case where both of the coordinate system of the positional pose information POI2 and the change amount information VI are the 2D imaging coordinate system by replacing the word "3D" with the word "2D". Alternatively, even in a case where both of the coordinate system of the position-pose information POI2 and the coordinate system of the change amount information VI are the global coordinate system, the coordinate transformation unit 3125 may perform an operation that is the same as the below-described operation. Specifically, the below-described description related to the operation of the coordinate transformation unit 3125 may be used as a description related to the operation of the coordinate transformation unit 3125 in a case where both of the coordinate system of the positional pose information POI2 and the change amount information VI are the global coordinate system by replacing the words "3D" and "3D imaging coordinate system" with the words "GL" and "global coordinate system".

A processing for correcting the position-pose information POI2 based on the change amount information VI may include a processing for adding the change amount information VI to the position-pose information POI2. For example, the coordinate transformation unit 3125 may calculate the position Tx'(3D) by adding the change amount ΔTx(3D) to the position Tx(3D). The coordinate transformation unit 3125 may calculate the position Ty'(3D) by adding the change amount ΔTy(3D) to the position Ty(3D). The coordinate transformation unit 3125 may calculate the position Tz'(3D) by adding the change amount ΔTz(3D) to the position Tz(3D). The coordinate transformation unit 3125 may calculate the pose Rx'(3D) by adding the change amount ΔRx(3D) to the pose Rx(3D). The coordinate transformation unit 3125 may calculate the pose Ry'(3D) by adding the change amount ΔRy(3D) to the pose Ry(3D). The coordinate transformation unit 3125 may calculate the pose Rz'(3D) by adding the change amount ΔRz(3D) to the pose Rz(3D).

As described above, the tracking cycle, which is the cycle in which the change amount ΔTx(3D) is generated, is shorter than the 3D matching cycle, which is the cycle in which the position Tx(3D) is generated. In this case, the tracking unit 3123 calculates the change amount ΔTx(3D) a plurality of number of times after a new position Tx(3D) is generated and before the position Tx(3D) is generated next. In this case, the coordinate transformation unit 3125 may calculate the position Tx'(3D) based on the newly calculated position Tx(3D) and the newly calculated change amount ΔTx(3D) each time the change amount ΔTx(3D) is newly calculated. Specifically, the coordinate transformation unit 3125 may calculate the position Tx'(3D) by adding a total sum of the change amount(s) ΔTx(3D), which has been calculated till now after starting the matching processing for calculating the position Tx(3D), to the position Tx(3D) each time the change amount ΔTx(3D) is newly calculated. Alternatively, the coordinate transformation unit 3125 may calculate new position Tx'(3D) by adding the newly calculated change amount ΔTx(3D) to the position Tx'(3D) at that time (namely, the position Tx(3D) to which the calculated change amount(s) ΔTx(3D) has been added) each time the change amount ΔTx(3D) is newly calculated. Therefore, the total sum of the change amount(s) ΔTx(3D) added to the position Tx(3D) increases each time the change amount ΔTx(3D) is calculated.

In this case, an update frequency of the position Tx'(3D) is higher, compared to a comparison case in which the position Tx(3D) is used as it is as the position Tx'(3D). Specifically, in a case where the position Tx(3D) is used as it is as the position Tx'(3D), the update frequency of the position Tx'(3D) depends on the 3D matching cycle, which is the cycle in which the position Tx(3D) is calculated. On the other hand, in a case where the position Tx'(3D) is calculated by correcting the position Tx(3D) based on the change amount ΔTx(3D), the update frequency of the position Tx'(3D) depends on the tracking cycle, which is the cycle in which the change amount ΔTx(3D) is calculated. As a result, the update frequency of the position Tx'(3D) is higher because the tracking cycle is shorter than the 3D matching cycle. Since the position of the object OBJ in the global coordinate system is calculated based on the position Tx'(3D) as described below, the coordinate transformation unit 3125 can calculate the position of the object OBJ in the global coordinate system in a cycle that is the same as the tracking cycle. Therefore, the position-pose calculation unit 312 can calculate the position of the object OBJ in the global coordinate system in a shorter cycle. Namely, the position-pose calculation unit 312 can calculate the position of the object OBJ in the global coordinate system at a higher frequency (in other words, at a higher speed).

However, there is a possibility that the change amount ΔTx(3D) calculated by the tracking processing includes an error corresponding to a deviation amount from the actual position of the object OBJ. As a result, there is a possibility that the error included in the total sum of the change amount(s) ΔTx(3D), which keeps increasing each time the change amount ΔTx(3D) is calculated, becomes larger. As a result, there is a possibility that a difference between the position Tx'(3D) of the object OBJ calculated by the control apparatus 3 and the actual position of the object OBJ becomes larger each time the change amount ΔTx(3D) is added. On the other hand, the accuracy of the position calculated by the matching processing is higher than the accuracy of the position calculated by the tracking processing. Therefore, when the position Tx(3D) is newly calculated, the coordinate transformation unit 3125 may set a range of the change amount ΔTx(3D) added to the position Tx(3D) to calculate the position Tx'(3D). Specifically, when the change amount ΔTx(3D) at one time is newly calculated, the coordinate transformation unit 3125 may calculate the position Tx'(3D) by adding the total sum of the change amount(s) ΔTx(3D), which has been calculated till now from the one time, to the position Tx(3D). When the change amount ΔTx(3D) at one time is newly calculated, the coordinate transformation unit 3125 may calculate the position Tx'(3D) by adding the total sum of the change amount(s) ΔTx(3D), which has been calculated from a time at which the matching processing for calculating the position Tx(3D) at the one time starts to a current time, to the position Tx(3D).

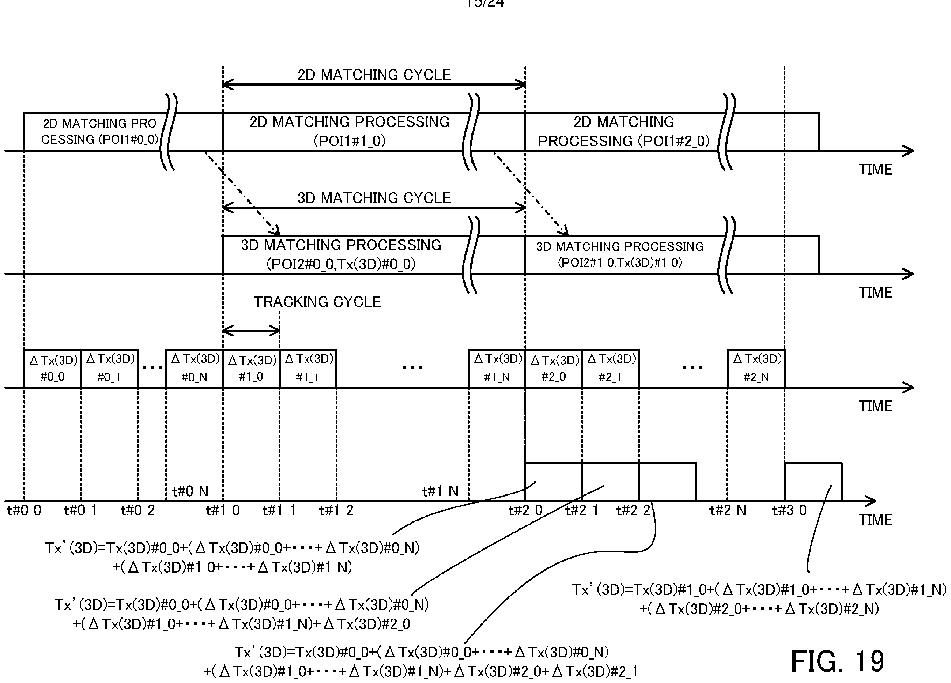

One example of a flow for calculating the position Tx'(3D) is illustrated in FIG. 19. FIG. 19 illustrates an example in which image data IMG_2D#0_0 and IMG_3D#0_0 are generated by the imaging apparatuses 21 and 22 imaging the object OBJ at a time t#0_0, and the 2D matching unit 312 starts the 2D matching processing at the time t#0_0. In this case, the 2D matching unit 3121 completes generating position-pose information POI1#0_0, which indicate the position and the pose of the object OBJ at the time t#0_0, at a time t#1_0 at which the 2D matching cycle elapses from the time t#0_0.

Furthermore, the three-dimensional position data generation unit 311 performs a processing for generating three-dimensional position data WSD#0_0 from the image data IMG_3D#0_0 in a period during which the 2D matching unit 3121 performs the 2D matching processing using the image data IMG_2D#0_0. For example, the three-dimensional position data generation unit 311 may start the processing for generating the three-dimensional position data WSD#0_0 from the image data IMG_3D#0_0 at the same time as the 2D matching unit 311 starts the 2D matching processing using the image data IMG_2D#0_0. For example, the three-dimensional position data generation unit 311 may start the processing for generating the three-dimensional position data WSD#0_0 from the image data IMG_3D#0_0 after the 2D matching unit 311 starts the 2D matching processing using the image data IMG_2D#0_0. As a result, the three-dimensional position data WSD#0_0 indicating the three-dimensional position of the object OBJ at the time t#0_0 is generated. Incidentally, the three-dimensional position data generation unit 311 may perform the processing for generating the three-dimensional position data WSD#0_0 from the image data IMG_3D#0_0 so as to complete generating the three-dimensional position data WSD#0_0 at a timing at which the 2D matching unit 3121 completes the 2D matching processing using the image data IMG_2D#0_0.

Then, the 3D matching unit 3122 starts the 3D matching processing based on the three-dimensional position data WSD#0_0 and the position-pose information POI1#0_0 at the time t#1_0. Namely, the 3D matching unit 3122 performs the position-pose determination processing for determining the initial position and the initial pose of the three-dimensional model WM3 based on the position-pose information POI1#0_0 generated at the time t#1_0. Then, the 3D matching unit 3122 performs the matching processing by using the three-dimensional position data WSD#0_0 and the three-dimensional model WM3 placed at the determined initial position with the determined initial pose.

Incidentally, in a case where the 3D matching processing does not include the position-pose determination processing as described above, the 3D matching unit 3122 may perform the position-pose determination processing based on the position-pose information POI1#0_0 at the time t#1_0. Then, after the initial position and the initial pose of the three-dimensional model WM3 are determined by the position-pose determination processing, the 3D matching unit 3122 may start the 3D matching processing using the three-dimensional position data WSD#0_0 and the three-dimensional model WM3 placed at the initial position with the initial pose. Therefore, in a case where the 3D matching processing does not include the position-pose determination processing, the 3D matching unit 3122 may start the 3D matching processing by considering a time required to complete the position-pose determination processing.

As a result, the 3D matching unit 3122 completes generating position-pose information POI2#0_0, which indicates the position and the pose of the object OBJ at the time t#0_0 (in the example illustrated in FIG. 19, calculating the position Tx(3D)#0_0 in the X-axis direction (3D)), at a time t#2_0 at which the 3D matching cycle elapses from the time t#1_0. Here, there is a possibility that the position and the pose of the object OBJ at the time t#2_0, at which the 3D matching unit 3122 completes generating the position-pose information POI2#0_0, are different from the position and the pose of the object OBJ at the time t#0_0 (namely, the time at which the matching processing for generating the position-pose information POI2#0_0 is started ) indicated by the position-pose information POI2#0_0. However, the change amounts of the position and the pose of the object from the time t#0_0 to the time t#2_0 have been calculated by the tracking processing. Therefore, the coordinate transformation unit 3125 adds the total sum of the change amount(s), which has been calculated from the time t#0_0 to the time t#2_0 corresponding to the current time, to the position-pose information POI2#0_0 indicating the position and the pose of the object at the time t#0_0. For example, the coordinate transformation unit 3125 calculates the position Tx'(3D) of the object OBJ at the time t#2_0 by adding the total sum of the change amount(s), which has been calculated from the time t#0_0 to the time t#2_0 corresponding to the current time, to the position Tx(3D) #0_0. In the example illustrated in FIG. 19, a change amount ΔTx(3D)#0_0 between the time t#0_0 and a time t#0_1, a change amount ΔTx(3D)#0_1 between the time t#0_1 and a time t#0_2, ..., a change amount ΔTx(3D)#0_N between a time t#0_N and the time t#1_0, a change amount ΔTx(3D)#1_0 between the time t#1_0 and a time t#1_1, a change amount ΔTx(3D)#1_1 between the time t10_1 and a time t#1_2, ..., a change amount ΔTx(3D)#1_N between a time t#1_N and the time t#2_0 are calculated by the tracking processing between the time t#0_0 and the time t#2_0. Therefore, after the time t#2_0, the position Tx(3D)#0_0 + the change amount ΔTx(3D)#0_0 + the change amount ΔTx(3D)#0_1 + ... + the change amount ΔTx(3D)#0_N + the change amount ΔTx(3D)#1_0 + the change amount ΔTx(3D)#1_1 + ... + the change amount ΔTx(3D)#1_N is used as the position Tx'(3D).

Then, a change amount ΔTx(3D)#2_0 between the time t#2_0 and a time t#2_1 is newly calculated by the tracking processing at the time t#2_1. In this case, the coordinate transformation unit 3125 further adds the newly calculated change amount ΔTx(3D)#2_0 to the current position Tx'(3D). Namely, after the time t#2_1, the position Tx(3D)#0_0 + the change amount ΔTx(3D)#0_0 + the change amount ΔTx(3D)#0_1 + ... + the change amount ΔTx(3D)#0_N + the change amount ΔTx(3D)#1_0 + the change amount ΔTx(3D)#1_1 + ... + the change amount ΔTx(3D)#1_N + the change amount ΔTx(3D)#2_0 is used as the position Tx'(3D).

Then, a change amount ΔTx(3D)#2_1 between the time t#2_1 and a time t#2_2 is newly calculated by the tracking processing at the time t#2_2. In this case, the coordinate transformation unit 3125 further adds the newly calculated change amount ΔTx(3D)#2_1 to the current position Tx'(3D). Namely, after the time t#2_1, the position Tx(3D)#0_0 + the change amount ΔTx(3D)#0_0 + the change amount ΔTx(3D)#0_1 + ... + the change amount ΔTx(3D)#0_N + the change amount ΔTx(3D)#1_0 + the change amount ΔTx(3D)#1_1 + ... + the change amount ΔTx(3D)#1_N + the change amount ΔTx(3D)#2_0 + the change amount ΔTx(3D)#2_1 is used as the position Tx'(3D).

On the other hand, at the time#1_0, the 2D matching unit 3121 completes generating the position-pose information POI1#0_0 indicating the position and the pose of the object OBJ at the time t#0_0, and then newly starts the 2D matching processing using image data IMG_2D#1_0 generated by the imaging apparatus 21 imaging the object OBJ at the time t#1_0. In this case, the 2D matching unit 3121 completes generating position-pose information POI1#1_0, which indicates the position and the pose of the object OBJ at the time t#1_0, at the time t#2_0 at which the 2D matching cycle elapses from the time t#1_0.

Furthermore, the three-dimensional position data generation unit 311 performs a processing for generating three-dimensional position data WSD#1_0 from the image data IMG_3D#1_0 in a period during which the 2D matching unit 3121 performs the 2D matching processing using the image data IMG_2D#1_0. For example, the three-dimensional position data generation unit 311 may start the processing for generating the three-dimensional position data WSD#1_0 from the image data IMG_3D#1_0 at the same time as the 2D matching unit 311 starts the 2D matching processing using the image data IMG_2D#1_0. For example, the three-dimensional position data generation unit 311 may start the processing for generating the three-dimensional position data WSD#1_0 from the image data IMG_3D#1_0 after the 2D matching unit 311 starts the 2D matching processing using the image data IMG_2D#1_0. As a result, the three-dimensional position data WSD#1_0 indicating the three-dimensional position of the object OBJ at the time t#1_0 is generated. Incidentally, the three-dimensional position data generation unit 311 may perform the processing for generating the three-dimensional position data WSD#1_0 from the image data IMG_3D#1_0 so as to complete generating the three-dimensional position data WSD#1_0 at a timing at which the 2D matching unit 3121 completes the 2D matching processing using the image data IMG_2D#1_0.

Then, the 3D matching unit 3122 starts the 3D matching processing based on the three-dimensional position data WSD#1_0 and the position-pose information POI1#1_0 at the time t#2_0. As a result, the 3D matching unit 3122 completes generating position-pose information POI2#1_0, which indicates the position and the pose of the object OBJ at the time t#1_0 (in the example illustrated in FIG. 19, calculating the position Tx(3D)#1_0 in the X-axis direction (3D)), at a time t#3_0 at which the 3D matching cycle elapses from the time t#2_0. Since the position-pose information POI2 ha been newly generated (in the example illustrated in FIG. 19, the position Tx(3D) has been newly calculated), the coordinate transformation unit 3125 newly sets the range of the change amount ΔTx(3D) added to the position Tx(3D) to calculate the position Tx'(3D). Specifically, since the position Tx(3D)#1_0 at the time t#1_0 has been newly calculated, the coordinate transformation unit 3125 newly sets the range of the change amount ΔTx(3D), which has been calculated from the time t#1_0 to the current time, as the range of the change amount ΔTx(3D) added to the position Tx(3D)#1_0. Therefore, after the time t#3_0, the position Tx(3D)#1_0 + the change amount ΔTx(3D)#1_0 + the change amount ΔTx(3D)#1_1 + ... + the change amount ΔTx(3D)#1_N + the change amount ΔTx(3D)#2_0 + the change amount ΔTx(3D)#2_1 + ... + the change amount ΔTx(3D)#2_N is used as the position Tx'(3D).

Then, the same operation is repeated.

Incidentally, although it is not illustrated in the drawings to omit a redundant description, the coordinate transformation unit 3125 calculates the position Ty'(3D), the position Tz'(3D), the pose Rx'(3D), the pose Ry'(3D), and the pose Rz'(3D) in the same manner as in a case where the positions Tx'(3D) is calculated. Namely, the coordinate transformation unit 3125 may calculate the position Ty'(3D) by adding the total sum of the change amount(s) ΔTy(3D), which has been calculated from a time at which the matching processing for calculating the position Ty(3D) at the one time starts to the current time, to the position Ty(3D) at the one time. The coordinate transformation unit 3125 may calculate the position Ty'(3D) by adding the total sum of the change amount(s) ΔTy(3D), which has been calculated till now from the one time, to the position Ty(3D) at the one time. Moreover, the coordinate transformation unit 3125 may calculate the position Tz'(3D) by adding the total sum of the change amount(s) ΔTz(3D), which has been calculated from a time at which the matching processing for calculating the position Tz(3D) at the one time starts to the current time, to the position Tz(3D) at the one time. The coordinate transformation unit 3125 may calculate the position Tz'(3D) by adding the total sum of the change amount(s) ΔTz(3D), which has been calculated till now from the one time, to the position Tz(3D) at the one time. Moreover, the coordinate transformation unit 3125 may calculate the pose Rx'(3D) by adding the total sum of the change amount(s) ΔRx(3D), which has been calculated from a time at which the matching processing for calculating the pose Rx(3D) at the one time starts to the current time, to the pose Rx(3D) at the one time. The coordinate transformation unit 3125 may calculate the pose Rx'(3D) by adding the total sum of the change amount(s) ΔRx(3D), which has been calculated till now from the one time, to the pose Rx(3D) at the one time. Moreover, the coordinate transformation unit 3125 may calculate the pose Ry'(3D) by adding the total sum of the change amount(s) ΔRy(3D), which has been calculated from a time at which the matching processing for calculating the pose Ry(3D) at the one time starts to the current time, to the pose Ry(3D) at the one time. The coordinate transformation unit 3125 may calculate the pose Ry'(3D) by adding the total sum of the change amount(s) ΔRy(3D), which has been calculated till now from the one time, to the pose Ry(3D) at the one time. Moreover, the coordinate transformation unit 3125 may calculate the pose Rz'(3D) by adding the total sum of the change amount(s) ΔRz(3D), which has been calculated from a time at which the matching processing for calculating the pose Rz(3D) at the one time starts to the current time, to the pose Rz(3D) at the one time. The coordinate transformation unit 3125 may calculate the pose Rz'(3D) by adding the total sum of the change amount(s) ΔRz(3D), which has been calculated till now from the one time, to the pose Rz(3D) at the one time.

Then, the coordinate transformation unit 3125 calculates the position Tx(GL), the position Ty(GL), the position Tz(GL), the pose Rx(GL), the pose Ry(GL), and the pose Rz(GL) of the object OBJ in the global coordinate system based on the position Tx'(3D), the position Ty'(3D), the position Tz'(3D), the pose Rx'(3D), the pose Ry'(3D), and the pose Rz'(3D). Namely, the coordinate transformation unit 3125 calculates the 6DOF positions of the object OBJ in the global coordinate system based on the 6DOF positions of the object OBJ in the 3D imaging coordinate system (alternatively, the 6DOF positions of the object OBJ the 2D imaging coordinate system in some cases). The coordinate transformation unit 3125 generates the position-pose information POI0 indicating the position Tx(GL), the position Ty(GL), the position Tz(GL), the pose Rx(GL), the pose Ry(GL), and the pose Rz(GL).

For example, the coordinate transformation unit 3125 may transform the 6DOF positions of the object OBJ in the 3D imaging coordinate system (alternatively, the 6DOF positions of the object OBJ the 2D imaging coordinate system) to the 6DOF positions of the object OBJ in the global coordinate system by using the transformation matrix M(3DtoGL) for transforming the position in the 3D imaging coordinate system (alternatively, the 3D imaging coordinate system) to the position in the global coordinate system.

However, in a case where the position-pose information POI2' indicating the position Tx'(GL), the position Ty'(GL), the position Tz'(GL), the pose Rx'(GL), the pose Ry'(GL), and the pose Rz'(GL) are generated as a result of a correction of the position-pose information POI2 based on the change amount information VI, the position-pose information POI2' may be used as the position-pose information POI0. In this case, the coordinate transformation unit 3125 may not necessarily perform the coordinate transformation based on the above-described transformation matrix M(3DtoGL).

### (3) Technical Effect of Robot System SYS

As described above, the control apparatus 3 calculates at least one of the position and the pose of the object OBJ in the global coordinate system by correcting the result of the matching processing based on the result of the tracking processing. Therefore, as described in detail below, the control apparatus 3 can calculate at least one of the position and the pose of the object OBJ in the global coordinate system at a shorter cycle (namely, at a higher frequency), compared to a case where at least one of the position and the pose of the object OBJ in the global coordinate system is calculated based on the result of the matching processing without using the result of the tracking processing. Namely, the position-pose calculation unit 312 can calculate at least one of the position and the pose of the object OBJ in the global coordinate system at a higher speed. As a result, the control apparatus 3 can generate (namely, update) the robot control signal and output it to the robot 1 at a higher frequency. Incidentally, it can be said that the control apparatus 3 can generate (update) the robot control signal and output it to the robot 1 at a higher speed.

For example, the control apparatus 3 may generate robot control signal each time at least one of the position and the pose of the object OBJ is calculated. In this case, the control apparatus 3 can generate the robot control signal at a cycle that is the same as a cycle at which at least one of the position and the pose of the object OBJ is calculated (for example, the above-described tracking cycle). As a result, the control apparatus 3 can output the robot control signal to the robot 1 at a cycle that is the same as the cycle at which at least one of the position and the pose of the object OBJ is calculated (for example, the above-described tracking cycle). If at least one of the position and the pose of the object OBJ in the global coordinate system is calculated based on the result of the matching processing without using the result of the tracking processing, the control apparatus 3 generates and outputs the robot control signal at a cycle that is the same as the 2D matching cycle or the 3D matching cycle (typically, a cycle that is shorter than the tracking cycle), which is the cycle at which at least one of the position and the pose of the object OBJ is calculated. Therefore, in the present example embodiment, the control apparatus 3 can generate (namely, update) the robot control signal and output it to the robot 1 at a higher frequency (at a higher speed), compared to this case. Incidentally, the control apparatus 3 may generate and output the robot control signal at a cycle that is different from the cycle at which the position of the object OBJ is calculated (for example, a cycle that is different from the above-described tracking cycle).

This effect is especially advantageous in a case where at least one of the robot 1 and object OBJ is moving (especially, the object OBJ and each of the imaging apparatuses 21 and 22 are being relatively displaced). This is because a period during which a difference between the position of the object OBJ calculated by the control apparatus 3 and the actual position of the object OBJ is large is longer as the frequency at which the position of the object OBJ is calculated is lower in a situation where at least one of the robot 1 and the object OBJ is moving. Similarly, a period during which a difference between the pose of the object OBJ calculated by the control apparatus 3 and the actual pose of the object OBJ is large is longer as the frequency at which the pose of the object OBJ is calculated is lower in a situation where at least one of the robot 1 and the object OBJ is moving. In the present example embodiment, since the control apparatus 3 calculates the position of the object OBJ in the global coordinate system at a higher frequency (at a higher speed), the difference between the position of the object OBJ calculated by the control apparatus 3 and the actual position of the object OBJ is relatively small. Similarly, since the control apparatus 3 calculates the pose of the object OBJ in the global coordinate system at a higher frequency (at a higher speed), the difference between the pose of the object OBJ calculated by the control apparatus 3 and the actual pose of the object OBJ is relatively small. Therefore, the control apparatus 3 can, in effect, calculate at least one of the position and the pose of the object OBJ with high accuracy by calculating at least one of the position and the pose of the object OBJ at a high frequency. As a result, the control apparatus 3 can appropriately generate (namely, update) the robot control signal, which is for controlling the robot 1 to perform the desired process on the object OBJ whose position and / or pose is calculated with high accuracy and at a high frequency, and output it to the robot 1. As a result, there is a low possibility that the movement of the robot 1 is different from an intended movement.

For example, in a case where the robot 1 holds the moving workpiece W as illustrated in FIG. 5A to FIG. 5D, the control apparatus 3 can control the movement of the robot 1 that follows the moving workpiece W (namely, generate and output the robot control signal) in accordance with a calculation cycle of at least one of the position and the pose of the object OBJ. Therefore, even in a case where the movement of the robot 1 is different from a desired movement for following the moving workpiece W, the movement of the robot 1 is corrected at a high frequency (at a high speed) in accordance with the calculation cycle of at least one of the position and the pose of the workpiece W. As one example, even in a case where the movement of the moving workpiece W is irregular, the movement of the robot 1 is corrected at a high frequency (at a high speed) in accordance with the irregular movement of the workpiece W. As another example, even in a case where the workpiece W moves at a high speed, the movement of the robot 1 is corrected at a high frequency (at a high speed) in accordance with the high-speed movement of the workpiece W. Therefore, the robot 1 can follow the moving workpiece W while reducing an unnecessary movement. As a result, the robot 1 can hold the moving workpiece W while reducing the unnecessary movement. Not limited to the example illustrated in FIG. 5A to FIG. 5D, the robot 1 can move relative to the object OBJ while reducing the unnecessary movement. Furthermore, since at least one of the position and the pose of the object OBJ is calculated at a high frequency, there is a low possibility that the object OBJ is out of the imaging range (the field of view) of the imaging unit 2 is reduced. Therefore, the robot 1 can move relative to the object OBJ accurately and at a high speed (for example, follow the object OBJ accurately and at a high speed) without losing sight of the object OBJ, and can perform the desired process on the object OBJ by the end effector 13.

Considering that the effect achievable by the robot system SYS is especially advantageous in a case where at least one of the robot 1 and the object OBJ is moving, the imaging apparatuses 21 and 22 may image the object OBJ in the period during which at least one of the robot 1 and the object OBJ is moving. Namely, the imaging apparatuses 21 and 22 may image the object OBJ at a timing (in other words, at a time point) in the period during which the imaging apparatuses 21 and 22 and the object OBJ are being relatively displaced. For example, the imaging apparatus 21 may generate the image data IMG_2D, which is used in the 2D matching processing described above, by imaging the object OBJ at a timing at which the imaging apparatus 21 and the object OBJ are being relatively displaced. For example, the imaging apparatus 22 may generate the image data IMG_3D , which is used in the 3D matching processing described above, by imaging the object OBJ at the timing at which the imaging apparatus 22 and the object OBJ are being relatively displaced. For example, the imaging apparatus 21 may generate the image data IMG_2D, which is used in the tracking processing described above, by imaging the object OBJ at each of the first time t1 and the second time t2, which are times in the period during which the imaging apparatus 21 and the object OBJ are being relatively displaced. For example, the imaging apparatus 21 may generate the image data IMG_3D, which is used in the tracking processing described above, by imaging the object OBJ at the third time t3, which is a time in the period during which the imaging apparatus 21 and the object OBJ are being relatively displaced.

Moreover, in the present example embodiment, the control apparatus 3 can determine, based on the result of the 2D matching processing (namely, the position-pose information POI1), at least one of the initial position and the initial pose of the three-dimensional model WM3 that is used to perform the 3D matching processing. As a result, the control apparatus 3 can determine the initial position and the initial pose of the three-dimensional model WM3 that allows a difference from the actual position and pose of the object OBJ is smaller than an allowable amount. The reason is as follows. Firstly, there is a lower possibility that the position-pose information POI1 acquired by the 2D matching processing lack information related to at least one of the position and the pose of the object OBJ than the position-pose information POI2 acquired by the 3D matching processing. This is because the 2D matching processing detects the object OBJ by using the image itself indicated by the image data IMG_2D, and therefore there is a low possibility intrinsically that the information related to at least one of the position and the pose of the object OBJ is lacked. Therefore, there is a high possibility that the object OBJ is successfully detected by the 2D matching processing. Namely, there is a high possibility that the object OBJ matching the two-dimensional model WM2 is detected by the 2D matching processing. In other words, there is a low possibility that an object that is different from the object OBJ matching the two-dimensional model WM2 is detected by the 2D matching processing. On the other hand, the 3D matching processing detects the object OBJ by using the three-dimensional position data WSD which may lack information of a part of the object OBJ (for example, the point cloud data which may lack a point cloud corresponding to a part of the object OBJ). Therefore, the lack of the data in the three-dimensional position data WSD (for example, the lack of the point cloud) has a significant impact on the success of the detection of the object OBJ by the 3D matching processing. Therefore, the possibility of the success of the detection of the object OBJ by the 3D matching processing is lower than the possibility of the success of the detection of the object OBJ by the 2D matching processing. Namely, the possibility that the object OBJ matching the three-dimensional model WM3 is detected by the 3D matching processing is lower than the possibility that the object OBJ matching the two-dimensional model WM2 is detected by the 2D matching processing. In other words, the possibility that an object that is different from the object OBJ matching the three-dimensional model WM3 is detected by the 3D matching processing is higher than the possibility that an object that is different from the object OBJ matching the two-dimensional model WM2 is detected by the 2D matching processing.

In the present example embodiment, at least one of the initial position and the initial pose of the three-dimensional model WM3 can be determined based on the result of the 2D matching processing, which has a lower possibility of detecting an object that is different from the object OBJ corresponding to the two-dimensional model WM2, considering this point. As a result, the control apparatus 3 can reliably determine the initial position and the initial pose of the three-dimensional model WM3 that allows the difference from the actual position and pose of the object OBJ, which should be detected by the 2D matching processing (furthermore, which should be detected by the 3D matching processing too), is smaller than an allowable amount. As a result, there is a lower possibility that an object that is different from the object OBJ corresponding to the three-dimensional model WM3 is detected by the 3D matching processing or the object OBJ corresponding to the three-dimensional model WM3 is not detected (a detection error occurs), compared to a case where at least one of the initial position and the initial pose of the three-dimensional model WM3 is not determined. This is because there is a higher possibility that an object that is different from the object OBJ corresponding to the three-dimensional model WM3 is detected by the 3D matching processing or the object OBJ corresponding to the three-dimensional model WM3 is not detected as the difference between the initial position and the initial pose of the three-dimensional model WM3 and the actual position and pose of the object OBJ is larger. Therefore, the control apparatus 3 can generate the position-pose information POI2 that indicates at least one of the position and the pose of the object OBJ corresponding to the three-dimensional model WM3 with higher accuracy, compared to a case where at least one of the initial position and the initial pose of the three-dimensional model WM3 is not determined.

Moreover, in the present example embodiment, the control apparatus 3 can determine at least one of the initial position and the initial pose of the three-dimensional model WM3, which is used to perform the 3D matching processing, based on the result of the 2D matching processing (namely, the position-pose information POI1). Here, the position-pose information POI1 acquired by the 2D matching processing indicates the positions of the object OBJ in the X-axis direction (2D) and the Y-axis direction (2D) with high accuracy due to a characteristic of the 2D matching processing using the two-dimensional image. Furthermore, the position-pose information POI1 indicates the pose of the object OBJ around the Z-axis (2D) with high accuracy due to the characteristic of the 2D matching processing using the two-dimensional image. On the other hand, the position-pose information POI1 indicates the position of the object OBJ in the Y-axis direction (2D) and the poses of the object OBJ around the X-axis (2D) and the Y-axis (2D) with some accuracy, which are not as accurate as the position of the object OBJ in the X-axis direction (2D) and the Y-axis direction (2D) and the pose of the object OBJ around the Z-axis (2D). Therefore, in the present example embodiment, the control apparatus 3 combines the 2D matching processing using the image data IMG_2D and the 3D matching processing using the three-dimensional position data WSD in order to calculate at least one of the position and the pose of the object OBJ with higher accuracy. Specifically, the control apparatus 3 determines at least one of the initial position and the initial pose of the three-dimensional model WM3 based on the position-pose information POI1. Therefore, there is a low possibility that the initial position of the three-dimensional model WM3 is significantly different from the actual position of the object OBJ in the 3D imaging coordinate system in which the 3D matching processing. Incidentally, especially, there is a high possibility that the initial position of the three-dimensional model WM3 is close to the actual position of the object OBJ in each of the X-axis direction (3D) and the Y-axis direction (3D). Moreover, there is a low possibility that the initial position of the three-dimensional model WM3 is significantly different from the actual position of the object OBJ in the Z-axis direction (3D). Similarly, there is a low possibility that the initial pose of the three-dimensional model WM3 is significantly different from the actual pose of the object OBJ in the 3D imaging coordinate system. Incidentally, especially, there is a high possibility that the initial pose of the three-dimensional model WM3 is close to the actual pose of the object OBJ around the Z-axis (3D). Moreover, there is a low possibility that the initial pose of the three-dimensional model WM3 is significantly different from the actual pose of the object OBJ around each of the X-axis (3D) and the Y-axis (3D). In this situation, the 3D matching unit 3122 performs the matching processing. As a result, the 3D matching unit 3122 can detect the object OBJ by the 3D matching processing accurately, compared to a case where the initial position and the initial pose of the three-dimensional model WM3 are not determined based on the position-pose information POI1. This is because the three-dimensional model WM3 is already positioned in the vicinity of the object OBJ indicated by the three-dimensional position data WSD. Furthermore, the 3D matching unit 3122 can make the feature part of the three-dimensional model WM3 be closer to the feature part of the object OBJ indicated by the three-dimensional position data WSD in the Z-axis direction (3D) accurately by using the three-dimensional position data WSD that indicates the position of the object OBJ in the Z-axis direction (3D) with high accuracy. Therefore, the 3D matching unit 3122 can generate the position-pose information POI2 that indicates at least one of the position and the pose of the object OBJ with higher accuracy, compared to the case where the three-dimensional position data WSD is not used. Especially, the 3D matching unit 3122 can generate the position-pose information POI2 that indicates the position Tz(3D), the pose Rx(3D) and the pose Ry(3D) with higher accuracy.

Here, in a case where at least one of the robot 1 and the object OBJ is moving (namely, the object OBJ and each of the apparatuses 21 and 22 are being relatively displaced) as described above, the 2D imaging time at which the imaging apparatus 21 images the object OBJ for the matching processing and the 3D imaging time at which the imaging apparatus 22 images the object OBJ for the matching processing may be set to be the same time, in order to improve the accuracy of the position-pose information POI2. Specifically, in a case where the 2D imaging time and the 3D imaging time are different times, the 3D matching unit 3122 determines, based on the position-pose information POI1 that indicates at least one of the position and the pose of the object OBJ at the 2D imaging time, at least one of the initial position and initial pose of the three-dimensional model WM3 for calculating the position of the object OBJ at the 3D imaging time, which is different from the 2D imaging time. However, in a case where at least one of the robot 1 and the object OBJ is moving, there is a high possibility that the position of the object OBJ at the 2D imaging time is different from the position of the object OBJ at the 3D imaging time. Therefore, in a case where the 2D imaging time and the 3D imaging time are different times, there is a high possibility that the initial position of the three-dimensional model WM3 determined based on the position of the object OBJ at the 2D imaging time is significantly different from the actual position of the object OBJ at the 3D imaging time. Similarly, there is a high possibility that the initial pose of the three-dimensional model WM3 determined based on the pose of the object OBJ at the 2D imaging time is significantly different from the actual pose of the object OBJ at the 3D imaging time. As a result, there is a possibility that the accuracy of the position-pose information POI2 generated by using the three-dimensional model WM3 is lower, compared to a case where the initial position and the pose of the three-dimensional model WM3 are the same as or close to the actual position and pose of the object OBJ. However, in a case where the 2D imaging time and the 3D imaging time are the same time, the position and the pose of the object OBJ at the 2D imaging time are the same as the position and the pose of the object OBJ at the 3D imaging time. Therefore, there is a low possibility that the initial position and the initial pose of the three-dimensional model WM3 are significantly different from the actual position and pose of the object OBJ. Therefore, the control apparatus 3 can prevent a decrease in the accuracy of the position-pose information POI2 by controlling the imaging apparatuses 21 and 22 so that the 2D imaging time and the 3D imaging time are the same time.

Incidentally, the state in which "the 2D imaging time and the 3D imaging time are the same time" may include the state in which "the 2D imaging time and the 3D imaging time are not exactly the same time, but the 2D imaging time and the 3D imaging time are allowed to be considered to be substantially the same time because the difference in time between the 2D imaging time and the 3D imaging time is smaller than the allowable upper limit value", as already described above. In this case, the allowable upper limit value for the difference in time between the 2D imaging time and the 3D imaging time may be set to an appropriate value that can realize a state in which the accuracy of the position-pose information POI2 is a desired accuracy. In other words, the allowable upper limit value for the difference in time between the 2D imaging time and the 3D imaging time may be set to an appropriate value that can realize a state in which a decreased amount of the accuracy of the position-pose information POI2 due to the difference in time between the 2D imaging time and the 3D imaging time is within an allowable range. For example, there is a possibility that the difference in time between the 2D imaging time and the 3D imaging time causes an error in the calculated result of at least one of the position and the pose of the object OBJ described below (namely, decrease the accuracy of the position-pose information POI2). In this case, if the decreased amount of the accuracy of the position-pose information POI2 exceeds the allowable range, there is a possibility that the control error of the robot arm 12 occurs. There is a possibility that the control error of the robot arm 12 results in the movement error of the end effector 13, and the end effector 13 cannot appropriately perform the predetermined process on the object OBJ. Therefore, the allowable upper limit value for the difference in time between the 2D imaging time and the 3D imaging time may be set to an appropriate value based on the accuracy of the position-pose information POI2.

However, in a case where the object OBJ and each of the apparatuses 21 and 22 are not being relatively displaced (for example, the robot 1 and the object OBJ are not moving), the position of the object OBJ at the 2D imaging time is the same as the position of the object OBJ at the 3D imaging time even in a case where the 2D imaging time and the 3D imaging time are different times. Therefore, there is a low possibility that the initial position and the initial pose of the three-dimensional model WM3 are significantly different from the actual position and pose of the object OBJ. Therefore, the control apparatus 3 may not control the imaging apparatuses 21 and 22 so that the 2D imaging time and the 3D imaging time are the same time. For example, the control apparatus 3 may control the imaging apparatuses 21 and 22 so that the 2D imaging time and the 3D imaging time are different times. Even in this case, the accuracy of the position-pose information POI2 rarely decreases due to the difference in time between the 2D imaging time and the 3D imaging time.

Moreover, in the present example embodiment, the control apparatus 3 can perform the tracking processing by using the three-dimensional position data WSD in addition to the two image data IMG_2D#t1 and IMG_2D#t2. Especially, the control apparatus 3 can perform the tracking processing based on the position information PI3 that indicates the position of the feature part of the object OBJ in the Z-axis direction (2D) or the Z-axis direction (3D) that that is calculated from the three-dimensional position data WSD. Here, the accuracy of the position of the object OBJ in the Z-axis direction (2D) calculated from the image data IMG_2D indicating the two-dimensional image is not always high. On the other hand, the three-dimensional position data WSD generated from the image data IMG_3D indicates the position of the object OBJ in the Z-axis direction (3D) with high accuracy. Therefore, the change amount of at least one of the position and the pose of the object OBJ can be calculated with higher accuracy by the control apparatus 3 performing the tracking processing using the position information PI3 as described in the present example embodiment. Especially, the tracking unit 3123 can generate the change amount information VI that indicates the change amount ΔTz(3D), the change amount ΔRx(3D) and the change amount ΔRy(3D) with higher accuracy, or the change amount information VI that indicates the change amount ΔTz(2D), the change amount ΔRx(2D) and the change amount ΔRy(2D) with higher accuracy. As a result, the control apparatus 3 can calculate at least one of the position and the pose of the object OBJ with high accuracy.

Moreover, in the present example embodiment, the control apparatus 3 uses the fact that the processing for calculating the change amount information VI, which indicates the change amount of at least one of the position and the pose of the object OBJ, is substantially equivalent to the processing for solving the PnP problem. Therefore, control apparatus 3 can generate the change amount information VI, which indicates the change amount of at least one of the position and the pose of the object OBJ, by solving the PnP problem using a mathematical calculation method. Therefore, control apparatus 3 can generate the change amount information VI that indicates the change amount in at least one of the position and the pose of the object OBJ with higher accuracy, compared to a case where the change amount information VI is generated without using the PnP problem.

Here, in a case where at least one of the robot 1 and the object OBJ is moving (namely, the object OBJ and each of the apparatuses 21 and 22 are being relatively displaced) as described above, the second time t2 at which the imaging apparatus 21 images the object OBJ for the tracking processing and the third time t3 at which the imaging apparatus 22 images the object OBJ for the tracking processing may be set to be the same time, in order to improve the accuracy of the change amount information VI. Specifically, in a case where the second time t2 and the third time t3 are different times, the tracking unit 3123 reflects the position information PI3 indicating the position of the object OBJ at the third time t3 to the position information PI5 indicating the position of the object OBJ at the second time t2 that is different from the third time t3. However, in a case where at least one of the robot 1 and the object OBJ is moving, there is a high possibility that the position of the object OBJ at the second time t2 is different from the position of the object OBJ at the third time t3. Therefore, in a case where the second time t2 and the third time t3 are different times, there is a possibility that the accuracy of the position information PI5 to which the position information PI3 has been reflected is lower than the accuracy of the position information PI5 to which the position information PI3 is not reflected. This is because there is a possibility that the position information PI5 to which the position information PI3 has been reflected indicates a position that is different from the original position of the object. As a result, there is a possibility that the accuracy of the change amount information VI is also lower. However, in a case where the second time t2 and the third time t3 are the same time, the position of the object OBJ at the second time t2 is the same as the position of the object OBJ at the third time t3. Therefore, the accuracy of the position information PI5 to which the position information PI3 has been reflected is no longer lower than the accuracy of the position information PI5 to which the position information PI3 is not reflected. Therefore, the control apparatus 3 can prevent a decrease of the accuracy of the change amount information VI by controlling the imaging apparatuses 21 and 22 so that the second time t2 and the third time t3 are the same time.

Incidentally, the state in which "the second time t2 and the third time t3 are the same time" may include the state in which "the second time t2 and the third time t3 are not exactly the same time, but the second time t2 and the third time t3 is allowed to be considered to be substantially the same time because the difference in time between the second time t2 and the third time t3 is smaller than the allowable upper limit value", as already described above. In this case, the allowable upper limit value for the difference in time between the second time t2 and the third time t3 may be set to an appropriate value that can realize a state in which the accuracy of the change amount information VI is a desired accuracy. In other words, the allowable upper limit value for the difference in time between the second time t2 and the third time t3 may be set to an appropriate value that can realize a state in which a decreased amount of the accuracy of the change amount information VI due to the difference in time between the second time t2 and the third time t3 is within an allowable range. Here, the allowable upper limit value may be an allowable upper limit value based on the control error of the robot arm 12. For example, there is a possibility that the difference in time between the second time t2 and the third time t3 causes an error in the change amount information VI. In this case, there is a possibility that the error caused in the change amount information VI causes the control error of the robot arm 12. There is a possibility that the control error of the robot arm 12 results in the movement error of the end effector 13, and the end effector 13 cannot appropriately perform the predetermined process on the object OBJ. Incidentally, it can be said that the allowable upper limit value is the allowable upper limit value of the movement error of the end effector 13 by the robot arm 12. Moreover, for example, even in a case where the synchronization error in the imaging processing of the imaging apparatuses 21 and 22 causes the difference in time between the second time t2 and the third time t3, the second time t2 and the third time t3 may be considered to be substantially the same time. Incidentally, the synchronization error in the imaging processing of the imaging apparatuses 21 and 22 may be the synchronization control error in the imaging processing of the imaging apparatuses 21 and 22 by the control apparatus 3.

However, in a case where the object OBJ and each of the apparatuses 21 and 22 are not being relatively displaced (for example, the robot 1 and the object OBJ are not moving), the position of the object OBJ at the second time t2 is the same as the position of the object OBJ at the third time t3 even in a case where the second time t2 and the third time t3 are different times. Therefore, the accuracy of the position information PI5 to which the position information PI3 has been reflected is no longer lower than the accuracy of the position information PI5 to which the position information PI3 is not reflected. Therefore, the control apparatus 3 may not control the imaging apparatuses 21 and 22 so that the second time t2 and the third time t3 are the same time. For example, the control apparatus 3 may control the imaging apparatuses 21 and 22 so that the second time t2 and the third time t3 are different times. Even in this case, the accuracy of the change amount information VI rarely decreases due to the difference in time between the second time t2 and the third time t3.

Moreover, the control apparatus 3 takes into account that the change amount ΔTx(3D) calculated by the tracking processing includes the error, thereby re-sets the range of the change amount ΔTx(3D) added to the position Tx(3D) to calculate the position Tx'(3D) in a case where the position Tx(3D) is newly calculated, as described above. As a result, the control apparatus 3 can calculate the position Tx'(3D) with higher accuracy, compared to a case where the range of the change amount ΔTx(3D) added to the position Tx(3D) is not re-set. For the same reason, the control apparatus 3 can calculate the position Ty'(3D), the position Tz'(3D), the pose Rx'(3D), the pose Ry'(3D), and the pose Rz'(3D), and the position Tx'(2D), the position Ty'(2D), the position Tz'(2D), the pose Rx'(2D), the pose Ry'(2D), and the pose Rz'(2D) with higher accuracy. As a result, the control apparatus 3 can calculate at least one of the position and the pose of the object OBJ with even higher accuracy.

Moreover, since the imaging apparatus 21 for generating the image data IMG_2D and the imaging apparatus 22 for generating the image data IMG_3D are provided separately, the control apparatus 3 can acquire the image data IMG_2D from the imaging apparatus 21 and can acquire the image data IMG_3D from the imaging apparatus 22 at the same time. Therefore, a frequency of acquiring the image data IMG_2D and IMG_3D is higher, compared to a case where the imaging apparatus 21 for generating the image data IMG_2D and the imaging apparatus 22 for generating the image data IMG_3D are not provided separately(for example, a single imaging apparatus for generating the image data IMG_2D and IMG_3D) is provided. As a result, the frequency of calculating the position of the object OBJ is also higher. Therefore, as described above, the control apparatus 3 can appropriately generate (namely, update) the control signal for controlling the robot 1 to perform the desired process on the object OBJ whose position is calculated at a high frequency and output it to the robot 1.

### (4) Modified Example

Next, a modified example of the robot system SYS will be described.

### (4-1) First Modified Example

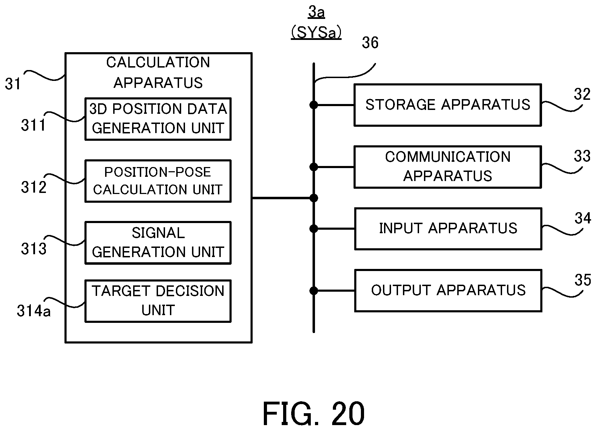

Firstly, a first modified example of the robot system SYS will be described. Incidentally, in the below-described description, the first modified example of the robot system SYS is referred to as a "robot system SYSa" to distinguish it from the above-described robot system SYS. The robot system SYSa in the first modified example may be different from the above-described robot system SYS in that it includes a control apparatus 3a instead of the control apparatus 3. Other feature of the robot system SYSa may be the same as other feature of the robot system SYS. Therefore, in the below-described description, with reference to FIG. 20, the control apparatus 3a in the first modified example will be described. FIG. 20 is a block diagram that illustrates a configuration of the control apparatus 3a in the first modified example.

As illustrated in FIG. 20, the control apparatus 3a in the first modified example is different from the above-described control apparatus 3 in that the calculation apparatus 31 includes a target decision unit 314a as the logical processing block. Other feature of the control apparatus 3a may be the same as other feature of the control apparatus 3.

The target decision unit 314a decides (determines), based on the image data IMG_2D generated by the imaging apparatus 21 imaging the object OBJ, the object OBJ included in the image indicated by the image data IMG_2D as a target object OBJ_target on which the end effector 13 performs the predetermined process. Specifically, as described above, the position-pose calculation unit 312 detects the object OBJ, which is indicated by the template image indicated by the two-dimensional model data IMG_2M, in the image indicated by the image data IMG_2D by performing the 2D matching processing (especially, the object detection processing). In this case, the target decision unit 314a determines based on the image data IMG_2D whether to decide the object OBJ detected by the 2D matching processing as the target object OBJ_target.

In a case where the target decision unit 314a decides the object OBJ detected by the 2D matching processing as the target object OBJ_target (namely, in a case where the object OBJ is the target object OBJ_target), the position-pose calculation unit 312 generates the position-pose information POI0 indicating the position and the pose of the object OBJ. On the other hand, in a case where the target decision unit 314a does not decide the object OBJ detected by the 2D matching processing as the target object OBJ_target (namely, in a case where the object OBJ is not the target object OBJ_target), the position-pose calculation unit 312 may not generate the position-pose information indicating the position and the pose of the object OBJ. This is because the end effector 13 does not perform the predetermined process on the object OBJ, and therefore there is little need to calculate the position and the pose of the object OBJ.

Incidentally, the target decision unit 314a may decide the object OBJ, which has not been decided as the target object ONJ_target at one time point, as the target object OBJ_target at another time point that is different from the one time point. For example, in a case where the robot 1 performs the release process for placing the plurality of workpieces W on the placing apparatus T one by one in sequence as described above, the target decision unit 314a may decide (in this case, select) the plurality of workpieces W as the target object OBJ_target in sequence. For example, the target decision unit 314a may decide one workpiece W as the target object OBJ_target at one time point, but may not decide other workpiece W that is different from the one workpiece W as the target object OBJ_target. Then, after the one workpiece W is placed on the placing apparatus T, the target decision unit 314a may decide other workpiece W as the target object OBJ_target.

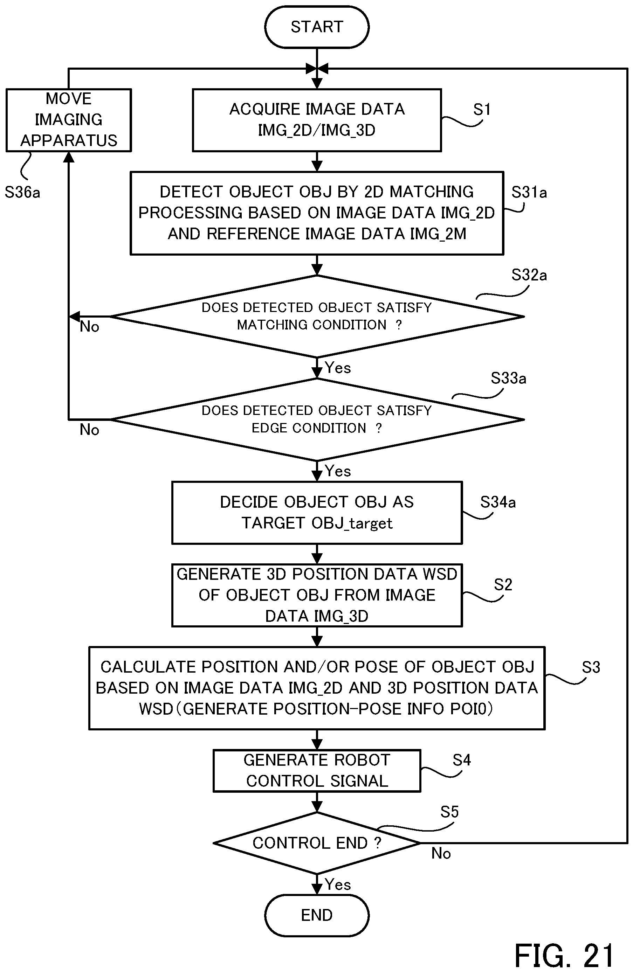

Next, with reference to FIG. 21, a flow of a robot control processing in the first modified example using the target decision unit 314a will be described. FIG. 21 is a flowchart illustrating the flow of the robot control processing in the first modified example. Incidentally, a detailed description of the processing that is the same as the processing performed in the robot control processing illustrated in FIG. 4 is omitted by assigning the same reference sign thereto.

As illustrated in FIG. 21, the control apparatus 3 acquires the image data IMG_2D from the imaging apparatus 21 by using the communication apparatus 33 (the step S1) even in the first modified example, as in the above-described robot control processing illustrated in FIG. 4. Furthermore, the control apparatus 3 acquires the image data IMG_3D from the imaging apparatus 22 by using the communication apparatus 33 (the step S1). However, in the first modified example, the control apparatus 3 may not acquire the image data IMG_3D from the imaging apparatus 22 at the step S1.

Then, in the first modified example, the position-pose calculation unit 312 (especially, the 2D matching unit 3121) firstly performs the above-described 2D matching processing based on the image data IMG_2D acquired at the step S1 (a step S31a). As a result, the 2D matching unit 3121 detects the object OBJ, which is indicated by the template image indicated by the 2D model data IMG_2M, in the image indicated by the image data IMG_2D. Namely, the 2D matching unit 3121 detects the object OBJ by performing the change from one template image to another template image, whose projection direction or imaging direction is different, and the translation, the scaling and / or the rotation of the object OBJ included in the template image so that the feature part of the object OBJ included in the template image is closer to the feature part of the object OBJ included in the image indicated by the image data IMG_2D. As a result, the 2D matching unit 3121 calculates the position and the pose of the detected object OBJ. Namely, the 2D matching unit 3121 generates the position-pose information POI1 indicating the position and the pose of the detected object OBJ. Incidentally, the 2D matching processing in the first modified example may be the same as the above-described 2D matching processing, in a case where there is no specific notation.

Depending on the image indicated by the image data IMG_2D, there is a possibility that a plurality of objects OBJ, each of which is indicated by the template image, are included in the image as already described above. In this case, the 2D matching unit 3121 may perform the processing for making the feature part of the object OBJ included in the template image be closer to the feature part of the object OBJ included in the image indicated by the image data IMG_2D, in sequence for the plurality of objects OBJ that are included in the image indicated by the image data IMG_2D. As a result, the 2D matching unit 3121 may detect the plurality of objects OBJ at the step S31a. Namely, the 2D matching unit 3121 may detect the plurality of objects OBJ having the same two-dimensional shape indicated by the template image. In this case, the target decision unit 314a may decide (in this case, select) any one of the plurality of objects OBJ as the target object OBJ_target by a below-described processing.

Three-dimensional shapes of at least two of the plurality of objects OBJ detected by using the same template image may the same. A state in which "the three-dimensional shapes of two objects OBJ are the same" may include a state in which "the three-dimensional shapes of the two objects OBJ are literally exactly the same. The state in which "the three-dimensional shapes of the two objects OBJ are the same" may include a state in which "the two objects OBJ were manufactured to have the same three-dimensional shape, but the three-dimensional shapes of the two objects OBJ are different due to a manufacturing error and the like". The state in which "the three-dimensional shapes of the two objects OBJ are the same" may include a state in which "the three-dimensional shapes of the two objects OBJ are different, but the shapes of the two objects OBJ can be considered to be the same in the image indicated by the image data IMG_2D generated by the imaging apparatus 21 imaging the two objects OBJ". The state in which "the three-dimensional shapes of the two objects OBJ are the same" may include a state in which "the two objects OBJ were manufactured to have the same three-dimensional shape, but the three-dimensional shapes of the two objects OBJ are different due to a deformation of one of the two objects OBJ by a contact between the one of the two objects OBJ and the other one of the two objects OBJ or another object. The state in which "the three-dimensional shapes of the two objects OBJ are the same" may include a state in which "one parts of the two objects OBJ that are included in the imaging range (the field of view) of the imaging apparatus 21 have the same three-dimensional shape, but other parts of the two objects OBJ that are not included in the imaging range (the field of view) of the imaging apparatus 21 have different three-dimensional shapes. Therefore, the three-dimensional shapes of at least two of the plurality of objects OBJ detected by using the same template image may be actually different. This is because one object OBJ and another object OBJ are different objects even in a case where the one object OBJ and the another object OBJ, which is different from the one object, are detected by using the same template image, and therefore, there is a possibility that the three-dimensional shape of one object OBJ is actually different from the three-dimensional shape of another object OBJ.

Incidentally, not only in the 2D matching processing using the template image, but also in the 3D matching processing using the three-dimensional model WM3 (the three-dimensional model data WMD), the 3D matching unit 3122 may detect a plurality of objects OBJ by using the same three-dimensional model WM3. Namely, the 3D matching unit 3122 may detect the plurality of objects OBJ having the same three-dimensional shape indicated by the three-dimensional model WM3. Here, a state in which "the three-dimensional shapes of two objects OBJ detected by using the same three-dimensional model WM3 are the same" may include a state that is the same as the state in which "the three-dimensional shapes of the two objects OBJ detected by using the same template image are the same" described above. Therefore, the three-dimensional shapes of at least two of the plurality of objects OBJ detected by using the same three-dimensional model WM3 may be actually different. This is because one object OBJ and another object OBJ are different objects even in a case where the one object OBJ and the another object OBJ, which is different from the one object, are detected by using the same three-dimensional model WM3, and therefore, there is a possibility that the three-dimensional shape of one object OBJ is actually different from the three-dimensional shape of another object OBJ.

At the step S31a, the 2D matching unit 3121 may perform the 2D matching processing by using a plurality of template images that indicate a plurality of two-dimensional shapes, which are different from each other, respectively. For example, the 2D matching unit 3121 may detect the object OBJ indicated by a first template image (for example, the object OBJ having a first three-dimensional shape) by performing the 2D matching processing using the first template image indicating a first two-dimensional model. For example, the 2D matching unit 3121 may detect the object OBJ indicated by a second template image (for example, object OBJ having a second three-dimensional shape that is different from the first three-dimensional shape) by performing the 2D matching processing using the second template image indicating a second two-dimensional model that is different from the first two-dimensional model. In this case, the target decision unit 314a may decide (in this case, select) any one of the plurality of objects OBJ, whose three-dimensional shapes are different, as the target object OBJ_target by a below-described processing.

The three-dimensional shapes of at least two of the plurality of objects OBJ detected by using different template images may be different. Alternatively, the three-dimensional shapes of at least two of the plurality of objects OBJ detected by using different template images may be the same. As one example, in a case where different template images, which indicate two-dimensional models WM2 whose shapes are slightly different, are used, the three-dimensional shapes of at least two of the plurality of objects OBJ detected by using different template images may be the same. Here, a state in which "the three-dimensional shapes of two objects OBJ detected by using the different template images are the same" may include a state that is the same as the state in which "the three-dimensional shapes of the two objects OBJ detected by using the same template image are the same" described above.

Moreover, not only in the 2D matching processing using the template image, but also in the 3D matching processing using the three-dimensional model WM3 (the three-dimensional model data WMD), the 3D matching unit 3122 may detect a plurality of objects OBJ by using different three-dimensional models WM3. Incidentally, the three-dimensional shapes of at least two of the plurality of objects OBJ detected by using different three-dimensional models WM3 may be different. Alternatively, the three-dimensional shapes of at least two of the plurality of objects OBJ detected by using different three-dimensional models WM3 may be the same. As one example, in a case where the three-dimensional models WM3 whose shapes are slightly different are used, the three-dimensional shapes of at least two of the plurality of objects OBJ detected by using different three-dimensional models WM3 may be the same. Here, a state in which "the three-dimensional shapes of two objects OBJ detected by using the different three-dimensional models WM3 are the same" may include a state that is the same as the state in which "the three-dimensional shapes of the two objects OBJ detected by using the same template image are the same" described above.

Incidentally, at the step S31a, the 2D matching unit 3121 may not calculate the position and the pose of the detected object OBJ. Namely, at the step S31a, the 2D matching unit 3121 may not generate the position-pose information POI1 indicating the position and the pose of the detected object OBJ. This is because the object OBJ detected by the 2D matching processing is not always the target object OBJ_target at the step S31a. In this case, the 2D matching unit 3121 may calculate the position and the pose of the object OBJ detected at the step S31a after it is decided that the object OBJ is the target object OBJ_target. The 2D matching unit 3121 may generate the position-pose information POI1 indicating the position and the pose of the object OBJ detected at the step S31a after it is decided that the object OBJ is the target object OBJ_target.

Then, the target decision unit 314a determines whether to decide the object OBJ detected in the 2D matching processing at the step S31a as the target object OBJ_target (a step S32a to a step S33a).

The target decision unit 314a may determine whether to decide the object OBJ as the target object OBJ_target by determining whether or not the object OBJ detected by the 2D matching processing satisfies a predetermined matching condition (the step S32a). The matching condition may include a condition related to the result of the 2D matching processing performed at the step S31a. In this case, the target decision unit 314a may be considered to determine, based on the result of the 2D matching processing, whether to decide the object OBJ detected by the 2D matching processing as the target object OBJ_target.

The predetermined matching condition may include a condition related to the matching similarity. Specifically, in the 2D matching processing, the position-pose calculation unit 312 calculates the matching similarity that is a degree of similarity between the similar image part, to which the object OBJ of the template image is fitted, of the image indicated by the image data IMG_2D and the template image in making the feature part of the object OBJ included in the template image be closer to the feature part of the object OBJ included in the image indicated by the image data IMG_2D, as already described above. In this case, there is a higher possibility that the object OBJ included in the similar image part is the same as the object OBJ indicated by the template image as the matching similarity is higher. Therefore, there is a higher possibility that the object OBJ detected by the 2D matching processing is the same as the object OBJ that should be detected (namely, that is expected to be detected) by the 2D matching processing as the matching similarity is higher. As a result, there is a higher possibility that the object OBJ detected by the 2D matching processing is the same as the object OBJ on which the end effector 13 should perform the predetermined process as the matching similarity is higher.

Therefore, the target decision unit 314a may determine whether or not the object OBJ detected by the 2D matching processing satisfies the predetermined matching condition by determining whether or not the matching similarity is higher than the predetermined matching determination threshold value. In a case where the matching similarity is higher than the matching determination threshold value, the target decision unit 314a may determine that the object OBJ detected by the 2D matching processing satisfies the predetermined matching condition (the step S32a: Yes). On the other hand, in a case where the matching similarity is lower than the matching determination threshold value, the target decision unit 314a may determine that the object OBJ detected by the 2D matching processing does not satisfy the predetermined matching condition (the step S32a: No).

Incidentally, the matching determination threshold value may be set to an appropriate value that allows a state in which the object OBJ detected by the 2D matching processing is the same as the object OBJ on which the end effector 13 should perform the predetermined process to be appropriately distinguished from a state in which the object OBJ detected by the 2D matching processing is different from the object OBJ on which the end effector 13 should perform the predetermined process based on the matching similarity.

,The target decision unit 314a may determine whether to decide the object OBJ as the target object OBJ_target by determining whether or not the object OBJ detected by the 2D matching processing satisfies a predetermined edge condition, in addition to or instead of the above-described matching condition (the step S33a). The edge condition may include a condition related to a result of an edge of the object OBJ detected based on the result of the 2D matching processing.

The predetermined edge condition may include a condition related to an edge similarity. The edge similarity indicates a degree of similarity between an image edge, which is an edge of the image indicated by the image data IMG_2D acquired at the step S1, and an object edge, which is an edge of the object OBJ detected by the 2D matching processing. For example, the edge similarity may be an index value indicating a ratio of an overlapping edge part, which overlaps (namely, overlaps) with the object edge, of the image edge to the object edge. For example, the edge similarity may be an index value indicating a ratio of a length of the overlapping edge part to a length of the object edge. Therefore, the edge similarity may be referred to as an edge overlap degree.

In this case, the target decision unit 314a may calculate the edge similarity degree. Specifically, the target decision unit 314a may detect the edge of the image (namely, the image edge) indicated by the image data IMG_2D acquired at the step S1. For example, the target decision unit 314a may detect the image edge by using an edge detection filter such as a differential filter after performing a pre-processing (for example, a gamma correction processing) on the image data IMG_2D as necessary. Furthermore, the target decision unit 314a may detect the edges of the object OBJ (namely, the object edge) detected by the 2D matching processing. For example, the target decision unit 314a may detect, as the object edge, a wireframe of the object OBJ (namely, a wireframe of the two-dimensional model) indicated by the template image that has been fitted to the image indicated by the image data IMG_2D. Then, the target decision unit 314a may calculate the edge similarity based on a detected result of the image edge and the object edge.

A hidden part, which is hidden by an obstruction, of the object OBJ included in the similar image part is smaller as the edge similarity is higher. This is because a partial edge part, which is hidden by the obstruction, of the object edge is not detected as the image edge in a case where a part of the object OBJ is hidden by the obstruction. On the other hand, a partial edge part, which is hidden by the obstruction, of the object edge is detected as the object edge even in a case where a part of the object OBJ is hidden by the obstruction. This is because the target decision unit 314a detects, as the object edge, the wireframe of the object OBJ indicated by the template image (namely, the wireframe that is not affected by the obstruction and that is used in the image processing) as described above. Therefore, the overlapping edge part, which overlaps with the object edge, of the image edge decreases (for example, is shortened), and as a result, the edge similarity is lower. Incidentally, another object OBJ detected by the 2D matching processing is one example of the obstruction. Any object that has not been detected by the 2D matching processing is one example of the obstruction. Therefore, there is a lower possibility that the end effector 13 interferes with the obstruction when the end effector 13 performs the predetermined processing on the object OBJ as the edge similarity is higher. Namely, there is a higher possibility that the end effector 13 can perform the predetermined processing on the object OBJ without being affected by the obstruction as the edge similarity is higher.

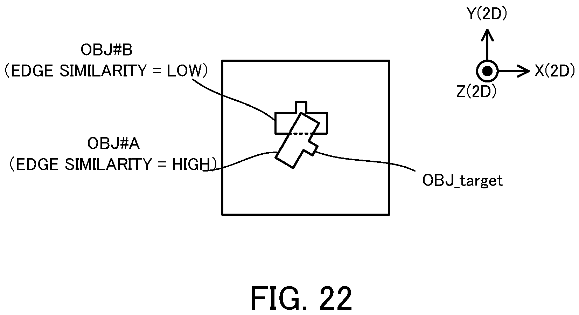

For example, FIG. 22 illustrates two objects OBJ (specifically, an object OBJ#A and an object OBJ#B between which at least one of the position and the pose is different) detected by the 2D matching processing. Specially, FIG. 22 illustrates an example in which the object OBJ#A is stacked on the object OBJ#B. In this case, a part of the object OBJ#B is hidden by the object OBJ#A. As a result, a part of the edge of the object OBJ#B is be detected as the image edge because it is hidden by the object OBJ#A. As a result, the overlapping edge part of the image edge that overlaps with the edge of the object OBJ#B decreases. On the other hand, the edge of the object OBJ#A is detected as the image edge because it is not hidden by the object OBJ#B. As a result, the overlapping edge part of the image edge that overlaps with the edge of the object OBJ#A does not decrease. Therefore, the edge similarity of the object OBJ#A, which is not hidden by the object OBJ#B, is higher than the edge similarity of the object OBJ#B, which is hidden by the object OBJ#A. In this case, there is a possibility that the end effector 13 performing the predetermined process on the object OBJ#B interferes with the object OBJ#A that partially hides the object OBJ#B. For example, there is a possibility that the end effector 13 contacts with the object OBJ#A stacked on the object OBJ#B in a case where the end effector 13 performs the hold process for holding the object OBJ#B. On the other hand, there is a low possibility that the end effector 13 performing the predetermined process on the object OBJ#A interferes with the object OBJ#B that is under the object OBJ#A. Therefore, in this case, the object OBJ#A whose edge similarity is high should be decided as the object on which the end effector 13 should perform the predetermined process than the object OBJ#B whose edge similarity is low.

Therefore, the target decision unit 314a may determine whether or not the object OBJ detected by the 2D matching processing satisfies the predetermined edge condition by determining whether or not the edge similarity is higher than a predetermined edge determination threshold value. In a case where the edge similarity is higher than the edge determination threshold value, the target decision unit 314a may determine that the object OBJ detected by the 2D matching processing satisfies the predetermined edge condition (the step S33a: Yes). On the other hand, in a case where the edge similarity is lower than the edge determination threshold value, the target decision unit 314a may determine that the object OBJ detected by the 2D matching processing does not satisfy the predetermined edge condition (the step S33a: No).

Incidentally, the edge determination threshold value may be set to an appropriate value that allows a state in which the object OBJ detected by the 2D matching processing is the object OBJ on which the end effector 13 can perform the predetermined process without interfering with other object OBJ to be appropriately distinguished from a state in which the object OBJ detected by the 2D matching processing is the object OBJ on which the end effector 13 cannot easily perform the predetermined process without interfering with other objects OBJ based on the edge similarity.

Again in FIG. 21, FIG. 21 illustrates an example in which the target decision unit 314a determines whether to decide the object OBJ as the target object OBJ_target by determining whether or not the object OBJ satisfies both of the matching condition and the edge condition. In this case, in a case where it is determined that the object OBJ satisfies both of the matching condition and the edge condition (the steps S32a: Yes and the S33a: Yes), the target decision unit 314a may decide the object OBJ as the target object OBJ_target (the step S34a). On the other hand, in a case where it is determined that object OBJ does not satisfy the matching condition and / or the object OBJ does not satisfy the edge condition (the step S32a: No and / or the step S33a: No), target decision unit 314a may not decide the object OBJ as the target object OBJ_target.

Incidentally, the target decision unit 314a may use either one of the matching condition and the edge condition but may not use the other one of the matching condition and the edge condition to determine whether to decide the object OBJ as the target object OBJ_target.

As one example, the target decision unit 314a may use the matching condition but may not use the edge condition to determine whether to decide the object OBJ as the target object OBJ_target. In this case, in a case where it is determined that the object OBJ satisfies the matching condition (the step S32a: Yes), the target decision unit 314a may decide the object OBJ as the target object OBJ_target (the step S34a). On the other hand, in a case where it is determined that the object OBJ does not satisfy the matching condition (the step S32a: No), target decision unit 314a may not decide the object OBJ as the target object OBJ_target.

As another example, the target decision unit 314a may use the edge condition but may not use the matching condition to determine whether to decide the object OBJ as the target object OBJ_target. In this case, in a case where it is determined that the object OBJ satisfies the edge condition (the step S33a: Yes), the target decision unit 314a may decide the object OBJ as the target object OBJ_target (the step S34a). On the other hand, in a case where it is determined that the object OBJ does not satisfy the edge condition (the step S33a: No), target decision unit 314a may not decide the object OBJ as the target object OBJ_target.

In a case where there are a plurality of objects OBJ each of which satisfies the matching condition and the edge condition, the target decision unit 314a may decide (in this case, select) any one of the plurality of objects OBJ as the target object OBJ_target. For example, the target decision unit 314a may decide (in this case, select), as the target object OBJ_target, one object OBJ whose matching similarity is the highest from among the plurality of objects OBJ each of which satisfies the matching condition and the edge condition (whose matching similarity is higher than the matching determination threshold value and whose edge similarity is higher than the edge determination threshold value). For example, the target decision unit 314a may decide (in this case, select), as the target object OBJ_target, one object OBJ whose edge similarity is the highest from among the plurality of objects OBJ each of which satisfies the matching condition and the edge condition (whose matching similarity is higher than the matching determination threshold value and whose edge similarity is higher than the edge determination threshold value).

Alternatively, the target decision unit 314a may decide (in this case, select), as the target object OBJ_target, one object OBJ whose matching similarity is the highest from among the plurality of objects OBJ detected by the 2D matching processing without determining whether or not the object OBJ satisfies the matching condition and the edge condition. The target decision unit 314a may decide (in this case, select), as the target object OBJ_target, one object OBJ whose edge similarity is the highest from among the plurality of objects OBJ detected by the 2D matching processing without determining whether or not the object OBJ satisfies the matching condition and the edge condition. Namely, the target decision unit 314a may decide (in this case, select), as the target object OBJ_target, any one of the plurality of objects OBJ without determining whether or not the object OBJ satisfies the matching condition and the edge condition.

Alternatively, the target decision unit 314a may decide (in this case, select), as the target object OBJ_target, one object OBJ selected based on the matching similarity and the edge similarity from among the plurality of objects OBJ detected by the 2D matching processing. Next, one example of an operation for deciding (in this case, selecting), as the target object OBJ_target, one object OBJ selected based on the matching similarity and the edge similarity from among a first object OBJ#1 and a second object OBJ#2 detected by the 2D matching processing will be described.

Incidentally, in the below-described description, the matching similarity of the first object OBJ#1 is represented by a variable number "MS#1", the matching similarity of the second object OBJ#2 is represented by a variable number "MS#2", the edge similarity of the first object OBJ#1 is represented by a variable number "ES#1", and the edge similarity of the second object OBJ#2 is represented by a variable number "ES#2". In this case, the target decision unit 314a decides (in this case, selects), as the target object OBJ_target, one object OBJ selected based on the matching similarity MS#1, the matching similarity MS#2, the edge similarity ES#1, and the edge similarity ES#2 from among the first object OBJ#1 and the second object OBJ#2.

Firstly, in a case where there is one object OBJ having the matching similarity and the edge similarity that are higher than those of the other object OBJ in the first object OBJ#1 and the second object OBJ#2, the target decision unit 314a decides (selects in this case) this one object OBJ as the target object OBJ_target. Specifically, in a case where the edge similarity ES#1 is higher than the edge determination threshold value, the edge similarity ES#1 is higher than the edge similarity ES#2, the matching similarity MS#1 is higher than the matching determination threshold value, and the matching similarity MS#1 is higher than the matching similarity MS#2, the target decision unit 314a decides (in this case, selects) the first object OBJ#1 as the target object OBJ_target. On the other hand, in a case where the edge similarity ES#2 is higher than the edge determination threshold value, the edge similarity ES#2 is higher than the edge similarity ES#1, and the matching similarity MS#2 is higher than the matching determination threshold value, the target decision unit 314a decides (in this case, selects) the second object OBJ#2 as the target object OBJ_target.

On the other hand, in a case where there is one object OBJ having the matching similarity and the edge similarity either one of which is higher than but the other one of which is lower than that of the other object OBJ in the first object OBJ#1 and the second object OBJ#2, the target decision unit 314a calculates a matching ratio and an edge ratio. The matching ratio indicates a value obtained by dividing a lower one of the matching similarities MS#1 and MS#2 by a higher one of the matching similarities MS#1 and MS#2. Namely, the matching ratio indicates a ratio of the lower one of the matching similarities MS#1 and MS#2 to the higher one of the matching similarities MS#1 and MS#2. The edge ratio indicates a value obtained by dividing a lower one of the edge similarities ES#1 and ES#2 by a higher one of the edge similarities ES#1 and ES#2. Namely, the edge ratio indicates a ratio of the lower one of the edge similarities ES#1 and ES#2 to the higher one of the edge similarities ES#1 and ES#2. Then, the target decision unit 314a decides (in this case, selects), as the target object OBJ_target, one object OBJ selected based on the matching ratio and the edge ratio from the first object OBJ#1 and the second object OBJ#2. Specifically, in a case where the matching ratio is smaller than the edge ratio, a difference between the matching similarities MS#1 and MS#2 is larger than a difference between the edge similarities ES#1 and ES#2. In this case, the target decision unit 314a decides (in this case, selects), as the target object OBJ_target, one object OBJ having the matching similarity that is higher than that of the other object OBJ among the first object OBJ#1 and the second object OBJ#2. On the other hand, in a case where the edge ratio is smaller than the matching ratio, the difference between the edge similarities ES#1 and ES#2 is larger than the difference between the matching similarities MS#1 and MS#2. In this case, the target decision unit 314a decides (in this case, selects), as the target object OBJ_target, one object OBJ having the edge similarity that is higher than that of the other object OBJ among the first object OBJ#1 and the second object OBJ#2.

As one example, in a case where the edge similarity ES#1 is higher than the edge determination threshold value, the edge similarity ES#1 is higher than the edge similarity ES#2, the matching similarity MS#1 is higher than the matching determination threshold value, and the matching similarity MS#1 is lower than the matching similarity MS#2, the target decision unit 314a calculates the matching ratio and the edge ratio by using a equation of the matching ratio = the matching similarity MS#1 / the matching similarity MS#2 and an equation of the edge ratio = the edge similarity ES#2 / the edge similarity ES#1. Then, in a case where the matching ratio is smaller than the edge ratio, the target decision unit 314a decides (in this case, selects), as the target object OBJ_target, the second object OBJ#2 that has the matching similarity MS#2 higher than the matching similarity MS#1. On the other hand, in a case where the edge ratio is smaller than the matching ratio, the target decision unit 314a decides (in this case, selects), as the target object OBJ_target, the first object OBJ#1 that has the edge similarity ES#1 higher than the edge similarity RS#2.

As another example, in a case where the edge similarity ES#2 is higher than the edge determination threshold value, the edge similarity ES#2 is higher than the edge similarity ES#1, the matching similarity MS#2 is higher than the matching determination threshold value, and the matching similarity MS#2 is lower than the matching similarity MS#1, the target decision unit 314a calculates the matching ratio and the edge ratio by using a equation of the matching ratio = the matching similarity MS#2 / the matching similarity MS#1 and an equation of the edge ratio = the edge similarity ES#1 / the edge similarity ES#2. Then, in a case where the matching ratio is smaller than the edge ratio, the target decision unit 314a decides (in this case, selects), as the target object OBJ_target, the first object OBJ#1 that has the matching similarity MS#1 higher than the matching similarity MS#2. On the other hand, in a case where the edge ratio is smaller than the matching ratio, the target decision unit 314a decides (in this case, selects), as the target object OBJ_target, the second object OBJ#2 that has the edge similarity ES#2 higher than the edge similarity RS#1.

Incidentally, as can be seen from the above-described description, the matching similarity and the edge similarity of the object OBJ, which is decided as the target object OBJ_target, are higher than the matching determination threshold value and the edge determination threshold value, respectively. Namely, in a case where one object OBJ selected based on the matching similarity and the edge similarity is decided (in this case, selected) as the target object OBJ_target, the target decision unit 314a decides, as the target object OBJ_target, the object OBJ having the matching similarity and the edge similarity that are higher than the matching determination threshold value and the edge determination threshold value, respectively. Specifically, in a case where the edge similarity ES#1 is higher than the edge determination threshold value and the matching similarity MS#1 is higher than the matching determination threshold value and in a case where the edge similarity ES#2 is lower than the edge determination threshold value and / or the matching similarity MS#2 is lower than the matching determination threshold value, the target decision unit 314a decides (in this case, selects) the first object OBJ#1 as the target object OBJ_target. On the other hand, in a case where the edge similarity ES#2 is higher than the edge determination threshold value and the matching similarity MS#2 is higher than the matching determination threshold value and in a case where the edge similarity ES#1 is lower than the edge determination threshold value and / or the matching similarity MS#1 is lower than the matching determination threshold value, the target decision unit 314a decides (in this case, selects) the second object OBJ#2 as the target object OBJ_target. On the other hand, in a case where the edge similarity ES#1 is lower than the edge determination threshold value and / or the matching similarity MS#1 is lower than the matching determination threshold value and in a case where the edge similarity ES#2 is lower than the edge determination threshold value and / or the matching similarity MS#2 is lower than the matching determination threshold value, The target decision unit 314a does not decide (in this case, select) both of the first object OBJ#1 and the second object OBJ#2 as the target object OBJ_target.

At the step S34a, in a case where the object OBJ detected by the 2D matching processing has been decided as the target object OBJ_target, the position-pose calculation unit 312 calculates the position and the pose of the object OBJ decided as the target object OBJ_target. Specifically, the three-dimensional position data generation unit 311 generates the three-dimensional position data WSD based on the image data IMG_3D acquired at the step S1 (the step S2). However, the three-dimensional position data generation unit 311 may generate the three-dimensional position data WSD based on the image data IMG_3D acquired at the step S1 at a timing at which the object OBJ detected in the 2D matching processing has not been decided as the target object OBJ_target. Namely, the three-dimensional position data generation unit 311 may generate the three-dimensional position data WSD based on the image data IMG_3D acquired at the step S1 in a period during which processing from the step S31a to the step S33a is performed.

Then, the position-pose calculation unit 312 calculates at least one of the position and the pose of the object OBJ based on the image data IMG_2D acquired at the step S1 and the three-dimensional position data WSD generated at the step S2 (the step S3). As a result, the position-pose calculation unit 312 generates the position-pose information POI0 indicating at least one of the position and the pose of the object OBJ (the step S3).

However, in the first modified example, the position-pose calculation unit 312 has already performed the 2D matching processing at the step S31a. Therefore, at the step S3 in FIG. 21, the position-pose calculation unit 312 may not perform the 2D matching processing again. In this case, the position-pose calculation unit 312 may determine the initial position and the initial pose of the three-dimensional model WM3, which are used to perform the tracking processing, based on the result of the 2D matching processing at the step S31a (namely, the position-pose information POI1). However, at the step S3 in FIG. 21, the position-pose calculation unit 312 may perform the 2D matching processing again.

Here, in a case where the object OBJ and each of the apparatuses 21 and 22 are not being relatively displaced (for example, the robot 1 and the object OBJ are not moving), the 2D imaging time at which the imaging apparatus 21 images the object OBJ and the 3D imaging time at which the imaging apparatus 22 images the object OBJ may be set to be different times, as already describe above. In this case, the imaging apparatus 22 may image the object OBJ decided as the target object OBJ_target after the object OBJ is decided as the target object OBJ_target. Namely, the imaging apparatus 22 may image the object OBJ after the imaging apparatus 21 images the object OBJ to determine whether to decide the object OBJ as the target object OBJ_target. Then, the position-pose calculation unit 312 may calculates at least one of the position and the pose of the object OBJ based on the result of the 2D matching processing performed to determine whether to decide the object OBJ as the target object OBJ_target (namely, the position-pose information POI1) and the three-dimensional position data WSD generated from the image data IMG_3D generated by the imaging apparatus 22 after the imaging apparatus 21 images the object OBJ.

Incidentally, the target decision unit 314a may decide the object OBJ, which has not been decided as the target object ONJ_target at one time point, as the target object OBJ_target at another time point that is different from the one time point, as already described above. For example, in a case where the robot 1 performs the release process for placing the plurality of workpieces W on the placing apparatus T one by one in sequence, the target decision unit 314a may decide (in this case, select) the plurality of workpieces W as the target object OBJ_target in sequence, as already described above. In this case, the target decision unit 314a may repeat a series of processing from the step S1 to the step S4 in FIG. 21 until it is determined that the robot control processing is terminated, even after the object OBJ detected by the 2D matching processing is decided as the target object OBJ_target. Especially, the target decision unit 314a may repeat the processing for determining whether to decide the object OBJ as the target object OBJ_target until it is determined that the robot control processing is terminated, even after the object OBJ detected by the 2D matching processing is decided as the target object OBJ_target.

On the other hand, in a case where the object OBJ detected by the 2D matching processing is not decided as the target object OBJ_target (the step S32a: No, and/or the step S33a: No), there is a possibility that the object OBJ does not exist in the imaging range (the field of view) of the imaging apparatus 21. Alternatively, there is a possibility that the imaging apparatus 21 does not image the object OBJ from an appropriate position. Alternatively, there is a possibility that the imaging apparatus 21 does not image the object OBJ in an appropriate pose. Namely, there is a possibility that the imaging apparatus 21 does not image the object OBJ from an appropriate direction.

Therefore, in this case, the control apparatus 3 may control the robot 1 to move the imaging apparatus 21 relative to the object OBJ (a step S36a). Specifically, the control apparatus 3 may generate the robot control signal for controlling the robot 1 (especially, the robot arm 12) so as to move the imaging apparatus 21 relative to the object OBJ. Then, the control apparatus 3 may output the generated robot control signal to the robot 1. As a result, the robot 1 (especially, the robot arm 12) may move the imaging apparatus 21 relative to the object OBJ.

After the imaging apparatus 21 moves relative to object OBJ, there is a possibility that the object OBJ newly exists in the imaging range (the field of view) of the imaging apparatus 21 in which the object OBJ has not existed before the imaging apparatus 21 moves. After the imaging apparatus 21 moves relative to the object OBJ, there is a possibility that the imaging apparatus 21, which has not imaged the object OBJ from an appropriate position before the imaging apparatus 21 moves, can image the object OBJ from an appropriate position. After the imaging apparatus 21 moves relative to the object OBJ, there is a possibility that the imaging apparatus 21, which has not imaged the object OBJ in an appropriate pose before the imaging apparatus 21 moves, can image the object OBJ in an appropriate pose. Namely, after the imaging apparatus 21 moves relative to the object OBJ, there is a possibility that the imaging apparatus 21, which has not imaged the object OBJ from an appropriate direction before the imaging apparatus 21 moves, can image the object OBJ from an appropriate direction. Therefore, there is a higher possibility that the control apparatus 3 can decide the object OBJ detected by the 2D matching processing as the target object OBJ_target, compared to a case where the imaging apparatuses 21 and 22 are not moved relative to the object OBJ.

After the imaging apparatus 21 moves, the processing from the step S1 to the step S33a in FIG. 21 may be performed again. Namely, the control apparatus 3 may alternately perform an operation for moving the imaging apparatus 21 and an operation for determining whether to decide the object OBJ detected by the 2D matching processing as the target object OBJ_target until the object OBJ detected by the 2D matching processing is decided as the target object OBJ_target.

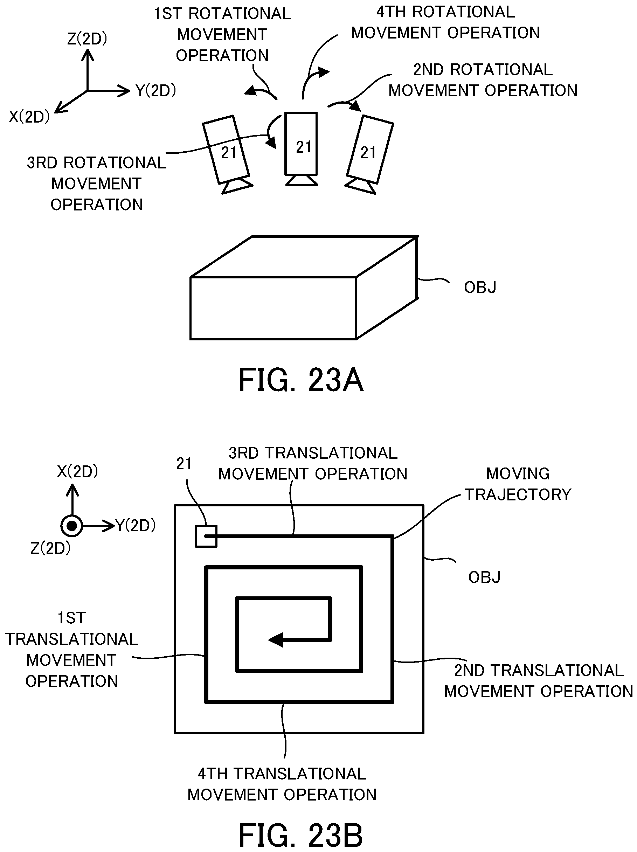

The control apparatus 3 may generate the robot control signal for controlling the robot 1 (especially, the robot arm 12) so that the imaging apparatus 21 rotationally moves around a desired rotational axis, as illustrated in FIG. 23A. For example, the control apparatus 3 may rotationally move the imaging apparatus 21 around at least one of a rotational axis along the X-axis (2D), a rotational axis along the Y-axis (2D), and a rotational axis along the Z-axis (2D). Incidentally, the control apparatus 3 may rotationally move the imaging apparatus 21 around at least one of a rotational axis along the X-axis (3D), a rotational axis along the Y-axis (3D), and a rotational axis along the Z-axis (3D). The control apparatus 3 may rotationally move the imaging apparatus 21 around at least one of a rotational axis along the X-axis (GL), a rotational axis along the Y-axis (GL), and a rotational axis along the Z-axis (GL).

In this case, especially, the control apparatus 3 may rotationally move the imaging apparatus 21 around a rotational axis that intersects the optical axis AX21 of the imaging apparatus 21. Since the Z-axis (2D) is an axis along the optical axis AX21 as described above, the control apparatus 3 may rotationally move the imaging apparatus 21 around a rotational axis that intersects the Z-axis (2D). For example, the control apparatus 3 may rotationally move the imaging apparatus 21 around the X-axis (2D) that intersects the Z-axis (2D). For example, the control apparatus 3 may rotationally move the imaging apparatus 21 around the Y-axis (2D) that intersects the Z-axis (2D). In this case, as illustrated in FIG. 23A, a direction in which the imaging apparatus 21 images the object OBJ changes. Therefore, there is a high possibility that the imaging apparatus 21, which has not imaged the object OBJ from an appropriate direction before the imaging apparatus 21 moves, can image the object OBJ from an appropriate direction.

As illustrated in FIG. 23A, the control apparatus 3 may perform at least one of a first rotational movement operation for rotationally moving the imaging apparatus 21 in a positive rotational direction around the X-axis (2D), a second rotational movement operation for rotationally moving the imaging apparatus 21 in a negative rotational direction around the X-axis (2D), a third rotational movement operation for rotationally moving the imaging apparatus 21 in a positive rotational direction around the Y-axis (2D), and a fourth rotational movement operation for rotationally moving the imaging apparatus 21 in a negative rotational direction around the Y-axis (2D). The control apparatus 3 may perform at least two of the first rotational movement operation to the fourth rotational movement operation in sequence until the object OBJ detected by the 2D matching processing is decided as the target object OBJ_target. For example, the control apparatus 3 may perform the first rotational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the second rotational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the third rotational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the fourth rotational movement operation and then determine whether to decide the object OBJ detected by the 2D matching processing as the target object OBJ_target.

As another example, the control apparatus 3 may generate the robot control signal for controlling the robot 1 (especially, the robot arm 12) so that the imaging apparatus 21 linearly moves along a desired translational axis, as illustrated in FIG. 23B. For example, the control apparatus 3 may linearly move the imaging apparatus 21 along at least one of the X-axis (2D), the Y-axis (2D), and the Z-axis (2D). Incidentally, the control apparatus 3 may linearly move the imaging apparatus 21 along at least one of the X-axis (3D), the Y-axis (3D), and the Z-axis (3D). The control apparatus 3 may linearly move the imaging apparatus 21 along at least one of the X-axis (GL), the Y-axis (GL), and the Z-axis (GL).

In this case, the control apparatus 3 may linearly move the imaging apparatus 21 along a translational axis that intersects the optical axis AX21 of the imaging apparatus 21. Since the Z-axis (2D) is an axis along the optical axis AX21 as described above, the control apparatus 3 may linearly move the imaging apparatus 21 along a translational axis that intersects the Z-axis (2D). For example, the control apparatus 3 may linearly move the imaging apparatus 21 along the X-axis (2D) that intersects the Z-axis (2D). For example, the control apparatus 3 may linearly move the imaging apparatus 21 along the Y-axis (2D) that intersects the Z-axis (2D). In this case, as illustrated in FIG. 23B, the position at which the imaging apparatus 21 images the object OBJ changes. Therefore, there is a higher possibility that the imaging apparatus 21, which has not imaged the object OBJ from an appropriate position before the imaging apparatus 21 moves, can image the object OBJ from an appropriate position.

As illustrated in FIG. 23B, the control apparatus 3 may perform at least one of a first translational movement operation for linearly moving the imaging apparatus 21 in a positive translational direction along the X-axis (2D), a second translational movement operation for linearly moving the imaging apparatus 21 in a negative translational direction along the X-axis (2D), a third translational movement operation for linearly moving the imaging apparatus 21 in a positive translational direction along the Y-axis (2D), and a fourth translational movement operation for linearly moving the imaging apparatus 21 in a negative translational direction along the Y-axis (2D). The control apparatus 3 may perform at least two of the first translational movement operation to the fourth translational movement operation in sequence until the object OBJ detected by the 2D matching processing is decided as the target object OBJ_target. For example, the control apparatus 3 may perform the first translational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the second translational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the third translational movement operation and then determine whether to decide the object OBJ detected by the 2D matching processing as the target object OBJ_target. As a result, in a case where it is still determined that the object OBJ detected by the 2D matching processing is not decided as the target object OBJ_target, the control apparatus 3 may perform the fourth translational movement operation and then determine whether to decide the object OBJ detected by the 2D matching processing as the target object OBJ_target.

The control apparatus 3 may alternately perform the operation for rotationally moving the imaging apparatus 21 and the operation for linearly moving the imaging apparatus 21. For example, the control apparatus 3 may perform the first rotational movement operation to the fourth rotational movement operation described above in sequence until the object OBJ detected by the 2D matching processing is decided as the target object OBJ_target. Then, in a case where it is still determined that the object OBJ detected by the 2D matching processing is not decided as the target object OBJ_target after the first rotational movement operation to the fourth rotational movement operation described above are performed in sequence, the control apparatus 3 may perform either one of the first translational movement operation to the fourth translational movement operation so that the imaging apparatus 21 moves from one position to another position. Then, the control apparatus 3 may perform the first rotational movement operation to the fourth rotational movement operation in sequence by using the imaging apparatus 21 positioned at another position until the object OBJ detected by the 2D matching processing is decided as the target object OBJ_target. Then, the control apparatus 3 may repeat the same operation.

In this case, in a case where it is determined that the object OBJ detected by the 2D matching processing is not decided as the target object OBJ_target, the control apparatus 3 may perform the operation for rotationally moving the imaging apparatus 21 in preference to the operation for linearly moving the imaging apparatus 21. This is because there is a higher possibility that a change of the direction in which the imaging apparatus 21 images the object OBJ results in the imaging apparatus 21 being able to appropriately image the object OBJ than a change of the position at which the imaging apparatus 21 images the object OBJ.

As described above, the control apparatus 3 in the first modified example can appropriately determine whether to decide the object OBJ detected by the 2D matching processing as the target object OBJ_target. Therefore, even in a case where the plurality of objects OBJ are detected by the 2D matching processing, the control apparatus 3 can appropriately decide one of the plurality of objects OBJ as the target object OBJ_target.

For example, the control apparatus 3 may decide, as the target object OBJ_target, the object OBJ that satisfies the matching condition. In this case, the control apparatus 3 can appropriately decide, as the target object OBJ_target, the object OBJ that is expected to be detected by the 2D matching processing. Namely, the control apparatus 3 does not mistakenly decide, as target object OBJ_target, the object OBJ that should not be detected by the 2D matching processing. Therefore, the end effector 13 can appropriately perform the predetermined process on the object OBJ that should be detected by the 2D matching processing.

For example, the control apparatus 3 may decide, as the target object OBJ_target, the object OBJ that satisfies the edge condition. In this case, the control apparatus 3 can decide, as the target object OBJ_target, the object OBJ that is not hidden by the obstruction in preference to the object OBJ that is partially hidden by the obstruction. Here, the object OBJ that is partially hidden by the obstruction is assumed to be the object OBJ on which the obstruction is stacked. Therefore, if the end effector 13 tries to perform the predetermined process (for example, the above-described hold process) on this object OBJ, there is a possibility that the obstruction interferes with the process by the end effector 13. On the other hand, the object OBJ that is not hidden by the obstruction is the object OBJ on which the obstruction is not stacked. Therefore, if the end effector 13 tries to perform the predetermined process (for example, the above-described hold process) on this object OBJ, there is a low possibility that the obstruction interferes with the process by the end effector 13. Therefore, the control apparatus 3 can decide, as the target object OBJ_target, the object OBJ on which the end effector 13 is highly likely to be capable of appropriately performing the predetermined process. Namely, the control apparatus 3 does not decide, as target object OBJ_target, the object OBJ on which the end effector 13 is highly likely not to be capable of appropriately performing the predetermined process. Therefore, end effector 13 can appropriately perform the predetermined process on object OBJ.

The effect that is achievable by deciding the object OBJ that satisfies the edge condition as the target object OBJ_target is especially effective in a case where the end effector 13 performs the predetermined process (for example, the hold process) on the plurality of workpieces W that are randomly stacked on the placing apparatus T. This is because there is a high possibility that a part of one workpiece W is hidden by another workpiece W in a case where the plurality of workpieces W are randomly stacked on the placing apparatus T.

Furthermore, in the first modified example, in a case where the object OBJ that should be decided as the target object OBJ_target cannot be detected, the control apparatus 3 may move (for example, rotationally move and / or linearly move) the imaging apparatus 21 and then determine whether to decide the object OBJ detected by the 2D matching processing as the target object OBJ_target again. Therefore, the control apparatus 3 can appropriately detect the object OBJ to be determined as the target object OBJ_target.

Incidentally, in a case where the object OBJ detected by the 2D matching processing is decided as the target object OBJ_target, the control apparatus 3 usually generates the robot control signal for controlling the robot arm 12 so that the end effector 13 approaches the object OBJ. However, the control apparatus 3 may generate the robot control signal for controlling the robot arm 12 so that the end effector 13 approaches the object OBJ detected by the 2D matching processing before the object OBJ detected by the 2D matching processing is decided as the target object OBJ_target. For example, in a case where the plurality of objects OBJ are detected by the 2D matching processing, the control apparatus 3 may generate the robot control signal for controlling the robot arm 12 so that the end effector 13 approaches the object OBJ that is detected by the 2D matching processing and whose matching similarity is the highest. For example, in a case where the plurality of objects OBJ are detected by the 2D matching processing, the control apparatus 3 may generate the robot control signal for controlling the robot arm 12 so that the end effector 13 approaches the object OBJ that is detected by the 2D matching processing and whose edge similarity is the highest. The robot control signal may be generated. For example, in a case where a single object OBJ is detected by the 2D matching processing, the control apparatus 3 may generate the robot control signal for controlling the robot arm 12 so that the end effector 13 approaches the object OBJ that is detected by the 2D matching processing. In this case, the control apparatus 3 may perform the robot control processing illustrated in FIG. 21 (especially, the processing for determining whether to decide the object OBJ as the target object OBJ_target) in a perido during which the end effector 13 is approaching the object OBJ detected by the 2D matching processing. As a result, a time required for the end effector 13 to reach the object OBJ is reduced after the object OBJ detected by the 2D matching processing is decided as the target object OBJ_target.

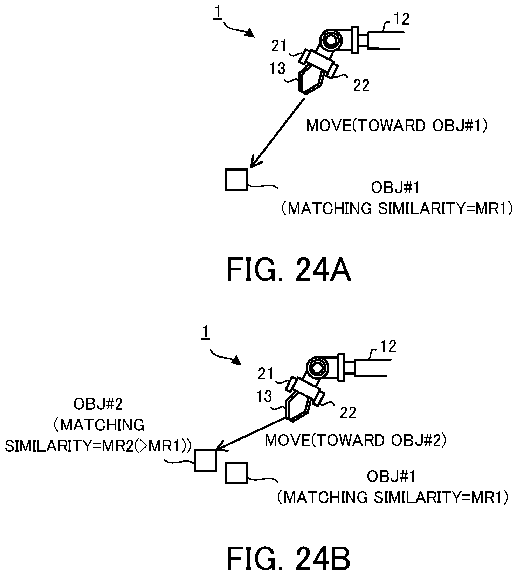

In a case where another object OBJ whose matching similarity or edge similarity is higher is detected in the process of the end effector 13 approaching the object OBJ detected by the 2D matching processing, the control apparatus 3 may generate the robot control signal for controlling the robot arm 12 so that the end effector 13 approaches another object OBJ whose matching similarity or edge similarity is higher. For example, FIG. 24A illustrates the robot arm 12 that is controlled to move the end effector 13 toward an object OBJ#1 whose matching similarity is "MR1" before the object OBJ#1 is decided as the target object OBJ_target. In the situation illustrated in FIG. 24A, suppose that an object OBJ#2, whose matching similarity is "MR2" that is higher than "MR1", is newly detected as illustrated in FIG. 24B. In this case, the control apparatus 3 may generate the robot control signal for controlling the robot arm 12 so that the end effector 13 approaches the object OBJ#2 instead of the object OBJ#1, as illustrated in FIG. 24B. For example, the control apparatus 3 may generate the robot control signal for controlling the robot 1 (for example, the robot arm 12) to change at least one of the position and the pose of the end effector 13 in order to perform the predetermined process on the object OBJ#2 by using the end effector 13.

Incidentally, in the above-described description, the control apparatus 3 controls the robot 1 to move the imaging apparatus 21 relative to the object OBJ in a case where the object OBJ detected by the 2D matching processing is not decided as the target object OBJ_target (the step S36a in FIG. 21). However, the control apparatus 3 may control the robot 1 to move the imaging apparatus 21 relative to the object OBJ even in a case where the object OBJ detected by the 2D matching processing is decided as the target object OBJ_target.

For example, the control apparatus 3 may move the imaging apparatus 21 relative to the object OBJ so that the edge of the object OBJ is included in the image indicated by the image data IMG_2D as much as possible. The control apparatus 3 may move the imaging apparatus 21 relative to the object OBJ so that more edge of the object OBJ is included in the image indicated by the image data IMG_2D than before moving the imaging apparatus 21. Specifically, the control apparatus 3 may move the imaging apparatus 21 relative to the object OBJ so that a total sum of the length of the edge of the object OBJ included in the image indicated by the image data IMG_2D is as large as possible. The control apparatus 3 may move the imaging apparatus 21 relative to the object OBJ so that the total sum of the length of the edge of the object OBJ included in the image indicated by the image data IMG_2D becomes larger than before moving the imaging apparatus 21. Then, the control apparatus 3 may calculate the position-pose information POI0 by performing the processing of the steps S1, S2 and S3 in FIG. 21 again. Incidentally, in this case, the control apparatus 3 may not perform the processing from the step 31a to the step S34a in FIG. 21 because the object OBJ decided as the target object OBJ_target does not change. In this case, a variation of the pose of the object OBJ indicated by the position-pose information POI0 is smaller, compared to a case where the imaging apparatus 21 is not moved relative to the object OBJ.

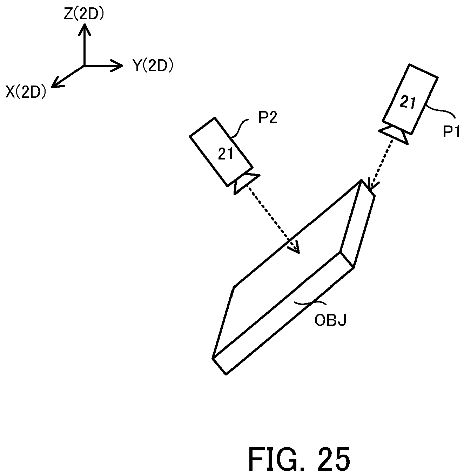

Specifically, FIG. 25 illustrates the imaging apparatus 21 that images the object OBJ from a first position P1 and the imaging apparatus 21 that images the object OBJ from a second position P2 different from the first position P1. As illustrated in FIG. 25, the edge of the object OBJ included in the image indicated by the image data IMG_2D generated by the imaging apparatus 21 that images the object OBJ from the first position P1 is smaller than the edge of the object OBJ included in the image indicated by the image data IMG_2D generated by the imaging apparatus 21 that images the object OBJ from the second position P2. Here, an amount of information that is usable by the 2D matching processing is smaller as the edge of the object OBJ included in the image is smaller (for example, the total sum of the length of the edge is smaller), and thus a variation of the position-pose information POI1 generated by the 2D matching processing is larger (a repeatability is lower). As a result, variation of the position-pose information POI0 generated based on the position-pose information POI1 is also larger. In this case, the control apparatus 3 may move the imaging apparatus 21 from the first position P1 to the second position P2. As a result, the edge of the object OBJ included in the image is more (for example, the total sum of the length of the edge is larger). Therefore, the amount of information that is usable by the 2D matching processing is larger. Therefore, the variation of the position-pose information POI1 generated by the 2D matching processing is smaller. As a result, the variation of the position-pose information POI0 generated based on the position-pose information POI1 is also smaller (the reproducibility is higher).

Furthermore, since the imaging apparatus 22 also moves as the imaging apparatus 21 moves, an amount of information that is included in the image data IMG_3D generated by the imaging apparatus 21 and that usable by the 3D matching processing is also larger. As a result, an amount of information that is included in the three-dimensional position data WSD generated from the image data IMG_3D and that is usable by the 3D matching processing (for example, the number of point cloud included in the point cloud data) is also larger. Therefore, a variation of the position-pose information POI2 generated by the 3D matching processing is smaller. As a result, the variation of the position-pose information POI0 generated based on the position-pose information POI2 is also smaller (the reproducibility is smaller).

### (4-2) Second Modified Example

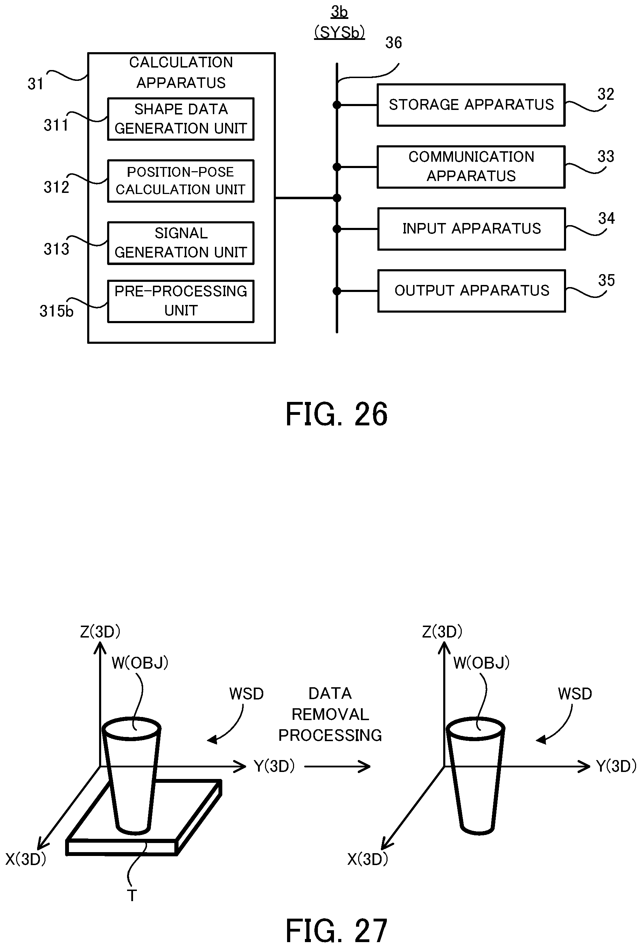

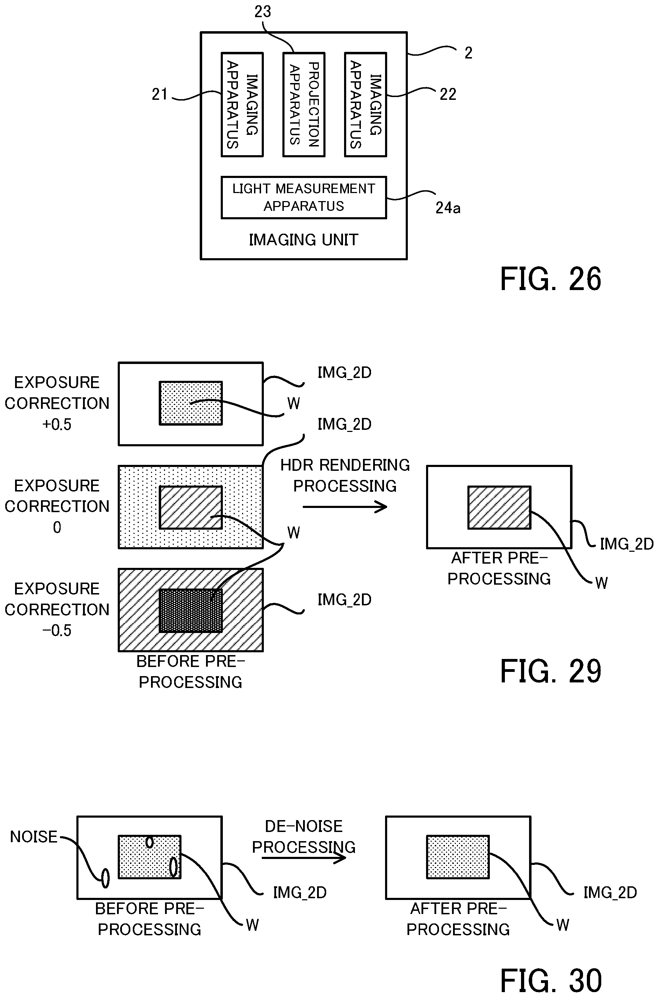

Next, a second modified example of the robot system SYS will be described. Incidentally, in the below-described description, the second modified example of the robot system SYS is referred to as a "robot system SYSb". The robot system SYSb in the second modified example may be different from the above-described robot system SYS or SYSa in that it includes a control apparatus 3b instead of the control apparatus 3 or 3a. Other feature of the robot system SYSb may be the same as other feature of the robot system SYS or SYSa. Therefore, in the below-described description, with reference to FIG. 26, the control apparatus 3b in the second modified example will be described. FIG. 26 is a block diagram that illustrates a configuration of the control apparatus 3b in the first modified example.

As illustrated in FIG. 26, the control apparatus 3b in the second modified example is different from the above-described control apparatus 3 or 3a in that the calculation apparatus 31 includes a pre-processing unit 315b as the logical processing block. The pre-processing unit 315b performs a pre-processing before the matching processing and the tracking processing are performed. Other feature of the control apparatus 3b may be the same as other feature of the control apparatus 3 or 3a.

The pre-processing unit 315b may perform the pre-processing on the three-dimensional position data WSD generated by the three-dimensional position data generation unit 311. In this case, the 3D matching unit 3122 may perform the 3D matching processing by using the three-dimensional position data WSD on which the pre-processing has been performed. The tracking unit 3123 may perform the tracking processing by using the three-dimensional position data WSD on which the pre-processing has been performed.

The pre-processing performed on the three-dimensional position data WSD includes a data removal processing for removing partial data part of the three-dimensional position data WSD. Specifically, there is a possibility that the three-dimensional position data WSD includes not only a data part indicating the three-dimensional position of each of the plurality of points of the object OBJ, but also a data part indicating a three-dimensional position of another object that is different from the object OBJ. In this case, the data removal processing may include a processing for removing, from the three-dimensional position data WSD, the data part indicating the three-dimensional position of another object that is different from object OBJ.

Next, the data removal processing performed in a case where the workpiece W, which is the object OBJ whose position and pose should be calculated, is placed on the placing apparatus T, whose position and pose calculation may not be calculated, will be described, for convenience of description. In this case, the imaging apparatus 22 generates the image data IMG_3D by imaging the workpiece W placed on the placing apparatus T. Therefore, there is a possibility that the three-dimensional position data WSD generated from the image data IMG_3D includes not only the data part indicating the three-dimensional position of each of the plurality of points of the workpiece W, but also a data part indicating the shape of the placing apparatus T. In this case, as illustrated in FIG. 27, the pre-processing unit 315b may remove the data part indicating the three-dimensional position of the placing apparatus T from the three-dimensional position data WSD.

A placement surface of the placing apparatus T on which the workpiece W is placed may be a planar surface. In this case, the pre-processing unit 315b may perform a planar surface removal processing, which is one example of the data removal processing, on the three-dimensional position data WSD. At least one of a planar surface removal processing using a RANSAC (Random Sample Consensus) and a planar surface removal processing using a least-squares method is one example of the planar surface removal processing.

This data removal processing reduces the data size of the three-dimensional position data WSD. As a result, the calculation amount required for the 3D matching processing using the three-dimensional position data WSD and the tracking processing using the three-dimensional position data WSD are reduced. Therefore, the 3D matching cycle, which is the period required for the 3D matching unit 3122 to complete the 3D matching processing, and the 3D tracking cycle, which is the period required for the tracking unit 3123 to complete the tracking processing, can be reduced.

Moreover, this data removal processing reduces a possibility that the position-pose calculation unit 312 misrecognizes the data part indicating the three-dimensional position of another object, which is different from the object OBJ whose position and pose should be calculated, as the data part indicating the three-dimensional position of the object OBJ. This is because the data part indicating the three-dimensional position of another object that is different from the object OBJ, which may be noise for the tracking processing and the matching processing described above, is removed. Therefore, the position-pose calculation unit 312 can appropriately recognize the data part indicating the three-dimensional position of the object OBJ. For example, in a case where the three-dimensional position data WSD is the point cloud data, the position-pose calculation unit 312 can appropriately recognize the point cloud related to the object OBJ. For example, in a case where the three-dimensional position data WSD is the depth image data, the position-pose calculation unit 312 can appropriately recognize the depth information related to the object OBJ. As a result, the position-pose calculation unit 312 can calculate the position and the pose of the object OBJ more accurately, compared to a case where the data removal processing is not performed.

Incidentally, the pre-processing unit 315b may remove the data part indicating the three-dimensional position of another object different from the object OBJ from the three-dimensional position data WSD based on a user's instruction designating the data part of the three-dimensional position data WSD indicating the three-dimensional position of another object different from the object OBJ. Specifically, the control apparatus 3 may use the output apparatus 35 including the display apparatus to display a GUI (Graphical User Interface) that is operable by the user to designate partial data part of the three-dimensional position data WSD as the data part indicating the three-dimensional position of another object different from the object OBJ. For example, the control apparatus 3 may use the output apparatus 35 including the display apparatus to display a plurality of points indicated by the point cloud data, which is one example of the three-dimensional position data WSD, and display a GUI that is operable by the user to designate a point among the plurality of points indicating the three-dimensional position of the object different from the object OBJ. For example, the control apparatus 3 may use the output apparatus 35 including the display apparatus to display the depth image indicated by the depth image data, which is one example of the three-dimensional position data WSD, and display a GUI that is operable by the user to designate a pixel in the depth image indicating the three-dimensional position of another object different from the object OBJ.

The pre-processing unit 315b may perform the pre-processing on at least one of the image data IMG_2D and IMG_3D. In this case, the 2D matching unit 3121 may perform the 2D matching processing by using the image data IMG_2D on which the pre-processing has been performed. The tracking unit 3123 may perform the tracking processing by using the two image data IMG_2D on each of which the pre-processing has been performed. The three-dimensional position data generation unit 311 may generate the three-dimensional position data WSD by using the image data IMG_3D on which the pre-processing has been performed. The 3D matching unit 3122 may perform the 3D matching processing by using the three-dimensional position data WSD generated from the image data IMG_3D on which the pre-processing has been performed. The tracking unit 3123 may perform the tracking processing by using the three-dimensional position data WSD generated from the image data IMG_3D on which the pre-processing has been performed.

The pre-processing performed on at least one of the image data IMG_2D and IMG_3D may include a gamma correction processing. The gamma correction processing may include a correction processing for emphasizing an edge of the object OBJ included in the image indicated by the image data IMG_2D (alternatively, the image data IMG_3D) by adjusting a contrast of the image indicated by the image data IMG_2D (alternatively, the image data IMG_3D).

Incidentally, in a case where the gamma correction processing is performed, at least one of the imaging apparatuses 21 and 22 may be configured to automatically adjust an exposure. Specifically, in a case where the gamma correction processing is performed, the imaging unit 2 may include a light measurement apparatus 24b that is configured to measure a luminance (namely, a brightness) of the object OBJ, as illustrated in FIG. 28. At least one of the imaging apparatuses 21 and 22 may automatically adjust the exposure based on a measured result by the light measurement apparatus 24b. Alternatively, at least one of the imaging apparatuses 21 and 22 may automatically adjust the exposure based on a brightness value (for example, an average value of the brightness values of the plurality of pixels) of the actually generated image data IMG_2D (alternatively, image data IMG_3D), in addition to or instead of the measured result by the light measurement apparatus 24b. As one example, at least one of the imaging apparatuses 21 and 22 may automatically adjust the exposure so that the brightness value of the image data IMG_2D (alternatively, the image data IMG_3D) is within a desired range. In this case, it is possible to adjust the contrast of the image data IMG_2D (alternatively, the image data IMG_3D) more appropriately by the gamma correction processing to emphasize the edge of the workpiece W included in the image data IMG_2D (alternatively, the image data IMG_3D).

The pre-processing performed on at least one of the image data IMG_2D and IMG_3D may include a High-Dynamic-Range rendering processing. As illustrated in FIG. 29, the High-Dynamic-Range rendering processing may include a processing for combining a plurality of image data IMG_2D (alternatively, a plurality of image data IMG_3D) generated by imaging the workpiece W under a plurality of imaging environments with different exposures to generate the image data IMG_2D (alternatively, the image data IMG_3D) with a wide dynamic range in which there is few white clipping and black clipping.

The pre-processing performed on at least one of the image data IMG_2D and IMG_3D may include a de-noise processing. The de-noise processing may be a processing for generating the image data IMG_2D (alternatively, image data IMG_3D) with less noise by removing noise included in the image data IMG_2D (alternatively, image data IMG_3D), as illustrated in FIG. 30. The pre-processing unit 315b may perform, as the de-noise processing, a known filtering processing on at least one of the image data IMG_2D and IMG_3D. For example, the pre-processing unit 315b may perform the filtering processing using at least one of an averaging filter, a median filter, and a dilation filter on at least one of the image data IMG_2D and IMG_3D.

Incidentally, the pre-processing unit 315b may perform a known filtering processing, which is other than the de-noise processing, on at least one of the image data IMG_2D and IMG_3D. For example, the pre-processing unit 315b may perform a filter processing using at least one of a smoothing filter and an edge enhancement filter on at least one of the image data IMG_2D and IMG_3D.

### (4-3) Third Modified Example

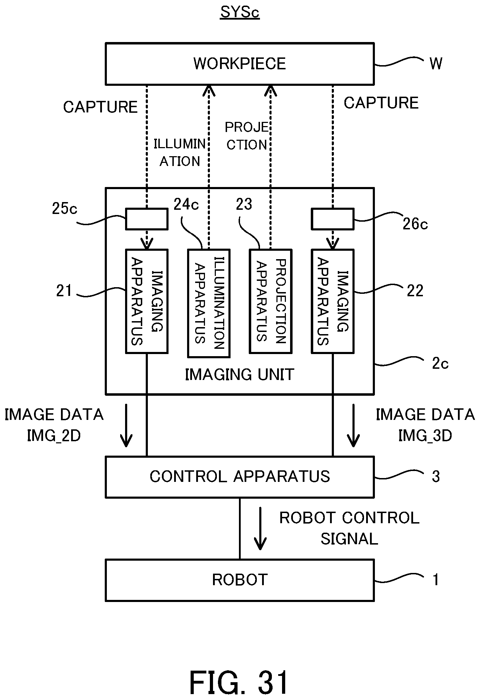

Next, with reference to FIG. 31, a third modified example of the robot system SYS will be described. FIG. 31 is a block diagram that illustrates a configuration of the robot system SYS in the third modified example. Incidentally, in the below-described description, the third modified example of the robot system SYS is referred to as a "robot system SYSc" to distinguish it from the robot system SYS described above.

As illustrated in FIG. 31, the robot system SYSc in the third modified example may be different from the above-described robot system SYS, SYSa, or SYSb in that it includes an imaging unit 2c instead of the imaging unit 2. Other feature of the robot system SYSc may be the same as other feature of the robot system SYS, SYSa, or SYSb.

The imaging unit 2c in the third modified example is different from the above-described imaging unit 2 in that it includes an illumination apparatus 24c, a filter 25c, and a filter 26c. Other feature of the imaging unit 2c may be the same as other feature of the imaging unit 2.

The illumination apparatus 24c is an apparatus that is configured to illuminate the object OBJ with illumination light. Especially, the illumination apparatus 24c is an apparatus that is configured to illuminate the object OBJ with the illumination light by irradiating the object OBJ with the illumination light. The illumination apparatus 24c may illuminate the object OBJ with the illumination light including light component in a second wavelength bandwidth (for example, a wavelength bandwidth of red light). On the other hand, the projection apparatus 23 may illuminate the object OBJ with the projection light including light component in a first wavelength bandwidth (for example, a wavelength bandwidth of blue light) that is different from the second wavelength bandwidth. Namely, the projection apparatus 23 may irradiate the object OBJ with the projection light including the light component in the first wavelength bandwidth (for example, the wavelength bandwidth of the blue light) that is different from the second wavelength bandwidth. Incidentally, the projection apparatus 23 is an apparatus that projects the desired projection pattern on the object OBJ by irradiating the object OBJ with the projection light. In this case, the projection apparatus 23 may be considered to illuminate the object OBJ with the projection light. Namely, the projection apparatus 23 may be regarded as an illumination apparatus that illuminates the object OBJ with the projection light. Incidentally, as described above, in a case where the projection apparatus 23 is considered to be the illumination apparatus, the projection light may not be the light capable of projecting the desired projection pattern on the target object.

The filter 25c is capable of attenuating light component in the first wavelength bandwidth. The imaging apparatus 21 images the object OBJ by optically receiving light from the object OBJ through the filter 25c with an imaging element. Here, the filter 25c attenuates the projection light because the projection light from the projection apparatus 23 includes the light component in the first wavelength bandwidth as described above. Therefore, return light (for example, at least one of reflected light and scattered light of the projection light) from the object OBJ that has been irradiated with the projection light (namely, on which the projection pattern has been projected) is attenuated by the filter 25c. As a result, even in a case where the projection apparatus 23 irradiates the object OBJ with the projection light in order to allow the imaging apparatus 22 to image the object OBJ, the imaging apparatus 21 can appropriately image the object OBJ illuminated with the illumination light emitted from the illumination apparatus 24c without being affected by the projection light emitted from the projection apparatus 23.

The filter 26c is capable of attenuating light component in the second wavelength bandwidth. The imaging apparatus 22 images the object OBJ (in other words, the projection pattern projected on the object OBJ) by optically receiving light from the object OBJ through the filter 26c with the imaging element. Here, the filter 26c attenuates the illumination light because the illumination light includes the light component in the second wavelength bandwidth as described above. Therefore, return light (for example, at least one of reflected light and scattered light of the illumination light) from the object OBJ that has been irradiated with the illumination light from the illumination apparatus 24c is attenuated by the filter 26c. As a result, even in a case where the illumination apparatus 24c irradiates the object OBJ with the illumination light in order to allow the imaging apparatus 21 to image the object OBJ, the imaging apparatus 22 can appropriately image the object OBJ illuminated with the projection light emitted from the projection apparatus 23 (in other words, the projection pattern projected on the object OBJ) without being affected by the illumination light emitted from the illumination apparatus 24c.

Thus, in the third modified example, the imaging apparatus 21 can image the object OBJ without being affected by the imaging of the object OBJ (the projection pattern projected on the object OBJ) by the imaging apparatus 22. Similarly, the imaging apparatus 22 can image the object OBJ (the projection pattern projected on the object OBJ) without being affected by the imaging of the object OBJ by the imaging apparatus 21. Therefore, the imaging apparatuses 21 and 22 can image the object OBJ at the same time. Namely, even in a case where the time at which the imaging apparatus 21 images the object OBJ is the same as the time at which the imaging apparatus 22 images the object OBJ (the projection pattern projected on the object OBJ), each of the imaging apparatuses 21 and 22 can image the object OBJ appropriately.

### (4-4) Other Modified Example

At least one of the robot systems SYS, SYSa, SYSb, and SYSc may employ other modified example described below.

### (4-4-1) Modified Example of Robot 1

In the above description, the end effector 13 (for example, the hand gripper or the vacuum gripper) that performs at least one of the hold process and the release process is attached to the robot arm 12. However, the end effector 13 is not limited to an apparatus that performs at least one of the hold process and the release process, but may also be an apparatus that performs other process on the object OBJ.

As one example, a processing apparatus for processing the object OBJ may be attached to the robot arm 12 as one example of the end effector 13. The processing apparatus may perform at least one of an additive manufacturing for adding a new build object to the object OBJ, a subtractive manufacturing for removing a part of the object OBJ, a welding processing for jointing two objects OBJ, and a cutting processing for cutting the object OBJ. The processing apparatus may process the object OBJ by using a tool. In this case, the processing apparatus including the tool may be attached to the robot arm 12. Alternatively, the processing apparatus may process the object OBJ by irradiating the object OBJ with an energy beam (for example, light, electromagnetic wave, and charged particle beam). In this case, the processing apparatus including an irradiation apparatus that irradiates the object OBJ with the energy beam may be attached to the robot arm 12.

The processing apparatus that is one example of the end effector 13 may perform soldering processing for soldering a component to the object OBJ. The processing apparatus may solder the component to the object OBJ by using a soldering copper. In this case, the processing apparatus including the soldering copper may be attached to the robot arm 12. Alternatively, the processing apparatus may solder the component to the object OBJ by irradiating the solder with an energy beam (for example, light, electromagnetic wave, and charged particle beam). In this case, the processing apparatus including an irradiation apparatus that irradiates the object OBJ with the energy beam may be attached to the robot arm 12.

As another example, a measurement apparatus for measuring the object OBJ may be attached to the robot arm 12 as one example of the end effector 13. The measurement apparatus may be configured to measure a characteristic of the object OBJ. At least one of the shape of the object OBJ, a size of the object OBJ, and a temperature of the object OBJ is one example of the characteristic of the object OBJ. The measurement apparatus may measure the object OBJ by using a touch probe. In this case, the measurement apparatus including the touch probe may be attached to the robot arm 12. Alternatively, the measurement apparatus may measure the object OBJ by irradiating the object OBJ with an energy beam (for example, light, electromagnetic wave, and charged particle beam). In this case, the measurement apparatus including an irradiation apparatus that irradiates the object OBJ with the energy beam may be attached to the robot arm 12.

In a case where at least one of the processing apparatus and the measurement apparatus is attached to the robot arm 12 as one example of the end effector 13, the control apparatus 3 may generate the control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling ON and OFF of the energy beam by the irradiation apparatus of at least one of the processing apparatus and the measurement apparatus.

As another example, a discharging apparatus may be attached to the robot arm 12 as one example of the end effector 13. For example, the discharging apparatus may discharge at least one of an adhesive material, a seal material, a paint material, and a solder. The discharging apparatus may discharge at least one of the adhesive material, the seal material, the paint material, and the solder toward the object OBJ. For example, the control apparatus 3 may generate the control signal for controlling at least one of ON / OFF of discharging and an discharged amount from the discharging apparatus. Incidentally, the discharging apparatus may be referred to as a processing apparatus, because it can be said that discharging at least one of the adhesive material, the seal material, the paint material, and the solder to the object OBJ is processing the object OBJ.

### (4-4-2) Modified Example of Imaging unit 2

In the above-described description, the imaging unit 2 includes the imaging apparatus 22 and the projection apparatus 23 to generate the image data IMG_3D. However, the imaging unit 2 may not include the projection apparatus 23 to generate the image data IMG_3D. This is because the imaging apparatus 22 is the stereo camera as described above and it is possible to generate the three-dimensional position data WSD, which indicates the three-dimensional position of each of the plurality of points of the object OBJ, from the two image data IMG_3D generated by the two imaging elements of the stereo camera, respectively. In this case, the three-dimensional position data generation unit 311 may calculate the parallax by performing the matching for each part (for example, each pixel) of the images indicated by the two image data, respectively, included in the image data IMG_3D, and generate the three-dimensional position data WSD by using the well-known method based on the principle of triangulation using the calculated parallax.

The imaging apparatus 22 may not be the stereo camera. For example, the imaging apparatus 22 may be a monocular camera that images the object OBJ by using a single imaging element. Even in this case, the image indicated by the image data IMG_3D includes the object OBJ on which the projection pattern is projected. In this case, the shape of the projection pattern in the image indicated by the image data IMG_3D reflects the three-dimensional shape of the object OBJ on which the projection pattern is projected. Therefore, even in a case where the imaging apparatus 22 is not the stereo camera, the three-dimensional position data generation unit 311 can generate the three-dimensional position data WSD by a well-known processing based on the projection pattern that is included in the image indicated by the image data IMG_3D.

The imaging unit 2 may include either one of the imaging apparatuses 21 and 22 (namely, a single imaging apparatus) and the projection apparatus 23. In this case, the image data generated by the single imaging apparatus imaging the object OBJ in a period during which the projection apparatus 23 does not project the desired projection pattern on the object OBJ may be used as the image data IMG_2D. On the other hand, the image data generated by the single imaging apparatus imaging the object OBJ in a period during which the projection apparatus 23 projects the desired projection pattern on the object OBJ may be used as the image data IMG_3D. Even in this case, the position-pose calculation unit 312 generates the position-pose information POI0 indicating the position and the pose of the object OBJ based on the image data IMG_2D and the three-dimensional position data WSD generated from the image data IMG_3D at the step S3 in FIG. 4. Specifically, the 2D matching unit 3121 may calculate, as the position of the object OBJ in the 2D imaging coordinate system, at least one of the position Tx(2D), the position Ty(2D), the position Tz(2D), the pose Rx(2D), the pose Ry(2D), and the pose Rz(2D) by performing the 2D matching processing. The 3D matching unit 3122 may calculate, as the position of the object OBJ in the 3D imaging coordinate system, at least one of the position Tx(3D), the position Ty(3D), the position Tz(3D), the pose Rx(3D), the pose Ry(3D), and the pose Rz(3D) by performing the 3D matching processing. The tracking unit 3123 may calculate at least one of the change amount ΔTx(2D), the change amount ΔTy(2D), the change amount ΔTz(2D), the change amount ΔRx(2D), the change amount ΔRy(2D), and the change amount ΔRz(2D) or at least one of the change amount ΔTx(3D), the change amount ΔTy(3D), the change amount ΔTz(3D), the change amount ΔRx(3D), the change amount ΔRy(3D), and the change amount ΔRz(3D) by performing the tracking processing. However, in a case where the imaging unit 2 includes either one of the imaging apparatuses 21 and 22 (namely, the single imaging apparatus), the 2D imaging coordinate system and the 3D imaging coordinate system are the same coordinate system. Therefore, in this case, the control apparatus 3 may not necessarily perform the processing for transforming the position in either one coordinate system of the 2D imaging coordinate system and the 3D imaging coordinate system to the position in the other one coordinate system of the 2D imaging coordinate system and the 3D imaging coordinate system by using the above-described coordinate system information (for example, the transformation matrix).

The imaging unit 2 may include the imaging apparatus 22 that is the stereo camera, but may not include the imaging apparatus 21. In this case, the image data generated by either one of the two monocular cameras of the imaging apparatus 22 imaging the object OBJ may be used as the image data IMG_2D. On the other hand, the image data indicating the two images respectively generated by both of the two monocular cameras of the imaging apparatus 22 imaging the object OBJ may be used as the image data IMG_3D. Even in this case, the position-pose calculation unit 312 generates the position-pose information POI0 indicating the position and the pose of the object OBJ based on the image data IMG_2D and the three-dimensional position data WSD generated from the image data IMG_3D at the step S3 in FIG. 4. Specifically, the 2D matching unit 3121 may calculate, as the position of the object OBJ in the 2D imaging coordinate system, at least one of the position Tx(2D), the position Ty(2D), the position Tz(2D), the pose Rx(2D), the pose Ry(2D), and the pose Rz(2D) by performing the 2D matching processing. The 3D matching unit 3122 may calculate, as the position of the object OBJ in the 3D imaging coordinate system, at least one of the position Tx(3D), the position Ty(3D), the position Tz(3D), the pose Rx(3D), the pose Ry(3D), and the pose Rz(3D) by performing the 3D matching processing. The tracking unit 3123 may calculate at least one of the change amount ΔTx(2D), the change amount ΔTy(2D), the change amount ΔTz(2D), the change amount ΔRx(2D), the change amount ΔRy(2D), and the change amount ΔRz(2D) or at least one of the change amount ΔTx(3D), the change amount ΔTy(3D), the change amount ΔTz(3D), the change amount ΔRx(3D), the change amount ΔRy(3D), and the change amount ΔRz(3D) by performing the tracking processing. However, in a case where the imaging unit 2 includes either one of the imaging apparatuses 21 and 22 (namely, the single imaging apparatus), the 2D imaging coordinate system and the 3D imaging coordinate system are the same coordinate system. Therefore, in this case, the control apparatus 3 may not necessarily perform the processing for transforming the position in either one coordinate system of the 2D imaging coordinate system and the 3D imaging coordinate system to the position in the other one coordinate system of the 2D imaging coordinate system and the 3D imaging coordinate system by using the above-described coordinate system information (for example the transformation matrix).

In the above-described description, both of the imaging apparatuses 21 and 22 are mounted to the robot 1 (especially, the robot arm 12). However, at least one of the imaging apparatuses 21 and 22 may be mounted to a part that is different from the robot 1 (especially, the robot arm 12). For example, at least one of the imaging apparatuses 21 and 22 may be positioned on a ceiling of a building in which the robot system SYS is positioned.

In the above-described description, the imaging unit 2 is mounted to the robot 1 including the robot arm 12. However, the imaging unit 2 may be mounted to a robot that does not include the robot arm 12. For example, the imaging unit 2 may be mounted to the robot 1 including a support apparatus that is configured to suspend the imaging unit 2 from a position above the object OBJ. In this case, the imaging unit 2 may be mounted to the support apparatus. The support apparatus may include a plurality of leg members extending upwardly from the support surface S and a beam member connecting the plurality of leg members through upper ends of the leg members or parts near them. For example, the robot 1 may be configured to move the support apparatus.

### (4-4-3) Modified Example of Control Apparatus 3

In the above-described description, the control apparatus 3 (especially, the three-dimensional position data generation unit 311) generates the three-dimensional position data WSD from the image data IMG_3D. However, an apparatus that is different from the control apparatus 3 may generate the three-dimensional position data WSD from the image data IMG_3D. For example, the imaging unit 2 that generates the image data IMG_3D may generate the three-dimensional position data WSD from the image data IMG_3D. In this case, the control apparatus 3 may acquire the three-dimensional position data WSD from the apparatus that is different from the control apparatus 3. The control apparatus 3 may perform at least one of the 3D matching processing and the tracking processing described above by using the three-dimensional position data WSD acquired from the apparatus that is different from the control apparatus 3. For example, in a case where the imaging unit 2 generates the three-dimensional position data WSD from the image data IMG_3D, the control apparatus 3 may acquire the three-dimensional position data WSD from the imaging unit 2 and perform at least one of the 3D matching and tracking processing described above.

In the above-described description, the control apparatus 3 performs both of the matching processing and the tracking processing. However, the control apparatus 3 may not perform the tracking processing. In this case, the control apparatus 3 may generate, as the position-pose information POI0, the result of the 3D matching processing performed by the 3D matching unit 3122 (namely, the position-pose information POI2). The control apparatus 3 may generate, as the position-pose information POI0, the result of the 2D matching processing performed by the 2D matching unit 3121 (namely, the position-pose information POI1). The control apparatus 3 may generate the robot control signal based on the position-pose information POI1 or POI2. In this case, the control apparatus 3 may generate and output the robot control signal at a cycle that is the same as the 2D matching cycle or the 3D matching cycle, which is the cycle at which the position and the pose of the object OBJ is calculated.

As one example, in a case where the end effector 13 is holding the workpiece W, the control apparatus 3 may further generate the position-pose information POI0 indicating at least one of the position and the pose of the workpiece W held by the end effector 13, as already described above. Here, in a case where the end effector 13 is holding the workpiece W, the positional relationship between the end effector 13 and the workpiece W does not change. As a result, a positional relationship between the imaging apparatuses 21 and 22 and the workpiece W does not change. In this case, even in a case where the above-described tracking processing is not performed, the difference between the position of the object OBJ calculated by the control apparatus 3 and the actual position of the object OBJ is not so large, as in a case where the above-described tracking processing is performed. Similarly, even in a case where the above-described tracking processing is not performed, the difference between the pose of the object OBJ calculated by the control apparatus 3 and the actual pose of the object OBJ is not so large, as in a case where the above-described tracking processing is performed. Therefore, in this case, the control apparatus 3 may generate the position-pose information POI0 indicating at least one of the position and the pose of the workpiece W held by the end effector 13 without performing the tracking processing.

As can be seen from this example, in a case where the object OBJ and each of the apparatuses 21 and 22 are not being relatively displaced (for example, the robot 1 and the object OBJ are not moving), the difference between the position of the object OBJ calculated by the control apparatus 3 and the actual position of the object OBJ is not so large even in a case where the above-described tracking processing is not performed, as in a case where the above-described tracking processing is performed. Similarly, in a case where the object OBJ and each of the apparatuses 21 and 22 are not being relatively displaced (for example, the robot 1 and the object OBJ are not moving), the difference between the pose of the object OBJ calculated by the control apparatus 3 and the actual pose of the object OBJ is not so large even in a case where the above-described tracking processing is not performed, as in a case where the above-described tracking processing is performed. Therefore, in this case, the control apparatus 3 may generate the position-pose information POI0 indicating at least one of the position and the pose of the object OBJ without performing the tracking processing. Of course, even in a case where the object OBJ and each of the apparatuses 21 and 22 are not being relatively displaced, the control apparatus 3 may generate the position-pose information POI0 indicating at least one of the position and the pose of the object OBJ without performing the tracking processing. Incidentally, even in a case where the object OBJ and each of the apparatuses 21 and 22 are being relatively displaced, the control apparatus 3 may not perform the tracking processing. In this case, the control apparatus 3 may generate, as the position-pose information POI0, the result of the 3D matching processing performed by the 3D matching unit 3122 (namely, the position-pose information POI2).

Alternatively, in a case where the object OBJ and each of the apparatuses 21 and 22 are not being relatively displaced (for example, the robot 1 and the object OBJ are not moving), the position-pose calculation unit 312 may not periodically perform the 2D matching processing and the 3D matching processing (furthermore, the tracking processing) after generating the position-pose information POI0 once by using the result of the 3D matching processing performed by the 3D matching unit 3122 (namely the position-pose information POI2). Even in this case, the position of the object OBJ does not change significantly from the position indicated by the position-pose information POI0 that has already been generated, because the positional relationship between the imaging apparatuses 21 and 22 and the workpiece W does not change. Therefore, the difference between the position of the object OBJ calculated by the control apparatus 3 and the actual position of the object OBJ is not so large even in a case where the 2D matching processing and the 3D matching processing are not performed periodically. Similarly, the pose of the object OBJ does not change significantly from the pose indicated by the position-pose information POI0 that has already been generated. Therefore, the difference between the pose of the object OBJ calculated by the control apparatus 3 and the actual pose of the object OBJ is not so large even in a case where the 2D matching processing and the 3D matching processing are not performed periodically. Therefore, in this case, the control apparatus 3 may generate the robot control signal based on the firstly generated position-pose information POI0. For example, the control apparatus 3 may generate the robot control signal for controlling at least one of the robot arm 12 and the end effector 13 to hold the object OBJ based on the firstly generated position-pose information POI0 of the object OBJ. For example, the control apparatus 3 may generate the robot control signal for controlling at least one of the robot arm 12 and the end effector 13 to release (for example, place or embed) another object on the object OBJ based on the firstly generated position-pose information POI0 of the object OBJ. Incidentally, even in a case where the object OBJ and each of the apparatuses 21 and 22 are being relatively displaced, the position-pose calculation unit 312 may not periodically perform the 2D matching processing and the 3D matching processing (furthermore, the tracking processing) after generating the position-pose information POI0 once by using the result of the 3D matching processing performed by the 3D matching unit 3122 (namely the position-pose information POI2).

The control apparatus 3 may perform the 2D matching processing but may not perform the 3D matching processing and the tracking processing. In this case, the control apparatus 3 may generate, as the position-pose information POI0, the result of the 2D matching processing performed by 2D matching unit 3121 (namely, the position-pose information POI1).

The control apparatus 3 may perform the 3D matching processing but may not perform the 2D matching and tracking processing. In this case, the 3D matching unit 3122 may not determine the initial position and the initial pose of the three-dimensional model WM3 based on the result of the 2D matching processing (namely, the position-pose information POI1). Namely, the 3D matching unit 3122 may perform the matching processing using the three-dimensional position data WSD as the 3D matching processing without determining the initial position and the initial pose of the three-dimensional model WM3. In this case, the control apparatus 3 may generate, as the position-pose information POI0, the result of the 3D matching processing performed by 3D matching unit 3122 (namely, the position-pose information POI2). Incidentally, in this case, the initial position of the three-dimensional model WM3 may be pre-set to the origin of the coordinate system of the three-dimensional model WM3 (the coordinate system of the three-dimensional model data WMD), and the initial pose of the three-dimensional model WM3 may be set to a predetermined pose in the coordinate system of the three-dimensional model WM3. Incidentally, the initial position of the three-dimensional model WM3 may be pre-set to the origin of the 3D imaging coordinate system or the 2D imaging coordinate system, and the initial pose of the three-dimensional model WM3 may be set to a predetermined pose in the 3D imaging coordinate system or the 2D imaging coordinate system. In the above-described description, the control apparatus 3 performs, as the tracking processing, the tracking processing using the two image data IMG_2D#t1 and IMG_2D#t2 generated by the imaging apparatus 21 imaging the object OBJ at the first time t1 and the second time t2, respectively, and the three-dimensional position data WSD generated from the image data IMG_3D generated by the imaging apparatus 22 imaging the object OBJ at the third time t3. However, the control apparatus 3 may calculates, as the change amount information VI, the change amount of at least one of the position and the pose of the object OBJ between the first time t1 and the second time t2 by performing the tracking processing using the three-dimensional position data WSD (for example, three-dimensional position information of at least one feature part indicated by the three-dimensional position data WSD) generated from the image data IMG_3D generated by the imaging apparatus 22 imaging the object OBJ at the first time t1 and the three-dimensional position data WSD (for example, three-dimensional position information of at least one feature part indicated by the three-dimensional position data WSD) generated from the image data IMG_3D generated by the imaging apparatus 22 imaging the object OBJ at the second time t2. Incidentally, in this case, the control apparatus 3 may calculates, as the change amount information VI, the change amount of at least one of the position and the pose of the object OBJ between the first time t1 and the second time t2 based on a difference between the three-dimensional position information of each of a plurality of feature parts indicated by the three-dimensional position data WSD generated from the image data IMG_3D at the first time t1 and the three-dimensional position information of each of a plurality of feature parts indicated by the three-dimensional position data WSD generated from the image data IMG_3D of the imaging apparatus at the second time t2, as the tracking processing. Even in this case, the control apparatus 3 may correct the result of the above-described matching processing based on the result of the tracking processing. For example, the control apparatus 3 may correct the result of the 3D matching processing (namely, the position-pose information POI2) based on the change amount information VI that is the result of the tracking processing. For example, the control apparatus 3 may correct the result of the 2D matching processing (namely, the position-pose information POI1) based on the change amount information VI that is the result of the tracking processing. The control apparatus 3 may include the robot control apparatus 14. The control apparatus 3 may serve as the robot control apparatus 14. A logical functional block configured to serve as the robot control apparatus 14 may be implemented in the calculation apparatus 31 of the control apparatus 3. The control apparatus 3 may control the operation of the robot 1 based on the robot control signal generated by the control apparatus 3. In this case, the robot 1 may not include the robot control apparatus 14.

In the above-described description, the three-dimensional position data generation unit 311 of the control apparatus 3 generates the three-dimensional position data WSD from one image data IMG_3D (for example, one image data IMG_3D including two image data in a case where the imaging apparatus 22 is the stereo camera). However, the three-dimensional position data generation unit 311 may generate the three-dimensional position data WSD from a plurality of image data IMG_3D. For example, the three-dimensional position data generation unit 311 may generate the three-dimensional position data WSD from the plurality of image data IMG_3D acquired by imaging the object OBJ from different directions. By using the plurality of the image data IMG_3D acquired by imaging the object OBJ from different directions, it is possible to reduce a possibility that a part of the three-dimensional position data WSD is missing due to occlusion or the like. The signal generation unit 313 may move the imaging unit 2 (namely, the robot arm 12) based on the position of the object OBJ calculated by at least one processing of the matching processing and the tracking processing described above by the position-pose calculation unit 312 so that the object OBJ is imaged from different directions by using the position of the object OBJ as a starting point. Namely, the signal generation unit 313 may generate the robot control signal for operating the robot arm 12 so that the object OBJ is imaged from different directions by using the position of the object OBJ as the starting point, and output it to the robot control apparatus 14. The imaging apparatus 22 may generate a plurality of the image data IMG_3D acquired by imaging the object OBJ from different directions by performing the imaging a plurality of number of times along with the movement of the imaging unit 2 starting from the position of the object OBJ. The three-dimensional position data generation unit 311 may generate the three-dimensional position data WSD for each of the plurality of the image data IMG_3D by the above-described processing. Note that this shape data may be referred to as the three-dimensional position data WSD. The three-dimensional position data generation unit 311 may combine the plurality of generated three-dimensional position data WSD by an existing method. For example, in a case where the plurality of generated shape data are a plurality of point cloud data, the three-dimensional position data generation unit 311 may combine the plurality of point cloud data by performing a processing based on an ICP (Iterative Closest Point). For example, in a case where the plurality of generated shape data are a plurality of depth image data, the three-dimensional position data generation unit 311 may combine the plurality of depth image data by performing a processing to align the feature parts on the depth images indicated by the plurality of depth image data, respectively. The position-pose calculation unit 312 may calculate the position of the object OBJ by performing at least one of the matching processing and the tracking processing described above by using the three-dimensional position data WSD generated by a combining processing by the three-dimensional position data generation unit 311. The signal generation unit 313 may generate the robot control signal for the process on the object OBJ by the end effector 13 based on the position of the object OBJ calculated by the position-pose calculation unit 312 and output it to the robot control apparatus 14.

### (5) Supplementary Note

Regarding the above described example embodiment, below described Supplementary notes are further disclosed.

### [Supplementary Note 1]

A control apparatus that generates a control signal for controlling a robot to which an imaging unit is mounted, wherein
the control apparatus includes:
a calculation unit that is configured to generate the control signal; and
an output unit that is configured to output the control signal generated by the calculation unit,
the calculation unit is configured to:
   generate first information indicating at least one of a position and a pose of the object by using first image data generated by the imaging unit imaging the object;
   generate second information indicating at least one of a position and a pose of the object by using three-dimensional position data, which is generated from second image data generated by the imaging unit imaging the object and which indicates a three-dimensional position of each of a plurality of points of the object, and three-dimensional model data of the object having a position and a pose that are determined based on the first information; and
   generate the control signal based on the second information.

### [Supplementary Note 2]

The control apparatus according to the Supplementary Note 1, wherein
the first information indicates at least one of the position and the pose of the object in a first coordinate system,
the determined position and pose of a three-dimensional model indicated by the three-dimensional model data are a position and a pose in a second coordinate system that is different from the first coordinate system, and
the second information indicates at least one of the position and the pose of the object in the second coordinate system.

### [Supplementary Note 3]

The control apparatus according to the Supplementary Note 2, wherein
the calculation unit is configured to:
transform the first information in the first coordinate system to at least one of a position and a pose in the second coordinate system; and
determine the position and the pose of the three-dimensional model based on at least one of the transformed position and pose in the second coordinate system.

### [Supplementary Note 4]

The control apparatus according to the Supplementary Note 3, wherein
the calculation unit is configured to set the transformed position and pose in the second coordinate system as the position and the pose of the three-dimensional model.

### [Supplementary Note 5]

The control apparatus according to the Supplementary Note 2, wherein
the calculation unit is configured to:
set at least one of a position and a pose of the three-dimensional model indicated by the three-dimensional model data in the first coordinate system based on the first information; and
determine at least one of the position and the pose of the three-dimensional model in the second coordinate system by transforming at least one of the set position and pose of the three-dimensional model in the first coordinate system to at least one of a position and a pose in the second coordinate system.

### [Supplementary Note 6]

The control apparatus according to the Supplementary Note 5, wherein
the calculation unit is configured to set the position and the pose in the first coordinate system indicated by the first information as the position and the pose of the three-dimensional model in the first coordinate system.

### [Supplementary Note 7]

The control apparatus according to any one of the Supplementary Notes 1 to 6, wherein
a time at which the imaging unit images the object to generate the first image data and a time at which the imaging unit images the object to generate the second image data are the same time.

### [Supplementary Note 8]

The control apparatus according to any one of the Supplementary Notes 1 to 6, wherein
the output unit is configured to output the control signal, which is generated based on the second information by the calculation unit, in a first cycle.

### [Supplementary Note 9]

The control apparatus according to any one of the Supplementary Notes 1 to 8, wherein
the calculation unit is configured to calculate a change amount of at least one of the position and the pose of the object between a first and second times based on two first image data, which are respectively generated by the imaging unit imaging the object at the first and second times that are different from each other, and the three-dimensional position data, which is generated from the second image data generated by the imaging unit imaging the object at a third time and which indicates the three-dimensional position of each of the plurality of the object, and
the control signal is generated based on the second information and the change amount.

### [Supplementary Note 10]

The control apparatus according to the Supplementary Note 9, wherein
the first time and the second time are different from a time at which the imaging unit images the object to generate the first image data that is used to generate the first information, and
the third time is different from a time at which the imaging unit images the object to generate the second image data that is used to generate the three-dimensional position data that is used to generate the second information.

### [Supplementary Note 11]

The control apparatus according to the Supplementary Note 9 or 10, wherein
the second time is a time that is after the first time, and
the second time is the same as the third time.

### [Supplementary Note 12]

The control apparatus according to any one of the Supplementary Notes 9 to 11, wherein
the calculation unit is configured to:
generate third information that indicates a position of a feature part of the object in a direction parallel to a first axis in a first coordinate system, which is defined by the first axis that is along an optical axis of an optical system of the imaging unit, a second axis that is orthogonal to the first axis, and a third axis that is orthogonal to the first and second axes, by using the three-dimensional position data that is generated from the second image data generated by the imaging at the third time by the imaging unit; and
calculate the change amount by using the two first image data and the third information.

### [Supplementary Note 13]

The control apparatus according to the Supplementary Note 12, wherein
the calculation unit is configured to:
generate fourth information indicating a position of the feature part at the first time by using the first image data generated by the imaging unit imaging the object at the first time;
generate fifth information indicating a position of the feature part at the second time by using the first image data generated by the imaging unit imaging the object at the second time and the third information; and
calculate the change amount by using the fourth information and the fifth information.

### [Supplementary Note 14]

The control apparatus according to any one of the Supplementary Notes 9 to 13, wherein
each of the first time, the second time, and the third time is a time in a period during which the imaging unit and the object are relatively moved.

### [Supplementary Note 15]

The control apparatus according to any one of the Supplementary Notes 9 to 14, wherein
the output unit is configured to output the control signal, which is generated based on the second information and the change amount by the calculation unit, in a second cycle.

### [Supplementary Note 16]

The control apparatus according to any one of the Supplementary Notes 9 to 15, wherein
a period from a time at which the imaging unit images the object to a time at which the second information is generated based on the first and second image data is longer than a period from a time at which the imaging unit images the object at an earlier time of the first and second times that are different from each other to a time at which the change amount is calculated based on the two first image data.

### [Supplementary Note 17]

The control apparatus according to any one of the Supplementary Notes 9 to 16, wherein
the calculation unit is configured to:
generate the second information in a third cycle; and
calculate the change amount in a fourth cycle that is shorter than the third cycle.

### [Supplementary Note 18]

The control apparatus according to the Supplementary Note 17, wherein
in a period that is one cycle of the third cycle and that is from a time at which the second information is newly generated to a time at which the second information is generated next, each time the change amount is newly calculated in the fourth cycle, the calculation unit is configured to generate the control signal based on the newly calculated change amount and the newly generated second information.

### [Supplementary Note 19]

The control apparatus according to the Supplementary Note 17 or 18, wherein
the output unit is configured to output the control signal, which is generated based on the second information and the change amount by the calculation unit, in a second cycle, and
the second cycle is the same as the fourth cycle.

### [Supplementary Note 20]

The control apparatus according to any one of the Supplementary Notes 1 to 19, wherein
a process apparatus is mounted to the robot,
the calculation unit is configured to decide, based on the first image data, the object as a target object on which the process apparatus performs a process.

### [Supplementary Note 21]

The control apparatus according to any one of the Supplementary Notes 1 to 20, wherein
a process apparatus is mounted to the robot,
the calculation unit is configured to determine, based on the first image data, whether to decide the object as a target object on which the process apparatus performs a process.

### [Supplementary Note 22]

The control apparatus according to the Supplementary Note 21, wherein
the calculation unit is configured to:
generate the first information by an object detection processing for detecting the object in a first image indicated by the first image data; and
determine, based on a result of the object detection processing, whether to decide the object as the target object.

### [Supplementary Note 23]

The control apparatus according to the Supplementary Note 22, wherein
the calculation unit is configured to:
perform, as the object detection processing, a matching processing using two-dimensional model data, which indicates a two-dimensional model of the object, and the first image data;
detect an edge of the object from the object detected by the matching processing;
detect an edge in the first image by using the first image data; and
determine, based on a first degree of similarity between the edge of the object and the edge in the first image, whether to decide the object as the target object.

### [Supplementary Note 24]

The control apparatus according to the Supplementary Note 22 or 23, wherein
the calculation unit is configured to:
perform, as the object detection processing, a matching processing using two-dimensional model data, which indicates a two-dimensional model of the object, and the first image data; and
determine, based on a second degree of similarity, which is calculated by the matching processing, between the two-dimensional model of the object and the first image indicated by the first image data, whether to decide the object as the target object.

### [Supplementary Note 25]

The control apparatus according to the Supplementary Note 23, wherein
the calculation unit is configured to:
perform, as the object detection processing, a matching processing using two-dimensional model data, which indicates a two-dimensional model of the object, and the first image data;
determine, based on a second degree of similarity, which is calculated by the matching processing, between the two-dimensional model of the object and the first image indicated by the first image data, whether to decide the object as the target object;
determine to decide the object as the target object in a case where the first and second degrees of similarity are higher than a predetermined first threshold value; and
determine not to decide the object as the target object in a case where at least one of the first and second degrees of similarity is lower than the predetermined first threshold value.

### [Supplementary Note 26]

The control apparatus according to any one of the Supplementary Notes 19 to 25, wherein
the calculation unit is configured to:
generate the first information by an object detection processing for detecting the object in a first image indicated by the first image data;
generate a first signal, which is for controlling the robot to move the process apparatus so that the process apparatus approaches the object detected by the object detection processing, as the control signal based on the first information before deciding the object as the target object; and
determine whether to decide the object as the target object based on a result of the object detection processing of the object in the first image indicated by the first image data that is generated by the imaging unit imaging the object in at least a part of a period during which the robot is controlled based on the first signal.

### [Supplementary Note 27]

The control apparatus according to any one of the Supplementary Notes 19 to 25, wherein
the object is a first object, and an object that is different from the first object is a second object,
the calculation unit is configured to:
   generate the first information by an object detection processing for detecting the first object in a first image indicated by the first image data;
   generate a first signal, which is for controlling the robot to move the process apparatus so that the process apparatus approaches the first object detected by the object detection processing, as the control signal based on the first information before deciding the first object as the target object; and
   determine whether to decide the first object or the second object as the target object based on a result of the object detection processing of each of the first object and the second object in the first image indicated by the first image data that is generated by the imaging unit imaging the first and second objects in at least a part of a period during which the robot is controlled based on the first signal.

### [Supplementary Note 28]

The control apparatus according to the Supplementary Note 27, wherein
the calculation unit is configured to generate, as the control signal, a second signal for controlling the robot to change at least one of a position and a pose of the process apparatus in order to allow the process apparatus to perform the process on the second object in a case where the second object is decided as the target object by the determination whether to decide the first object or the second object as the target object in at least a part of the period during which the robot is controlled based on the first signal.

### [Supplementary Note 29]

A control apparatus that generates a control signal for controlling a robot to which an imaging unit is mounted, wherein
the control apparatus includes:
a calculation unit that is configured to generate the control signal; and
an output unit that is configured to output the control signal generated by the calculation unit,
the calculation unit is configured to:
   calculate a change amount of at least one of a position and a pose of the object between a first and second times based on two first image data, which are respectively generated by the imaging unit imaging the object at the first and second times that are different from each other, and three-dimensional position data, which is generated from second image data generated by the imaging unit imaging the object at a third time and which indicates a three-dimensional position of each of a plurality of points of the object; and
   generate the control signal based on the change amount.

### [Supplementary Note 30]

The control apparatus according to the Supplementary Note 29, wherein
the second time is a time that is after the first time, and
the second time is the same as the third time.

### [Supplementary Note 31]

The control apparatus according to the Supplementary Note 29 or 30, wherein
the calculation unit is configured to:
generate information that indicates a position of a feature part of the object in a direction parallel to a first axis in a first coordinate system, which is defined by the first axis that is along an optical axis of an optical system of the imaging unit, a second axis that is orthogonal to the first axis, and a third axis that is orthogonal to the first and second axes, by using the three-dimensional position data; and
calculate the change amount by using the two first image data and the information.

### [Supplementary Note 32]

The control apparatus according to the Supplementary Note 31, wherein
in a case where the information is first information, the calculation unit is configured to:
generate second information indicating a position of the feature part at the first time by using the first image data generated by the imaging unit imaging the object at the first time;
generate third information indicating a position of the feature part at the second time by using the first image data generated by the imaging unit imaging the object at the second time and the first information; and
calculate the change amount by using the second information and the third information.

### [Supplementary Note 33]

The control apparatus according to any one of the Supplementary Notes 29 to 32, wherein
each of the first time, the second time, and the third time is a time in a period during which the imaging unit and the object are relatively moved.

### [Supplementary Note 34]

The control apparatus according to any one of the Supplementary Notes 29 to 33, wherein
the output unit is configured to output the control signal, which is generated based on the change amount by the calculation unit, in a predetermined cycle.

### [Supplementary Note 35]

The control apparatus according to any one of the Supplementary Notes 1 to 28, wherein
the calculation unit is configured to generate the first information by a matching processing using the first image data and two-dimensional model data indicating a two-dimensional model of the object.

### [Supplementary Note 36]

The control apparatus according to any one of the Supplementary Notes 1 to 28 and 35, wherein
the calculation unit is configured to determine, based on the first information, the position and the pose of a three-dimensional mode of the object indicated by the three-dimensional model data.

### [Supplementary Note 37]

The control apparatus according to any one of the Supplementary Notes 1 to 28 and 35 to 36, wherein
the calculation unit is configured to generate the second information by a matching processing using the there-dimensional position data and the three-dimensional model data.

### [Supplementary Note 38]

The control apparatus according to any one of the Supplementary Notes 1 to 28 and 35 to 37, wherein
the calculation unit is configured to control a timing of the imaging by the imaging unit so that a time at which the imaging unit images the object and a time at which the imaging unit images the object are the same time.

### [Supplementary Note 39]

The control apparatus according to any one of the Supplementary Notes 1 to 28 and 35 to 38, wherein
a timing at which the imaging unit images the object to generate the first image data that is used to generate the first information and a timing at which the imaging unit images the object to generate the second image data that is used to generate the three-dimensional position data used to generate the second information are timings in a period during which the imaging unit and the object are relatively moved.

### [Supplementary Note 40]

The control apparatus according to any one of the Supplementary Notes 9 to 19 and 29 to 34, wherein
the second time is a time that is after the first time,
the calculation unit is configured to control a timing of the imaging by the imaging unit so that the second time is the same as the third time.

### [Supplementary Note 41]

The control apparatus according to the Supplementary Note 12 or 13, wherein
the three-dimensional position data, which is generated from the second image data generated by the imaging at the third time, indicates the three-dimensional position of each of the plurality of points of the object in a second coordinate system,
the calculation unit is configured to:
   transform the three-dimensional position in the second coordinate system to a three-dimensional position in the first coordinate system; and
   generate the third information, which indicates the position of the feature part in the direction parallel to the first axis, from the transformed three-dimensional position in the first coordinate system.

### [Supplementary Note 42]

The control apparatus according to the Supplementary Note 12 or 13, wherein
the three-dimensional position data, which is generated from the second image data generated by the imaging at the third time, indicates the three-dimensional position of each of the plurality of points of the object in the first coordinate system,
the calculation unit is configured to generate the third information, which indicates the position of the feature part in the direction parallel to the first axis, from the three-dimensional position in the first coordinate system.

### [Supplementary Note 43]

The control apparatus according to the Supplementary Note 31 or 32, wherein
the three-dimensional position data indicates the three-dimensional position of each of the plurality of points of the object in a second coordinate system,
the calculation unit is configured to:
   transform the three-dimensional position in the second coordinate system to a three-dimensional position in the first coordinate system; and
   generate the information, which indicates the position of the feature part in the direction parallel to the first axis, from the transformed three-dimensional position in the first coordinate system.

### [Supplementary Note 44]

The control apparatus according to the Supplementary Note 31 or 32, wherein
the three-dimensional position data indicates the three-dimensional position of each of the plurality of points of the object in the first coordinate system,
the calculation unit is configured to generate the information, which indicates the position of the feature part in the direction parallel to the first axis, from the three-dimensional position in the first coordinate system.

### [Supplementary Note 45]

The control apparatus according to the Supplementary Note 23, wherein
the calculation unit is configured to:
determine to decide the object as the target object in a case where the first degree of similarity is higher than a predetermined first threshold value; and
determine not to decide the object as the target object in a case where the first degree of similarity is lower than the predetermined first threshold value.

### [Supplementary Note 46]

The control apparatus according to the Supplementary Note 24, wherein
the calculation unit is configured to:
determine to decide the object as the target object in a case where the second degree of similarity is higher than a predetermined second threshold value; and
determine not to decide the object as the target object in a case where the second degree of similarity is lower than the predetermined second threshold value.

### [Supplementary Note 47]

The control apparatus according to any one of the Supplementary Notes 20 to 28 and 45 to 46, wherein
the calculation unit is configured to generate, as the control signal, a signal for controlling the robot to move the imaging unit relative to the object, in a case where it is determined that the object is not decided as the target object.

### [Supplementary Note 48]

The control apparatus according to the Supplementary Note 47, wherein
the calculation unit is configured to:
generate, as the control signal, a signal for controlling the robot to rotationally move the imaging unit around a desired rotational axis; and
perform the determination based on the first image data that is generated by the imaging unit imaging the object after the robot is controlled based on the signal.

### [Supplementary Note 49]

The control apparatus according to the Supplementary Note 48, wherein
in a case where it is determined not to select the object as the target object as a result of the determination performed after controlling the robot based on the signal to rotationally move the imaging unit, the calculation unit is configured to generate, as the control signal, a signal for controlling the robot to linearly move the imaging unit along a desired translational axis.

### [Supplementary Note 50]

The control apparatus according to any one of the Supplementary Notes 1 to 49, wherein
a holding apparatus that is configured to hold the object is mounted to the robot,
the control signal is a signal for controlling a hold process of the holding apparatus,
based on the control signal generated by the calculation unit, the robot is controlled so that the holding apparatus approaches the object and the holding apparatus is controlled so that the object is held by the holding apparatus,
the calculation unit is configured to:
   generate sixth information, which indicates at least one of a position and a pose of the object held by the holding apparatus, by using the first image data that is generated by the imaging unit imaging the object after the object is held by the holding apparatus; and
   generate, based on the sixth information, the control signal for controlling the robot to move the object held by the holding apparatus toward a desired position and / or to change a pose of the object held by the holding apparatus to a desired pose.

### [Supplementary Note 51]

A control apparatus that generates a control signal for controlling a robot to which a process apparatus that performs a process on an object and an imaging unit are mounted, wherein
the control apparatus includes:
a calculation unit that is configured to generate the control signal; and
an output unit that is configured to output the control signal generated by the calculation unit,
the calculation unit is configured to:
   determine, based on image data that is generated by the imaging unit imaging the object, whether to decide the object as a target object on which the process apparatus performs the process; and
   generate the control signal for performing the process on the object.

### [Supplementary Note 52]

The control apparatus according to the Supplementary Note 51, wherein
the calculation unit is configured to determine, based on a result of an object detection processing for detecting the object in an image indicated by the image data, whether to decide the object as the target object.

### [Supplementary Note 53]

The control apparatus according to the Supplementary Note 52, wherein
the calculation unit is configured to:
perform, as the object detection processing, a matching processing using two-dimensional model data, which indicates a two-dimensional model of the object, and the image data;
detect an edge of the object from the object detected by the matching processing;
detect an edge in the image by using the image data; and
determine, based on a first degree of similarity between the edge of the object and the edge in the image, whether to decide the object as the target object.

### [Supplementary Note 54]

The control apparatus according to the Supplementary Note 52 or 53, wherein
the calculation unit is configured to:
perform, as the object detection processing, a matching processing using two-dimensional model data, which indicates a two-dimensional model of the object, and the image data; and
determine, based on a second degree of similarity, which is calculated by the matching processing, between the two-dimensional model of the object and the image indicated by the image data, whether to decide the object as the target object.

### [Supplementary Note 55]

The control apparatus according to the Supplementary Note 53, wherein
the calculation unit is configured to:
perform, as the object detection processing, a matching processing using two-dimensional model data, which indicates a two-dimensional model of the object, and the image data;
determine, based on a second degree of similarity, which is calculated by the matching processing, between the two-dimensional model of the object and the image indicated by the image data, whether to decide the object as the target object;
determine to decide the object as the target object in a case where the first and second degrees of similarity are higher than a predetermined first threshold value; and
determine not to decide the object as the target object in a case where at least one of the first and second degrees of similarity is lower than the predetermined first threshold value.

### [Supplementary Note 56]

The control apparatus according to any one of the Supplementary Notes 52 to 55, wherein
the calculation unit is configured to:
generate first information, which indicates at least one of a position and a pose of the object, by an object detection processing for detecting the object in an image indicated by the image data;
generate a first signal, which is for controlling the robot to move the process apparatus so that the process apparatus approaches the object detected by the object detection processing, as the control signal based on the first information before deciding the object as the target object; and
determine whether to decide the object as the target object based on a result of the object detection processing of the object in the image indicated by the image data that is generated by the imaging unit imaging the object in at least a part of a period during which the robot is controlled based on the first signal.

### [Supplementary Note 57]

The control apparatus according to any one of the Supplementary Notes 52 to 55, wherein
the object is a first object, and an object that is different from the first object is a second object,
the calculation unit is configured to:
   generate first information, which indicates at least one of a position and a pose of the first object, by an object detection processing for detecting the first object in an image indicated by the image data;
   generate a first signal, which is for controlling the robot to move the process apparatus so that the process apparatus approaches the first object detected by the object detection processing, as the control signal based on the first information before deciding the first object as the target object; and
   determine whether to decide the first object or the second object as the target object based on a result of the object detection processing of each of the first object and the second object in the image indicated by the image data that is generated by the imaging unit imaging the first and second objects in at least a part of a period during which the robot is controlled based on the first signal.

### [Supplementary Note 58]

The control apparatus according to the Supplementary Note 57, wherein
the calculation unit is configured to generate, as the control signal, a second signal for controlling the robot to change at least one of a position and a pose of the process apparatus in order to allow the process apparatus to perform the process on the second object in a case where the second object is decided as the target object by the determination whether to decide the first object or the second object as the target object in at least a part of the period during which the robot is controlled based on the first signal.

### [Supplementary Note 59]

The control apparatus according to any one of the Supplementary Notes 51 to 58, wherein
the calculation unit is configured to generate, as the control signal, a signal for controlling the robot to move the imaging unit relative to the object, in a case where it is determined not to decide the object as the target object.

### [Supplementary Note 60]

The control apparatus according to the Supplementary Note 59, wherein
the calculation unit is configured to:
generate, as the control signal, a signal for controlling the robot to rotationally move the imaging unit around a desired rotational axis; and
perform the determination based on the image data that is generated by the imaging unit imaging the object after the robot is controlled based on the signal.

### [Supplementary Note 61]

The control apparatus according to the Supplementary Note 60, wherein
in a case where it is determined not to select the object as the target object as a result of the determination performed after controlling the robot based on the signal to rotationally move the imaging unit, the calculation unit is configured to generate, as the control signal, a signal for controlling the robot to linearly move the imaging unit along a desired translational axis.

### [Supplementary Note 62]

The control apparatus according to any one of the Supplementary Notes 51 to 61, wherein
the process apparatus includes a holding apparatus that is configured to hold the object,
the control signal is a signal for controlling a hold operation of the holding apparatus,
based on the control signal generated by the controlling unit, the robot is controlled so that the holding apparatus approaches the object and the holding apparatus is controlled so that the object is held by the holding apparatus,
the calculation unit is configured to:
   generate first information, which indicates a position and a pose of the object held by the holding apparatus, by using the image data that is generated by the imaging unit imaging the object after the object is held by the holding apparatus; and
   generate, based on the first information, the control signal for controlling the robot to move the object held by the holding apparatus toward a desired position and / or to change a pose of the object held by the holding apparatus to a desired pose.

### [Supplementary Note 63]

The control apparatus according to any one of the Supplementary Notes 51 to 62, wherein
the process apparatus performs the process on at least one of a first object and a second object as the object, at least one of a position and a pose of the second object is different from that of the first object.

### [Supplementary Note 64]

The control apparatus according to the Supplementary Note 63, wherein
the calculation unit is configured to:
perform, as the object detection processing, a matching processing using first two-dimensional model data indicating a two-dimensional model of the first object, second two-dimensional model data indicating a two-dimensional model of the second object, and the image data;
detect an edge of the first object and an edge of the second object from the first and second objects detected by the matching processing;
detect an edge in the image by using the image data;
determine, based on a third degree of similarity between the two-dimensional model of the first object and the image indicated by the image data, a fourth degree of similarity between the two-dimensional model of the second object and the image indicated by the image data, a first degree of similarity between the edge of the first object and the edge in the image, and a second degree of similarity between the edge of the second object and the edge in the image, which are calculated by the matching processing, whether to select the first or second object as the target object;
determine that the first object is selected as the target object in a case where the first degree of similarity is higher than a predetermined first threshold value, the first degree of similarity is higher than the second degree of similarity, the third degree of similarity is higher than a predetermined second threshold value, and the third degree of similarity is higher than the fourth degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, and the fourth degree of similarity is higher than the third degree of similarity;
determine that the second object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the third degree of similarity / the fourth degree of similarity is smaller than the second degree of similarity / the first degree of similarity;
determine that the first object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the second degree of similarity / the first degree of similarity is smaller than the third degree of similarity / the fourth degree of similarity;
determine that the first object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the fourth degree of similarity / the third degree of similarity is smaller than the first degree of similarity / the second degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the first degree of similarity / the second degree of similarity is smaller than the fourth degree of similarity / the third degree of similarity;
determine that the first object is selected as the target object in a case where the first degree of similarity is higher than a predetermined second threshold value, the third degree of similarity is higher than a predetermined first threshold value, the second degree of similarity is lower than a predetermined second threshold value, and / or the fourth degree of similarity is lower than a predetermined first threshold value;
determine that the second object is selected as the target object in a case where the second degree of similarity is higher than a predetermined second threshold value, the fourth degree of similarity is higher than a predetermined first threshold value, the first degree of similarity is lower than a predetermined second threshold value, and / or the third degree of similarity is lower than a predetermined first threshold value; and
determine that the first and second object are not selected as the target object in a case where the first degree of similarity is lower than a predetermined second threshold value and / or the third degree of similarity is lower than a predetermined first threshold value, and the second degree of similarity is lower than a predetermined second threshold value and / or the fourth degree of similarity is lower than a predetermined first threshold value.

### [Supplementary Note 65]

The control apparatus according to the Supplementary Note 64, wherein
a three-dimensional shape of the second object is the same as that of the first object,
the first two-dimensional model data and the second two-dimensional model data are two-dimensional model data indicating a two-dimensional model of the three-dimensional shape.

### [Supplementary Note 66]

A control apparatus that generates a control signal for controlling a robot to which a process apparatus that performs a process on at least one of a first object and a second object, which is different from the first object, and an imaging unit are mounted, wherein
the control apparatus includes:
a calculation unit that is configured to generate the control signal; and
an output unit that is configured to output the control signal generated by the calculation unit,
the calculation unit is configured to:
   determine, based on image data that is generated by the imaging unit imaging the first and second objects, whether to decide the first or second object as a target object on which the process apparatus performs the process; and
   generate the control signal for performing the process on the object.

### [Supplementary Note 67]

The control apparatus according to the Supplementary Note 66, wherein
the calculation unit is configured to determine, based on a result of an object detection processing for detecting the first and second objects in an image indicated by the image data, whether to decide the object as the target object.

### [Supplementary Note 68]

The control apparatus according to the Supplementary Note 67, wherein
the calculation unit is configured to:
perform, as the object detection processing, a matching processing using first two-dimensional model data indicating a two-dimensional model of the first object, second two-dimensional model data indicating a two-dimensional model of the second object, and the image data;
detect an edge of the first object and an edge of the second object from the first and second objects detected by the matching processing;
detect an edge in the image by using the image data; and
determine, based on a first degree of similarity between the edge of the first object and the edge in the image and a second degree of similarity between the edge of the second object and the edge in the image, whether to decide the first or second object as the target object.

### [Supplementary Note 69]

The control apparatus according to the Supplementary Note 67 or 68, wherein
the calculation unit is configured to:
perform, as the object detection processing, a matching processing using first two-dimensional model data indicating a two-dimensional model of the first object, second two-dimensional model data indicating a two-dimensional model of the second object, and the image data; and
determine, based on a third degree of similarity between the two-dimensional model of the first object and the image indicated by the image data and a fourth degree of similarity between the two-dimensional model of the second object and the image indicated by the image data, which are calculated by the matching processing, whether to select the first or second object as the target object;

### [Supplementary Note 70]

The control apparatus according to the Supplementary Note 68, wherein
the calculation unit is configured to:
perform, as the object detection processing, a matching processing using first two-dimensional model data indicating a two-dimensional model of the first object, second two-dimensional model data indicating a two-dimensional model of the second object, and the image data; and
determine, based on a second degree of similarity, which is calculated by the matching processing, between the two-dimensional model of the object and the image indicated by the image data, whether to decide the object as the target object;
determine to decide the first object as the target object in a case where the first and third degrees of similarity are higher than a predetermined first threshold value;
determine to decide the second object as the target object in a case where the second and fourth degrees of similarity are higher than the predetermined first threshold value;
determine not to decide the first object as the target object in a case where at least one of the first and third degrees of similarity is lower than the predetermined first threshold value; and
determine not to decide the second object as the target object in a case where at least one of the second and fourth degrees of similarity is lower than the predetermined first threshold value.

### [Supplementary Note 71]

The control apparatus according to any one of the Supplementary Notes 67 to 70, wherein
the calculation unit is configured to:
generate first information, which indicates at least one of a position and a pose of the first object, by an object detection processing for detecting the first object in an image indicated by the image data;
generate a first signal, which is for controlling the robot to move the process apparatus so that the process apparatus approaches the first object detected by the object detection processing, as the control signal based on the first information before deciding the first object as the target object; and
determine whether to decide the first object as the target object based on a result of the object detection processing of the first object in the image indicated by the image data that is generated by the imaging unit imaging the first object in at least a part of a period during which the robot is controlled based on the first signal.

### [Supplementary Note 72]

The control apparatus according to any one of the Supplementary Notes 67 to 71, wherein
the calculation unit is configured to:
generate first information, which indicates at least one of a position and a pose of the first object, by an object detection processing for detecting the first object in an image indicated by the image data;
generate a first signal, which is for controlling the robot to move the process apparatus so that the process apparatus approaches the first object detected by the object detection processing, as the control signal based on the first information before deciding the first object as the target object; and
determine whether to decide the first object as the target object based on a result of the object detection processing of each of the first and second objects in a first image indicated by the image data that is generated by the imaging unit imaging the first and second objects in at least a part of a period during which the robot is controlled based on the first signal.

### [Supplementary Note 73]

The control apparatus according to the Supplementary Note 72, wherein
the calculation unit is configured to generate, as the control signal, a second signal for controlling the robot to change at least one of a position and a pose of the process apparatus in order to allow the process apparatus to perform the process on the second object in a case where the second object is decided as the target object by the determination whether to decide the first object or the second object as the target object in at least a part of the period during which the robot is controlled based on the first signal.

### [Supplementary Note 74]

The control apparatus according to any one of the Supplementary Notes 66 to 73, wherein
the calculation unit is configured to generate, as the control signal, a signal for controlling the robot to move the imaging unit relative to the first and second objects, in a case where it is determined not to decide the first and second objects as the target object.

### [Supplementary Note 75]

The control apparatus according to the Supplementary Note 74, wherein
the calculation unit is configured to:
generate, as the control signal, a signal for controlling the robot to rotationally move the imaging unit around a desired rotational axis; and
perform the determination based on the image data that is generated by the imaging unit imaging the first and second objects after the robot is controlled based on the signal.

### [Supplementary Note 76]

The control apparatus according to the Supplementary Note 75, wherein
in a case where it is determined that the first and second objects are not selected as the target object as a result of the determination performed after controlling the robot based on the signal to rotationally move the imaging unit, the calculation unit is configured to generate, as the control signal, a signal for controlling the robot to linearly move the imaging unit along a desired translational axis.

### [Supplementary Note 77]

The control apparatus according to any one of the Supplementary Notes 66 to 76, wherein
the process apparatus includes a holding apparatus that is configured to hold the first or second object,
the control signal is a signal for controlling a hold operation of the holding apparatus,
based on the control signal generated by the controlling unit, the robot is controlled so that the holding apparatus approaches the first or second object and the holding apparatus is controlled so that the first or second object is held by the holding apparatus,
the calculation unit is configured to:
   generate first information, which indicates a position and a pose of the first or second object held by the holding apparatus, by using the image data that is generated by the imaging unit imaging the first or second object after the first or second object is held by the holding apparatus; and
   generate, based on the first information, the control signal for controlling the robot to move the first or second object held by the holding apparatus toward a desired position and / or to change a pose of the first or second object held by the holding apparatus to a desired pose.

### [Supplementary Note 78]

The control apparatus according to any one of the Supplementary Notes 66 to 77, wherein
the calculation unit is configured to:
perform, as the object detection processing, a matching processing using first two-dimensional model data indicating a two-dimensional model of the first object, second two-dimensional model data indicating a two-dimensional model of the second object, and the image data;
detect an edge of the first object and an edge of the second object from the first and second objects detected by the matching processing;
detect an edge in the image by using the image data;
determine, based on a third degree of similarity between the two-dimensional model of the first object and the image indicated by the image data, a fourth degree of similarity between the two-dimensional model of the second object and the image indicated by the image data, a first degree of similarity between the edge of the first object and the edge in the image, and a second degree of similarity between the edge of the second object and the edge in the image, which are calculated by the matching processing, whether to select the first or second object as the target object;
determine that the first object is selected as the target object in a case where the first degree of similarity is higher than a predetermined first threshold value, the first degree of similarity is higher than the second degree of similarity, the third degree of similarity is higher than a predetermined second threshold value, and the third degree of similarity is higher than the fourth degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, and the fourth degree of similarity is higher than the third degree of similarity;
determine that the second object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the third degree of similarity / the fourth degree of similarity is smaller than the second degree of similarity / the first degree of similarity;
determine that the first object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the second degree of similarity / the first degree of similarity is smaller than the third degree of similarity / the fourth degree of similarity;
determine that the first object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the fourth degree of similarity / the third degree of similarity is smaller than the first degree of similarity / the second degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the first degree of similarity / the second degree of similarity is smaller than the fourth degree of similarity / the third degree of similarity;
determine that the first object is selected as the target object in a case where the first degree of similarity is higher than a predetermined second threshold value, the third degree of similarity is higher than a predetermined first threshold value, the second degree of similarity is lower than a predetermined second threshold value, and / or the fourth degree of similarity is lower than a predetermined first threshold value;
determine that the second object is selected as the target object in a case where the second degree of similarity is higher than a predetermined second threshold value, the fourth degree of similarity is higher than a predetermined first threshold value, the first degree of similarity is lower than a predetermined second threshold value, and / or the third degree of similarity is lower than a predetermined first threshold value; and
determine that the first and second object are not selected as the target object in a case where the first degree of similarity is lower than a predetermined second threshold value and / or the third degree of similarity is lower than a predetermined first threshold value, and the second degree of similarity is lower than a predetermined second threshold value and / or the fourth degree of similarity is lower than a predetermined first threshold value.

### [Supplementary Note 79]

The control apparatus according to the Supplementary Note 78, wherein
a three-dimensional shape of the second object is the same as that of the first object,
the first two-dimensional model data and the second two-dimensional model data are two-dimensional model data indicating a two-dimensional model of the three-dimensional shape.

### [Supplementary Note 80]

The control apparatus according to any one of the Supplementary Notes 1 to 50, wherein
the imaging unit includes a first imaging apparatus that outputs the first image data and a second imaging apparatus that outputs the second image data.

### [Supplementary Note 81]

The control apparatus according to the Supplementary Note 80, wherein
the first imaging apparatus is a monocular camera, and
the second imaging apparatus is a stereo camera including two monocular cameras that is different from the monocular camera.

### [Supplementary Note 82]

A control system including:
the control apparatus according to any one of the Supplementary Notes 1 to 50 and 80 to 81; and
the imaging unit.

### [Supplementary Note 83]

A control system including:
the control apparatus according to any one of the Supplementary Notes 51 to 79; and
the imaging unit.

### [Supplementary Note 84]

The control system according to the Supplementary Note 82, wherein
the imaging unit includes a first imaging apparatus that outputs the first image data and a second imaging apparatus that outputs the second image data,
the control system further includes:
   a first filter that attenuates light component in a first wavelength bandwidth of light from the object; and
   a second filter that attenuates light component in a second wavelength bandwidth, which is different from the first wavelength bandwidth, of light from the object,
   the first imaging apparatus images the object by optically receiving light from the object through the first filter, and
   the second imaging apparatus images the object by optically receiving light from the object through the second filter.

### [Supplementary Note 85]

The control system according to the Supplementary Note 84 further including:
an illumination apparatus that illuminates the object with illumination light including light component in the second wavelength bandwidth; and
a light projection apparatus that projects a pattern light including light component in the first wavelength bandwidth on the object,
the second imaging apparatus images the object on which the pattern light is projected from the light projection apparatus.

### [Supplementary Note 86]

A robot system including:
the control apparatus according to any one of the Supplementary Notes 1 to 81;
the imaging unit; and
the robot.

### [Supplementary Note 87]

The robot system according to the Supplementary Note 86 further including the process apparatus that performs the process on the object.

### [Supplementary Note 88]

A control method that generates a control signal for controlling a robot to which an imaging unit is mounted, wherein
the control method includes:
generating first information indicating at least one of a position and a pose of the object by using first image data generated by the imaging unit imaging the object;
generating second information indicating at least one of a position and a pose of the object by using three-dimensional position data, which is generated from second image data generated by the imaging unit imaging the object and which indicates a three-dimensional position of each of a plurality of points of the object, and three-dimensional model data of the object having a position and a pose that are determined based on the first information; and
generating the control signal based on the second information.

### [Supplementary Note 89]

A control method that generates a control signal for controlling a robot to which an imaging unit is mounted, wherein
the control method includes:
calculating a change amount of at least one of a position and a pose of the object between a first and second times based on two first image data, which are respectively generated by the imaging unit imaging the object at the first and second times that are different from each other, and three-dimensional position data, which is generated from second image data generated by the imaging unit imaging the object at a third time and which indicates a three-dimensional position of each of a plurality of points of the object; and
generating the control signal based on the change amount.

### [Supplementary Note 90]

A control method that generates a control signal for controlling a robot to which a process apparatus that performs a process on an object and an imaging unit are mounted, wherein
the control method includes:
determining, based on image data that is generated by the imaging unit imaging the object, whether to decide the object as a target object on which the process apparatus performs the process; and
generating the control signal for performing the process on the object.

### [Supplementary Note 91]

A computer program by which the control method according to any one of the Supplementary Notes 88 to 90 is performed.

### [Supplementary Note 92]

A recording medium on which the computer program according to the Supplementary Note 91 is recorded.

At least a part of the features of each example embodiment described above may be appropriately combined with at least another part of the features of each example embodiment described above. A part of the features of each example embodiment described above may not be used. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

- SYS: robot system
- 1: robot
- 12: robot arm
- 13: end effector
- 14: robot control apparatus
- 2: imaging unit
- 21, 22: imaging apparatus
- 23: projection apparatus
- 24c: illumination apparatus
- 25c, 26c: filter
- 3: control apparatus
- 31: calculation apparatus
- 311: three-dimensional position data generation unit
- 312: position pose calculation unit
- 3121: 2D matching unit
- 3122: 3D matching unit
- 3123: tracking unit
- 3125: coordinate transformation unit
- 313: signal generation unit
- 314a: target decision unit
- 315b: pre-processing unit
- 33: communication unit
- OBJ: objectives
- W: workpiece
- T: placing apparatus
- IMG_2D, IMG_3D: image data
- IMG_2M: two-dimensional model data
- WSD: three-dimensional position data
- WMD: three-dimensional model data
- WM: three-dimensional model

## Claims

1. A control apparatus that generates a control signal for controlling a robot arm to which a process apparatus that performs a process on an object, a first imaging apparatus that outputs first image data, and a second imaging apparatus that outputs second image data are mounted, wherein
the robot arm is controlled by the control signal to move the process apparatus and the first and imaging apparatuses,
the control apparatus comprises:
a calculation unit that is configured to generate the control signal; and
an output unit that is configured to output the control signal generated by the calculation unit,
the calculation unit is configured to:
generate first information indicating a position and a pose of the object by using the first image data generated by the first imaging apparatus imaging the object;
generate second information indicating a position and a pose of the object by using three-dimensional position data, which is generated from the second image data generated by the second imaging apparatus imaging the object and which indicates a three-dimensional position of each of a plurality of points of the object, and three-dimensional model data of the object having a position and a pose that are determined based on the first information; and
generate the control signal based on the second information.

2. The control apparatus according to claim 1, wherein
the first information indicates the position and the pose of the object in a first coordinate system,
the determined position and pose of a three-dimensional model indicated by the three-dimensional model data are a position and a pose in a second coordinate system that is different from the first coordinate system, and
the second information indicates the position and the pose of the object in the second coordinate system.

3. The control apparatus according to claim 2, wherein
the calculation unit is configured to:
transform the first information in the first coordinate system to a position and a pose in the second coordinate system; and
determine the position and the pose of the three-dimensional model based on the transformed position and pose in the second coordinate system.

4. The control apparatus according to claim 3, wherein
the calculation unit is configured to set the transformed position and pose in the second coordinate system as the position and the pose of the three-dimensional model.

5. The control apparatus according to claim 2, wherein
the calculation unit is configured to:
set a position and a pose of the three-dimensional model indicated by the three-dimensional model data in the first coordinate system based on the first information; and
determine the position and the pose of the three-dimensional model in the second coordinate system by transforming the set position and pose of the three-dimensional model in the first coordinate system to a position and a pose in the second coordinate system.

6. The control apparatus according to claim 5, wherein
the calculation unit is configured to set the position and the pose in the first coordinate system indicated by the first information as the position and the pose of the three-dimensional model in the first coordinate system.

7. The control apparatus according to any one of claims 1 to 6, wherein
a time at which the first imaging apparatus images the object to generate the first image data and a time at which the second imaging apparatus images the object to generate the second image data are the same time.

8. The control apparatus according to any one of claims 1 to 7, wherein
the output unit is configured to output the control signal, which is generated based on the second information by the calculation unit, in a first cycle.

9. The control apparatus according to any one of claims 1 to 8, wherein
the calculation unit is configured to calculate a change amount of the position and the pose of the object between a first and second times based on two first image data, which are respectively generated by the first imaging apparatus imaging the object at the first and second times that are different from each other, and the three-dimensional position data, which is generated from the second image data generated by the second imaging apparatus imaging the object at a third time and which indicates the three-dimensional position of each of the plurality of the object, and
the control signal is generated based on the second information and the change amount.

10. The control apparatus according to claim 9, wherein
the first time and the second time are different from a time at which the first imaging apparatus images the object to generate the first image data that is used to generate the first information, and
the third time is different from a time at which the second imaging apparatus images the object to generate the second image data that is used to generate the three-dimensional position data that is used to generate the second information.

11. The control apparatus according to claim 9 or 10, wherein
the second time is a time that is after the first time, and
the second time is the same as the third time.

12. The control apparatus according to any one of claims 9 to 11, wherein
the calculation unit is configured to:
generate third information that indicates a position of a feature part of the object in a direction parallel to a first axis in a first coordinate system, which is defined by the first axis that is along an optical axis of an optical system of the first imaging apparatus, a second axis that is orthogonal to the first axis, and a third axis that is orthogonal to the first and second axes, or a position of a feature part of the object in a direction parallel to a fourth axis in a second coordinate system, which is defined by the fourth axis that is along an optical axis of an optical system of the second imaging apparatus, a fifth axis that is orthogonal to the fourth axis, and a sixth axis that is orthogonal to the fourth and fifth axes, by using the three-dimensional position data that is generated from the second image data generated by the imaging at the third time by the second imaging apparatus; and
calculate the change amount by using the two first image data and the third information.

13. The control apparatus according to claim 12, wherein
the calculation unit is configured to:
generate fourth information indicating a position of the feature part at the first time by using the first image data generated by the first imaging apparatus imaging the object at the first time;
generate fifth information indicating a position of the feature part at the second time by using the first image data generated by the first imaging apparatus imaging the object at the second time and the third information; and
calculate the change amount by using the fourth information and the fifth information.

14. The control apparatus according to any one of claims 9 to 13, wherein
each of the first time, the second time, and the third time is a time in a period during which the first and second imaging apparatuses and the object are relatively moved.

15. The control apparatus according to any one of claims 9 to 14, wherein
the output unit is configured to output the control signal, which is generated based on the second information and the change amount by the calculation unit, in a second cycle.

16. The control apparatus according to any one of claims 9 to 15, wherein
a period from a time at which the first and second imaging apparatuses image the object to a time at which the second information is generated based on the first and second image data is longer than a period from a time at which the first imaging apparatus images the object at an earlier time of the first and second times that are different from each other to a time at which the change amount is calculated based on the two first image data.

17. The control apparatus according to any one of claims 9 to 16, wherein
the calculation unit is configured to:
generate the second information in a third cycle; and
calculate the change amount in a fourth cycle that is shorter than the third cycle.

18. The control apparatus according to claim 17, wherein
in a period that is one cycle of the third cycle and that is from a time at which the second information is newly generated to a time at which the second information is generated next, each time the change amount is newly calculated in the fourth cycle, the calculation unit is configured to generate the control signal based on the newly calculated change amount and the newly generated second information.

19. The control apparatus according to claim 17 or 18, wherein
the output unit is configured to output the control signal, which is generated based on the second information and the change amount by the calculation unit, in a second cycle, and
the second cycle is the same as the fourth cycle.

20. The control apparatus according to any one of claims 1 to 19, wherein
the calculation unit is configured to decide, based on the first image data, the object as a target object on which the process apparatus performs the process.

21. The control apparatus according to any one of claims 1 to 20, wherein
the calculation unit is configured to determine, based on the first image data, whether to decide the object as a target object on which the process apparatus performs the process.

22. The control apparatus according to claim 21, wherein
the calculation unit is configured to:
generate the first information by an object detection processing for detecting the object in a first image indicated by the first image data; and
determine, based on a result of the object detection processing, whether to decide the object as the target object.

23. The control apparatus according to claim 22, wherein
the calculation unit is configured to:
perform, as the object detection processing, a matching processing using two-dimensional model data, which indicates a two-dimensional model of the object, and the first image data;
detect an edge of the object from the object detected by the matching processing;
detect an edge in the first image by using the first image data; and
determine, based on a first degree of similarity between the edge of the object and the edge in the first image, whether to decide the object as the target object.

24. The control apparatus according to claim 22 or 23, wherein
the calculation unit is configured to:
perform, as the object detection processing, a matching processing using two-dimensional model data, which indicates a two-dimensional model of the object, and the first image data; and
determine, based on a second degree of similarity, which is calculated by the matching processing, between the two-dimensional model of the object and the first image indicated by the first image data, whether to decide the object as the target object.

25. The control apparatus according to claim 23, wherein
the calculation unit is configured to:
perform, as the object detection processing, a matching processing using two-dimensional model data, which indicates a two-dimensional model of the object, and the first image data;
determine, based on a second degree of similarity, which is calculated by the matching processing, between the two-dimensional model of the object and the first image indicated by the first image data, whether to decide the object as the target object;
determine to decide the object as the target object in a case where the first and second degrees of similarity are higher than a predetermined first threshold value; and
determine not to decide the object as the target object in a case where at least one of the first and second degrees of similarity is lower than the predetermined first threshold value.

26. A control apparatus that generates a control signal for controlling a robot arm to which a process apparatus that performs a process on an object, a first imaging apparatus that outputs first image data, and a second imaging apparatus that outputs second image data are mounted, wherein
the robot arm is controlled by the control signal to move the process apparatus and the first and imaging apparatuses,
the control apparatus comprises:
a calculation unit that is configured to generate the control signal; and
an output unit that is configured to output the control signal generated by the calculation unit,
the calculation unit is configured to:
calculate a change amount of a position and a pose of the object between a first and second times based on two first image data, which are respectively generated by the first imaging apparatus imaging the object at the first and second times that are different from each other, and three-dimensional position data, which is generated from the second image data generated by the second imaging apparatus imaging the object at a third time and which indicates a three-dimensional position of each of a plurality of points of the object; and
generate the control signal based on the change amount.

27. The control apparatus according to claim 26, wherein
the second time is a time that is after the first time, and
the second time is the same as the third time.

28. The control apparatus according to claim 26 or 27, wherein
the calculation unit is configured to:
generate information that indicates a position of a feature part of the object in a direction parallel to a first axis in a first coordinate system, which is defined by the first axis that is along an optical axis of an optical system of the first imaging apparatus, a second axis that is orthogonal to the first axis, and a third axis that is orthogonal to the first and second axes, or a position of a feature part of the object in a direction parallel to a fourth axis in a second coordinate system, which is defined by the fourth axis that is along an optical axis of an optical system of the second imaging apparatus, a fifth axis that is orthogonal to the fourth axis, and a sixth axis that is orthogonal to the fourth and fifth axes, by using the three-dimensional position data; and
calculate the change amount by using the two first image data and the information.

29. The control apparatus according to claim 28, wherein
in a case where the information is first information, the calculation unit is configured to:
generate second information indicating a position of the feature part at the first time by using the first image data generated by the first imaging apparatus imaging the object at the first time;
generate third information indicating a position of the feature part at the second time by using the first image data generated by the first imaging apparatus imaging the object at the second time and the first information; and
calculate the change amount by using the second information and the third information.

30. The control apparatus according to any one of claims 26 to 29, wherein
each of the first time, the second time, and the third time is a time in a period during which the first and second imaging apparatuses and the object are relatively moved.

31. The control apparatus according to any one of claims 26 to 30, wherein
the output unit is configured to output the control signal, which is generated based on the change amount by the calculation unit, in a predetermined cycle.

32. The control apparatus according to any one of claims 1 to 25, wherein
the calculation unit is configured to generate the first information by a matching processing using the first image data and two-dimensional model data indicating a two-dimensional model of the object.

33. The control apparatus according to any one of claims 1 to 25 and 32, wherein
the calculation unit is configured to determine, based on the first information, the position and the pose of a three-dimensional mode of the object indicated by the three-dimensional model data.

34. The control apparatus according to any one of claims 1 to 25 and 32 to 33, wherein
the calculation unit is configured to generate the second information by a matching processing using the there-dimensional position data and the three-dimensional model data.

35. The control apparatus according to any one of claims 1 to 25 and 32 to 34, wherein
the calculation unit is configured to control a timing of the imaging by the first and second imaging apparatuses so that a time at which the first imaging apparatus images the object and a time at which the second imaging apparatus images the object are the same time.

36. The control apparatus according to any one of claims 1 to 25 and 32 to 35, wherein
a timing at which the first imaging apparatus images the object to generate the first image data that is used to generate the first information and a timing at which the second imaging apparatus images the object to generate the second image data that is used to generate the three-dimensional position data used to generate the second information are timings in a period during which the first and second imaging apparatuses and the object are relatively moved.

37. The control apparatus according to any one of claims 9 to 19 and 26 to 31, wherein
the second time is a time that is after the first time,
the calculation unit is configured to control a timing of the imaging by the first and second imaging apparatuses so that the second time is the same as the third time.

38. The control apparatus according to claim 12 or 13, wherein
the three-dimensional position data, which is generated from the second image data generated by the imaging at the third time, indicates the three-dimensional position of each of the plurality of points of the object in the second coordinate system,
the calculation unit is configured to:
transform the three-dimensional position in the second coordinate system to a three-dimensional position in the first coordinate system; and
generate the third information, which indicates the position of the feature part in the direction parallel to the first axis, from the transformed three-dimensional position in the first coordinate system.

39. The control apparatus according to claim 12 or 13, wherein
the three-dimensional position data, which is generated from the second image data generated by the imaging at the third time, indicates the three-dimensional position of each of the plurality of points of the object in the second coordinate system,
the calculation unit is configured to generate the third information, which indicates the position of the feature part in the direction parallel to the fourth axis, from the three-dimensional position in the second coordinate system.

40. The control apparatus according to claim 28 or 29, wherein
the three-dimensional position data indicates the three-dimensional position of each of the plurality of points of the object in the second coordinate system,
the calculation unit is configured to:
transform the three-dimensional position in the second coordinate system to a three-dimensional position in the first coordinate system; and
generate the information, which indicates the position of the feature part in the direction parallel to the first axis, from the transformed three-dimensional position in the first coordinate system.

41. The control apparatus according to claim 28 or 29, wherein
the three-dimensional position data indicates the three-dimensional position of each of the plurality of points of the object in the second coordinate system,
the calculation unit is configured to generate the information, which indicates the position of the feature part in the direction parallel to the fourth axis, from the three-dimensional position in the second coordinate system.

42. The control apparatus according to claim 23, wherein
the calculation unit is configured to:
determine to decide the object as the target object in a case where the first degree of similarity is higher than a predetermined first threshold value; and
determine not to decide the object as the target object in a case where the first degree of similarity is lower than the predetermined first threshold value.

43. The control apparatus according to claim 24, wherein
the calculation unit is configured to:
determine to decide the object as the target object in a case where the second degree of similarity is higher than a predetermined second threshold value; and
determine not to decide the object as the target object in a case where the second degree of similarity is lower than the predetermined second threshold value.

44. The control apparatus according to any one of claims 20 to 25 and 42 to 43, wherein
the calculation unit is configured to generate, as the control signal, a signal for controlling the robot arm to move the first imaging apparatus relative to the object, in a case where it is determined that the object is not decided as the target object.

45. The control apparatus according to claim 44, wherein
the calculation unit is configured to:
generate, as the control signal, a signal for controlling the robot arm to rotationally move the first imaging apparatus around a desired rotational axis; and
perform the determination based on the first image data that is generated by the first imaging apparatus imaging the object after the robot arm is controlled based on the signal.

46. The control apparatus according to claim 45, wherein
in a case where it is determined that the object is not selected as the target object as a result of the determination performed after controlling the robot arm based on the signal to rotationally move the first imaging apparatus, the calculation unit is configured to generate, as the control signal, a signal for controlling the robot arm to linearly move the first imaging apparatus along a desired translational axis.

47. The control apparatus according to any one of claims 1 to 46, wherein
the process apparatus includes a holding apparatus that is configured to hold the object,
the control signal is a signal for controlling a hold operation of the holding apparatus,
based on the control signal generated by the calculation unit, the robot arm is controlled so that the holding apparatus approaches the object and the holding apparatus is controlled so that the object is held by the holding apparatus,
the calculation unit is configured to:
generate sixth information, which indicates a position and a pose of the object held by the holding apparatus, by using the first image data that is generated by the first imaging apparatus imaging the object after the object is held by the holding apparatus; and
generate, based on the sixth information, the control signal for controlling the robot arm to move the object held by the holding apparatus toward a desired position and / or to change a pose of the object held by the holding apparatus to a desired pose.

48. A control apparatus that generates a control signal for controlling a robot arm to which a process apparatus that performs a process on at least one of a first object and a second object, a first imaging apparatus that outputs first image data, and a second imaging apparatus that outputs second image data are mounted, at least one of a position and a pose of the second object being different from that of the first object, wherein
the robot arm is controlled by the control signal to move the process apparatus and the first and imaging apparatuses,
the control apparatus comprises:
a calculation unit that is configured to generate the control signal; and
an output unit that is configured to output the control signal generated by the calculation unit,
the calculation unit is configured to:
determine, based on the first image data that is generated by the first imaging apparatus imaging the first and second objects, whether to select the first or second object as a target object on which the process apparatus performs the process;
generate second information indicating a position and a pose of the target object by using three-dimensional position data, which is generated from the second image data generated by the second imaging apparatus imaging the first and second objects and which indicates a three-dimensional position of each of a plurality of points of the target object, and three-dimensional model data of the target object having a position and a pose that are determined based on first information, which is generated by using the first image data and which indicates a position and a pose of the target object, in a case where the first or second object is selected as the target object as a result of the determination; and
generate the control signal based on the second information.

49. The control apparatus according to claim 48, wherein
the calculation unit is configured to:
generate the first information by an object detection processing for detecting the first and second objects in a first image indicated by the first image data; and
determine, based on a result of the object detection processing, whether to select the object as the target object.

50. The control apparatus according to claim 49, wherein
the calculation unit is configured to:
perform, as the object detection processing, a matching processing using first two-dimensional model data indicating a two-dimensional model of the first object, second two-dimensional model data indicating a two-dimensional model of the second object, and the first image data;
detect an edge of the first object and an edge of the second object from the first and second objects detected by the matching processing;
detect an edge in the first image by using the first image data; and
determine, based on a first degree of similarity between the edge of the first object and the edge in the first image and a second degree of similarity between the edge of the second object and the edge in the first image, whether to select the first or second object as the target object.

51. The control apparatus according to claim 49 or 50, wherein
the calculation unit is configured to:
perform, as the object detection processing, a matching processing using first two-dimensional model data indicating a two-dimensional model of the first object, second two-dimensional model data indicating a two-dimensional model of the second object, and the first image data; and
determine, based on a third degree of similarity between the two-dimensional model of the first object and the first image indicated by the first image data and a fourth degree of similarity between the two-dimensional model of the second object and the first image indicated by the first image data, which are calculated by the matching processing, whether to select the first or second object as the target object.

52. The control apparatus according to claim 50, wherein
the calculation unit is configured to:
perform, as the object detection processing, a matching processing using first two-dimensional model data indicating a two-dimensional model of the first object, second two-dimensional model data indicating a two-dimensional model of the second object, and the first image data;
determine, based on a third degree of similarity between the two-dimensional model of the first object and the first image indicated by the first image data, a fourth degree of similarity between the two-dimensional model of the second object and the first image indicated by the first image data, the first degree of similarity, and the second degree of similarity, which are calculated by the matching processing, whether to select the first or second object as the target object;
determine that the first object is selected as the target object in a case where the first degree of similarity is higher than a predetermined first threshold value, the first degree of similarity is higher than the second degree of similarity, the third degree of similarity is higher than a predetermined second threshold value, and the third degree of similarity is higher than the fourth degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, and the fourth degree of similarity is higher than the third degree of similarity;
determine that the second object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the third degree of similarity / the fourth degree of similarity is smaller than the second degree of similarity / the first degree of similarity;
determine that the first object is selected as the target object in a case where the first degree of similarity is higher than a predetermined first threshold value, the first degree of similarity is higher than the second degree of similarity, the third degree of similarity is higher than a predetermined second threshold value, the third degree of similarity is lower than the fourth degree of similarity, and the second degree of similarity / the first degree of similarity is smaller than the third degree of similarity / the fourth degree of similarity;
determine that the first object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the fourth degree of similarity / the third degree of similarity is smaller than the first degree of similarity / the second degree of similarity;
determine that the second object is selected as the target object in a case where the second degree of similarity is higher than a predetermined first threshold value, the second degree of similarity is higher than the first degree of similarity, the fourth degree of similarity is higher than a predetermined second threshold value, the fourth degree of similarity is lower than the third degree of similarity, and the first degree of similarity / the second degree of similarity is smaller than the fourth degree of similarity / the third degree of similarity;
determine that the first object is selected as the target object in a case where the first degree of similarity is higher than a predetermined second threshold value, the third degree of similarity is higher than a predetermined first threshold value, the second degree of similarity is lower than a predetermined second threshold value, and / or the fourth degree of similarity is lower than a predetermined first threshold value;
determine that the second object is selected as the target object in a case where the second degree of similarity is higher than a predetermined second threshold value, the fourth degree of similarity is higher than a predetermined first threshold value, the first degree of similarity is lower than a predetermined second threshold value, and / or the third degree of similarity is lower than a predetermined first threshold value; and
determine that the first and second object are not selected as the target object in a case where the first degree of similarity is lower than a predetermined second threshold value and / or the third degree of similarity is lower than a predetermined first threshold value, and the second degree of similarity is lower than a predetermined second threshold value and / or the fourth degree of similarity is lower than a predetermined first threshold value.

53. The control apparatus according to claim 51 or 52, wherein
a three-dimensional shape of the second object is the same as that of the first object,
the first two-dimensional model data and the second two-dimensional model data are two-dimensional model data indicating a two-dimensional model of the three-dimensional shape.

54. The control apparatus according to any one of claims 48 to 53, wherein
a time at which the first imaging apparatus images the first and second objects to generate the first image data and a time at which the second imaging apparatus images the first and second objects to generate the second image data are the same time.

55. The control apparatus according to any one of claims 1 to 54, wherein
the first imaging apparatus is a monocular camera, and
the second imaging apparatus is a stereo camera including two monocular cameras that is different from the monocular camera.

56. A control system comprising:
the control apparatus according to any one of claims 1 to 55;
the first imaging apparatus; and
the second imaging apparatus.

57. The control system according to claim 56 further comprising:
a first filter that attenuates light component in a first wavelength bandwidth of light from the object; and
a second filter that attenuates light component in a second wavelength bandwidth, which is different from the first wavelength bandwidth, of light from the object, wherein
the first imaging apparatus images the object by optically receiving light from the object through the first filter, and
the second imaging apparatus images the object by optically receiving light from the object through the second filter.

58. The control system according to claim 57 further comprising:
an illumination apparatus that illuminates the object with illumination light including light component in the second wavelength bandwidth; and
a light projection apparatus that projects a pattern light including light component in the first wavelength bandwidth on the object, wherein
the second imaging apparatus generates the second image data by imaging the object on which the pattern light is projected from the light projection apparatus.

59. A robot system comprising:
the control apparatus according to any one of claims 1 to 55;
the first imaging apparatus;
the second imaging apparatus; and
the robot arm.

60. The robot system according to claim 59 further comprising the process apparatus that performs the process on the object.

61. A control method that generates a control signal for controlling a robot arm to which a process apparatus that performs a process on an object, a first imaging apparatus that outputs first image data, and a second imaging apparatus that outputs second image data are mounted, wherein
the control method comprises:
generating first information indicating a position and a pose of the object by using the first image data generated by the first imaging apparatus imaging the object;
generating second information indicating a position and a pose of the object by using three-dimensional position data, which is generated from the second image data generated by the second imaging apparatus imaging the object and which indicates a three-dimensional position of each of a plurality of points of the object, and three-dimensional model data of the object having a position and a pose that are determined based on the first information; and
generating the control signal based on the second information,
the robot arm is controlled by the control signal to move the process apparatus and the first and imaging apparatuses based on the generated control signal in order to allow the process apparatus to perform the process on the object.

62. A control method that generates a control signal for controlling a robot arm to which a process apparatus that performs a process on an object, a first imaging apparatus that outputs first image data, and a second imaging apparatus that outputs second image data are mounted, wherein
the control method comprises:
calculating a change amount of a position and a pose of the object between a first and second times based on two first image data, which are respectively generated by the first imaging apparatus imaging the object at the first and second times that are different from each other, and three-dimensional position data, which is generated from the second image data generated by the second imaging apparatus imaging the object at a third time and which indicates a three-dimensional position of each of a plurality of points of the object; and
generating the control signal based on the change amount,
the robot arm is controlled by the control signal to move the process apparatus and the first and imaging apparatuses based on the generated control signal in order to allow the process apparatus to perform the process on the object.

63. A control method that generates a control signal for controlling a robot arm to which a process apparatus that performs a process on at least one of a first object and a second object, a first imaging apparatus that outputs first image data, and a second imaging apparatus that outputs second image data are mounted, at least one of a position and a pose of the second object being different from that of the first object, wherein
the control method comprises:
determining, based on the first image data that is generated by the first imaging apparatus imaging the first and second objects, whether to select the first or second object as a target object on which the process apparatus performs the process;
generating second information indicating a position and a pose of the target object by using three-dimensional position data, which is generated from the second image data generated by the second imaging apparatus imaging the first and second objects and which indicates a three-dimensional position of each of a plurality of points of the target object, and three-dimensional model data of the target object having a position and a pose that are determined based on first information, which is generated by using the first image data and which indicates a position and a pose of the target object, in a case where the first or second object is selected as the target object as a result of the determination; and
generating the control signal based on the second information,
the robot arm is controlled by the control signal to move the process apparatus and the first and imaging apparatuses based on the generated control signal in order to allow the process apparatus to perform the process on the object.

64. The control method according to any one of claims 61 to 63, wherein
the first imaging apparatus is a monocular camera, and
the second imaging apparatus is a stereo camera including two monocular cameras that is different from the monocular camera.

65. A computer program by which the control method according to any one of claims 61 to 63 is performed.
